# EUROPEAN PATENT APPLICATION

(11) **EP 4 790 974 A1**
(43) Date of publication of application: **12.08.2026**
(21) Application number: 24884046.4
(22) Date of filing: 19.07.2024
(51) Int. Cl.: H04M 1/72451

(54) **SCHEDULE CREATING METHOD, ELECTRONIC DEVICE, AND STORAGE MEDIUM**

(30) Priority: 03.11.2023 CN 202311464426; 27.12.2023 CN 202311839741
(71) Applicant: Honor Device Co., Ltd., Shenzhen, Guangdong 518040 (CN)
(72) Inventor: BAO, Xintong, Shenzhen, Guangdong 518040 (CN)
(74) Representative: Epping - Hermann - Fischer
(86) International application number: PCT/CN2024/106589
(87) International publication number: WO 2025/092038

(57) **Abstract**

Provided are a method for creating a schedule, an electronic device, and a storage medium, which relate to the technical field of terminals and can rapidly create the schedule and improve user experience. The method includes: displaying, by an electronic device, a first interface, where the first interface includes a first multimedia resource, the first multimedia resource includes first schedule information, and the first schedule information includes one or more of the following: a first title, a first time period, and a first location; displaying, by the electronic device, a first window in response to an input operation by a user on the first multimedia resource, where the first window includes at least one schedule option; creating, after a first schedule option of the at least one schedule option is selected and by the electronic device in response to a creation operation by the user in the first window, a first schedule corresponding to the first schedule option in a schedule management application; and displaying, by the electronic device, the first interface, and displaying reminder information on the first interface, where the reminder information is used for indicating that the schedule is created.

## Description

The present disclosure claims the benefit of priority to Chinese Patent Application No. 202311464426.8, filed with the China National Intellectual Property Administration on November 3, 2023 and entitled "Method for creating schedule, and electronic device", which is incorporated in its entirety herein by reference.

The present disclosure claims the benefit of priority to Chinese Patent Application No. 202311839741.4, filed with the China National Intellectual Property Administration on December 27, 2023 and entitled "Method for creating schedule, electronic device, and storage medium", which is incorporated in its entirety herein by reference.

### TECHNICAL FIELD

The present disclosure relates to the technical field of terminals, and particularly relates to a method for creating a schedule, an electronic device, and a storage medium.

### BACKGROUND

As the pace of people's life is gradually accelerated, there are increasingly various to-do items. To properly plan to-do items and timely remind users before the to-do items start, most electronic devices have schedule management applications, such as calendar applications, for users to create and manage to-do items or schedules. Specifically, after determining schedule information corresponding to a schedule, a user can open a schedule management application of an electronic device, and create a corresponding schedule or to-do item in the schedule management application. Thus, the electronic device can remind (through a sound, a vibration, or a display interface, etc.), based on schedule information of the schedule or the to-do item, the user at a set time point.

Schedule information corresponding to a schedule generally includes a plurality of pieces of information such as a title, a location, and a time period. In a conventional schedule creation solution, after determining schedule information of a particular schedule, a user generally is required to memorize the schedule information, and inputs, one by one on a schedule creation template provided in a schedule management application, a plurality of pieces of sub-information included in the schedule information. If the schedule information contains a large amount of content, the user is required to memorize the schedule information a plurality of times, and input the schedule information a plurality of times by using an input method keyboard, to create different schedules. It can be seen that in an existing schedule creation solution, an operation is complex, creation efficiency is low, and user experience is poor.

### SUMMARY

Embodiments of the present disclosure provide a method for creating a schedule, an electronic device, and a storage medium, which can rapidly create the schedule and improve user experience. To achieve the above objective, the following technical solutions are used in the embodiments of the present disclosure.

In a first aspect, an embodiment of the present disclosure provides a method for creating a schedule. The method may be applied to an electronic device. The method includes: the electronic device displays a first interface. The first interface includes a first multimedia resource. The first multimedia resource includes a first picture or a first text. The first multimedia resource includes first schedule information. The first schedule information includes one or more of the following: a first title, a first time period, and a first location. The electronic device displays a first window in response to an input operation by a user on the first multimedia resource. The first window includes at least one schedule option. The schedule option includes at least one of a title, a location, and a time period. The at least one schedule option includes a first schedule option. In a case that the first schedule option includes a title, a value of the title of the first schedule option is the first title. In a case that the first schedule option includes a location, a value of the location of the first schedule option is the first location. In a case that the first schedule option includes a time period, a value of the time period of the first schedule option is the first time period. After the first schedule option of the at least one schedule option is selected, the electronic device creates, in response to a creation operation by the user in the first window, a first schedule corresponding to the first schedule option in a schedule management application. The electronic device displays the first interface, and displays reminder information on the first interface. The reminder information is used for indicating that the schedule is created.

Based on the technical solutions provided in the present disclosure, an electronic device can automatically pregenerate, based on a first multimedia resource (a picture or a text) selected by a user, at least one schedule option for the user to select. In this case, the user is only required to select an appropriate schedule option according to a requirement such that the electronic device can create a corresponding schedule. In the entire creation process, the user is only required to perform a small number of operations such as an input operation on the first multimedia resource having schedule information, and a selection operation and a creation operation on a first schedule option such that the electronic device can generate a schedule required by the user. It can be seen that according to the technical solutions provided in the present disclosure, a number of operations required for creating a schedule is greatly reduced, and user experience is improved. Moreover, since a plurality of selectable schedule options can be provided for the user, a finally created schedule can better satisfy a requirement of the user.

Further, since after the schedule is created, the first interface that initially presents the first picture can be displayed for the user to perform other possible operations, the user can conveniently create the schedule based on a currently viewed picture, and perform other possible operations on an initial interface after the schedule is created. Thus, user experience is improved.

In a possible design manner of the first aspect, before the electronic device displays a first window in response to an input operation by a user on the first multimedia resource, the method further includes: the electronic device displays, in response to an identifier triggering operation by the user on the first multimedia resource on the first interface, a resource identifier of the first multimedia resource in a touch area in which the user performs the identifier triggering operation. The electronic device displays a first window in response to an input operation by a user on the first multimedia resource, which includes: the electronic device displays, in response to a first drag-and-drop operation by the user on the resource identifier, a first floating window on the first interface, and displays the first window in the first floating window. The first drag-and-drop operation is used for triggering the electronic device to display a sidebar, and moving the resource identifier to an icon of the schedule management management application in the sidebar. The first drag-and-drop operation is the input operation.

Based on the above technical solution, through a quick entry of a sidebar, an electronic device can smoothly input a first multimedia resource selected by a user into a schedule management application for parsing and recognition, such that first schedule information is obtained. Then, a first window is displayed by using a floating window such that the user can intuitively see, from the first window by using at least one schedule option, information of at least one to-be-selected schedule generated from schedule information in the first multimedia resource. Further, the user can select a schedule option according to a requirement of the user such that the electronic device can rapidly create a schedule satisfying the requirement of the user.

In addition, since the floating window cannot affect the blocked first interface currently displayed by the electronic device, the user can perform an operation satisfying a requirement of the user on the first interface at any time while viewing the first window in the first floating window. Thus, user experience is improved. For example, the first interface is a picture detail interface of a first picture resource, and the user can perform any possible editing on the first picture at any time.

In a possible design manner of the first aspect, the first interface includes a sharing control. Before the electronic device displays a first window in response to an input operation by a user on the first multimedia resource, the method further includes: the electronic device displays a sharing pop-up window in response to a triggering operation by the user on the sharing control on the first interface. The sharing pop-up window includes an icon of the schedule management application. The electronic device displays a first window in response to an input operation by a user on the first multimedia resource, which includes: the electronic device displays a second interface in response to a triggering operation by the user on the icon of the schedule management application in the sharing pop-up window, and displays the first window on the second interface. The triggering operation on the icon of the schedule management application in the sharing pop-up window is the input operation.

Based on the above technical solution, a user may select a first multimedia resource based on a sharing function of an electronic device, and provide the first multimedia resource for a schedule management application for parsing. Then, the schedule management application may display, based on a parsing result, a first window on a second interface. In this way, the user can intuitively see, from the first window by using at least one schedule option, information of at least one to-be-selected schedule generated from schedule information in the first multimedia resource, and then can select a schedule option according to a requirement of the user. Thus, the electronic device can rapidly create a schedule satisfying the requirement of the user.

In a possible design manner of the first aspect, in cases that the first interface includes a smart visual control and the first multimedia resource is the first picture, before the electronic device displays a first window in response to an input operation by a user on the first multimedia resource, the method further includes: the electronic device displays a smart visual recognition interface in response to a triggering operation by the user on the smart visual control on the first interface. The electronic device displays a first window in response to an input operation by a user on the first multimedia resource, which includes: the electronic device displays a second interface in response to a triggering operation by the user on a schedule creation control on the smart visual recognition interface, and displays the first window on the second interface. The triggering operation on the schedule creation control on the smart visual recognition interface is the input operation.

Based on the above technical solution, in response to a triggering by a user on a smart visual control in a picture detail interface of a first picture and a triggering on a schedule creation control on the smart visual recognition interface, the electronic device can smoothly input the first picture into the schedule management application for parsing and recognition. Further, the schedule management application can display, based on a parsing result, a first window on a second interface. In this way, the user can intuitively see, from the first window by using at least one schedule option, information of at least one to-be-selected schedule generated from schedule information in the first multimedia resource, and then can select a schedule option according to a requirement of the user. Thus, the electronic device can rapidly create a schedule satisfying the requirement of the user.

In a possible design manner of the first aspect, in a case that the first multimedia resource is the first picture, the electronic device displays a first interface, which includes: the electronic device displays a photos presentation interface or a picture taking interface in response to a triggering operation by the user on a scanning control on a schedule creation interface; and the electronic device displays the first interface in response to an acquisition operation by the user on the first picture on the photos presentation interface. The electronic device displays a first window in response to an input operation by a user on the first multimedia resource, which includes: the electronic device displays a second interface in response to a triggering operation by the user on a confirmation control on the first interface, and displays the first window on the second interface. The triggering operation on a first confirmation control in the picture presentation interface is the input operation. After the electronic device creates, in response to a creation operation by the user in the first window, a first schedule corresponding to the first schedule option in a schedule management application, the method further includes: the electronic device displays the schedule creation interface, and displays the reminder information on the schedule creation interface.

Based on the above technical solution, after the user causes a mobile phone to display a photos presentation interface or a picture taking interface after triggering a scanning control on a schedule creation interface, a first picture can be acquired according to a requirement of the user, and provided for a schedule management application for parsing. Thus, the schedule management application can display, based on a parsing result, a first window on a second interface. In this way, the user can intuitively see, from the first window by using at least one schedule option, information of at least one to-be-selected schedule generated from schedule information in the first multimedia resource, and then can select a schedule option according to a requirement of the user. Thus, the electronic device can rapidly create a schedule satisfying the requirement of the user. Further, since after the schedule is created, an initially presented schedule management interface can be displayed for the user to perform other possible operations, user experience is improved.

In a possible design manner of the first aspect, in a case of displaying the first window, the electronic device further displays the first multimedia resource in a recognized content area. In a case that the electronic device displays the first window in the first floating window, the recognized content area is located in the first floating window. In a case that the electronic device displays the first window on the second interface, the recognized content area is located in the second interface. Based on the above technical solution, when selecting a schedule option, a user can conveniently compare a schedule option with content in a first picture, and can more accurately select a schedule option satisfying the requirement of the user. Further, a schedule more satisfying the requirement of the user can be created.

In a possible design manner of the first aspect, in a case that the first multimedia resource is the first picture, the method further includes: the electronic device performs, in response to an adjustment operation by the user on the first picture in the recognized content area, an adjustment on the first picture. The adjustment includes any one or more of the following: minimization, maximization, a reduction, enlargement, and a movement.

Based on the above technical solution, a user can adjust, through any possible adjustment operations, a display effect of a first picture in a recognized content area. Thus, the user can more conveniently compare a schedule option with content in the first picture when selecting a schedule option. User experience is improved.

In a possible design manner of the first aspect, in cases that the electronic device displays the first window on the second interface and the first multimedia resource is the first picture, the recognized content area further includes a first clipping control. The method further includes: the electronic device displays a first clipping interface in response to a triggering operation by the user on the first clipping control, where the first clipping interface includes the first picture and a first adjustment control surrounding the first picture; the electronic device adjusts, in response to a clipping operation by the user on the first picture on the first clipping interface, a reserved portion of the first picture that is surrounded by the first adjustment control, and determines the reserved portion as a first clipped picture, where the clipping operation includes an adjustment operation on the adjustment control, and/or a transformation operation on the first picture; and the transformation operation is used for performing any one of the following transformations on the first picture: enlargement, a reduction, and a movement; the electronic device updates, in response to a triggering operation by the user on a first clipping confirmation option in the first clipping interface, the first picture by using the first clipped picture; and the electronic device updates, based on the updated first picture, the schedule option in the first window.

In this way, a user can smoothly delete interference content from a first picture. Further, an electronic device can obtain new first schedule information according to the first picture from which the interference content is deleted, and update, based on the new first schedule information, a schedule option in the first window. Thus, the user can select a schedule option satisfying a requirement of the user. User experience is improved.

In a possible design manner of the first aspect, after the electronic device updates, based on the updated first picture, the schedule option in the first window, the method further includes: the electronic device displays a first updating interface, where the first updating interface is a second interface obtained after the electronic device updates, based on the updated first picture, the schedule option in the first window, and the first clipped picture and a second clipping control are displayed in the recognized content area in the first updating interface; the electronic device displays the first clipping interface in response to a triggering operation by the user on the second clipping control; the electronic device adjusts, in response to the clipping operation by the user on the first picture on the first clipping interface, a reserved portion of the first picture that is surrounded by the first adjustment control, and determines the reserved portion as a second clipped picture; the electronic device updates, in response to a triggering operation by the user on the first clipping confirmation option in the first clipping interface, the first picture by using the second clipped picture; and the electronic device updates, based on the updated first picture, the schedule option in the first window.

Based on the above technical solution, when a first picture is required to be clipped again, a user can complete clipping based on an original first picture, rather than continue clipping based on a clipped first picture to make a latest first picture increasingly less. Subsequent inaccurate clipping caused by an error of previous clipping is avoided, and user experience is improved.

In a possible design manner of the first aspect, after the electronic device updates, based on the updated first picture, the schedule option in the first window, the method further includes: the electronic device displays a first updating interface, where the first updating interface is a second interface obtained after the electronic device updates, based on the updated first picture, the schedule option in the first window, and the first clipped picture and a second clipping control are displayed in the recognized content area in the first updating interface; the electronic device displays a second clipping interface in response to a triggering operation by the user on the second clipping control, where the second clipping interface is a clipping interface when the first clipped picture is obtained after the electronic device adjusts, in response to the clipping operation by the user on the first picture on the first clipping interface, the reserved portion of the first picture that is surrounded by the first adjustment control; the electronic device adjusts, in response to the clipping operation by the user on the first picture on the second clipping interface, the reserved portion of the first picture that is surrounded by the first adjustment control, and determines the reserved portion as a third clipped picture; the electronic device updates, in response to a triggering operation by the user on a first clipping confirmation option in the second clipping interface, the first picture by using the third clipped picture; and the electronic device updates, based on the updated first picture, the schedule option in the first window.

Based on the above technical solution, in addition to ensuring a user to complete clipping satisfying a requirement of the user each time, the user can reduce some clipping operations when performing clipping again.

In a possible design manner of the first aspect, the method further includes: after the first schedule option of the at least one schedule option is selected, the first window includes at least one schedule setting item corresponding to the first schedule option, where the at least one schedule setting item includes a title setting item and a time setting item, and the title setting item includes the first title in the first schedule option; the electronic device displays a title editing pop-up window in response to a triggering operation by the user on a smearing control in the title setting item, where the title editing pop-up window includes an input box and a word segmentation result of text content in the first multimedia resource, the input box includes a value of a title in the title setting item, and the word segmentation result is obtained by parsing, by the electronic device, the first multimedia resource; the electronic device receives a selection operation by the user on word segmentation content in the word segmentation result; the electronic device adjusts, in response to a determination operation by the user in the title editing pop-up window, content in the input box by using the word segmentation content; and the electronic device displays the first window in response to a triggering operation by the user on a confirmation option in the title editing pop-up window, and updates, by using content in the input box, the first title in the title setting item in the first window.

Based on the above technical solution, a user can more accurately and conveniently amend a title in a title setting item by selecting word segmentation content of a word segmentation result. Thus, a schedule finally created by a mobile phone can better satisfy a requirement of the user, and user experience is improved.

In a possible design manner of the first aspect, the input box further includes a cursor. The electronic device receives a selection operation by the user on word segmentation content in the word segmentation result, which includes: the electronic device receives a swiping operation by the user in the word segmentation result, and determines, in response to the swiping operation, a character corresponding to the swiping operation as the word segmentation content, where the character corresponding to the swiping operation includes a first character corresponding to a start location of the swiping operation, a second character corresponding to an end location of the swiping operation, and a character that is located between the first character and the second character after all characters in the word segmentation result are sequenced in a preset sequence. The electronic device adjusts, in response to a determination operation by the user in the title editing pop-up window, content in the input box by using the word segmentation content, which includes: the electronic device fills, in response to a triggering operation by the user on an input control in the title editing pop-up window and with the word segmentation content, a location of the cursor in the input box, where the selection operation includes the swiping operation by the user in the word segmentation result, and the determination operation includes the triggering operation by the user on the input control.

Based on the above technical solution, when a user selects word segmentation content, an operation is faster and more convenient, and user experience is improved.

In a possible design manner of the first aspect, the at least one schedule setting item further includes a location setting item. The location setting item includes the first location. In a case that the first location is a non-standard address, the location setting item further includes a suggested location option, and the suggested location option includes a suggested location. The non-standard address is an address of which a format is incorrect or of which content has an error. The suggested location is obtained by the electronic device based on user information prestored in the electronic device and/or historical location data within preset duration. In a case that the electronic device displays the first window on the second interface, the method further includes: the electronic device displays a location setting interface in response to a triggering operation by the user on the suggested location option in the location setting item, where at least one to-be-selected suggested location is displayed on the location setting interface, and the at least one to-be-selected suggested location includes the suggested location in the suggested location option; and the electronic device displays, in response to a triggering operation by the user on a first to-be-selected suggested location on the location setting interface, the first window on the second interface, updates the first location in the location setting item by using the first to-be-selected suggested location, and does not display the suggested location option any more, where the first to-be-selected suggested location is one of the at least one to-be-selected suggested location.

Based on the above technical solution, when creating a schedule based on a first picture, an electronic device can provide a more accurate suggested location for a user. The user can make a location of a finally created schedule more accurate through a series of operations for location selection based on the suggested location. Thus, subsequent usage can be facilitated, and user experience is improved.

In a possible design manner of the first aspect, an area of the first window that displays at least one schedule setting item is an editing area. The method further includes: the electronic device moves, in response to a swiping operation by the user in the editing area, the at least one schedule setting item displayed in the editing area, and displays a first schedule setting item, where the first schedule setting item does not belong to the at least one schedule setting item.

In this way, all schedule setting items that can be edited by a user can be presented in an editing area such that the user can perform any possible editing on information of a to-be-created schedule according to a requirement. Thus, a finally created schedule can better satisfy the requirement of the user, and user experience is improved.

In a possible design manner of the first aspect, the at least one schedule option further includes a second schedule option. A title included in the second schedule option is null; or a value of a location included in the second schedule option is null; or a value of a time period included in the second schedule option is null. In a case that the title included in the second schedule option is null, the method further includes: after the second schedule option of the at least one schedule option is selected by the electronic device, the first window includes a title setting item corresponding to the second schedule option, where a value of a title in the title setting item corresponding to the second schedule option is null.

Based on the above solution, an electronic device can display, based on a selection of a user and in a first window, a schedule setting item corresponding to a schedule option currently selected by the user. Thus, the user can view and edit content of each of the at least one schedule setting item. User experience is improved.

In a possible design manner of the first aspect, the first multimedia resource further includes second schedule information. The first schedule information includes one or more of the following: a second title, a second time period, and a second location. The at least one schedule option included in the first window further includes a third schedule option corresponding to the second schedule information. In a case that the third schedule option includes a title, a value of the title of the third schedule option is the second title. In a case that the third schedule option includes a location, a value of the location in the third schedule option is the second location. In a case that the third schedule option includes a time period, a value of the time period in the third schedule option is the second time period. After the electronic device displays a first window in response to an input operation by a user on the first multimedia resource, the method further includes: after the first schedule option and the third schedule option are selected, the electronic device creates, in response to a creation operation by the user in the first window, a first schedule corresponding to the first schedule option and a second schedule corresponding to the third schedule option.

In this way, in a case that a first multimedia resource has schedule information of a plurality of to-do items, an electronic device can display, in a schedule preview window, at least one schedule option that can be selected by the user for each to-do item. Thus, the user can simultaneously select schedule options of a plurality of to-be-selected schedules in the schedule preview window. The electronic device can create a plurality of schedules at a time. Efficiency of creating the schedule is improved, and user experience is improved.

In a possible design manner of the first aspect, the first multimedia resource further includes second schedule information. The first schedule information includes one or more of the following: a second title, a second time period, and a second location. After the electronic device creates, in response to a creation operation by the user in the first window, a first schedule corresponding to the first schedule option in a schedule management application, the method further includes: the electronic device displays a second window before the electronic device displays the first interface and displays the reminder information on the first interface, where the second window includes a third schedule option corresponding to the second schedule information; in a case that the third schedule option includes a title, a value of the title of the third schedule option is the second title; in a case that the third schedule option includes a location, a value of the location in the third schedule option is the second location; and in a case that the third schedule option includes a time period, a value of the time period in the third schedule option is the second time period; and after the third schedule option is selected, the electronic device creates, in response to the creation operation by the user in the second window, the second schedule corresponding to the third schedule option in the schedule management application.

Based on the above technical solution, in a case that a first multimedia resource has schedule information of a plurality of to-do items, an electronic device can display, in different schedule preview windows, at least one schedule option that can be selected by the user for different to-do items. Thus, the user can select appropriate schedule options for different to-do items in different schedule preview windows. The electronic device can create a plurality of schedules at a time. Efficiency of creating the schedule is improved, and user experience is improved.

In a second aspect, the present disclosure provides an electronic device. The electronic device includes a display, a memory, and one or more processors. The display and the memory are coupled to the processor. The memory stores computer program code. The computer program code includes computer instructions. The computer instructions, when executed by the processor, cause the electronic device to perform the method for creating a schedule provided in the first aspect.

In a third aspect, the present disclosure provides a computer-readable storage medium. The computer-readable storage medium includes computer instructions. The computer instructions, when run on an electronic device, cause the electronic device to perform the method for creating a schedule provided in the first aspect.

In a fourth aspect, the present disclosure provides a computer program product. The computer program product includes executable instructions. The executable instructions, when run on an electronic device, cause the electronic device to perform the method for creating a schedule provided in the first aspect.

It can be understood that beneficial effects that can be achieved by the technical solutions provided in the second aspect to the fourth aspect can be obtained with reference to beneficial effects of the first aspect and any possible design manners thereof, and are not repeated herein.

### BRIEF DESCRIPTION OF DRAWINGS

FIG. 1A, FIG. 1B, FIG. 1C, and FIG. 1D are schematic diagrams of a flow for creating a schedule according to a related technology;
FIG. 2A, FIG. 2B, and FIG. 2C are first schematic diagrams of a scenario of setting a location in a flow for creating a schedule according to a related technology;
FIG. 3 is a second schematic diagram of a scenario of setting a location in a flow for creating a schedule according to a related technology;
FIG. 4 is a schematic diagram of a principle of a method for creating a schedule according to an embodiment of the present disclosure;
FIG. 5 is a schematic diagram of a hardware structure of an electronic device according to an embodiment of the present disclosure;
FIG. 6 is a schematic diagram of a software architecture of an electronic device according to an embodiment of the present disclosure;
FIG. 7 is a first schematic flowchart of a method for creating a schedule according to an embodiment of the present disclosure;
FIG. 8 is a schematic diagram of a first picture according to an embodiment of the present disclosure;
FIG. 9A, FIG. 9B, FIG. 9C, and FIG. 9D are first schematic diagrams of a display interface of a method for creating a schedule according to an embodiment of the present disclosure;
FIG. 10 is a second schematic diagram of a display interface of a method for creating a schedule according to an embodiment of the present disclosure;
FIG. 11A(1), FIG. 11A(2), FIG. 11B, and FIG. 11C are third schematic diagrams of a display interface of a method for creating a schedule according to an embodiment of the present disclosure;
FIG. 12A, FIG. 12B(1), and FIG. 12B(2) are fourth schematic diagrams of a display interface of a method for creating a schedule according to an embodiment of the present disclosure;
FIG. 13A(1), FIG. 13A(2), and FIG. 13B are fifth schematic diagrams of a display interface of a method for creating a schedule according to an embodiment of the present disclosure;
FIG. 14 is a sixth schematic diagram of a display interface of a method for creating a schedule according to an embodiment of the present disclosure;
FIG. 15 is a seventh schematic diagram of a display interface of a method for creating a schedule according to an embodiment of the present disclosure;
FIG. 16 is an eighth schematic diagram of a display interface of a method for creating a schedule according to an embodiment of the present disclosure;
FIG. 17A, FIG. 17B, FIG. 17C, and FIG. 17D are ninth schematic diagrams of a display interface of a method for creating a schedule according to an embodiment of the present disclosure;
FIG. 18A, FIG. 18B, FIG. 18C, and FIG. 18D are tenth schematic diagrams of a display interface of a method for creating a schedule according to an embodiment of the present disclosure;
FIG. 19A, FIG. 19B(1), and FIG. 19B(2) are eleventh schematic diagrams of a display interface of a method for creating a schedule according to an embodiment of the present disclosure;
FIG. 20A, FIG. 20B(1), and FIG. 20B(2) are twelfth schematic diagrams of a display interface of a method for creating a schedule according to an embodiment of the present disclosure;
FIG. 21A, FIG. 21B(1), FIG. 21B(2), FIG. 21C, and FIG. 21D are thirteenth schematic diagrams of a display interface of a method for creating a schedule according to an embodiment of the present disclosure;
FIG. 22A, FIG. 22B(1), and FIG. 22B(2) are fourteenth schematic diagrams of a display interface of a method for creating a schedule according to an embodiment of the present disclosure;
FIG. 23A and FIG. 23B are fifteenth schematic diagrams of a display interface of a method for creating a schedule according to an embodiment of the present disclosure;
FIG. 24A, FIG. 24B, FIG. 24C, and FIG. 24D are sixteenth schematic diagrams of a display interface of a method for creating a schedule according to an embodiment of the present disclosure;
FIG. 25A, FIG. 25B, FIG. 25C, and FIG. 25D are seventeenth schematic diagrams of a display interface of a method for creating a schedule according to an embodiment of the present disclosure;
FIG. 26A, FIG. 26B, and FIG. 26C are eighteenth schematic diagrams of a display interface of a method for creating a schedule according to an embodiment of the present disclosure;
FIG. 27 is a nineteenth schematic diagram of a display interface of a method for creating a schedule according to an embodiment of the present disclosure;
FIG. 28A, FIG. 28B, FIG. 28C, and FIG. 28D are twentieth schematic diagrams of a display interface of a method for creating a schedule according to an embodiment of the present disclosure;
FIG. 29A and FIG. 29B are twenty-first schematic diagrams of a display interface of a method for creating a schedule according to an embodiment of the present disclosure;
FIG. 30A, FIG. 30B, FIG. 30C, and FIG. 30D are twenty-second schematic diagrams of a display interface of a method for creating a schedule according to an embodiment of the present disclosure;
FIG. 31A, FIG. 31B, FIG. 31C, and FIG. 31D are twenty-third schematic diagrams of a display interface of a method for creating a schedule according to an embodiment of the present disclosure;
FIG. 32A, FIG. 32B(1), FIG. 32B(2), FIG. 32C(1), and FIG. 32C(2) are twenty-fourth schematic diagrams of a display interface of a method for creating a schedule according to an embodiment of the present disclosure;
FIG. 33A(1), FIG. 33A(2), FIG. 33B(1), FIG. 33B(2), FIG. 33C(1), and FIG. 33C(2) are twenty-fifth schematic diagrams of a display interface of a method for creating a schedule according to an embodiment of the present disclosure;
FIG. 34A, FIG. 34B, FIG. 34C, FIG. 34D(1), and FIG. 34D(2) are twenty-sixth schematic diagrams of a display interface of a method for creating a schedule according to an embodiment of the present disclosure;
FIG. 35A, FIG. 35B, and FIG. 35C are twenty-seventh schematic diagrams of a display interface of a method for creating a schedule according to an embodiment of the present disclosure;
FIG. 36A(1), FIG. 36A(2), FIG. 36B(1), FIG. 36B(2), and FIG. 36C are twenty-eighth schematic diagrams of a display interface of a method for creating a schedule according to an embodiment of the present disclosure;

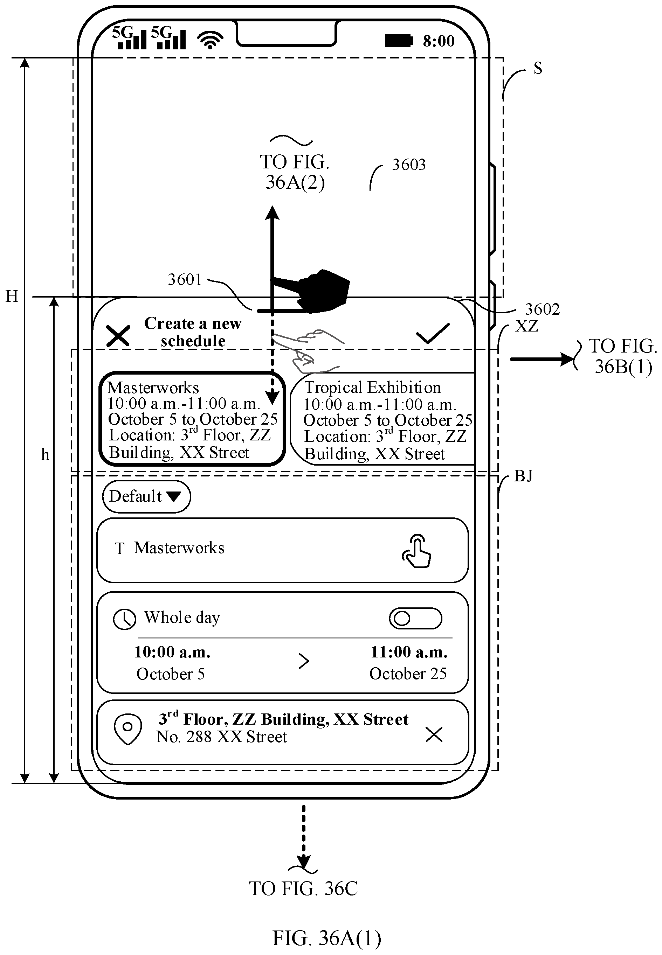

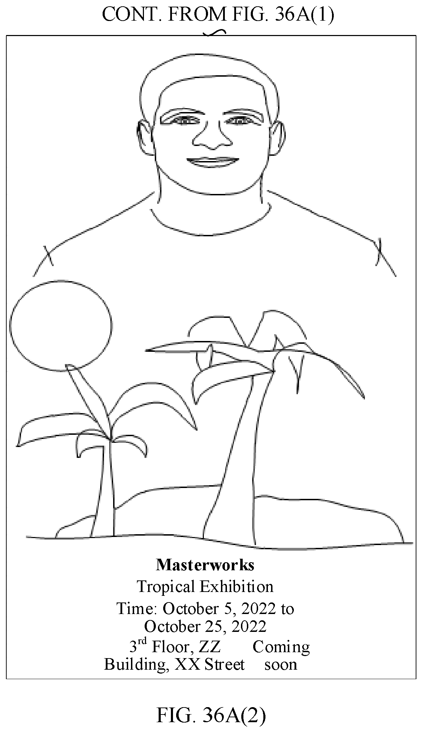

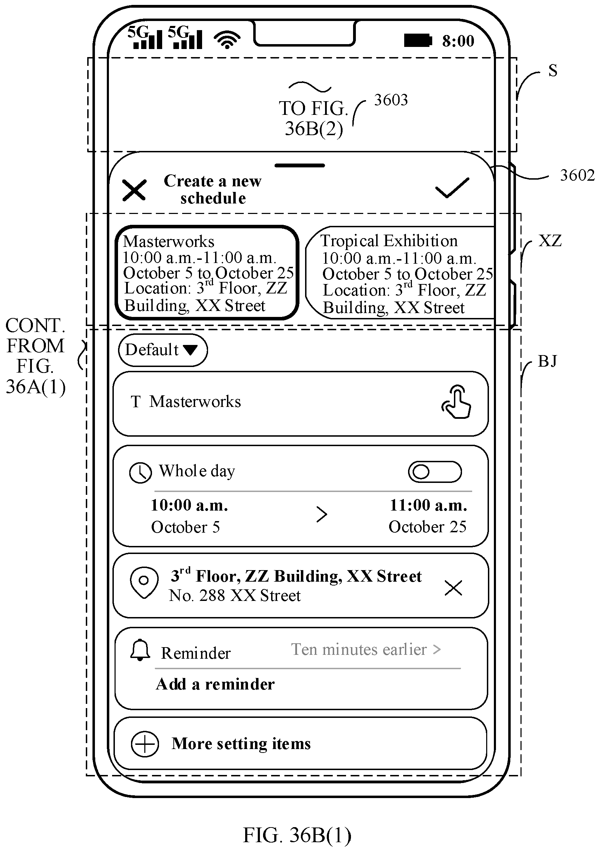

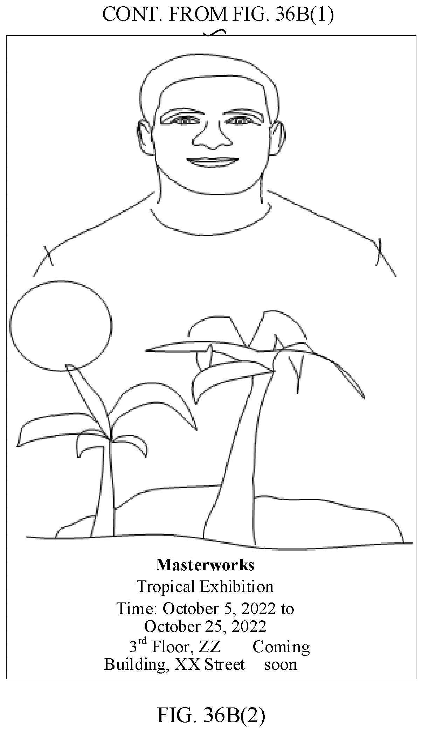

FIG. 36A(1), FIG. 36A(2), FIG. 36B(1), FIG. 36B(2), are twenty-ninth schematic diagrams of a display interface of a method for creating a schedule according to an embodiment of the present disclosure;

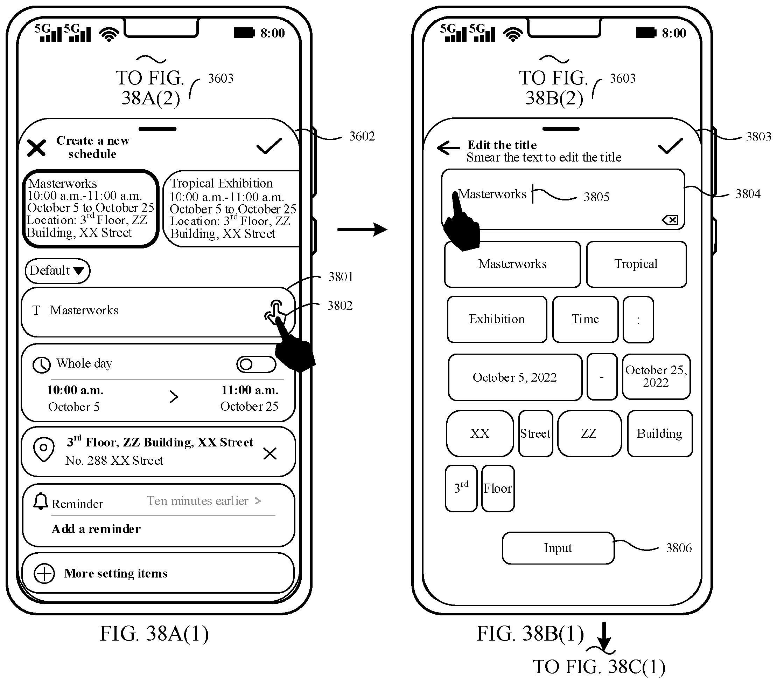

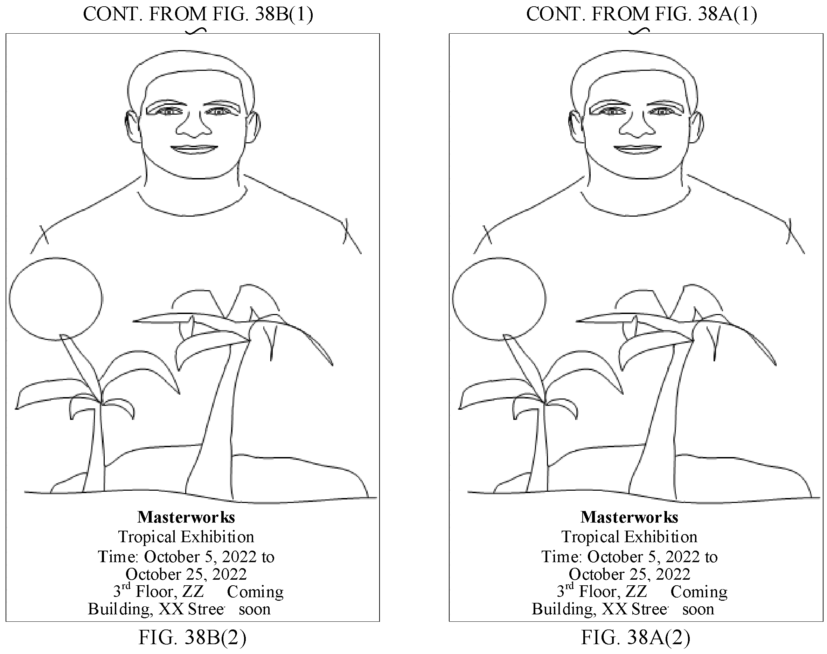

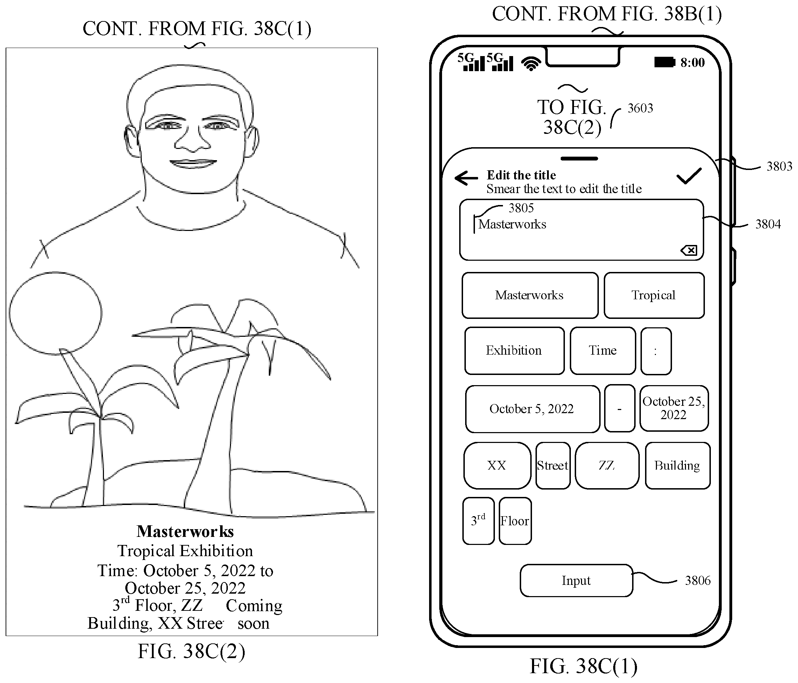

FIG. 38A(1), FIG. 38A(2), FIG. 38B(1), FIG. 38B(2), FIG. 38C(1), and FIG. 38C(2) are thirtieth schematic diagrams of a display interface of a method for creating a schedule according to an embodiment of the present disclosure;
FIG. 38A(1), FIG. 38A(2), FIG. 38B(1), FIG. 38B(2), FIG. 38C(1), and FIG. 38C(2) are thirty-first schematic diagrams of a display interface of a method for creating a schedule according to an embodiment of the present disclosure;

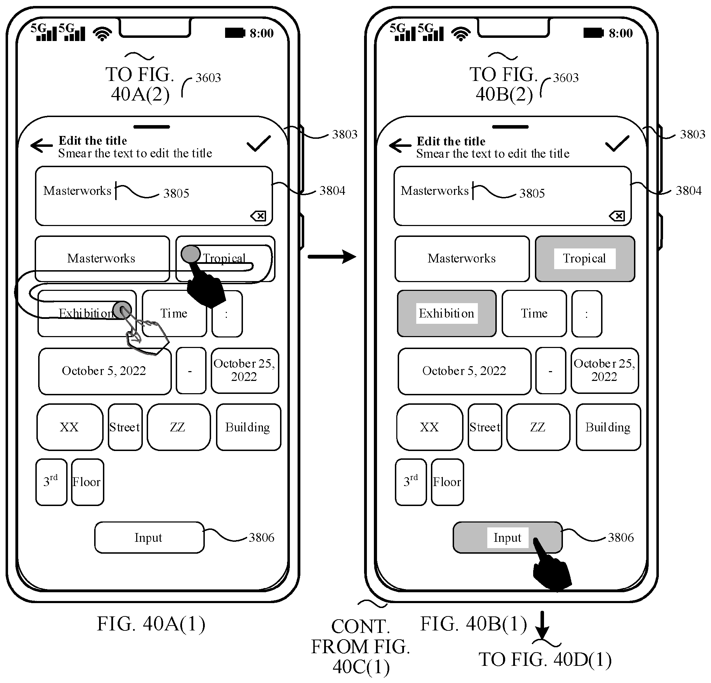

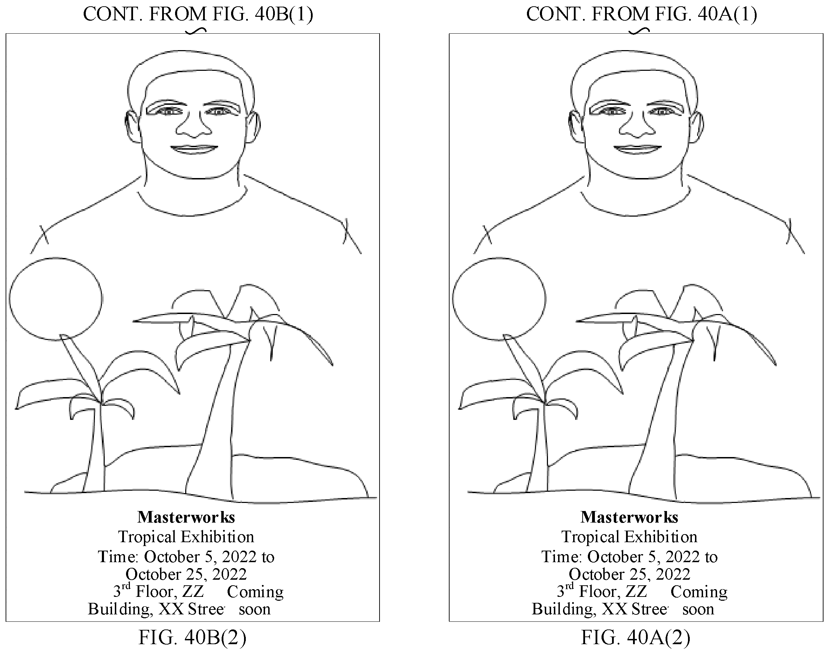

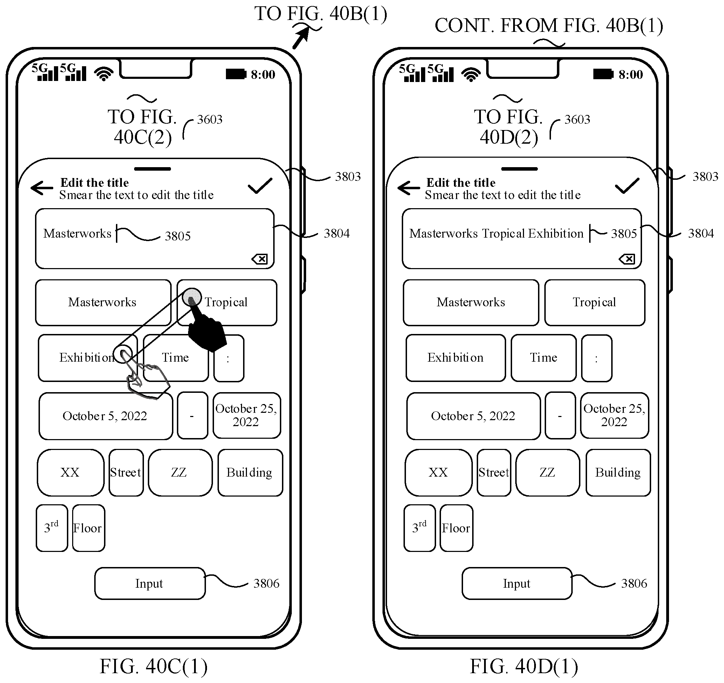

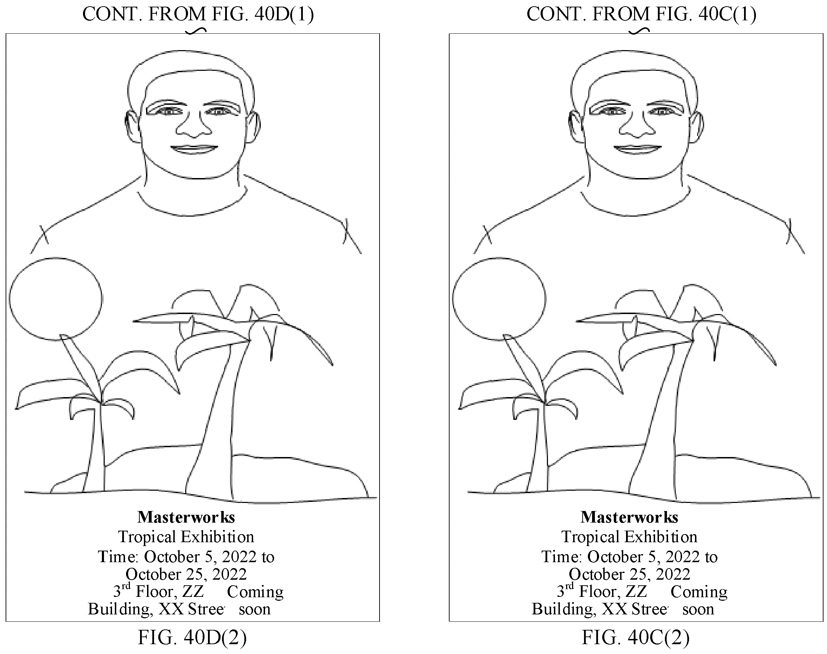

FIG. 40A(1), FIG. 40A(2), FIG. 40B(1), FIG. 40B(2), FIG. 40C(1), FIG. 40C(2), FIG. 40D(1), and FIG. 40D(2) are thirty-second schematic diagrams of a display interface of a method for creating a schedule according to an embodiment of the present disclosure;

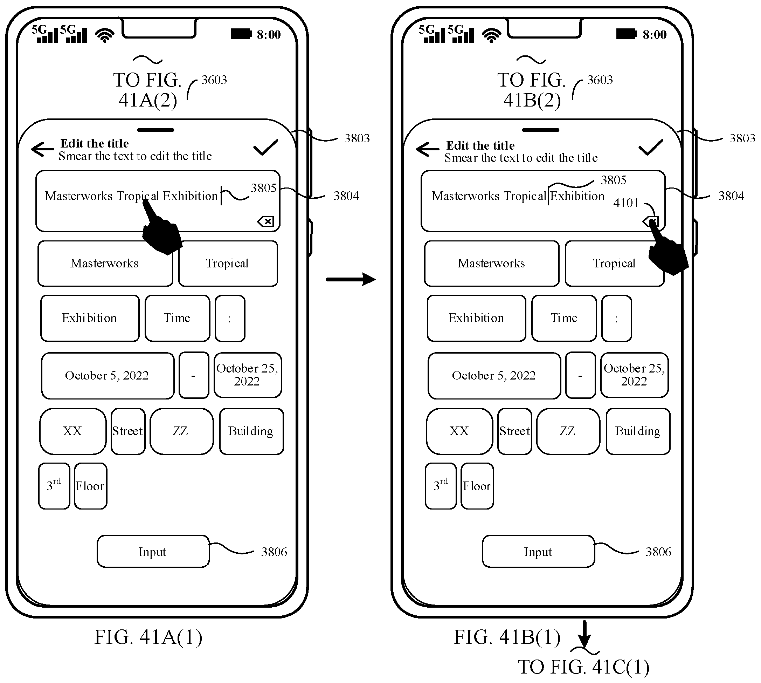

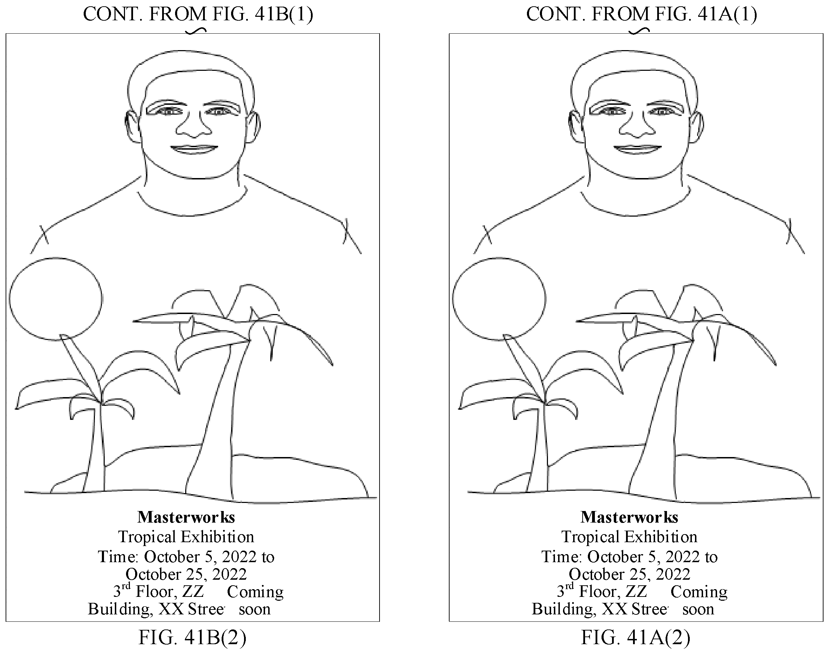

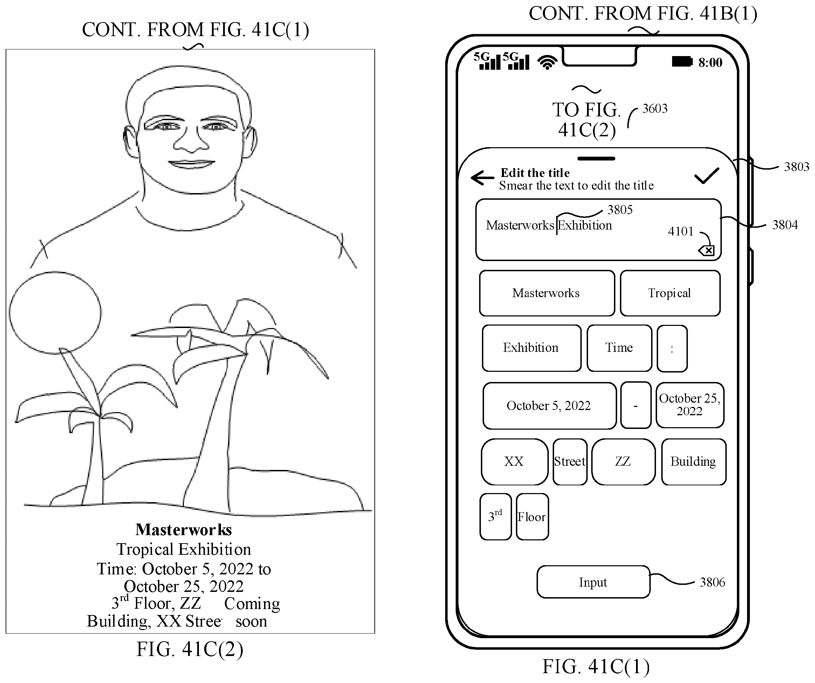

FIG. 41A(1), FIG. 41A(2), FIG. 41B(1), FIG. 41B(2), FIG. 41C(1), and FIG. 41C(2) are thirty-third schematic diagrams of a display interface of a method for creating a schedule according to an embodiment of the present disclosure;

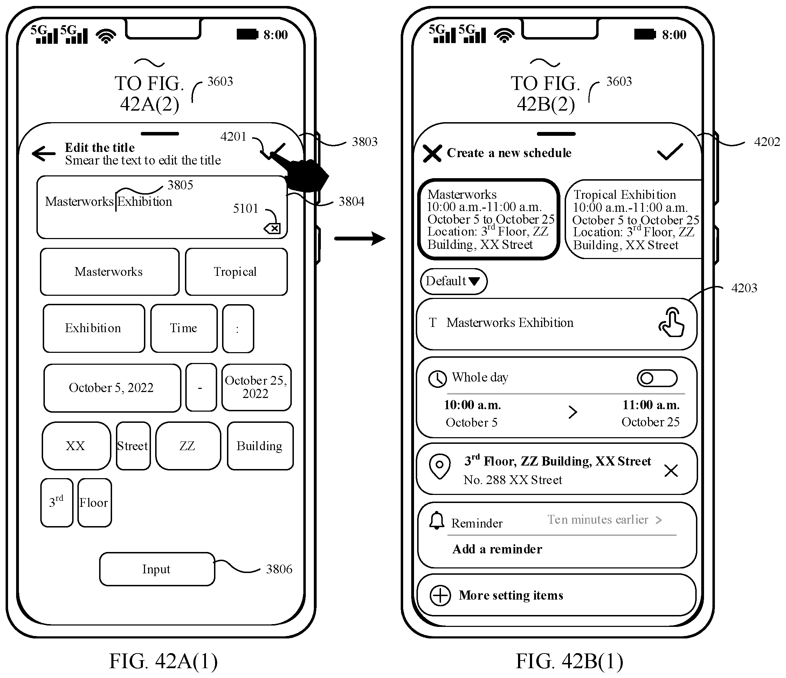

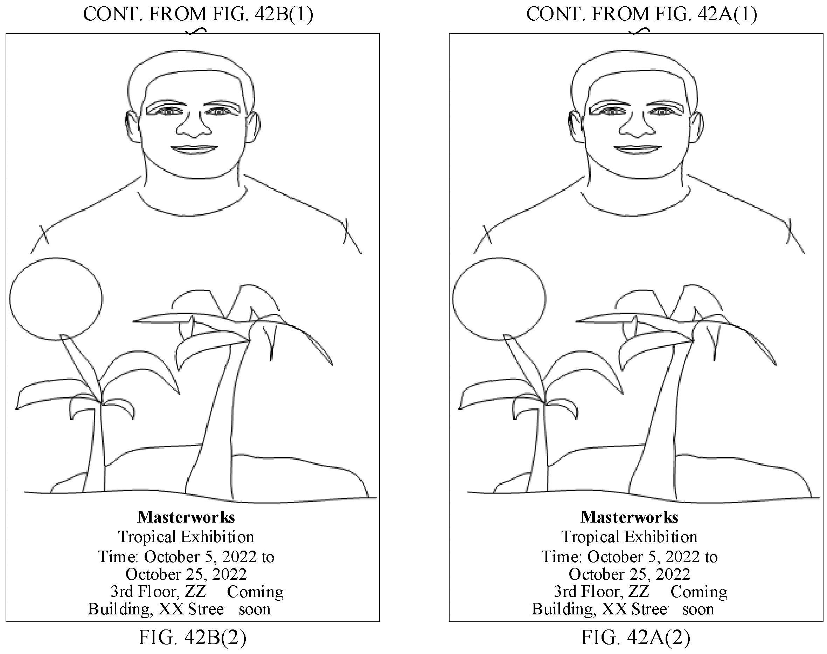

FIG. 42A(1), FIG. 42A(2), FIG. 42B(1), and FIG. 42B(2) are thirty-fourth schematic diagrams of a display interface of a method for creating a schedule according to an embodiment of the present disclosure;

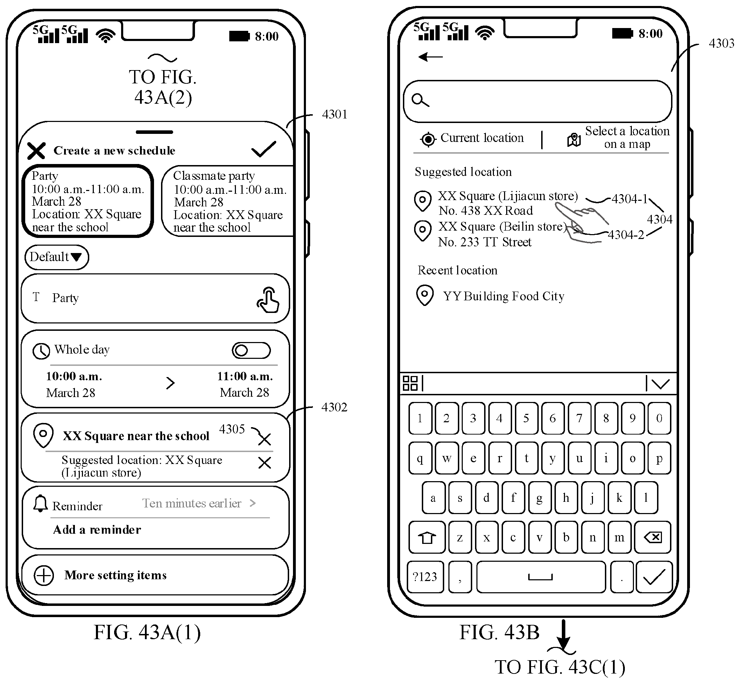

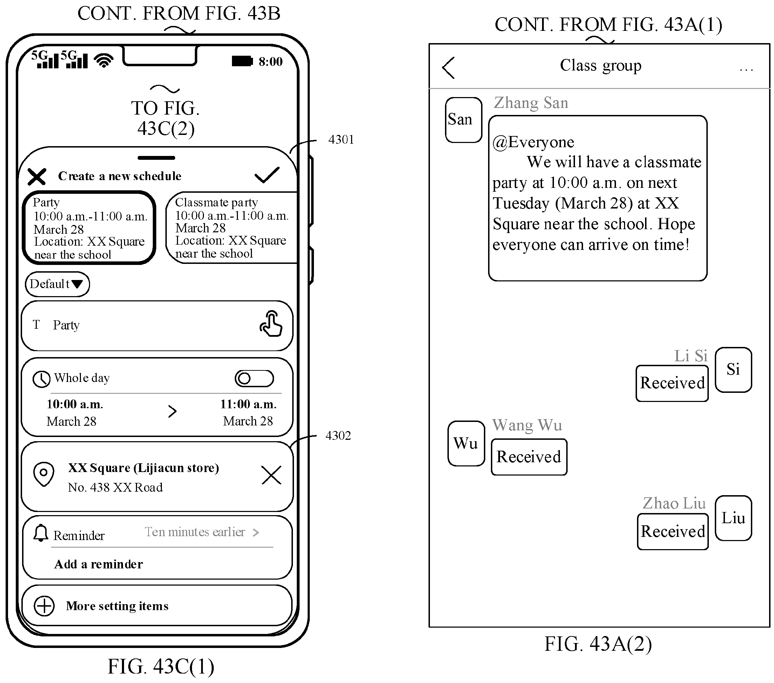

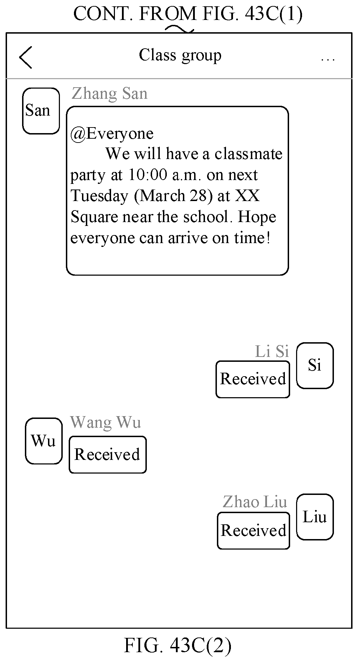

FIG. 43A(1), FIG. 43A(2), FIG. 43B, FIG. 43C(1), and FIG. 43C(2) are thirty-fifth schematic diagrams of a display interface of a method for creating a schedule according to an embodiment of the present disclosure;

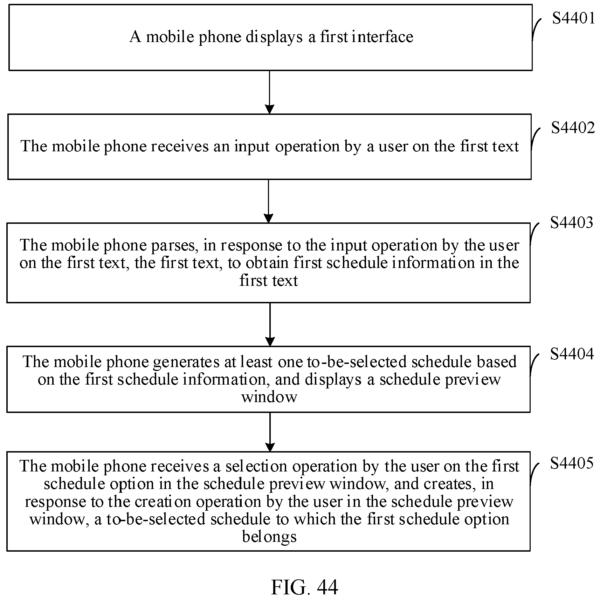

FIG. 44 is a second schematic flowchart of a method for creating a schedule according to an embodiment of the present disclosure;

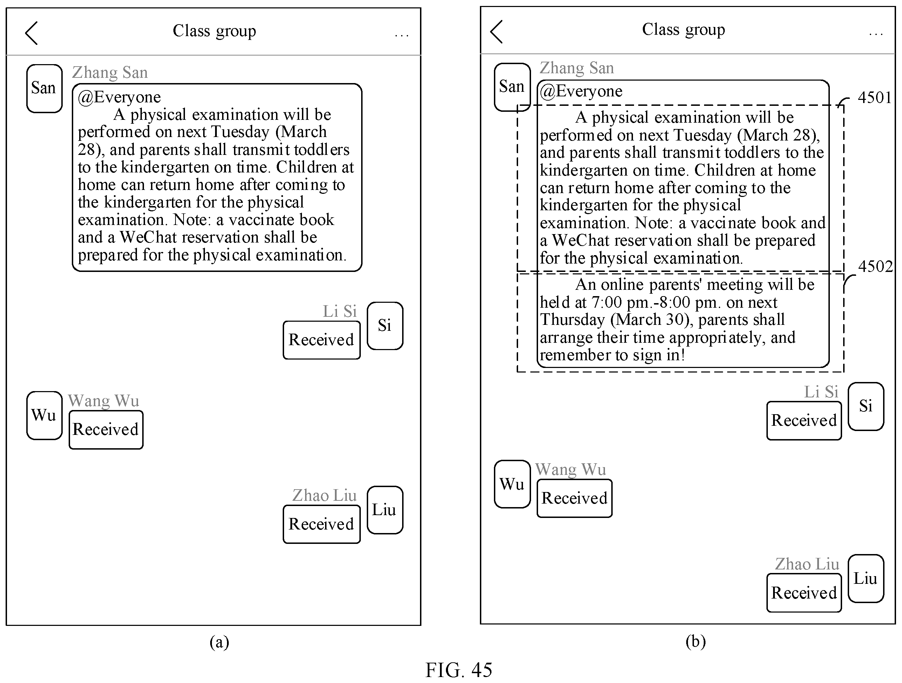

FIG. 45 is a schematic diagram of a first text according to an embodiment of the present disclosure;

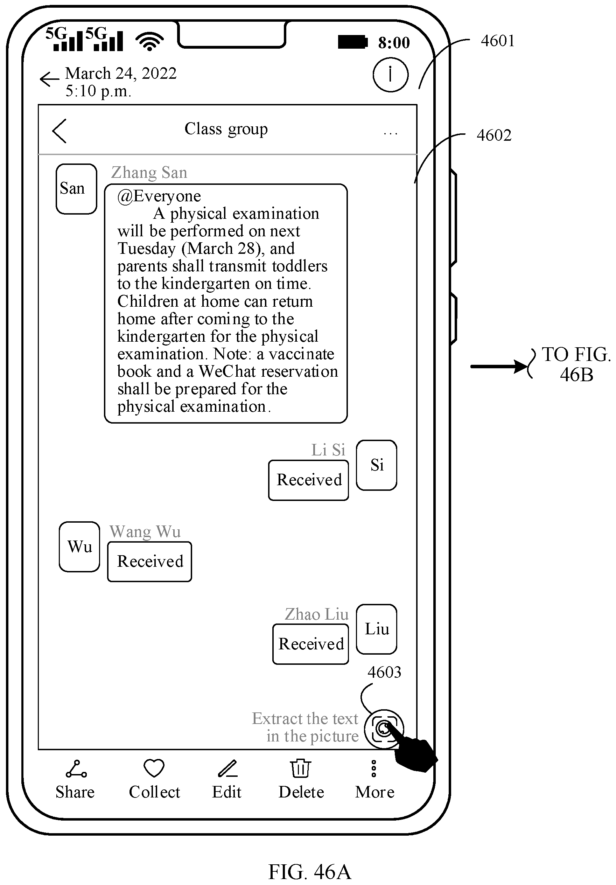

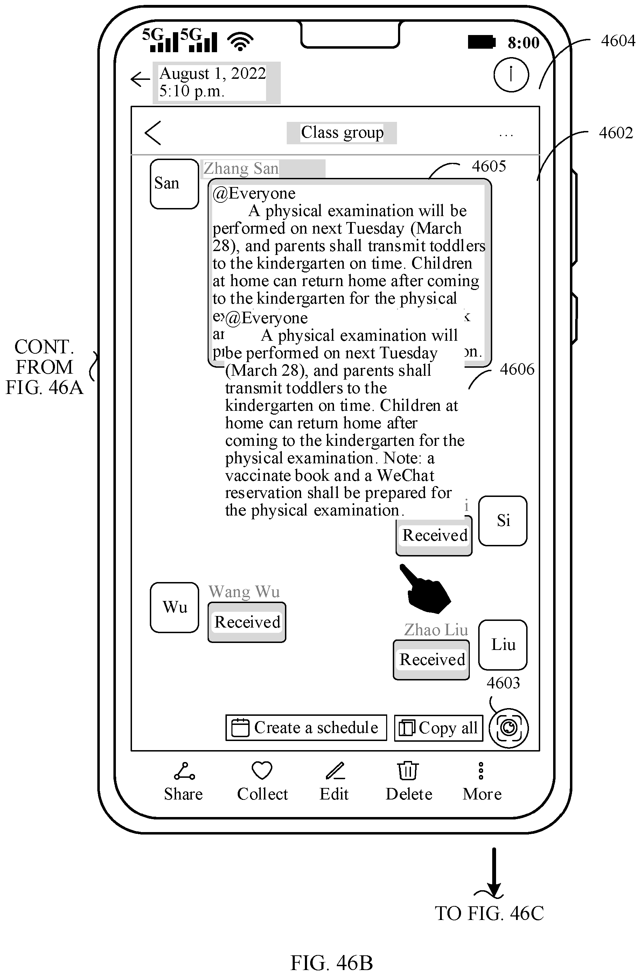

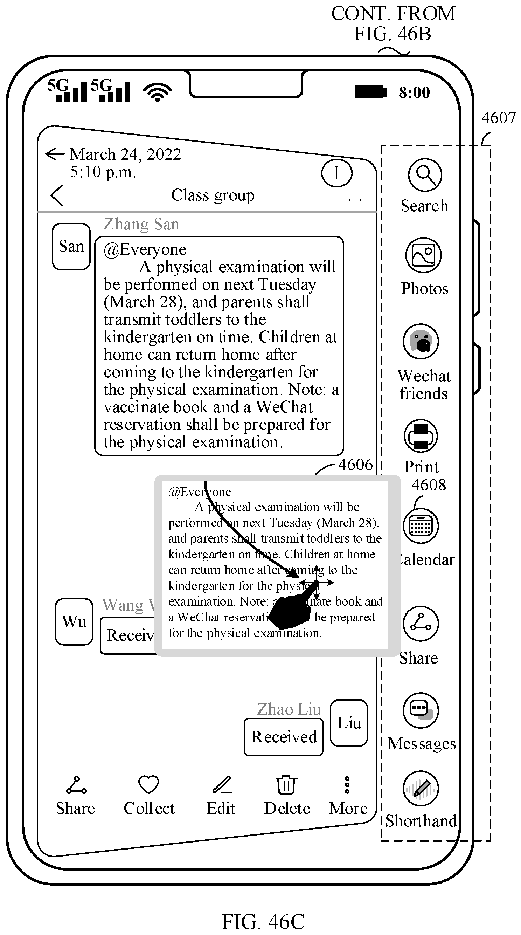

FIG. 46A, FIG. 46B, and FIG. 46C are thirty-sixth schematic diagrams of a display interface of a method for creating a schedule according to an embodiment of the present disclosure;

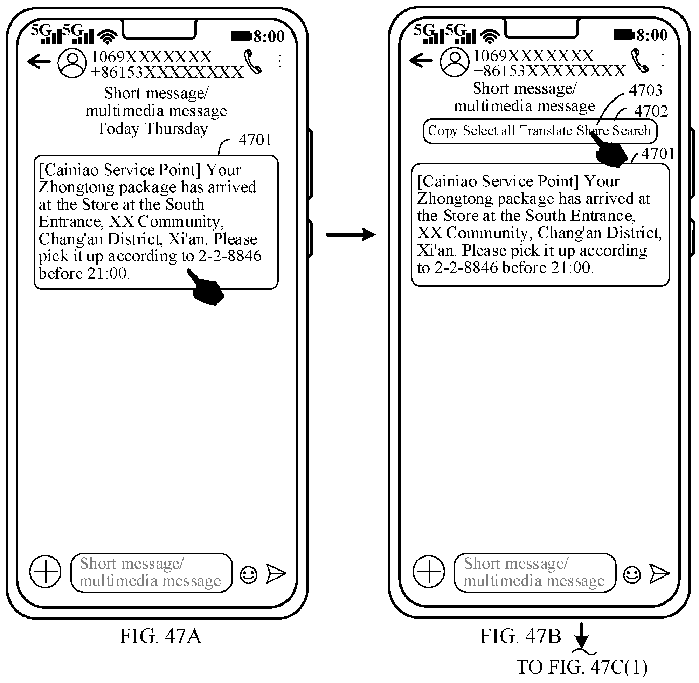

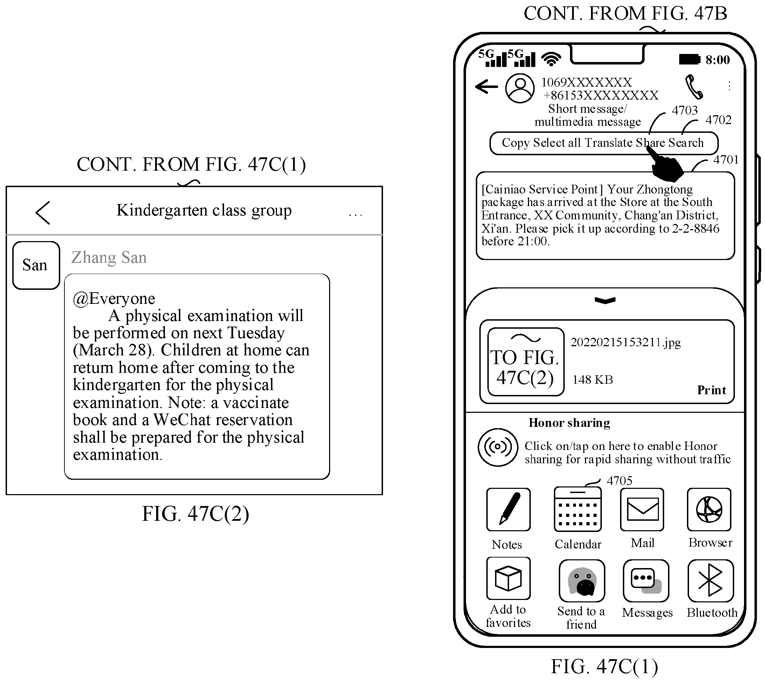

FIG. 47A, FIG. 47B, FIG. 47C(1), and FIG. 47C(2) are thirty-seventh schematic diagrams of a display interface of a method for creating a schedule according to an embodiment of the present disclosure;

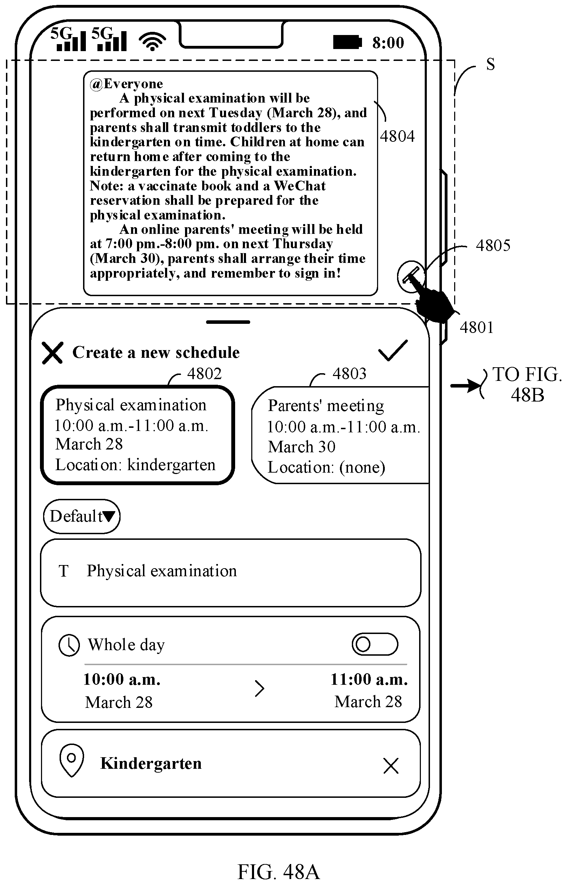

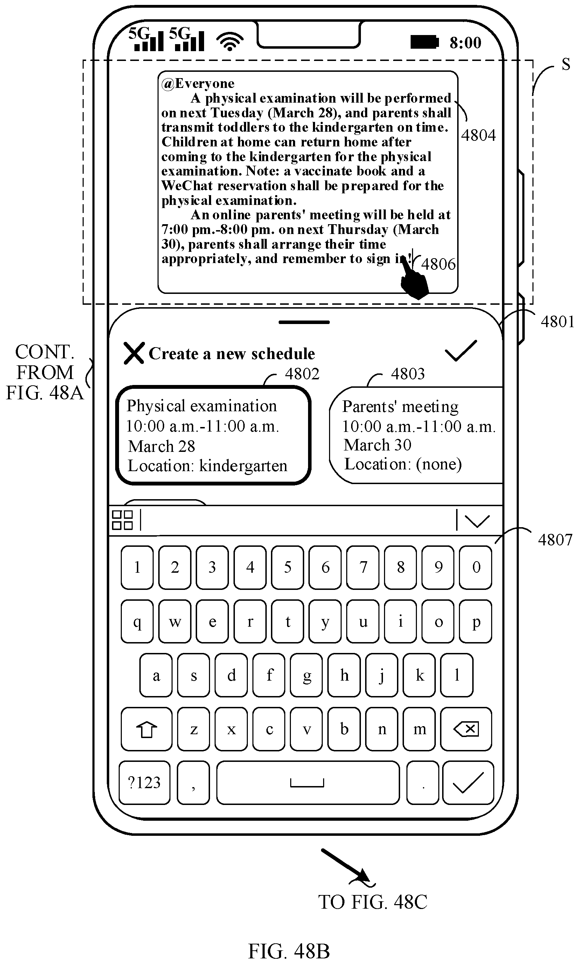

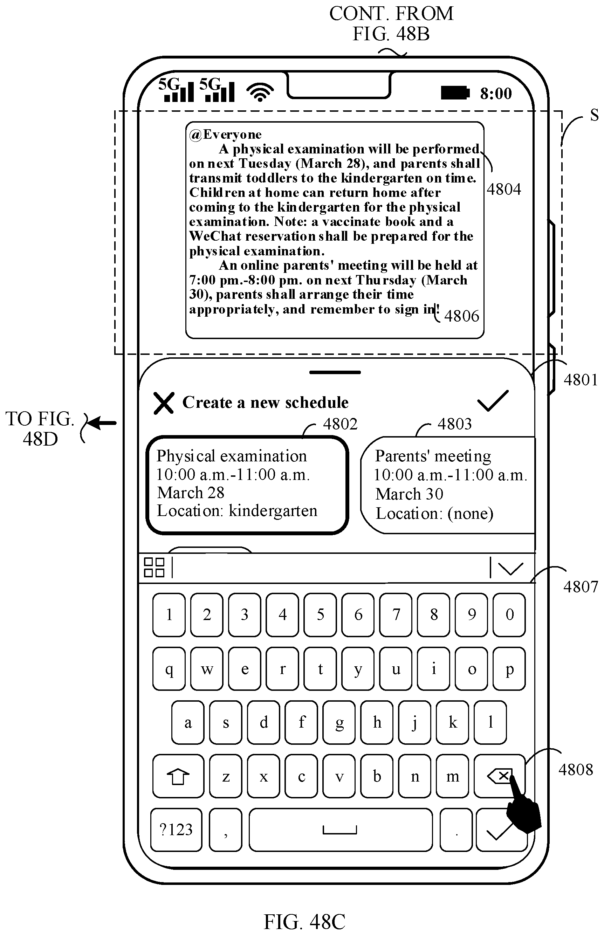

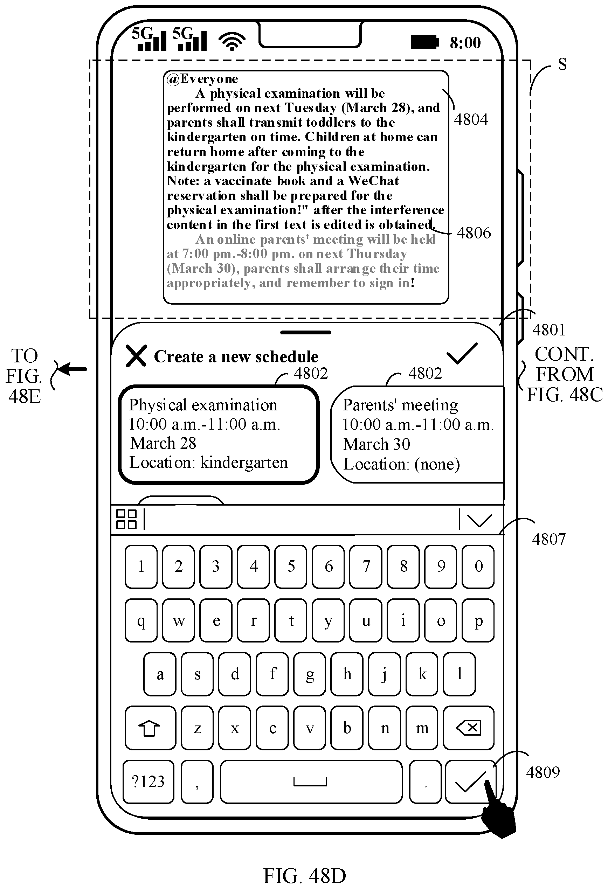

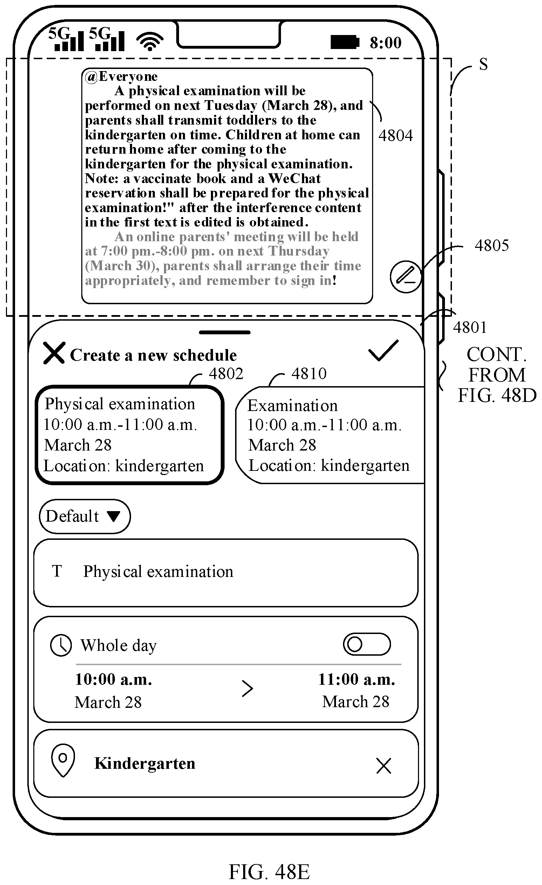

FIG. 48A, FIG. 48B, FIG. 48C, FIG. 48D, and FIG. 48E are thirty-eighth schematic diagrams of a display interface of a method for creating a schedule according to an embodiment of the present disclosure; and

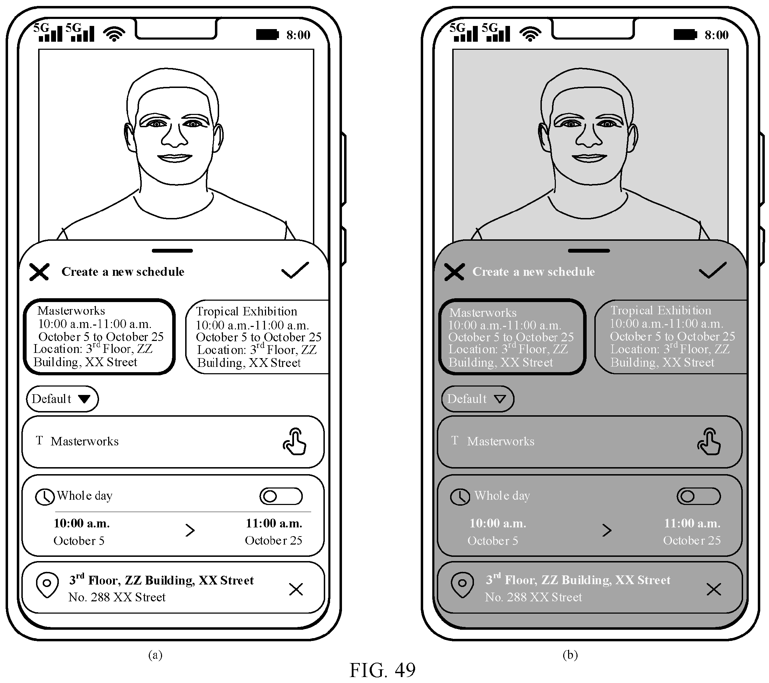

FIG. 49 is a thirty-ninth schematic diagram of a display interface of a method for creating a schedule according to an embodiment of the present disclosure.

### DESCRIPTION OF EMBODIMENTS

Terms used in the following embodiments of the present disclosure are only intended to describe particular embodiments, and are not intended to limit the present disclosure. As used in the description and claims of the present disclosure, singular expression forms "one", "a", "an", "the", "the above", "this", and "such a" are intended to further include plural expression forms, unless clearly indicated to the contrary in the context. It should be understood that "/" means "or". For example, A/B may denote A or B. In this text, "and/or" is merely an association relationship for describing associated objects and denote that three relationships may exist. For example, "A and/or B" may denote the following three cases: only A exists, both A and B exist, and only B exists.

The term "embodiment" mentioned in the present disclosure means that a specific feature, structure, or characteristic described in combination with an embodiment may be included in at least one embodiment of the present disclosure. The term appearing in various locations in the description does not certainly refer to the same embodiment, and is not an independent or alternative embodiment mutually exclusive with another embodiment. A person skilled in the art explicitly or implicitly understands that embodiments described in the present disclosure may be combined with other embodiments.

Terms "first" and "second" in the following embodiments of the present disclosure are merely used for the purpose of description, and shall not be construed as implying or implying relative importance or implying a quantity of indicated technical features. Thus, a feature defined by the term "first" or "second" may explicitly or implicitly include one or more features. In the descriptions of embodiments of the present disclosure, the term "plurality of" refers to two or more unless otherwise stated.

As the pace of people's life is accelerated, there are increasingly various to-do items. To properly plan a to-do item and timely remind a user before the to-do item starts, the user can create a schedule corresponding to each to-do item by using a schedule management application in an electronic device and based on schedule information of a schedule corresponding to the to-do item. Thus, the electronic device can remind the user at a set time point. The schedule information may include a plurality of pieces of sub-information such as a title, a location, and a time period.

In an existing schedule creation solution, a user is required to input, one by one, a plurality of pieces of information included in schedule information of a schedule on a schedule creation template provided in a schedule management application, to create a corresponding schedule.

For example, the electronic device is a mobile phone, and a schedule management application is a calendar application. When required to create a schedule based on schedule information, a user can control the mobile phone to open the calendar application, and create the schedule in the calendar application based on the schedule information.

Before creating a new schedule, the user is required to first open the calendar application. Specifically, the following two implementations may exist.

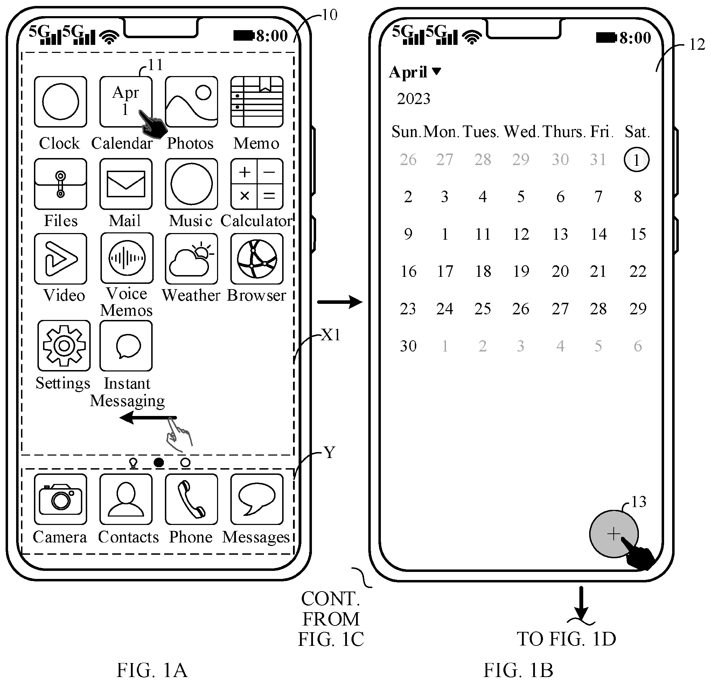

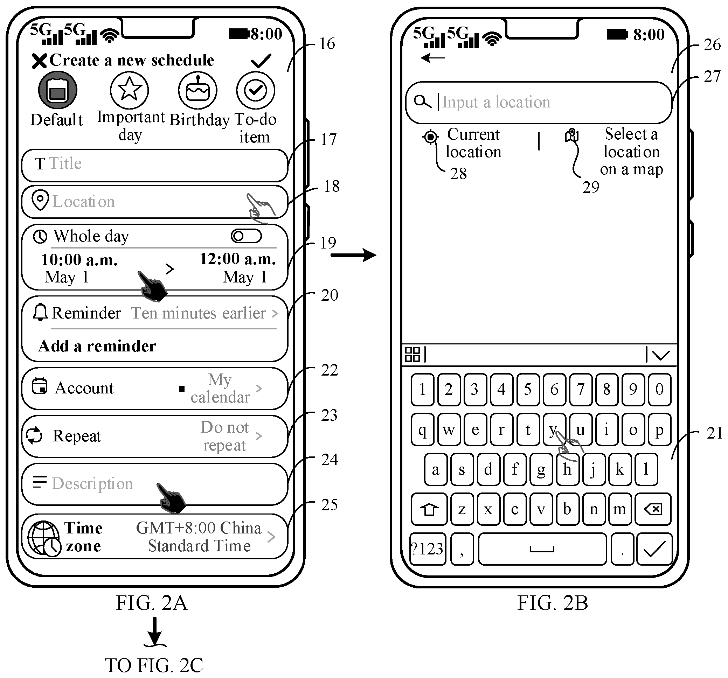

In a possible implementation, with reference to FIG. 1A, a mobile phone may receive a triggering operation (such as a click-on/tap-on operation) by a user on an icon 11 of a calendar application on a main desktop 10 of the mobile phone. In response to the triggering operation, the mobile phone may open the calendar application, and display a main interface 12 of the calendar application shown in FIG. 1B. The main interface 12 may include a calendar (such as a calendar of April 2023) of a month in which a current day is. In the calendar, a date identifier (such as first "1" shown in FIG. 1B) corresponding to the current day is highlighted. With reference to FIG. 2B, the main interface 12 may further include a schedule creation control 13.

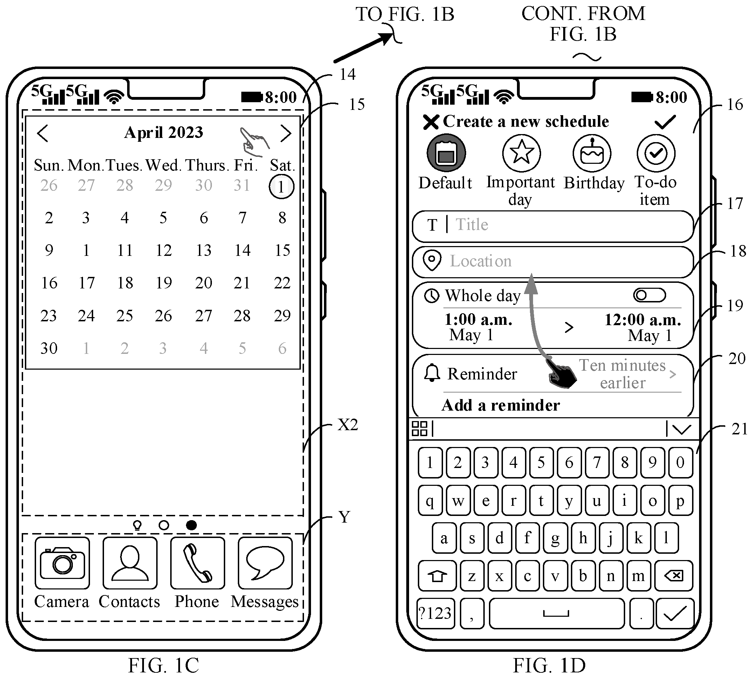

In another possible implementation, a desktop of the mobile phone may have a plurality of switchable areas that can be switched by the user and one persistent area that cannot be switched by the user. Icons of fixed applications are displayed in the persistent area. The user cannot switch the persistent area, but can switch the icons of the applications displayed in the persistent area. Different content, such as icons of different applications or desktop widgets (or may be referred to as window widgets) can be displayed in different switchable areas. When the user implements a swiping operation in the switchable area, the mobile phone can switch a currently displayed switchable area to another switchable area in response to the swiping operation. For example, with reference to FIG. 1A, a desktop of the mobile phone displays a first switchable area X1 and a persistent area Y. In response to a leftward swiping operation performed by the user on the first switchable area X1, with reference to FIG. 1C, the mobile phone may switch the first switchable area X1 to the second switchable area X2. In some scenarios, a calendar tool 15 corresponding to the calendar application may be displayed in the second switchable area X2. When the user is required to open the calendar application to create a new schedule, the user may perform a triggering operation (such as a click-on/tap-on operation) on the calendar tool 15. In response to the triggering operation, the mobile phone may display the main interface 12 of the calendar application shown in FIG. 1B.

Certainly, the operation of controlling the mobile phone to open the main interface 12 of the calendar may alternatively be any other feasible operations. This is not specifically limited in the present disclosure.

After the mobile phone displays the main interface 12 of the calendar application, if the user is required to further create a schedule, the user is required to perform a triggering operation (such as a click-on/tap-on operation) on the schedule creation control 13 in the main interface 12. In response to the triggering operation on the schedule creation control 13, the mobile phone may display a schedule creation interface 16 shown in FIG. 1D. The schedule creation interface 16 may include a plurality of schedule category options and a plurality of schedule setting items. The plurality of schedule category options may include a default category option, an important day category option, a birthday category option, and a to-do item category option. With reference to FIG. 1D, a corresponding category name, such as a "default", an "important day", a "birthday", or a "to-do item", may be displayed below each option. When creating a schedule on the schedule creation interface 16, the user may set a category of the schedule by selecting a schedule category option.

The plurality of schedule setting items may include a title setting item, a location setting item, a time setting item, a reminder setting item, an account setting item, a repetition setting item, a description setting item, and a time zone setting item. Each schedule setting item corresponds to one type of sub-information of the schedule information. The title setting item is used for the user to set a title of a schedule. The location setting item is used for the user to set a location of the schedule. The time setting item is used for the user to set a time period of the schedule. The reminder setting item is used for the user to set reminder time (that is, time when the mobile phone reminds the user) of the schedule. The account setting item is used for the user to set an account of the schedule. The repetition setting item is used for the user to set a repetition policy of the schedule. The description setting item is used for the user to set a description of the schedule. The time zone setting item is used for the user to set a time zone to which all time of the schedule belongs. For example, a title of a schedule may be "Regular meeting". A location may be "Room 306, YY Building, XX Street". A time period may be "9:00-10:00 in the morning on Friday". A reminder time may be "10 minutes early (that is, 10 minutes before a schedule starts)". An account may be an XX account. A repetition policy may be not to repeat. A description is "have a meeting in a third meeting room". A time zone is a time zone (which generally refers to GMT+8) of China. In some embodiments, when displaying the schedule creation interface 16 in response to a triggering operation by the user on the schedule creation control 13, the mobile phone may remind, by default, the user of starting setting the title setting item. In this case, with reference to FIG. 1D, a cursor may be displayed at an initial input location of the title setting item 17 on the schedule creation interface 16, to remind the user of currently starting inputting, by using an input method keyboard 21, a title at a location indicated by the cursor, that is, inputting/setting a title in the title setting item 17. In this case, in a case of blocking by the input method keyboard 21, the title setting item 17, the location setting item 18, the time setting item 19, and the reminder setting item 20 in the schedule creation interface 16 are normally displayed, but the account setting item and the description setting item are blocked by the input method keyboard 21.

In some embodiments, in a case that the user is required to see the account setting item and the description setting item, to set related sub-information, as shown in FIG. 1D, the user may perform an upward swiping operation on the schedule creation interface 16. In response to the upward swiping operation, as shown in FIG. 2A, the mobile phone may not display the input method keyboard 21 any more, and not display the cursor in the title setting item 17 any more. In this case, the account setting item 22, the repetition setting item 23, the description setting item 24, and the time zone setting item 25 which are previously blocked are entirely displayed on the schedule creation interface 16 displayed by the mobile phone.

In the schedule creation interface 16 shown in FIG. 1D, in addition to directly inputting/setting a title in the title setting item 17 by using the input method keyboard 21, the user may further set a location in the location setting item 18, set a time period in the time setting item 19, and set a reminder time by using the reminder setting item 20. In the schedule creation interface 16 shown in FIG. 2A, the user may further set an account by using the account setting item 22, set a repetition policy by using the repetition setting item 23, set a description by using the description setting item 24, and set a time zone by using the time zone setting item 25. Certainly, in the schedule creation interface 16 shown in FIG. 2A, the user may further set a title by using the title setting item 17, set a location by using the location setting item 18, set a time period by using the time setting item 19, and set a reminder by using the reminder setting item 20.

For example, a location is set by using the location setting item 18, a process of setting, by a user, schedule information in the schedule creation interface is illustratively described below.

With the example shown in FIG. 2A and with reference to FIG. 2A, the user may perform a triggering operation on the position setting item 18 when required to set a location by using the position setting item 18. In response to the triggering operation on the location setting item 18, the mobile phone may display a location setting page 26 shown in FIG. 2B. The location setting page 25 includes a location input box 27, a current location option 28, a map point selection option 29, and an input method keyboard 21. A cursor is included in the location input box 27 to remind the user of starting inputting, by using the input method keyboard 21, a location of a schedule at a location indicated by the cursor.

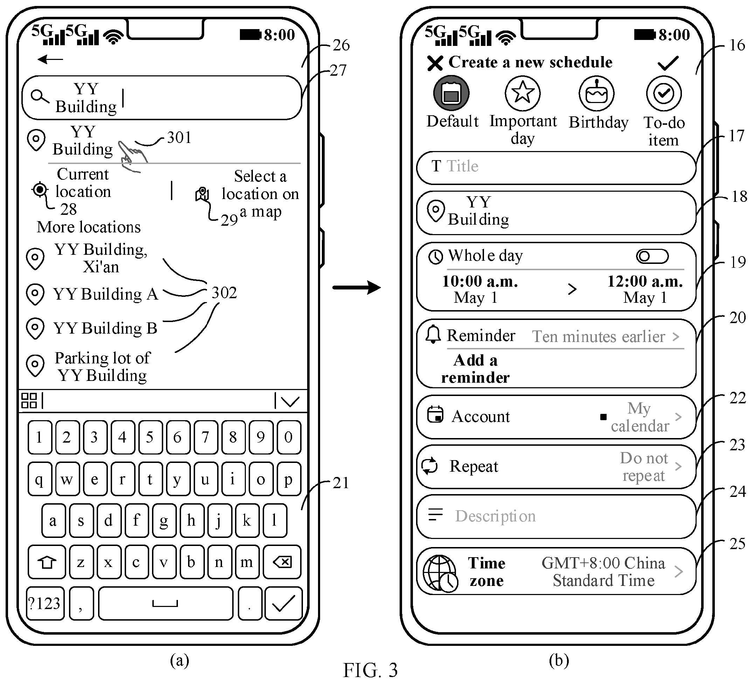

Thereafter, as shown in FIG. 3(a), the user can input a determined location of a schedule or some content of the location of the schedule in the input box by using the input method keyboard 21, such as: "YY Building". At this time, as shown in FIG. 3(a), the mobile phone may further display, in the location setting page 26, an input location option 301 corresponding to user input content and a plurality of to-be-selected location options 302 associated with the user input content. The user may perform a triggering operation on a location option corresponding to a location of a schedule based on a location displayed in the input location option 301 and the plurality of to-be-selected location options 302. For example, a location option corresponding to the location of the schedule may be the input location option 301. In response to a location option (such as the input location option 301) of the user, the mobile phone may display the schedule creation interface 16 shown in FIG. 3(b). In the schedule creation interface 16 shown in FIG. 3(b), the location setting item 18 may display a location corresponding to a location option selected by the user, such as a YY Building.

On the location setting page 26 shown in FIG. 3(a), the user may further perform a triggering operation on a current location option 28 on the location setting page 26. In response to a triggering operation by the user on the current location option 28, the mobile phone may acquire a current location of the mobile phone, such as "YY Building", and switch the location setting page 26 to the schedule creation interface 16 shown in FIG. 3(b). A particular implementation of this process is not shown in the figure, and may be in any possible representation forms. This is not specifically limited in the present disclosure.

On the location setting page 26 shown in FIG. 3(a), the user may further perform a triggering operation on the map point selection option 29 on the location setting page 26. In response to the triggering operation by the user on the map point selection option 29, the mobile phone may display a map and a location search box on the location setting page 26. In response to a movement operation by the user on a cursor in a map or content input in the search box, the mobile phone may display a current location option and a plurality of nearby location options. The current location option displays a location (that is, a current location, such as a YY Building) of the cursor in the map. The nearby location option displays a location near the current location. Then, the user may perform a triggering operation on any one of the current location option and the plurality of to-be-selected location options. In response to a location option (such as the current location option) of the user, the mobile phone may display the schedule creation interface 16 shown in FIG. 3(b). A particular implementation of this process is not shown in the figure, and may be in any possible representation forms. This is not specifically limited in the present disclosure.

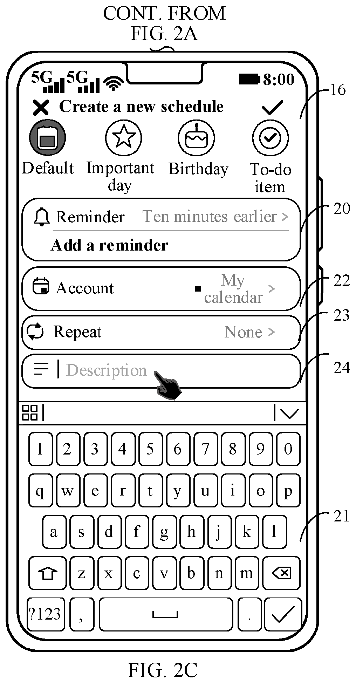

In addition, in the schedule creation interface 16 shown in FIG. 2A, the user may further set/adjust, through any possible operations, the time period displayed in the time setting item 19, the reminder time displayed in the reminder setting item 20, the account displayed in the account setting item 22, the repetition policy displayed in the repetition setting item 23, the description displayed in the description setting item 24, and the time zone displayed in the time zone setting item 25. For example, the user may perform a triggering operation on the description setting item 24 such that the mobile phone can display, in response to the triggering operation, a cursor at an initial input location of the description setting item 24 and displays the input method keyboard 21, shown in FIG. 2C. Then, the user may start inputting a description of a schedule from the initial input location of the description setting item 24 by using the input method keyboard 21.

It can be seen that in the existing schedule creation solution, a user is required to input or set each piece of sub-information of schedule information item by item on a schedule creation interface. Thus, an operation is complex, efficiency of creating the schedule is low, and user experience is poor.

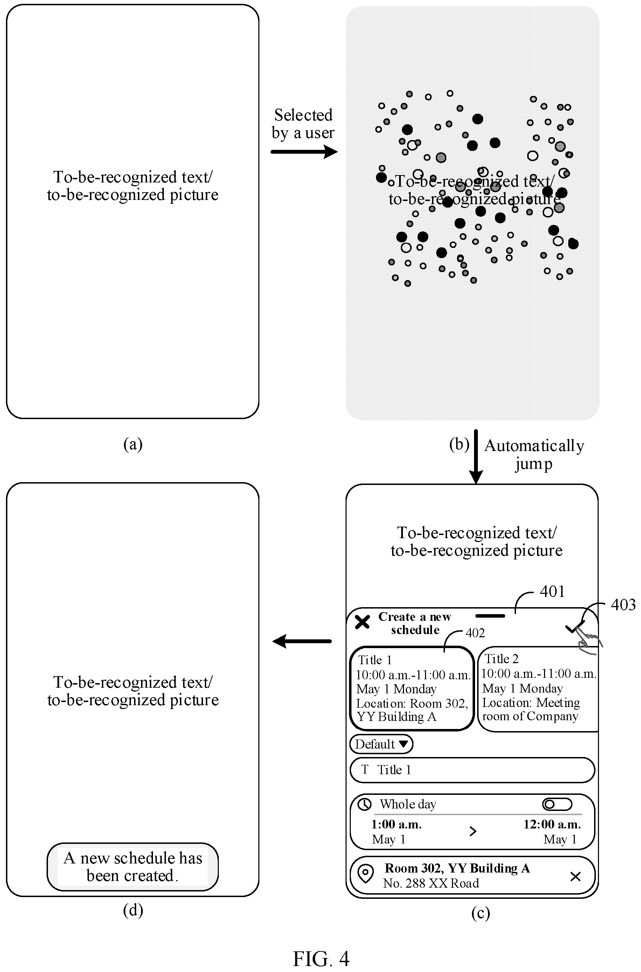

To resolve the above problem, an embodiment of the present disclosure provides a method for creating a schedule. The method may be applied to an electronic device. In the method, with reference to FIG. 4(a), a user may select, according to a requirement of the user and on a first interface (such as an interface of a first application on which a first multimedia resource is presented) of the electronic device, a first multimedia resource having schedule information. The first multimedia resource may be a first text or a first picture. Then, in response to an input operation by the user of inputting the first text or the first picture into a schedule management application, the electronic device (which may be specifically a schedule management application of the electronic device, such as a calendar application) may parse and recognize the first text or the first picture selected by the user, to obtain schedule information of the first text or schedule information of the first picture. In some embodiments, during parsing, with reference to FIG. 4(b), the electronic device may display a parsing picture including a parsing dynamic effect.

After the parsing, the electronic device may generate at least one to-be-determined schedule based on the obtained schedule information, and display, in a schedule preview window 401 shown in FIG. 4(c), the at least one to-be-determined schedule to the user for the user to select. All or some content of the schedule information in the first multimedia resource may be displayed in a to-be-determined schedule option. After the user performs a selection operation on a target to-be-determined schedule in the schedule preview window, the electronic device may determine the target to-be-determined schedule as a schedule to be finally created and create the schedule.

For example, the user may take a to-be-determined schedule to which title 1 belongs as a target to-be-determined schedule, perform a triggering operation on a corresponding to-be-determined schedule option 402, and then perform a triggering operation on a schedule determination option 403. A combination of the triggering operation on the to-be-determined schedule option 402 and the triggering operation on the schedule determination option 403 is the selection operation. Then, the electronic device may determine the to-be-determined schedule to which title 1 belongs as the schedule to be finally created and create the schedule.

In addition, after creation, to enable the user to conveniently continue to perform another operation on a previous interface, the electronic device may display an interface showing that the user selects the first multimedia resource, that is, an interface shown in FIG. 4(d). Reminder information such as "A new schedule has been created" may be further displayed on the interface, to notify the user that the schedule has been created.

In the above solution, a specific execution body may be specifically a schedule management application of the electronic device, such as a calendar application.

It can be seen that in the technical solutions provided in the present disclosure, the electronic device may automatically pregenerate, based on a picture or text selected by the user, at least one to-be-determined schedule for the user to select. In this case, the user is only required to select an appropriate to-be-determined schedule according to a requirement, and then the electronic device can create a corresponding to-be-determined schedule. In the entire creation process, the user is only required to perform a selection operation on the picture or text having the schedule information and perform a selection operation on the target to-be-determined schedule. Thus, the electronic device can generate a schedule required by the user. It can be seen that according to the technical solutions provided in the present disclosure, a number of operations required for creating a schedule is greatly reduced, and user experience is improved. Moreover, since a plurality of selectable to-be-determined schedules can be provided for the user, a finally created schedule can better satisfy the requirement of the user.

Technical solutions provided in embodiments of the present disclosure are described below in combination with accompanying drawings.

The technical solutions provided in the embodiments of the present disclosure may be applied to an electronic device having a schedule creation function. In some embodiments, the electronic device may be a mobile phone, a tablet computer, a handheld computer, a personal computer (personal computer, PC), an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, an in-vehicle device, or a smart home device and/or a smart city device, etc. A specific type of the electronic device is not specifically limited in the embodiments of the present disclosure.

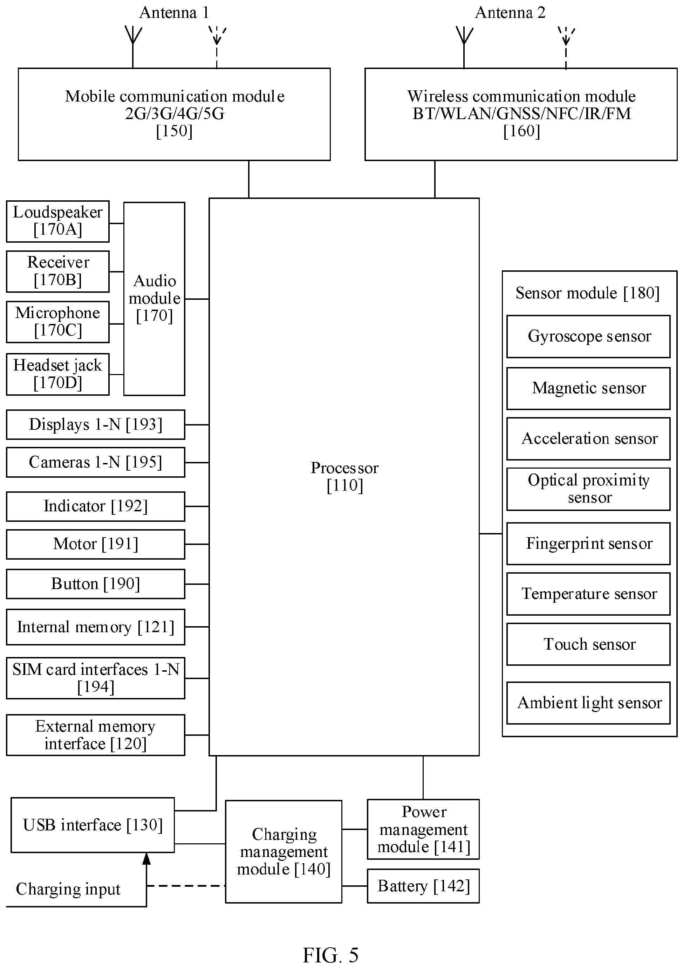

For example, the electronic device is the mobile phone. FIG. 5 is a schematic structural diagram of an electronic device according to an embodiment of the present disclosure.

With reference to FIG. 5, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a display 193, a subscriber recognition module (subscriber recognition module, SIM) card interface 194, a camera 195, etc. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, etc.

The processor 110 may include one or more processing units. For example, the processor 110 may include an application processor (application processor, AP), a modem, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), etc. Different processing units may be independent devices, or may be integrated to one or more processors.

The controller may be a nerve center and a command center of the electronic device. The controller may generate an operation control signal according to an instruction operation code and a time-sequence signal, and control acquirement and execution of instructions.

A memory may be further arranged in the processor 110 and is configured to store instructions and data. In some embodiments, the memory in the processor 110 is a cache memory. The memory may store instructions or data recently used or cyclically used by the processor 110. If the processor 110 is required to use the instructions or data again, the processor may directly call the instructions or the data from the memory. Repeated access is avoided, and waiting time of the processor 110 is reduced such that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identifier module (subscriber identity module, SIM) interface, and/or a universal serial bus (universal serial bus, USB) interface, etc.

The charging management module 140 is configured to receive charge input from a power supply device (such as a charger and notebook computergy). The charger may be a wireless charger or a wired charger. In some embodiments of wired charging, the charging management module 140 may receive charging input of the wired charger through the USB interface 130. In some embodiments of wireless charging, the charging management module 140 may receive wireless charging input by using a wireless charging coil of the electronic device. When the charging management module 140 charges a battery 142, the power management module 141 may supply power to the electronic device. The battery 142 may be specifically formed by a plurality of batteries in series.

The power management module 141 is configured to be connected to the battery 142, the charging management module 140, and the processor 110. The power management module 141 receives input from the battery 142 and/or the charging management module 140, and supplies power to the processor 110, the internal memory 121, the display 193, the camera 195, the wireless communication module 160, etc. The power management module 141 may be further configured to monitor parameters such as a voltage of the battery, an electric current of the battery, a number of cycles of the battery, and a health state (electricity leakage and impedance) of the battery. In some other embodiments, the power management module 141 may be arranged in the processor 110.

The external memory interface 120 may be configured to be connected to an external non-volatile memory, to expand a storage capability of the electronic device. The external non-volatile memory is in communication with the processor 110 through the external memory interface 120, to implement a data storage function. For example, a file such as music or video is stored in the external non-volatile memory.

The internal memory 121 may include one or more random access memories (random access memory, RAM), and one or more non-volatile memories (non-volatile memory, NVM). The random access memory may be directly read and written by the processor 110, may be configured to store executable programs (such as machine instructions) of an operating system or another running program, and may be further configured to store data of a user and data of an application. The non-volatile memory may also store executable programs, data of a user, and data of an application, etc., and may be loaded into the random access memory in advance for the processor 110 to directly read and write.

The touch sensor is alternatively referred to as a "touch device". The touch sensor may be arranged on the display 193. The touch sensor and the display 193 form a touchscreen, which is alternatively referred to as a "touch screen". The touch sensor is configured to detect a touch operation on or near the touch sensor. The touch sensor may transfer the detected touch operation to the application processor, to determine a touch event type. Visual output related to the touch operation may be provided by the display 193. In some other embodiments, the touch sensor may alternatively be arranged on a surface of the electronic device, and is located at a location different from that of the display 193.

The ambient light sensor is configured to sense brightness of ambient light. For example, the ambient light sensor may measure light intensity of four channels of the ambient light and output the light intensity to the processor 110. The processor 110 may perform processing based on the light intensity of the four channels of the ambient light, to obtain the light intensity of the ambient light.

The pressure sensor is configured to sense a pressure signal, and may convert the pressure signal into an electrical signal. In some embodiments, the pressure sensor may be arranged on the display 193. There are many types of pressure sensors, such as a resistive pressure sensor, an inductive pressure sensor, and a capacitive pressure sensor. When a touch operation is performed on the display 193, the electronic device detects intensity of the touch operation by the pressure sensor. The electronic device may further compute a touched location based on a detected signal of the pressure sensor. In some embodiments, touch operations performed on the same touch location but having different touch operation intensity may correspond to different operation instructions. For example, when a touch operation having touch operation intensity less than a first pressure threshold is performed on a short message application icon, an instruction of viewing a short message is executed. When a touch operation of which touch operation intensity is greater than or equal to the first pressure threshold acts on the short message application icon, an instruction of creating a new short message is executed.

In some embodiments, the electronic device may include 1 or N cameras 195, where N is a positive integer greater than 1. In an embodiment of the present disclosure, a type of the camera 195 may be distinguished according to a hardware configuration and a physical location. For example, a camera arranged on a side, on which the display 193 is arranged, of the electronic device may be referred to as a front-facing camera. A camera arranged on a side, on which a rear cover is arranged, of the electronic device may be referred to as a rear-facing camera. For another example, a camera having a short focal length and a large angle of view may be referred to as a wide-angle camera. A camera having a long focal length and a small angle of view may be referred to as an ordinary camera. A focal length and an angle of view are relative concepts and are not limited to specific parameters. Thus, the wide-angle camera and the ordinary camera are also relative concepts, and may be specifically distinguished according to physical parameters such as focal lengths and angles of view.

The electronic device implements a display function by using the GPU, the display 193, the application processor, etc. The GPU is a microprocessor for image editing and is connected to the display 193 and the application processor. The GPU is configured to perform mathematical and geometric computation and render graphics. The processor 110 may include one or more GPUs that execute program instructions to generate or change display information.

The electronic device may implement a picture taking function by using the ISP, the camera 195, the video codec, the GPU, the display 193, the application processor, etc. The GPU is configured to perform mathematical and geometric computation and render graphics. The processor 110 may include one or more GPUs that execute program instructions to generate or change display information. In an embodiment of the present disclosure, when each image frame is drawn, a function of the GPU is used such that a finally displayed picture can obtain a better display effect and performance.

The ISP is configured to process data fed back by the camera 195. For example, when a picture is taken, a shutter is opened, and light is transmitted to a photosensitive element of the camera through a lens. An optical signal is converted to an electrical signal. The photosensitive element of the camera transmits the electrical signal to the ISP for processing. The electrical signal is converted to an image visible to a naked eye. The ISP may further perform algorithm optimization on noise and brightness of an image. The ISP may further optimize parameters such as exposure and a color temperature of a picture taking scenario. In some embodiments, the ISP may be arranged in the camera 195. The camera 195 is configured to capture a static image or video.

The digital signal processor is configured to process a digital signal. In addition to processing a digital image signal, the digital signal processor may further process another digital signal. For example, when the electronic device selects a frequency point, the digital signal processor is configured to perform Fourier transformation, etc. on frequency energy.

The display 193 is configured to display an image, video, etc. The display 193 includes a display panel. A liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), etc. may be used as the display panel. In some embodiments, the electronic device may include 1 or N displays 193, where N is a positive integer greater than 1.

In an embodiment of the present disclosure, the display 193 may be configured to display a page (such as a wizard page (including a highlight recommendation page and an external module access page)) required by the electronic device, and display, on the interface, an image obtained through picture taking by any one or more cameras 195.

A wireless communication function of the electronic device may be implemented by using the antenna 1, the antenna 2, the mobile communication module 150, the wireless communication module 160, the modem, the baseband processor, etc.

The antenna 1 and the antenna 2 are configured to transmit and receive an electromagnetic wave signal. Each antenna in the electronic device may be configured to cover one or more communication bands. Different antennas may be multiplexed such that a utilization rate of the antennas can be increased.

The mobile communication module 150 may provide a solution for wireless communication, including 2G/3G/4G/5G, etc., that is applied to the electronic device. The mobile communication module 150 may receive an electromagnetic wave by using the antenna 1, filter and amplify the received electromagnetic wave, etc., and transmit the electromagnetic wave to the modem for demodulation. The mobile communication module 150 may further amplify a signal modulated by the modem, and convert the signal to an electromagnetic wave by the antenna 1 for radiation. In some embodiments, at least some function modules of the mobile communication module 150 may be arranged in the processor 110. In some embodiments, at least some function modules of the mobile communication module 150 may be arranged in the same device as at least some modules of the processor 110.

The modem may include a modulator and a demodulator. The modulator is configured to modulate a to-be-transmitted low-frequency baseband signal to a medium-high-frequency signal. The demodulator is configured to demodulate the received electromagnetic wave signal into a low-frequency baseband signal. Then, the demodulator transfers the low-frequency baseband signal acquired through demodulation to the baseband processor for processing. The low-frequency baseband signal is processed by the baseband processor and then transferred to the application processor. The application processor outputs a sound signal through an audio device (not limited to a speaker 170A, a receiver 170B, etc.), or displays an image or video through the display 193. In some embodiments, the modem may be an independent device. In some other embodiments, the modem may be independent of the processor 110 and may be arranged in a same device as the mobile communication module 150 or another functional module.

The wireless communication module 160 may provide a wireless communication solution including wireless local area networks (wireless local area networks, WLAN) (such as wireless fidelity (wireless fidelity, Wi-Fi)), Bluetooth (Bluetooth, BT), a global navigation satellite system (global navigation satellite system, GNSS), frequency modulation (frequency modulation, FM), near field communication (near field communication, NFC), an infrared (infrared, IR) technology, etc., which is applied to the electronic device. The wireless communication module 160 may be one or more devices that integrate at least one communication processing module. The wireless communication module 160 receives an electromagnetic wave by using the antenna 2, modulates a frequency of the electromagnetic wave signal, filters the electromagnetic wave signal, and transmits a processed signal to the processor 110. The wireless communication module 160 may further receive a to-be-transmitted signal from the processor 110, modulate a frequency of the to-be-transmitted signal, amplify the to-be-transmitted signal, and convert the to-be-transmitted signal to an electromagnetic wave by the antenna 2 for radiation.

The SIM card interface 194 is configured to be connected to an SIM card. The SIM card may be inserted into the SIM card interface 194 or unplugged from the SIM card interface 194, to make contact with or be separated from the electronic device. The electronic device may support one or N SIM card interfaces. The SIM card interface 194 may support a Nano SIM card, a Micro SIM card, a SIM card, etc. A plurality of cards may be simultaneously inserted into the same SIM card interface 194. The SIM card interface 194 may be further compatible with an external storage card. The electronic device interacts with a network through the SIM card, to implement a call function, a data communication function, etc. One SIM card corresponds to one user number.

It can be understood that an interface connection relationship between modules shown in an embodiment of the present disclosure is merely an illustrative description, and constitutes no limitation on the structure of the electronic device. In some other embodiments of the present disclosure, the electronic device may use an interface connection manner different from that in the above embodiments, or use combinations of a plurality of interface connection manners.

Certainly, it can be understood that FIG. 5 only shows an illustrative description in a case that the electronic device is in a form of the mobile phone. If the electronic device is in a form of another device such as the tablet computer, the handheld computer, the PC, the PDA, and the wearable device (such as a smart watch and a smart bracelet), a structure of the electronic device may include fewer or more structures than those shown in FIG. 5. This is not limited herein.

It can be understood that generally, functions of the electronic device are implemented with requiring not only support of hardware, but also cooperation with software. A layered architecture, an event-driven architecture, a microkernel architecture, a microservice architecture, or a cloud architecture may be used for a software system of the electronic device. In an embodiment of the present disclosure, an Android system having a layered architecture is taken as an example to illustratively describe the software structure of the electronic device.

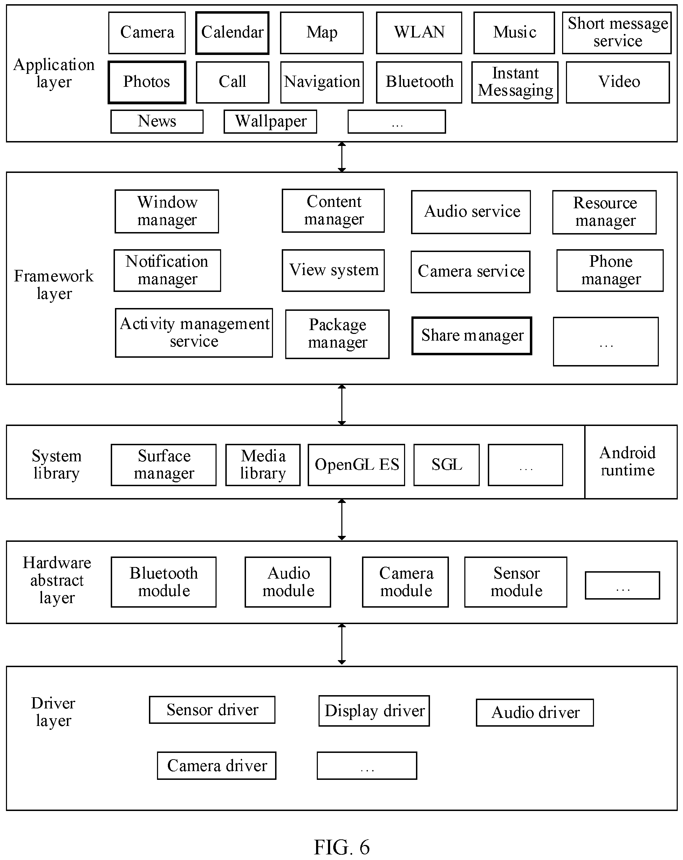

FIG. 6 is a schematic diagram of a layered architecture of a software system of an electronic device according to an embodiment of the present disclosure. Software is divided to several layers by the layered architecture. Each layer has a clear role and task. The layers are in communication with each other through software interfaces (such as APIs).

In some examples, with reference to FIG. 6, in an embodiment of the present disclosure, software of the electronic device is divided into five layers: an application layer, a framework layer (which is alternatively referred to as an application framework layer), a system library, android runtime (android runtime), a hardware abstraction layer (hardware abstract layer, HAL), and a driver layer (which is alternatively referred to as a kernel layer) from top to bottom. The system library and the android runtime may alternatively be referred to as a local framework layer or a native layer.

The application layer may include a series of applications. With reference to FIG. 6, the application layer may include applications (application, APP) such as a camera application, a photos application, a calendar application, a map application, a WLAN application, a Bluetooth application, a music application, a video application, a short message service application, a call application, a navigation application, and an instant messaging application.

In an embodiment of the present disclosure, a schedule management application of the electronic device may be a calendar application.

The framework layer provides an application programming interface (application programming interface, API) and a programming framework for the applications of the application layer. The application framework layer includes some predefined functions or services. For example, the application framework layer may include an activity manager, a window manager, a content provider, an audio service, a view system, a phone manager, a resource manager, a notification manager, a package manager, and a share manager, etc. This is not limited in the embodiments of the present disclosure.

The window manager is configured to manage a window application. The window manager may acquire a size of a display, determine whether a status bar exits, lock a screen, take a screenshot, etc.

The content provider is configured to store and acquire data and make the data accessible to an application. The data may include video, an image, audio, calls made and answered, a browsing history, a bookmark, an address book, etc.

The view system includes a visual control, such as a control for displaying a text and a control for displaying a picture. The view system may be configured to build an application. A display interface may be composed of one or more views. For example, a display interface including a short message notification icon may include a view for displaying a text and a view for displaying a picture.

The phone manager is configured to provide a communication function of the electronic device. For example, the call manager may manage a call state (including a state of making a call, a state of answering a call, a state of hanging up, etc.) of a call application.

The resource manager provides various resources for an application, such as a localized character string, an icon, a picture, a layout file, and a video file.

The notification manager enables an application to display a notification message in a status bar. The notification message can be used for conveying a message in a notification type. The message can automatically disappear after a short stay without user interaction. For example, a notification manager is configured for a notification of download completion, message reminding, etc. The notification manager may alternatively be a notification which appears in a top status bar of a system in a form of a graph or a scroll bar text, such as a notification of an application running on a background, or a notification which appears on a screen in a form of a dialog window. For example, a reminder text message is displayed in a status bar, a reminder sound is given, an electronic device vibrates, an indicator light blinks, etc.

A package manager in an Android^{®} system is configured to manage an application package. The package manager allows an application to acquire detailed information about installed applications and their services, permissions, etc. The package manager is further configured to manage events such as installation, uninstallation, and upgrade of applications.

The sharing manager is configured to call, when an application is required to share data, an interface of another application that supports sharing of the data, to implement sharing between the two applications. For example, a user shares a picture in a photos application with a calendar application for creating a schedule, or shares a short message in a short message service application with a calendar application for creating a schedule.

The system library may include a plurality of function modules, such as a surface manager (surface manager), media libraries (Media Libraries), an OpenGL ES, and an SGL. The surface manager is configured to manage a display subsystem, and provide fusion of a 2D layer and a 3D layer for a plurality of applications. The media libraries support reproduction and recording of common audio and video in a plurality of types of formats, static image files, etc. The media libraries can support a plurality of audio and video coding formats, such as MPEG4, H.264, MP3, AAC, AMR, JPG, and PNG. The OpenGL ES is configured to implement three-dimensional graphics drawing, image rendering, synthesis, layer processing, etc. The SGL is a drawing engine for 2D drawing.

The Android runtime includes a kernel library and an ART virtual machine. The Android runtime is responsible for scheduling and managing the Android system. The kernel library includes two portions: one portion is a function that is required to be called by a Java language, and another portion is a kernel library of Android. The application layer and the application framework layer run in the ART virtual machine. The ART virtual machine executes Java files of the application layer and the application framework layer as binary files. The ART virtual machine is configured to execute functions such as object lifecycle management, stack management, thread management, security and exception management, and garbage collection.

The HAL is an interface layer located between the operating system kernel and the hardware circuit, to abstract hardware. The HAL hides hardware interface details of a specific platform, and provides a virtual hardware platform for an operating system, to make the operating system hardware-independent and capable of being transplanted on a plurality of platforms. The HAL provides a standard interface to display a device hardware function to a higher-level Java API framework (that is, the framework layer). The HAL includes a plurality of library modules, each module implementing an interface for a specific type of hardware component, such as, an audio HAL audio module, a Bluetooth HAL Bluetooth module, a camera HAL camera module (which may alternatively be referred to as a camera HAL or camera hardware abstraction module), and a sensors HAL sensor module (which may alternatively be referred to as an Isensor service).

The kernel layer is a layer between hardware and software. The kernel layer includes at least a display driver, a camera driver, an audio driver, a sensor driver, a battery driver, etc. This is not limited in the present disclosure. The sensor driver may specifically include a driver of each sensor included in an electronic device, such as an ambient light sensor driver. For example, the ambient light sensor driver may timely transmit, in response to an indication or an instruction of acquiring detection data by a sensor module, detection data of an ambient light sensor to a sensing module. The technical solutions provided in the embodiments of the present disclosure may be implemented in an electronic device having the above hardware architecture or software architecture.

In an embodiment of the present disclosure, the schedule management application of the electronic device may recognize two types of first multimedia resources: the first picture and the first text, to create a corresponding schedule based on a parsing result. Based on this, the method for creating a schedule provided in the present disclosure may be divided into a flow for creating a schedule for a picture and a flow for creating a schedule for a text.

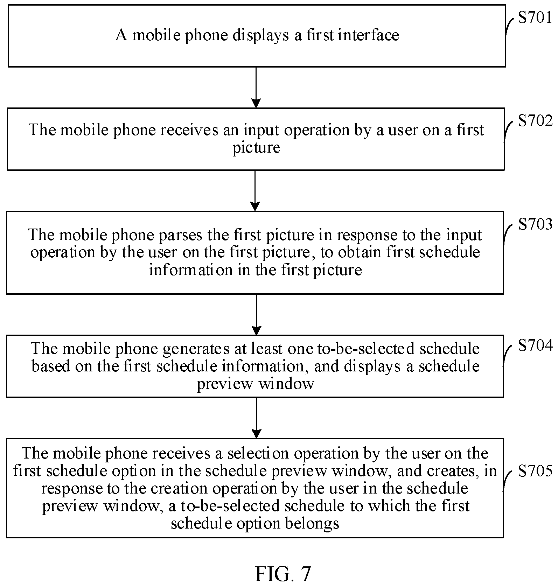

A flow for creating a schedule for a picture according to an embodiment of the present disclosure is introduced below in combination with FIG. 7. FIG. 7 is a schematic diagram of a flow for creating a schedule for a picture according to an embodiment of the present disclosure. With reference to FIG. 7, for example, the electronic device is a mobile phone. The flow for creating a schedule for a picture may include S701-S705:
S701: The mobile phone displays a first interface.

Specifically, a first picture may be displayed on the first interface. The first picture may be any picture on the mobile phone, such as a picture in a photos application, or a picture obtained through screen capture. For example, the first interface may be any display interface that can present the first picture on the mobile phone, such as: a first interface and a screenshot presentation interface of the first application that presents the first picture. The first interface of the first application may be a picture detail interface of a first picture in a photos application.

S702: The mobile phone receives an input operation by a user on the first picture.

A user may implement, according to a requirement of the user, a particular input operation on the first picture existing in the mobile phone such that a schedule management application of the mobile phone can parse the first picture, and create a schedule based on a parsing result.

In an embodiment of the present disclosure, the input operation on the first picture may be specifically a long-press operation, a swiping operation, etc. The operation may trigger the mobile phone to provide the first picture for the schedule management application, to parse the first picture and create a schedule.

S703: The mobile phone parses the first picture in response to the input operation by the user on the first picture, to obtain first schedule information in the first picture.

The first schedule information may include one or more of the following: a first theme/title, a first time period, a first location, etc.

In an embodiment of the present disclosure, a method of parsing, by the schedule management application of the mobile phone, the first picture to obtain the first schedule information in the first picture may be any feasible methods.

In a possible implementation, firstly, the schedule management application of the mobile phone may recognize the to-be-determined text in the first picture through an optical character recognition (optical character recognition, OCR) technology. Then, the schedule management application may recognize, through a named entity recognition (named entity recognition, NER) technology, all to-be-determined key words or all to-be-determined entities in the to-be-determined text, such as a person key word/entity, a number key word/entity, a title key word/entity, a time key word/entity, and a location key word/entity. Finally, the schedule management application may determine, based on a type of schedule sub-information required for creating a schedule, that the to-be-determined keyword is required to be used as a target schedule keyword in the schedule sub-information of the first schedule information. A combination of all target schedule keywords is the first schedule information obtained by parsing and recognizing the first picture by the schedule management application. Each target schedule keyword is a piece of schedule sub-information in the first schedule information.

Types of the schedule sub-information may include a time, a location, a title, etc. The target schedule keyword may be recognized by using a pretrained machine learning model (such as a random forest model) capable of classifying a keyword, or through any other feasible recognition methods. This is not specifically limited in the present disclosure.

In another possible implementation, after recognizing the to-be-determined text in the first picture through an optical character recognition (optical character recognition, OCR) technology, the schedule management application may perform word segmentation on the to-be-determined text, to obtain all to-be-determined key words. Then, the schedule management application may determine, based on a type of schedule sub-information required for creating a schedule, that the to-be-determined keyword is required to be used as a target schedule keyword in the schedule sub-information of the first schedule information.

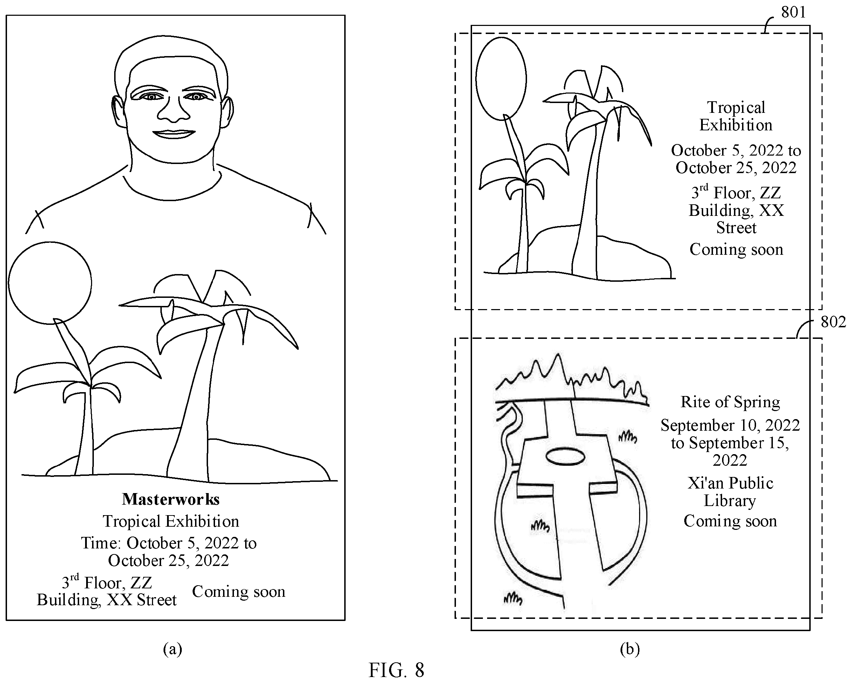

For example, the first picture may be shown in FIG. 8(a). The to-be-determined text obtained by recognizing the first picture by the schedule management application through the OCR technology may be "Masterworks Tropical Exhibition Time: October 5, 2022 to October 25, 2022 3rd Floor, ZZ Building, XX Street Coming soon". Then, all to-be-determined key words obtained after the schedule management application recognizes the to-be-determined text through the NER technology, or all to-be-determined key words obtained after the schedule management application performs word segmentation on the to-be-determined text may include: "Masterworks ", "Tropical Exhibition", "Time", "October 5, 2022 to October 25, 2022", "3rd Floor, ZZ Building, XX Street", and "Coming soon". Then, the target key words obtained by the schedule management application from the plurality of to-be-determined key words may include: "Masterworks", "Tropical Exhibition", "October 5, 2022 to October 25, 2022", and "3rd Floor, ZZ Building, XX Street". Specifically, "Masterworks" and "Tropical Exhibition" may be a first title in the first schedule information, "October 5, 2022 to October 25, 2022" may be a first time period in the first schedule information, and "3rd Floor, ZZ Building, XX Street" may be a first location in the first schedule information. Certainly, in practice, the first schedule information may have a plurality of pieces of content that can be used as the first location, a plurality of pieces of content that can be used as the first time period, etc. When at least one to-be-selected schedule is generated for the first schedule information subsequently, different to-do schedules may have different locations or different time periods. Certainly, if the first schedule information has only one piece of content that can be used as a piece of schedule sub-information (a title, a location, or a time period, etc.), when at least one to-be-selected schedule is generated for the first schedule information subsequently, some schedule sub-information of some to-be-selected schedules may be null. This is not specifically limited in the present disclosure.

In addition, it should be noted that in some embodiments, the first picture may have schedule information of a plurality of different to-do items, for example, includes one piece of schedule information for exhibition A, and one piece of schedule information for exhibition B. Then, the schedule management application may parse the first picture to obtain two pieces of schedule information. If the first picture has schedule information corresponding to different to-do items, areas occupied by the schedule information of the different to-do items in the first picture are extremely likely to be different. Based on this, when parsing a to-be-recognized picture, the schedule management application first divides, according to different areas of text content in the first picture, the text content into a plurality of pieces. Then, the schedule management application may recognize and analyze the plurality of pieces of text content separately, to obtain different schedule information included in different text content.

For example, as shown in FIG. 8(b), the first picture has a first area 801 and a second area 802. To-do events corresponding to schedule information in the first area 801 and the second area 802 are different. The schedule management application may perform, for the first area 801 and the second area 802 separately, the above flow of performing parsing and recognition to obtain the first schedule information. A particular implementation can be obtained with reference to the above related expressions for FIG. 8(a). Finally, the schedule management application may parse the first picture to obtain the schedule information. The schedule information may include first schedule information corresponding to the first area and second schedule information corresponding to the second area. The second schedule information may alternatively include one or more of the following: a second theme/title, a second time period, a second location, etc.

The first schedule information may include: "Tropical Exhibition", "October 5, 2022 to October 25, 2022", and "3rd Floor, ZZ Building, XX Street". Specifically, "Tropical Exhibition" may be a first title in the first schedule information, "October 5, 2022 to October 25, 2022" may be a first time period in the first schedule information, and "3rd Floor, ZZ Building, XX Street" may be a first location in the first schedule information. The second schedule information may include "Rite of Spring", "September 10, 2022 to September 15, 2022", and "Xi'an Public Library". Specifically, "Rite of Spring" may be a second title in the second schedule information, "September 10, 2022 to September 15, 2022" may be a second time period in the second schedule information, and "Xi'an Public Library" may be a second location in the second schedule information.

After the schedule management application of the mobile phone obtains the first schedule information in the first picture, if the schedule management application directly creates the schedule based on the first schedule information, the user cannot learn whether the first schedule information is accurate and whether a finally created schedule is a schedule required by the user. Moreover, since the schedule sub-information of the schedule information in the first picture may have a repetition or an error, even if the first schedule information obtained through parsing by the schedule management application is accurate, a schedule directly created according to the first schedule information may not satisfy a requirement of the user. Thus, to enable the user to learn of a parsing result and give the user fewer operations to instruct the schedule management application to create a schedule better satisfying a requirement of the user, the schedule management application of the mobile phone may generate a plurality of to-be-selected schedules based on the first schedule information to be selected by the user. Schedule sub-information included in different to-be-selected schedules may be different. Then, the schedule management application of the mobile phone may create a corresponding schedule in response to a selection of a to-be-selected schedule by the user. That is, S704 and S705 are performed after S703.

S704: The mobile phone generates at least one to-be-selected schedule based on the first schedule information, and displays a schedule preview window.

The schedule preview window includes a schedule option of at least one to-be-selected schedule.

Each schedule option includes values of a plurality of pieces of schedule sub-information of the to-be-selected schedule, for example, may include values of any one or more of a title, a location, and a time period. For example, content of the schedule sub-information in each schedule option may specifically include content of corresponding schedule sub-information in the first schedule information in the first picture. For example, in a case that a first schedule option included in at least one schedule option (that is, a schedule option of at least one to-be-selected schedule) includes a title, a value of the title in the first schedule option may be the first title in the first schedule information. In a case that the first schedule option includes a location, a value of the location of the first schedule option is the first location in the first schedule information. In a case that the first schedule option includes a time period, a value of the time period of the first schedule option is the first time period in the first schedule information.

In the present disclosure, the schedule preview window displaying a schedule option corresponding to at least one to-be-selected schedule generated based on the first schedule information may be referred to as a first window.

In an embodiment of the present disclosure, an entry through which the schedule management application receives a picture may have a plurality of specific forms. Thus, an input operation by the user on the first picture may have a plurality of implementations. Based on this, S701-S704 may have a plurality of implementations.

Detailed implementation flows of the technical solutions provided by the user for S701-S704 are described below by using some possible implementations.
(1) In a first possible implementation, an icon of a schedule management application (such as a calendar application) or a schedule creation function of the schedule management application may exist in a sidebar of the mobile phone. The icon is an entry through which the schedule management application receives a picture. In this case, for example, a sidebar has an icon of a calendar application. An input operation by a user on a first picture may be an operation of dragging and dropping, by the user, a thumbnail of the first picture to an icon of a schedule management application in the sidebar of the mobile phone.

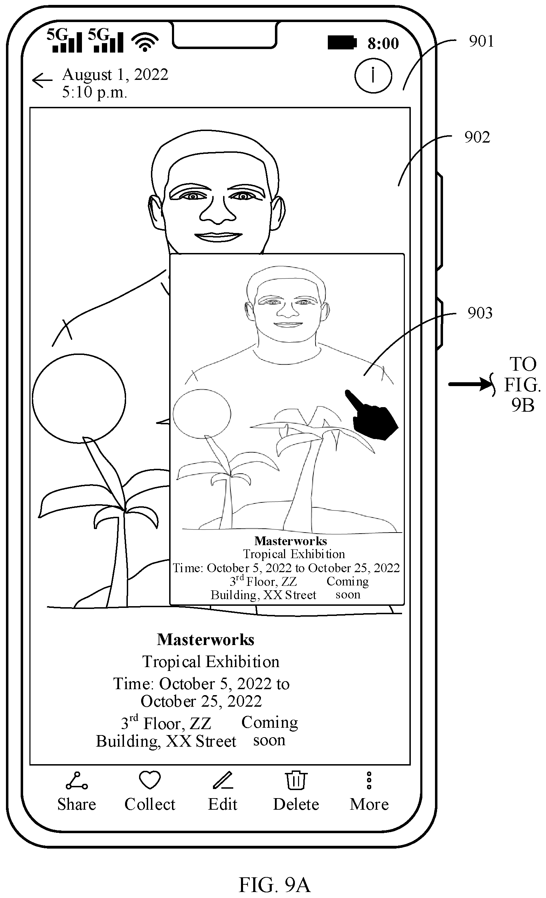

For example, a first picture is a picture in a photos application of a mobile phone, a schedule management application is a calendar application, and the first interface is a picture detail interface of the first picture in the photos application. Before selecting the first picture, the user may perform an opening operation (such as a click-on/tap-on operation on an icon of the photos application on a desktop of a mobile phone) of opening the photos application, and the mobile phone may display a photos presentation interface in response to the opening operation. The photos presentation interface may include at least one picture (which may be specifically a thumbnail of a picture). Then, the user may perform a triggering operation on the first picture having schedule information. In response to the triggering operation, the mobile phone may display a picture detail interface 901 of the first picture shown in FIG. 9A. The picture detail interface 901 is configured to present a first picture 902. At this time, S701 is completed.

Then, the user may perform a long-press operation on the first picture 902. In response to the long-press operation, the mobile phone may display a first thumbnail 903 shown in FIG. 9A on the picture detail interface 901. The first thumbnail 903 is a picture obtained after the first picture 902 is reduced to scale. Moreover, the first thumbnail 903 may move with a touch point performed by the user on the picture detail interface 901. That is, the first thumbnail 903 may be dragged and dropped by the user and moved with a hand. The long-press operation may be referred to as an identifier triggering operation on the first picture. The first thumbnail may be referred to as a resource identifier of the first picture.

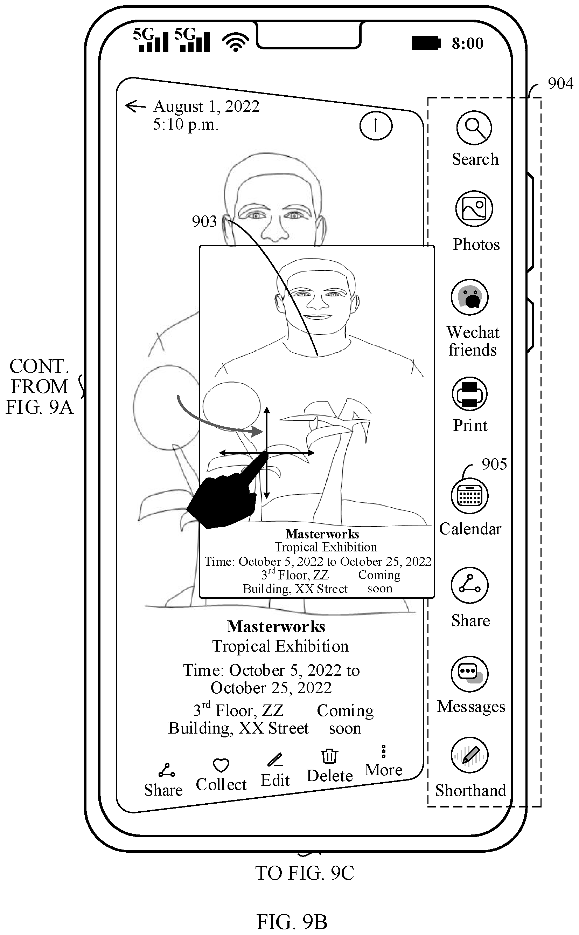

Then, the user may move the first thumbnail 903 to a frame (such as a right frame) of the picture detail interface 901 through a first drag-and-drop operation. When moving the first thumbnail to a location near the frame of the picture detail interface 901, with reference to FIG. 9B, the mobile phone may reduce, by using a particular dynamic effect (for example, rotating to the inside of a screen by taking a left frame as a rotation axis), an area occupied by the picture detail interface 901 on the display, to display a sidebar 904. The sidebar 904 includes a plurality of application icons. The plurality of application icons may include an icon 905 of a calendar application.

Then, the user may continue to perform the first drag-and-drop operation without loosening a hand, and ends the first drag-and-drop operation (that is, performs a hand raising operation without touch any more) after moving the first thumbnail 903 to the icon 905 of the calendar application. The first drag-and-drop operation is an input operation by the user on the first picture. At this time, the mobile phone receives the input operation by the user on the first picture, and S702 is completed. In an embodiment of the present disclosure, the identifier triggering operation and the first drag-and-drop operation are continuous operations without interruption. That is, the user continues to perform the first drag-and-drop operation without loosening a hand after performing the identifier triggering operation. In practice, since the first operation and the first drag-and-drop operation are continuous, the first operation and the first drag-and-drop operation may be considered as one operation. This is not specifically limited in the present disclosure. Certainly, the above picture detail interface is merely a possible expression manner of the first interface, and may be an interface in another form in practice. Operations on different first interfaces are similar or the same, and are not repeated in the present disclosure.

In some embodiments, in the above first possible implementation, a method (or may be referred to as a method of performing an input operation on the first picture) of inputting, by a user, the first picture may be referred to as a smart transfer.

Based on the above first possible implementation, in response to an operation of dragging and dropping, by the user, the resource identifier of the first picture to the icon of the schedule management application in the sidebar, the mobile phone can smoothly input the first picture into the schedule management application for parsing and recognition, to perform a subsequent flow for creating a schedule.

After the input operation on the first picture is performed, in response to the input operation (the first drag-and-drop operation) by the user on the first picture, the calendar application of the mobile phone may start parsing the first picture 902 corresponding to the first thumbnail 903, to obtain the first schedule information in the first picture. That is, S703 is performed.

Moreover, since some time is required for a parsing process, to prevent the situation that after the user performs a selection operation on the first picture, the user is unaware of the parsing process, and user experience is reduced, when parsing the first picture, the mobile phone may display a first parsing picture (or may be referred to as a resource parsing picture). The first parsing picture is used for presenting a dynamic effect of parsing, by the schedule management application, the first picture. The parsing dynamic effect may be any feasible dynamic effects, such as a particle dynamic effect or a code scanning dynamic effect.

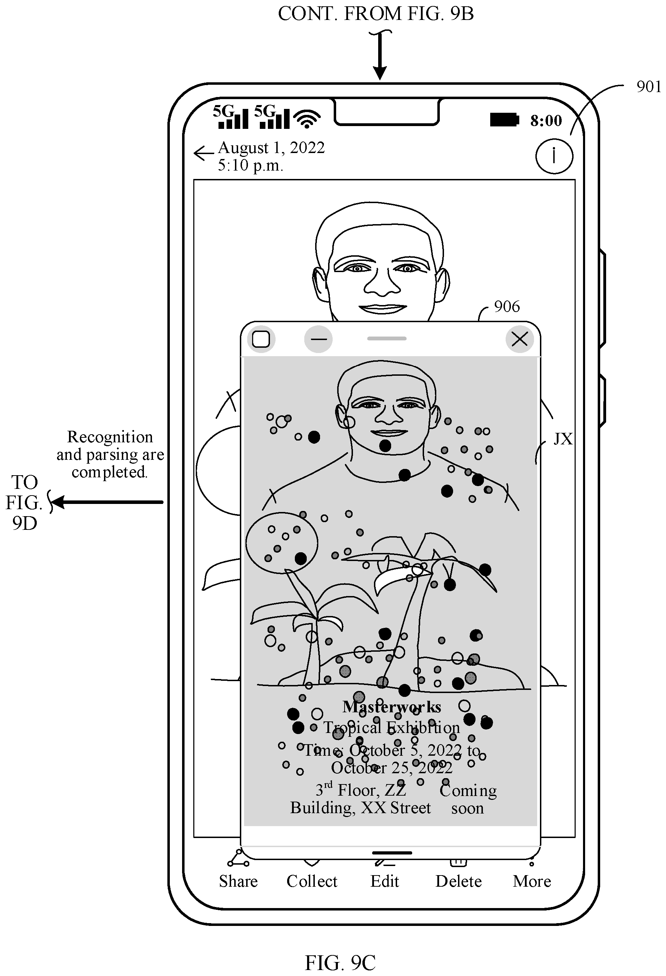

In the first possible implementation, based on an interaction rule (after the interaction rule is triggered to be started by a user, a floating window for a corresponding application is displayed) of icons in a sidebar, the mobile phone may specifically display the first parsing picture in the floating window. For example, the parsing dynamic effect is a particle dynamic effect. In combination with an example shown in FIG. 9B, when the mobile phone parses, in response to the input operation by the user on the first picture, the first picture, as shown in FIG. 9C, the mobile phone may display a first floating window 906 on the picture detail interface 901 of the first picture in an overlapping manner. The first floating window 906 is used for displaying the first parsing picture JX. The first picture is used as a background in the first parsing picture JX. The particle dynamic effect is displayed on the first picture in an overlaying manner. In an embodiment of the present disclosure, the first parsing picture may be referred to as a resource parsing picture. This is the same in a subsequent embodiment.

In this way, the user can see a dynamic effect of parsing the first picture when the schedule management application of the mobile phone parses the first picture. A negative impact that since the user is unresponsive to the parsing process, user experience is reduced is avoided.

After the mobile phone displays the first parsing picture on the first interface by using the first floating window and parsing the first picture, that is, after S703 is performed, the schedule management application of the mobile phone may display, after generating at least one to-be-selected schedule based on the first schedule information, the schedule preview window in the first floating window. Thus, the user can select a to-be-selected schedule required by the user.

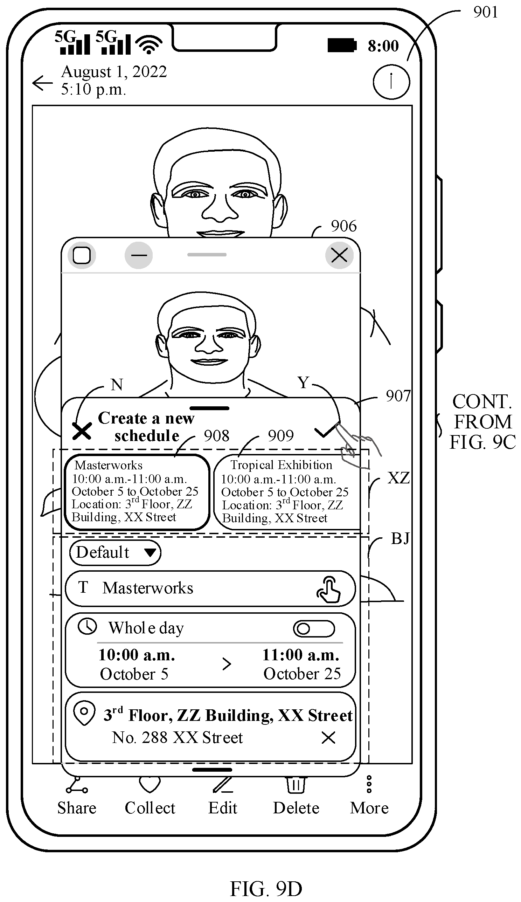

For example, the first picture has only schedule information corresponding to one to-do item. In combination with an example shown in FIG. 9C, after the calendar application of the mobile phone parses the first picture, that is, after the schedule application of the mobile phone displays the first parsing picture in the first floating window for first preset duration, as shown in FIG. 9D, the calendar application of the mobile phone may display a schedule preview window 907 in the first floating window 906, that is, perform S704. With reference to FIG. 9D, the schedule preview window 907 may include at least one schedule option, such as a schedule option 908 and a schedule option 909. Each schedule option is used for displaying all or some to-be-selected schedule information of the to-be-selected schedule to which the schedule option belongs, which may be specifically some or all first schedule information in the first picture. This is the same in a subsequent embodiment. The schedule preview window 907 in the first floating window 906 may alternatively be referred to as a pull-up window. This is the same in a subsequent embodiment.

With reference to FIG. 9A to FIG. 9C, it can be seen that after the calendar application of the mobile phone parses the first picture, finally obtained first schedule information includes: "Masterworks", "Tropical Exhibition", "October 5, 2022 to October 25, 2022 ", and "3rd Floor, ZZ Building, XX Street". Specifically, "Masterworks" and "Tropical Exhibition" may be a first title in the first schedule information, "October 5, 2022 to October 25, 2022" may be a first time period in the first schedule information, and "3rd Floor, ZZ Building, XX Street" may be a first location in the first schedule information.

The first schedule information has two pieces of schedule sub-information that may be used as the first title. Thus, the calendar application of the mobile phone may generate, based on the first schedule information, at least two to-be-selected schedules, such as to-be-selected schedule A and to-be-selected schedule B. To-be-selected schedule A may correspond to "Masterworks". To-be-selected schedule B may correspond to "Tropical Exhibition". Certainly, if the first schedule information has two pieces of schedule sub-information in other types, the calendar application of the mobile phone may generate, based on the first schedule, two different to-be-selected schedules of the schedule sub-information.

It should be noted that if the at least one piece of schedule sub-information included in the first schedule information obtained by the calendar application of the mobile phone from the first picture includes only some of all schedule sub-information (which may include a title, a location, a time period, a reminder time, an account, a repetition policy, a description, etc.) required by the calendar application to generate a to-be-selected schedule, the others of all the schedule sub-information required by the calendar application to generate the to-be-selected schedule may be set as a default value. A particular implementation of the default value can be obtained with reference to related expressions in the subsequent embodiments, and is not repeated herein.

With reference to FIG. 9A and FIG. 9C, to-be-selected schedule information of to-be-selected schedule A may include: "Masterworks" as a title, "October 5, 2022 to October 25, 2022" as a time period, "3rd Floor, ZZ Building, XX Street" as a location, and schedule sub-information that does not exist in the first schedule information and that is set as a default value. To-be-selected schedule information of to-be-selected schedule B may include: "Tropical Exhibition" as a title, "October 5, 2022 to October 25, 2022" as a time period, "3rd Floor, ZZ Building, XX Street" as a location, and schedule sub-information that does not exist in the first schedule information and that is set as a default value.

For example, a schedule option includes a title, a location, and a time period of a to-be-selected schedule. With reference to FIG. 9D, displayed in a selection area XZ in the schedule preview window 907, content of a title of a to-be-selected schedule displayed in a schedule option 908 of to-be-selected schedule A may be a first title "Masterworks", content of a time period of the to-be-selected schedule may be a first time period "10:00 a.m. to 11:00 a.m. 10.05 a.m. to 10.25 a.m.", and content of a location of the to-be-selected schedule may be a first location "3rd Floor, ZZ Building, XX Street". Specifically, "10:00 a.m. to 11:00 a.m." as the content of the time period is supplemented by default, and "10.05 a.m. to 10.25 a.m." is obtained by omitting a year in a case that the year in the time period in the first schedule information is this year. Certainly, FIG. 9D is merely an example. In practice, the schedule option may include less content or more content. Specific content of a plurality of pieces of schedule sub-information included in the schedule option may alternatively be null. For example, specific content of a title in the schedule option is null.

In the selection area XZ in the schedule preview window 907, compared with the content displayed in the schedule option 908, content displayed in the schedule option 909 of to-be-selected schedule B is as follows: the content of the title is changed from "Masterworks" to the first title "Tropical Exhibition", and the remaining content is the same as that displayed in the schedule option 908.

In some embodiments, as shown in FIG. 9D, when displaying the schedule preview window, the calendar application of the mobile phone may select the first schedule option such as the schedule option 908 by default in a preset sequence (for example, from left to right). A frame of a selected schedule option is bold or the selected schedule option is highlighted. In this way, the user can be reminded that the schedule option is selected by default. Then, if the user is required to select another schedule option according to a requirement, the user may perform a triggering operation on the another schedule option, such that the another schedule option is used as a selected schedule option.

In addition, since a display area of a schedule preview window in a floating window is limited, if two or more schedule options exist, some schedule options may be in a hidden state. In this case, if the user is required to view the hidden schedule option, the user can perform a swiping operation (such as a leftward swiping operation or a rightward swiping operation) in the selection area in the schedule preview window, to change the schedule option displayed in the selection area.

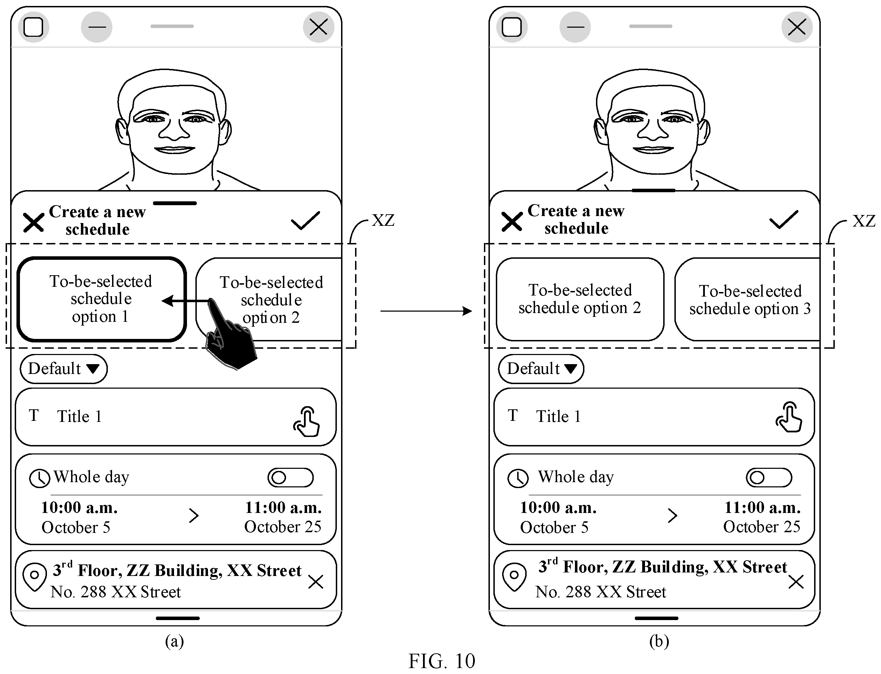

For example, three schedule options: schedule option 1, schedule option 2, and schedule option 3, exist in the schedule preview window. With reference to FIG. 10(a), when the schedule preview window starts being displayed, only schedule option 1 and schedule option 2 may be displayed in the selection area XZ. Schedule option 3 may be hidden on a right side of schedule option 2. If the user wants to view schedule option 3, the user may perform a leftward swiping operation in the selection area XZ. In response to the leftward swiping operation, content in the selection area XZ may be entirely translated to the left with a swipe by the user (that is, moved to the left with a hand) such that schedule option 3 can be displayed. In this case, as shown in FIG. 10(b), schedule option 2 and schedule option 3 may be displayed in the selection area XZ of the schedule preview window. Similarly, more schedule options exist in the schedule preview window.

Further, with reference to FIG. 9D, to enable the user to conveniently instruct the calendar application of the mobile phone to create a schedule or not create a schedule, the schedule preview window further includes a cancellation option N and a confirmation option Y. The cancellation option N is used for triggering the mobile phone to not create a new schedule, and not display the schedule preview window any more. The confirmation option Y is used for triggering the mobile phone to create a to-be-selected schedule to which a currently selected schedule option belongs, and not display the schedule preview window any more. The cancellation type selection N may be an icon in a pattern of "×". The confirmation option Y may be an icon in a pattern of "√".

After the mobile phone displays the schedule preview window in the first floating window, the user may select a schedule option according to a requirement of the user, and perform a triggering operation (that is, a creation operation mentioned in the present disclosure) on the confirmation option Y in the schedule preview window. Thus, the mobile phone creates a corresponding schedule in response to the triggering operation. That is, S705 is performed after S704.

Based on the above technical solution, the mobile phone can display the schedule preview window by using the floating window. Thus, the user can intuitively see, from the schedule preview window by using at least one schedule option, information of at least one to-be-selected schedule generated from the first schedule information in the first picture. Further, the user can select a schedule option according to a requirement of the user. The mobile phone can rapidly create a schedule satisfying the requirement of the user. In addition, since the floating window does not affect the blocked first interface that is currently displayed by the mobile phone, the user can further perform an operation satisfying a requirement of the user on the first interface at any time when viewing the schedule preview window. Thus, user experience is improved. For example, the first interface is a picture detail interface of a first picture, and the user can perform any possible editing on the first picture at any time.

In some embodiments, to conveniently compare, when a user selects a schedule option, the schedule option with content in a first picture such that the user can more accurately select a schedule option satisfying a requirement of the user, when displaying the schedule preview window, the schedule management application of the mobile phone may further have a recognized content area for displaying the first picture. In the above first possible implementation, as shown in FIG. 9D, the recognized content area S may be a display area other than the schedule preview window in the first floating window.

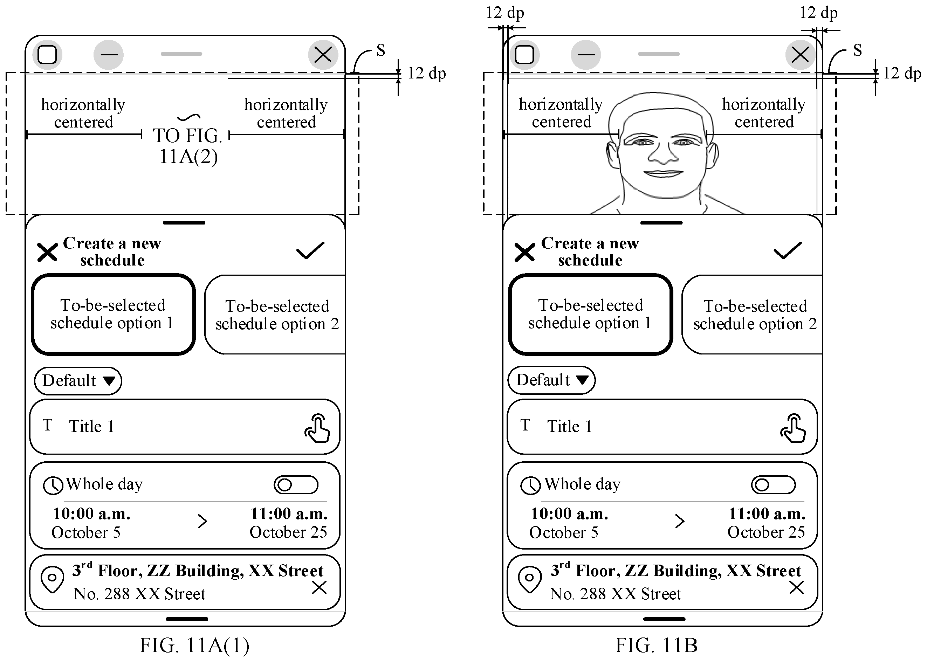

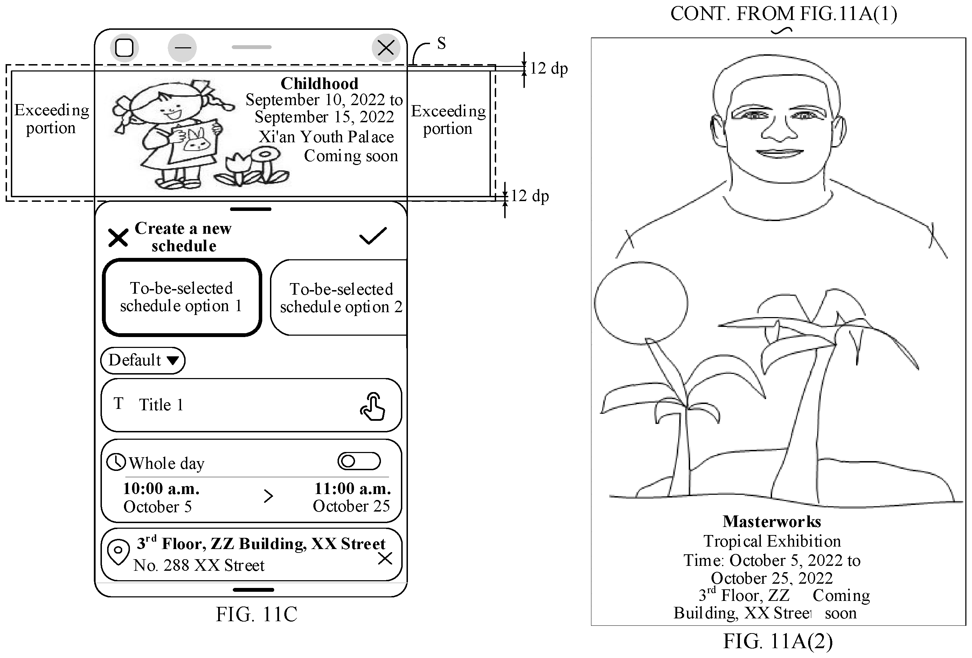

When the mobile phone initially displays the first floating window, a default display manner of the first picture in the recognized content area in the first floating window may have two scenarios as follows:
in a first possible scenario, with reference to FIG. 11A(1) and FIG. 11A(2), a minimized first picture may be presented in the recognized content area S. In a minimized case, the first picture is entirely displayed in the recognized content area. In this case, a display size of the first picture may be a preset percentage, such as 6.25%, of a display size of the first picture in the display area of the first floating window in a case of full-screen display. The preset percentage may be related to a proportion of the recognized content area in the display area of the first floating window. In a case of the minimized first picture, the schedule management application of the mobile phone cannot further reduce, in response to a reduction operation by a user on the first picture in the first picture, the first picture, or may control, in response to a reduction operation by a user on the first picture in the first picture, the first picture to generate a dynamic effect of reduction (a dynamic effect of an overall reduction) and then return to a minimized state.

In some possible design manners, with reference to FIG. 11A(1) and FIG. 11A(2), in this case, the minimized first picture in the recognized content area S may be displayed in a horizontally-centered manner. Moreover, an upper frame of the minimized first picture may be apart from an upper side edge of the recognized content area S by a particular distance, such as 12 dp. A lower frame of the minimized first picture may overlap a lower side edge of the recognized content area S or may be apart from a lower side edge of the recognized content area S by a particular distance, such as 12 dp.

Certainly, in practice, in the first possible scenario, a specific design manner of the minimized first picture in the recognized content area S may be any feasible designs. This is not specifically limited in the present disclosure.

In a second possible scenario, with reference to FIG. 11B, some content of the first picture display in a full-screen manner may be presented in the recognized content area S. In this case, the first picture is displayed in the display area of the first floating window in a full-screen manner in a case that an original picture scale (such as a picture scale in which a length-width ratio is 16:9) is maintained. However, since the schedule preview window is required to be displayed, some content in the first picture displayed in a full-screen manner may be blocked and hidden by the schedule preview window. In other words, the first picture is used as a background when the schedule preview window is displayed in the first floating window.

In some possible design manners, if the first picture is a longitudinal picture (a length in an up-down direction (a direction from an upper/lower side of the mobile phone to a lower/upper side) is greater than a length in a left-right direction (a direction from a left/right side end of the mobile phone to a right/left side)) or a square picture, with reference to FIG. 11B, in this case, the first picture displayed in the recognized content area S in a full-screen manner may be displayed in a horizontally-centered manner. That is, a left frame of some content of the first picture displayed in the recognized content area S is apart from a left side edge of the recognized content area S by a particular distance (such as 12 dp). A right frame of some content of the first picture in the recognized content area S is apart from a right side edge of the recognized content area S by a particular distance.

Moreover, an upper side edge (specifically, an upper frame of the first picture) of some content of the first picture displayed in the recognized content area S may be apart from an upper side edge of the recognized content area S by a particular distance, such as 12 dp. A lower side edge of the some content of the first picture displayed in the recognized content area S may coincide with a lower side edge of the recognized content area S.

In some other possible design manners, if the first picture is a horizontal picture (a length in an up-down direction (a direction from an upper/lower side of the mobile phone to a lower/upper side) is less than a length in a left-right direction (a direction from a left/right side end of the mobile phone to a right/left side)), with reference to FIG. 11C, in this case, the first picture displayed in a full-screen manner in the recognized content area S may be displayed in a horizontally-centered manner. An upper frame of the some content of the first picture in the recognized content area S is apart from an upper frame of the recognized content area S by a particular distance, such as 12 dp. A lower frame of the some content of the first picture in the recognized content area S is part from a lower frame of the recognized content area S by a particular distance. An upper frame and a lower frame of some content of the first picture in the recognized content area S are an upper frame and a lower frame of the first picture respectively.

In addition, in addition to some content displayed in the recognized content area S, with reference to FIG. 11C, some exceeding content (that is, exceeding portions in the figure) exists on a left side and a right side of the recognized content area of the first picture and are not displayed. Certainly, the figure is merely an example. In practice, the exceeding portion is not in an actual existing form as the example in the figure, but is in any other possible existing forms. For example, the exceeding portion is not loaded.

Certainly, in practice, in the second possible scenario, a specific design manner of the first picture displayed in a full-screen manner in the recognized content area S may alternatively be any other feasible designs. This is not specifically limited in the present disclosure.

The above two possible scenarios are merely examples. In practice, the default display manner of the first picture in the recognized content area in the first floating window may have any other possible scenarios. This is not specifically limited in the present disclosure.

Further, in some embodiments, to conveniently compare a schedule option with content in a first picture when a user selects a schedule option, the first picture displayed in the recognized content area of the first floating window may further produce, in response to various adjustment operations (including a minimization operation, a maximization operation, a reduction operation, an enlargement operation, and a movement operation) by the user, any feasible effects such as minimization, maximization, a reduction, enlargement, and a movement.

In a case that the first picture in the recognized content area of the first floating window is displayed in an enlarged manner (that is, a display size is enlarged compared with a display size in a default display manner) or in a full-screen manner, the user may perform a minimization operation on the first picture in the recognized content area. In response to the minimization operation, the schedule management application of the mobile phone may minimize the first picture and display the first picture in the recognized content area. The minimum operation may be a double-click-on/double-tap-on operation. In this way, the user can view the complete first picture in the recognized content area.

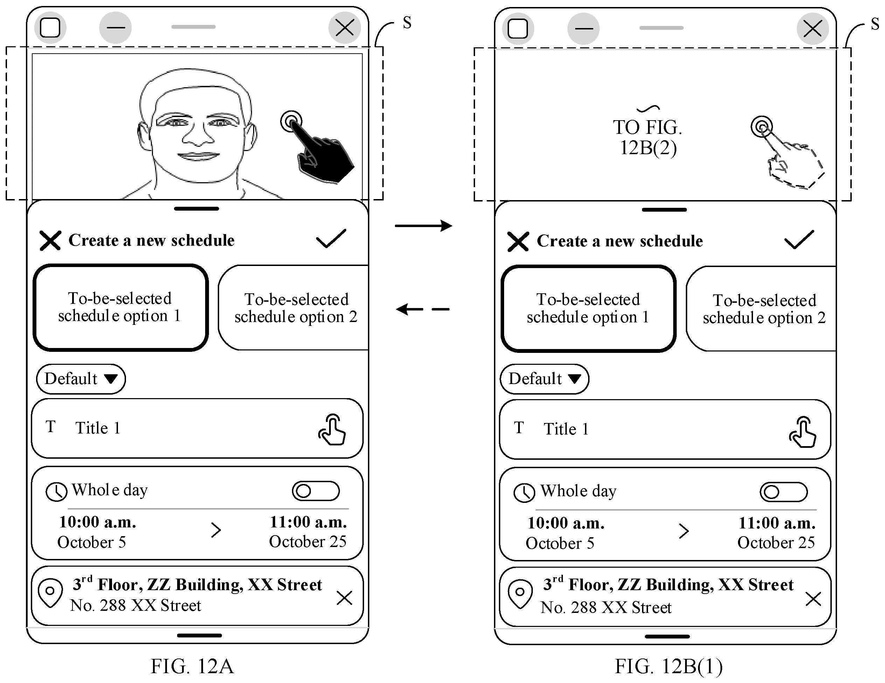

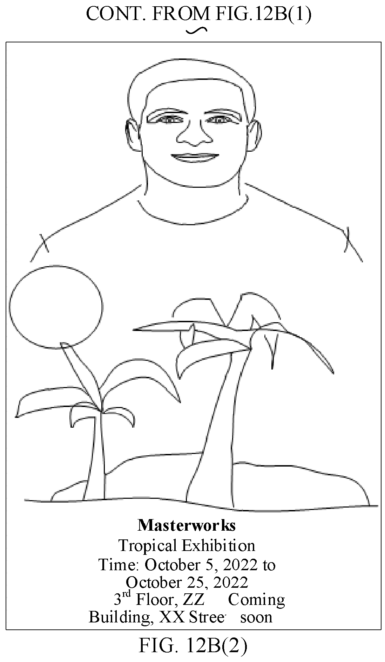

For example, a minimum operation is a double-click-on/double-tap-on operation. In combination with an example shown in FIG. 11B, with reference to FIG. 12A, when the first picture is required by the user to be entirely displayed in the recognized content area in a minimized manner, the user may perform a double-click-on/double-tap-on on the first picture in the recognized content area S. In response to the double-click-on/double-tap-on operation, with reference to FIG. 12B(1) and FIG. 12B(2), the schedule management application of the mobile phone may minimize the first picture and display the first picture in the recognized content area S. Then, if the first picture is required by the user to return to a state shown in FIG. 12A from a minimized state, the user may perform a double-click-on/double-tap-on operation on the first picture in the recognized content area S again. In response to the double-click-on/double-tap-on operation, the schedule management application of the mobile phone may convert the first picture into a state, that is, the state shown in FIG. 12A, before the minimized state.

Similarly, in a case that the first picture in the recognized content area of the first floating window is displayed in a reduced manner (that is, a display size is reduced compared with a display size in a default display manner) or is minimized, the user may perform a maximization operation on the first picture in the recognized content area. In response to the maximization operation, the schedule management application of the mobile phone may maximize the first picture and display the first picture in the recognized content area. In this way, the user may view more detailed content in the first picture in the recognized content area.

In a case that the first picture is maximized, the display size of the first picture may be a preset multiple of, such as 1.5 times, the display size of the first picture displayed in the display area of the first floating window in a full-screen manner. In a case that the first picture is maximized, the schedule management application of the mobile phone cannot further enlarge the first picture in response to an operation by the user.

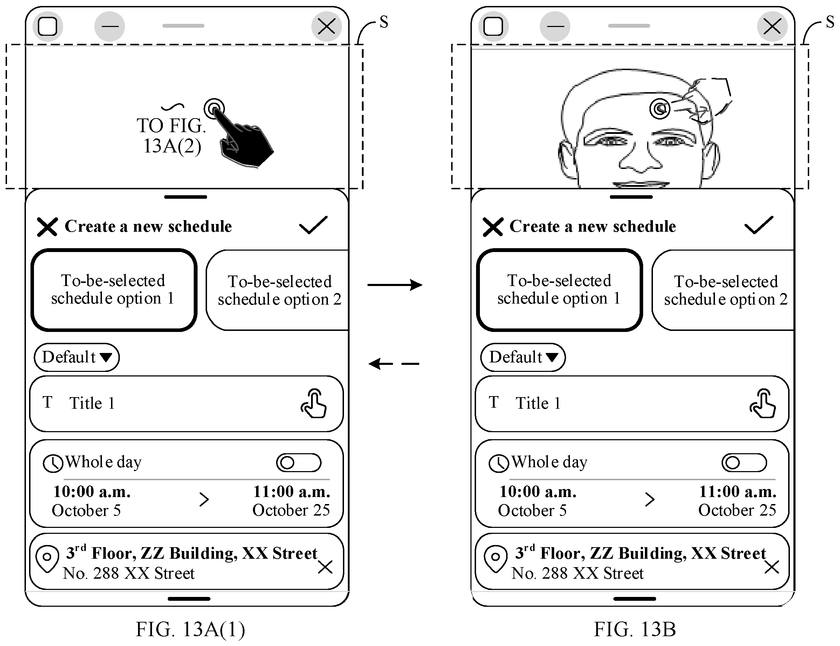

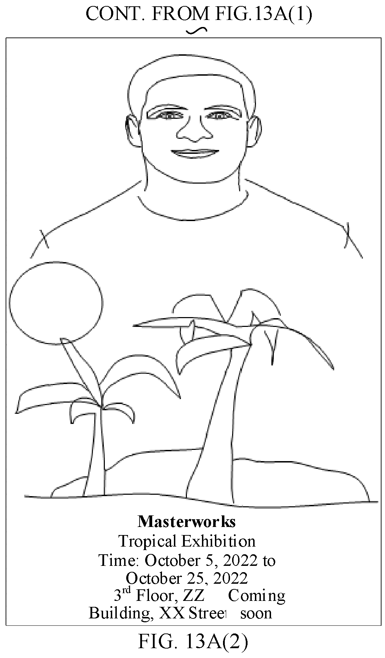

For example, a maximization operation is a double-click-on/double-tap-on operation. In combination with an example shown in FIG. 11A(1) and FIG. 11A(2),, with reference to FIG. 13A(1) and FIG. 13A(2), when the first picture is required by the user to be displayed in the recognized content area in a maximized manner, the user may perform a double-click-on/double-tap-on operation on the first picture in the recognized content area S. In response to the double-click-on/double-tap-on operation, with reference to FIG. 13B, the schedule management application of the mobile phone may maximize the first picture and display some content in the recognized content area S. Specifically, which content of the maximized first picture is displayed in the first content area is not specifically limited in the present disclosure. For example, an area in a preset range in which a touch location of a double-click-on/double-tap-on operation is located may be enlarged and then displayed in the recognized content area S.

Then, if the first picture is required by the user to return to a state shown in FIG. 13A(1) and FIG. 13A(2) from a maximized state, the user may perform a double-click-on/double-tap-on operation on the first picture in the recognized content area S again. In response to the double-click-on/double-tap-on operation, the schedule management application of the mobile phone may convert the first picture into a state, that is, the state shown in FIG. 13A(1) and FIG. 13A(2) before the maximized state.

Certainly, in practice, the mobile phone may support only a minimum operation or only a maximum operation, or may support both a minimum operation and a maximum operation. When a specific operation form of the minimum operation and a specific operation form of the maximum operation are the same, the mobile phone may determine the minimum operation and the maximum operation according to a preset determination logic. For example, a specific operation form of a minimum operation and a specific operation form of a maximum operation are both double-click-on/double-tap-on operations, the determination logic may be as follows: when the display size of the first picture is less than half of the display size in a maximized case, the mobile phone may determine the double-click-on/double-tap-on operation as a maximum operation. When the display size of the first picture is more than half of the display size in a maximized case, the mobile phone may determine the double-click-on/double-tap-on operation as a minimized operation.

In addition, the above maximum operation and the above minimum operation may evolve into a quick reduction operation and a quick enlargement operation respectively. An operation manner of the quick reduction operation and an operation manner of the minimum operation may be the same, but the quick reduction operation is specifically used for triggering the schedule management application of the mobile phone to reduce the first picture to a preset reduction percentage (such as 50%) of a current size. Moreover, a center of content displayed in the recognized content area in the reduced first picture is an area in a particular range in which a touch location corresponding to the quick reduction operation is located. An operation manner of the quick enlargement operation and an operation manner of the maximization operation may be the same, but the quick enlargement operation is specifically used for triggering the schedule management application of the mobile phone to enlarge the first picture to a preset enlargement percentage (such as 120%) of a current size. Moreover, a center of content displayed in the recognized content area in the enlarged first picture is an area in a particular range in which a touch location corresponding to the quick enlargement operation is located.

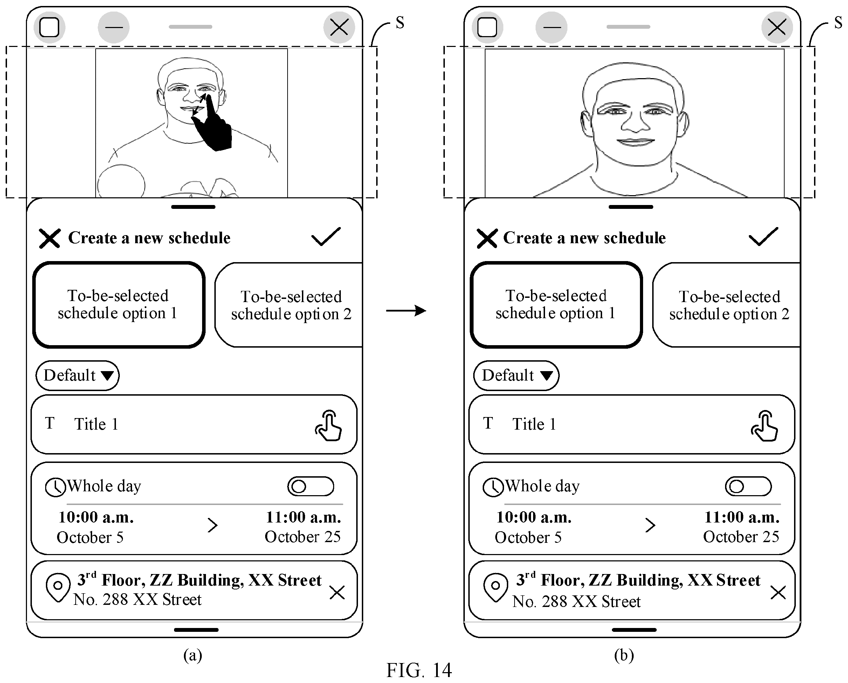

In a case that the first picture in the recognized content area of the first floating window is not maximized, the user may implement an enlargement operation on the first picture in the recognized content area, to enlarge the first picture. Thus, content of the first picture can be viewed in the first picture in more detail. The enlargement operation may be a two-finger outward swiping operation. For example, as shown in FIG. 14(a), in a case that the first picture in the recognized content area is not maximized, if the user wants to view some content in the first picture displayed in the recognized content area in an enlarged manner, the user may perform a two-finger outward swiping operation on the some content in the recognized content area. In response to the two-finger outward swiping operation, with reference to FIG. 14(b), the schedule management application of the mobile phone may entirely enlarge the first picture according to the first scale by taking some content (content displayed in an area in a particular range of a touch point of the two-finger outward swiping operation) on which the two-finger outward swiping operation is performed as a center, and display the first picture. For example, the first scale may be 1.5, which denotes that a size of the first picture enlarged is 1.5 times a size of the first picture not enlarged. The first scale is related to a swipe distance (a sum of swipe distances of two touch points or an average value of swipe distances of two touch points) corresponding to the two-finger outward swiping operation. The greater the swipe distance is, the greater the first scale is. Certainly, the size of the first picture after the enlargement operation has an upper limit. The upper limit may be the size of the maximized first picture.

In a case that the first picture in the recognized content area of the first floating window is not minimized, the user may perform a reduction operation on the first picture in the recognized content area, to reduce the first picture. Thus, more content in the first picture can be viewed from the recognized content area. The enlargement operation may be a two-finger pinch operation.

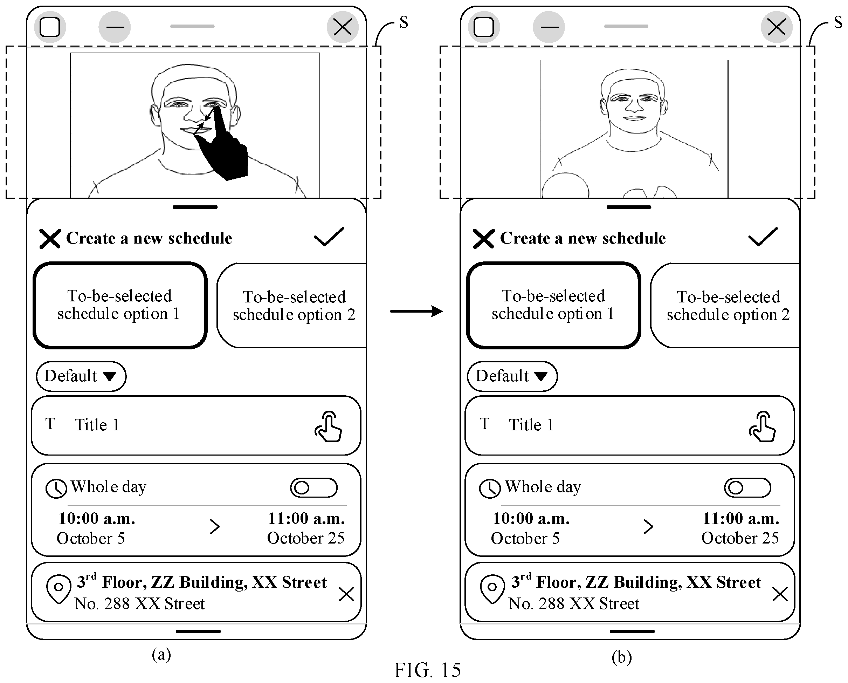

For example, as shown in FIG. 15(a), in a case that the first picture in the recognized content area is not minimized, if the user wants to view more content in the first picture in the recognized content area, the user may perform a two-finger pinch operation on the some content in the recognized content area. In response to the two-finger pinch operation, with reference to FIG. 15(b), the schedule management application of the mobile phone may entirely reduce the first picture according to a second scale by taking some content (content displayed in an area in a particular range of a touch point of the two-finger outward swiping operation) corresponding to the two-finger pinch operation as a center, and display the first picture. For example, the second scale may be 0.75, which denotes that a size of the first picture reduced is 0.75 times a size of the first picture not reduced. The second scale is related to a swipe distance (a sum of swipe distances of two touch points or an average value of swipe distances of two touch points) corresponding to the two-finger pinch operation. The greater the swipe distance is, the less the second scale is. Certainly, the size of the first picture after the reduction operation has an upper limit. The upper limit may be the size of the minimized first picture.

In a case that not all content of the first picture is displayed in the recognized content area of the first floating window (for example, after the first picture is maximized, some content is displayed in the recognized content area), if the user is required to view content of the first picture that is not displayed in the recognized content area, the user may perform the swiping operation on the first picture in the recognized content area. For example, the swiping operation may be any possible swiping operations such as a leftward swiping operation, a rightward swiping operation, an upward swiping operation, and a downward swiping operation.

In response to the swiping operation, the schedule management application of the mobile phone may entirely translate the first picture in a swipe direction, to display content that is not displayed before. In this way, the user can view all hidden content in the first picture in the recognized content area according to a requirement.

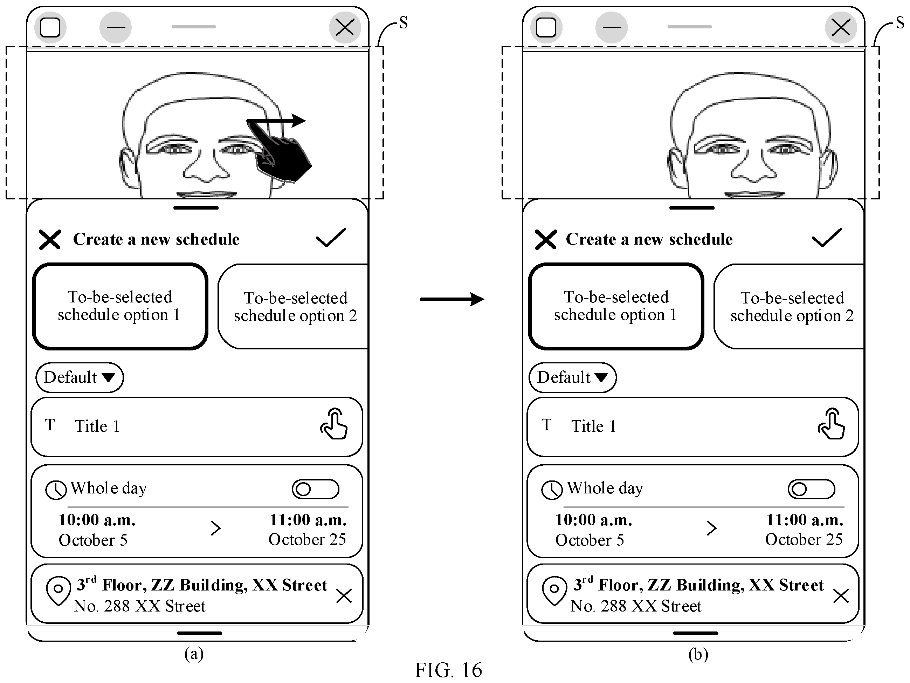

For example, in combination with the example shown in FIG. 13B, with reference to FIG. 16(a), if the user wants to move some content in the first picture displayed in the recognized content area to right, to view hidden content on a left side of the some content, the user may perform a rightward swiping operation on the some content in the recognized content area. In response to the rightward swiping operation, the schedule management application of the mobile phone may entirely move the first picture to right. Finally, as shown in FIG. 16(b), some content of the first picture moved to right is displayed in the recognized content area.

Particular implementations of remaining swiping operations such as a leftward swiping operation, an upward swiping operation, and a downward swiping operation are similar to the above, and are not repeated herein.

In addition, in some embodiments, the above enlargement operation or the above reduction operation may alternatively be simultaneously performed with the movement operation. For example, a finger is moved while the two-finger outward swiping operation is performed such that the first picture can be moved when enlarged. For another example, a finger is moved while the two-finger pinch operation is performed such that the first picture can be moved when reduced.

Certainly, the above types of adjustment operations on the first picture in the recognized content area are merely examples. In practice, any other feasible adjustment operations may exist. This is not specifically limited in the present disclosure.

In this way, the user can perform any feasible adjustments on the first picture displayed in the recognized content area according to a requirement of the user such that the user can view the first picture in more detail. The user can better select, based on the content of the first picture, a schedule option better satisfying a requirement of the user from at least one schedule option in the schedule preview window. Further, the schedule management application of the mobile phone can create a schedule better satisfying the requirement of the user, and user experience is improved.

(2) In a second possible implementation, a smart visual function control may exist in a picture detail interface or a screenshot presentation interface of the first picture on the mobile phone. The control is configured to trigger an artificial intelligence (artificial intelligence, AI) program (or referred to as an intelligent assistant) preset in the mobile phone to recognize a text in the first picture. After the smart visual function control is triggered, the mobile phone displays a schedule creation control. The schedule creation control is a second type of entry through which the schedule management application receives a picture. In this case, the input operation by the user on the first picture may be a triggering operation by the user on the schedule creation control.

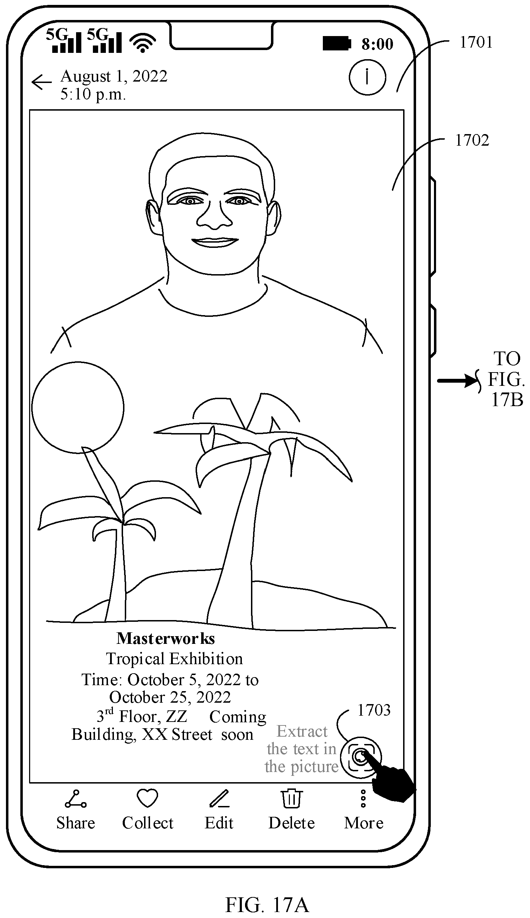

In some embodiments, for example, the first picture is a picture in a photos application, the schedule management application is a calendar application, and the first interface is a picture detail interface of a first picture in the photos application. In response to a triggering operation by the user on the first picture in the photos application, the mobile phone may display a picture detail interface 1701 of the first picture shown in FIG. 17A. The picture detail interface 1701 is configured to present a first picture 1702. The picture detail interface 1701 further includes a smart visual control 1703. Reminder information similar to "Extract a text from a figure" may exist around the smart visual control 1703. At this time, S701 is completed.

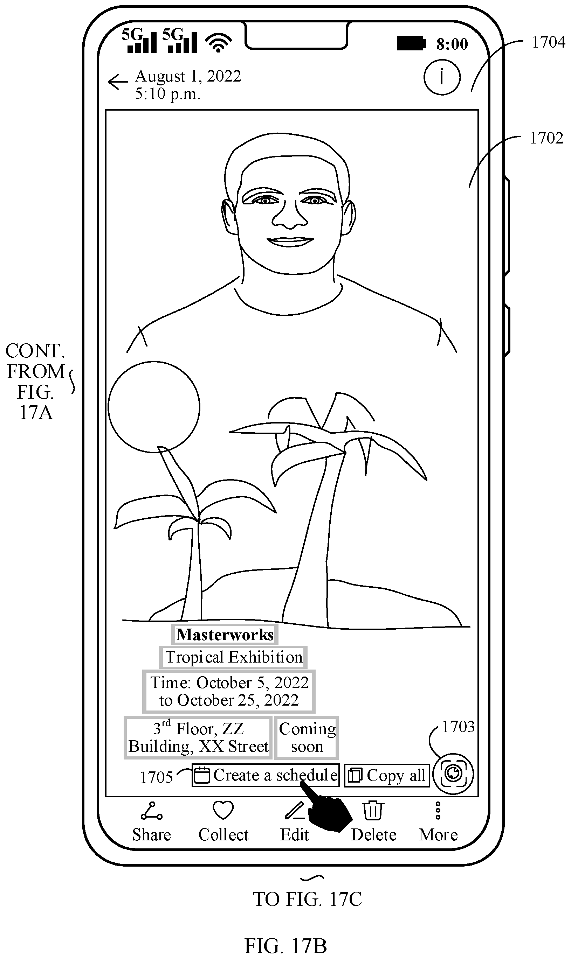

Then, the user may perform a triggering operation on the smart visual control 1703. In response to the triggering operation, the mobile phone may display a smart visual recognition interface 1704 shown in FIG. 17B. On the smart visual recognition interface 1704, words such as "Masterworks Tropical Exhibition Time: October 5, 2022 to October 25, 2022 3rd Floor, ZZ Building, XX Street Coming soon" in the first picture 1702 may be highlighted. Specifically, in response to performing, by the user, a triggering operation on the smart visual control 1703, the mobile phone may recognize and determine a text in the first picture by using a preset artificial intelligence assistant. As shown in FIG. 17B, when the mobile phone highlights the text in the first picture, the text in the first picture may be randomly selected and copied by the user. A schedule creation control 1705 may be further included near the smart visual control 1703 on the smart visual recognition interface 1704.

If the user is required to create a schedule based on the text in the first picture, the user may perform a triggering operation on the schedule creation control 1705. The triggering operation on the schedule creation control may be the input operation by the user on the first picture. At this time, the mobile phone receives the input operation by the user on the first picture, and S702 is completed.

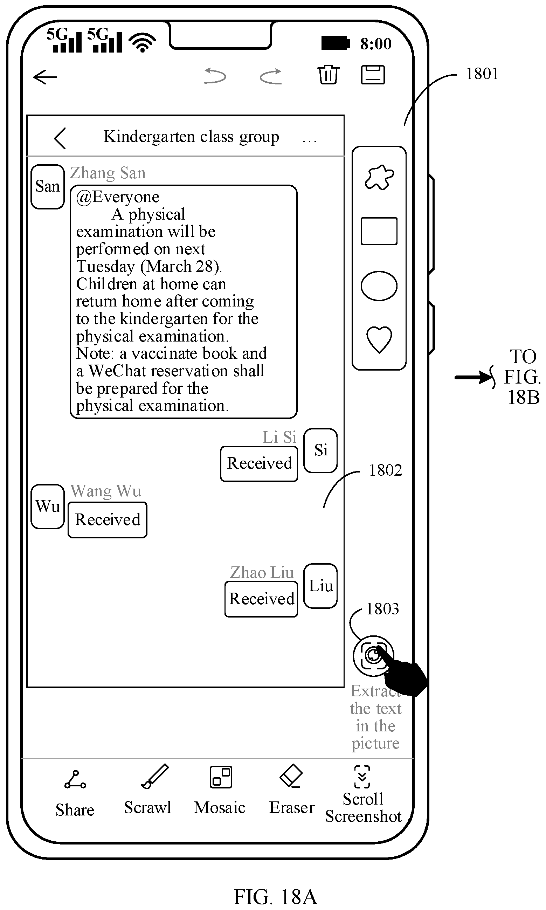

In some other embodiments, for example, the first picture is a screenshot, the schedule management application is a calendar application, and the first interface is a screenshot presentation interface of the first picture. In response to a screen capture operation by the user, the mobile phone may display a screenshot presentation interface 1801 of the first picture shown in FIG. 18A. The screen capture operation may be any possible screen capture manners such as three-finger screen capture, finger-joint screen capture, or screen capture button clicking on/tapping on. A specific operation manner of the screen capture operation is not limited in an embodiment of the present disclosure.

As shown in FIG. 18A, the screenshot presentation interface 1801 is used for presenting a first picture 1802 that is captured by a mobile phone in response to a capture operation by a user. The screenshot presentation interface 1801 further includes a smart visual control 1803.

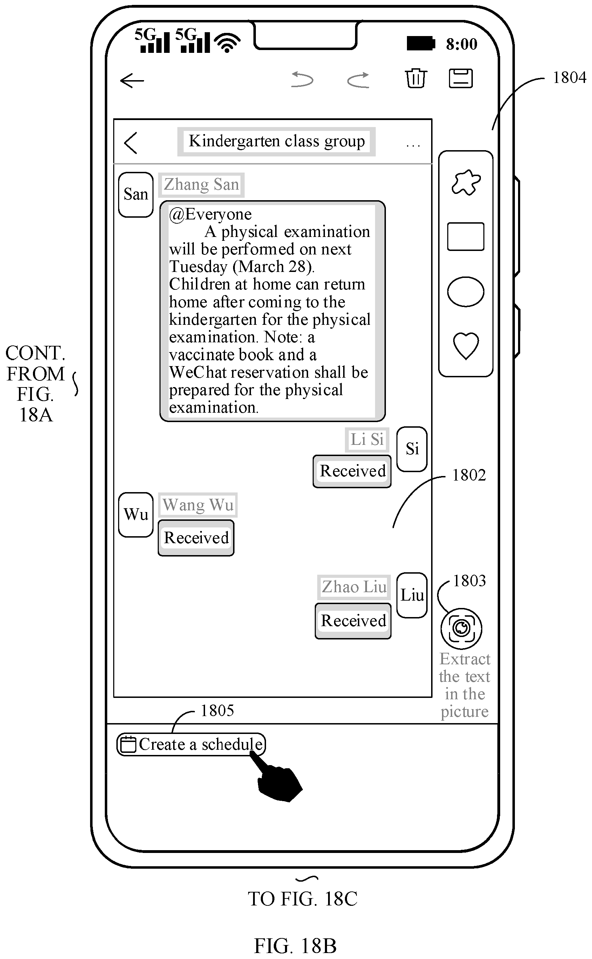

Then, in response to a triggering operation by a user on the smart visual control 1803, the mobile phone may display a smart visual recognition interface 1804 shown in FIG. 18B. On the smart visual recognition interface 1804, a text in the first picture 1802 may be highlighted. The smart visual recognition interface 1804 may further include a schedule creation control 1805.

If the user is required to create a schedule based on the text in the first picture, the user may perform a triggering operation on the schedule creation control 1805. The triggering operation on the schedule creation control may be the input operation by the user on the first picture. At this time, the mobile phone receives the input operation by the user on the first picture, and S702 is completed.

In some embodiments, a method of inputting, by the user, the first picture in the above second possible implementation may be referred to as smart vision.

Based on the above technical solution, in response to a triggering operation by the user on the schedule creation control on the smart visual recognition interface, the mobile phone can smoothly input the first picture into the schedule management application for parsing and recognition. Further, a subsequent flow for creating a schedule can be performed.

After the input operation on the first picture is performed, in response to the input operation (the triggering operation on the schedule creation control) by the user on the first picture, the schedule management application of the mobile phone may start parsing the first picture, to obtain the first schedule information in the first picture. That is, S703 is performed.

Moreover, to prevent the situation that after the user performs the input operation on the first picture, the user is unaware of the parsing process, and user experience is reduced, when parsing the first picture, the mobile phone may display a first parsing picture.

In the second possible implementation, based on an interaction rule of the schedule recognition control on the smart visual recognition interface, the mobile phone may specifically display the first parsing picture in a full-screen manner.

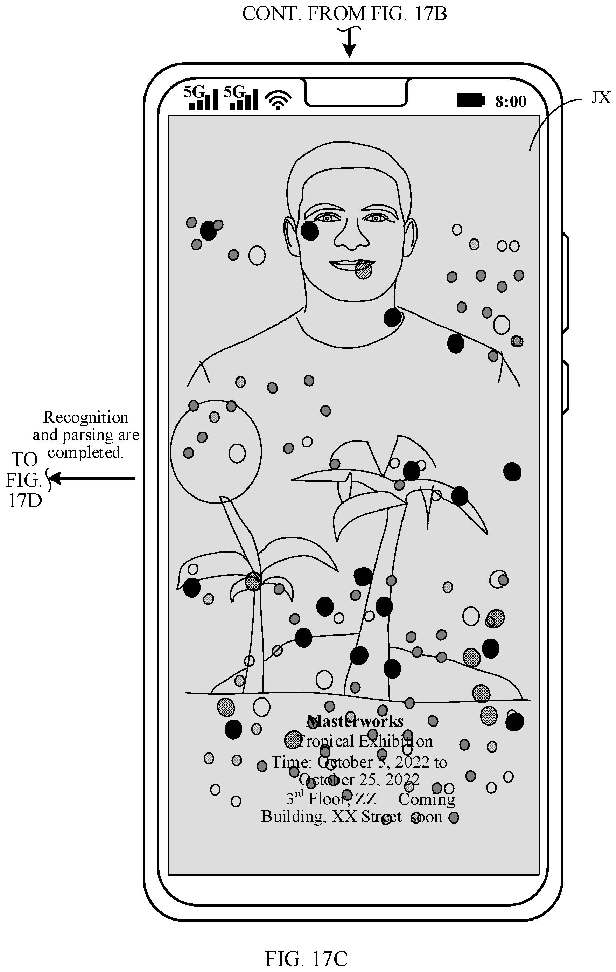

In some embodiments, if the first picture is a picture stored in the mobile phone, for example, the parsing dynamic effect is a particle dynamic effect. In combination with an example shown in FIG. 17B, in response to an input operation by the user on the first picture, when parsing the first picture, the mobile phone may display, in a full-screen manner, a first parsing interface JX shown in FIG. 17C.

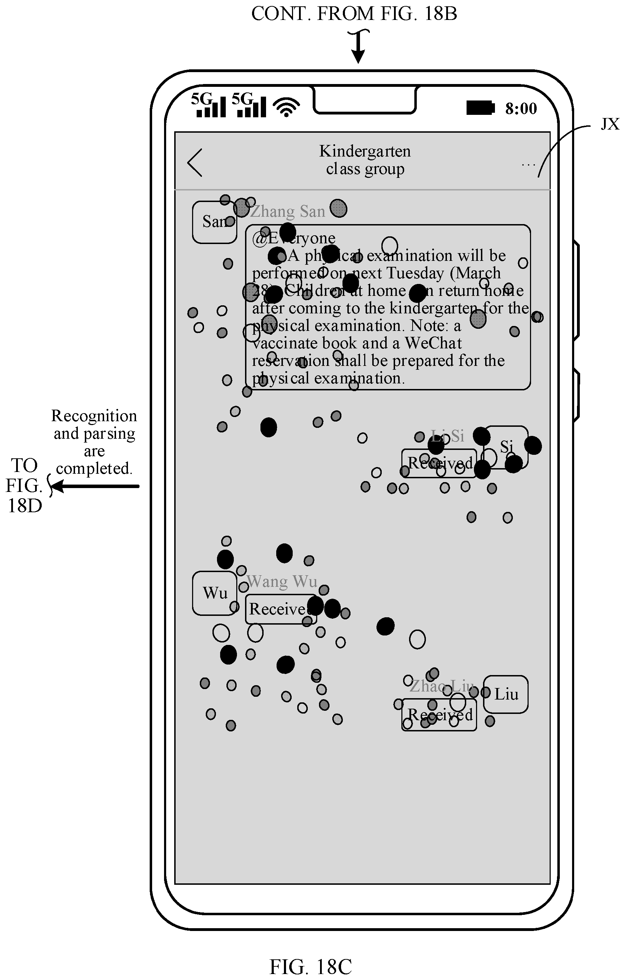

In some other embodiments, if the first picture is a picture captured by the mobile phone in response to a screen capture operation by the user, for example, a parsing dynamic effect is a particle dynamic effect. In combination with an example shown in FIG. 18B, in response to an input operation by the user on the first picture, when parsing the first picture, the mobile phone may display, in a full-screen manner, a first parsing interface JX shown in FIG. 18C.

After the mobile phone displays the first parsing picture in a full-screen manner and parses the first picture, that is, after the schedule application of the mobile phone displays the first parsing picture in the first floating window for first preset duration, that is, after S703 is performed, the schedule management application of the mobile phone may display the second interface after generating at least one to-be-selected schedule based on the first schedule information. The second interface may include a schedule preview window such that the user can select a to-be-selected schedule required by the user from the schedule preview window. The second interface may be specifically an interface used by the schedule management application to present the schedule preview window.

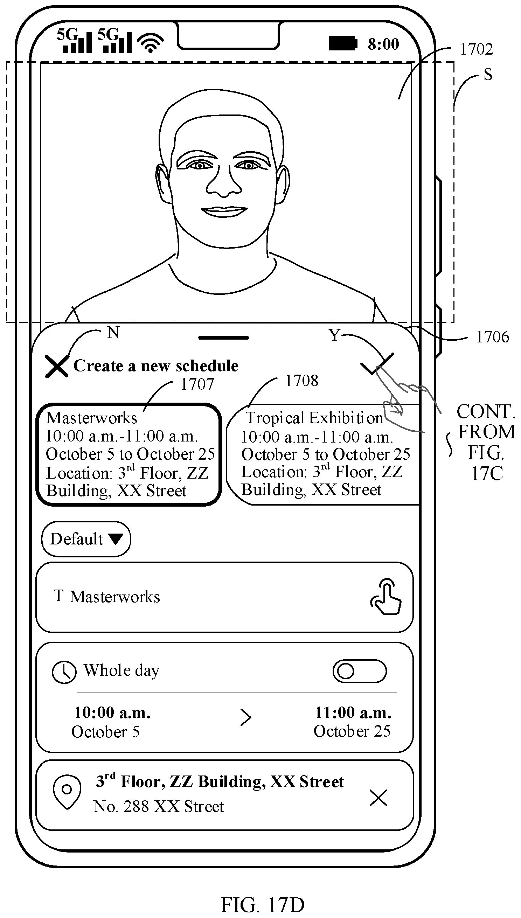

In some embodiments, if the first picture is a picture stored in the mobile phone, in combination with an example shown in FIG. 17C, after the mobile phone parses the first picture, as shown in FIG. 17D, the mobile phone may display a second interface. A schedule preview window 1706 is displayed in the second interface. With reference to FIG. 17D, the schedule preview window 1706 may include at least one schedule option, such as a schedule option 1707 and a schedule option 1708.

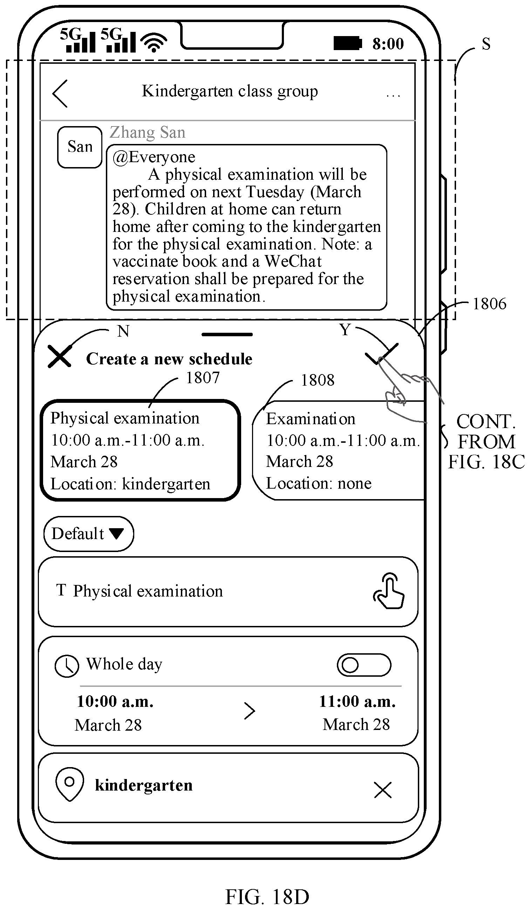

In some other embodiments, if the first picture is a picture captured by the mobile phone in response to a screen capture operation by the user, in combination with an example shown in FIG. 18C, after the mobile phone parses the first picture, as shown in FIG. 18D, the mobile phone may display a schedule preview window 1806 on the second interface, that is, perform S704. With reference to FIG. 18D, the schedule preview window 1806 may include at least one schedule option, such as a schedule option 1807 and a schedule option 1808.

Other particular implementations of the schedule preview window and the schedule option in the schedule preview window can be obtained with reference to related expressions for FIG. 9D and FIG. 10 in the above embodiments, and are not repeated herein.

After the mobile phone displays the schedule preview window (that is, after S704 is performed), the user may select a schedule option according to a requirement of the user, and perform a triggering operation (that is, a creation operation) on the confirmation option Y in the schedule preview window. Thus, the mobile phone creates a corresponding schedule in response to the triggering operation. That is, S705 is performed after S704.

Based on the above technical solution, the mobile phone may display the schedule preview window by using the second interface that is displayed in a full-screen manner. Thus, the user can more clearly and intuitively view at least one schedule option in the schedule preview window. Further, the user can select a schedule option according to a requirement of the user. Thus, the mobile phone can rapidly create a schedule satisfying the requirement of the user.

In the above second possible implementation, a particular implementation and purpose of displaying the first picture in the recognized content area in the second interface can be obtained with reference to related expressions for FIG. 11 to FIG. 16 in the above embodiments of the first possible implementation, and are not repeated herein. A difference lies in that in the second possible implementation, the recognized content area and the schedule preview window are displayed in a full-screen manner in a second interface displayed.

(3) In a third possible implementation, the user may share the first picture with the schedule management application through a sharing function of the mobile phone. The sharing function of the mobile phone may be a third type of entry through which the schedule management application receives a picture. In this case, the input operation by the user on the first picture may be a sharing operation of sharing, by the user, the first picture with the schedule management application.

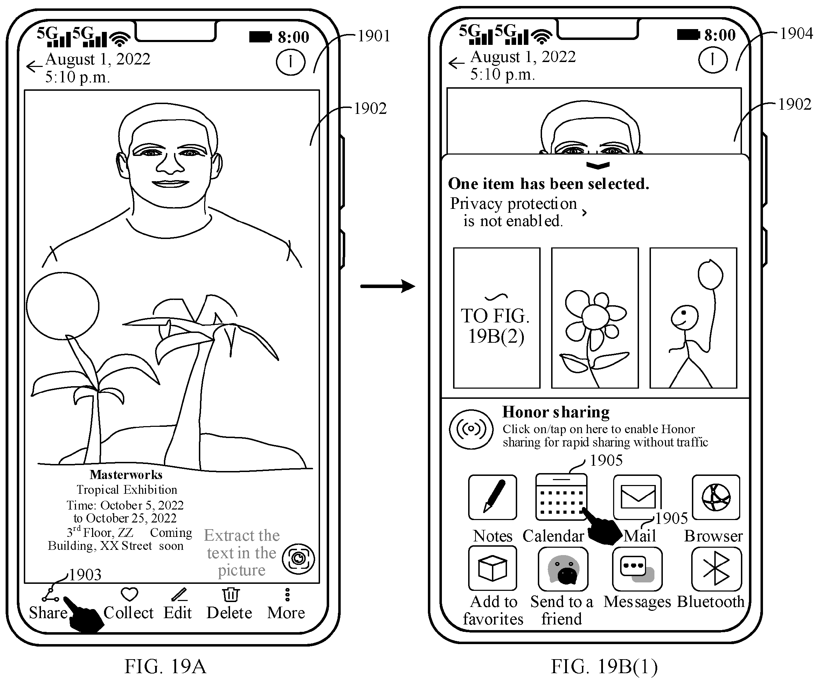

In some embodiments, for example, the first picture is a picture in a photos application, the schedule management application is a calendar application, and the first interface is a picture detail interface of a first picture in the photos application. In response to a triggering operation by the user on the first picture in the photos application, the mobile phone may display a picture detail interface 1901 of the first picture shown in FIG. 19A. The picture detail interface 1901 is configured to present a first picture 1902. The picture detail interface 1901 further includes a sharing control 1903. At this time, S701 is completed.

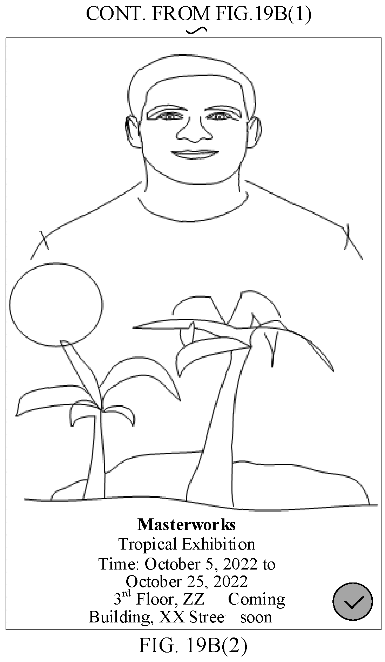

Then, the user may perform a triggering operation on the sharing control 1903. In response to the triggering operation, the mobile phone may display a sharing pop-up window 1904 shown in FIG. 19B(1) and FIG. 19B(2). The sharing pop-up window 1904 includes icons of a plurality of applications. After each icon is triggered, the mobile phone transmits the first picture to a corresponding application for processing. Icons of the plurality of applications include an icon 1905 of a calendar application.

In a case that the user is required to create a schedule based on the text in the first picture, the user may perform a triggering operation on the icon 1905 of the calendar application in the sharing pop-up window. The triggering operation performed on the icon of the calendar application in the sharing pop-up window may be the input operation by the user on the first picture. At this time, the mobile phone receives the input operation by the user on the first picture, and S702 is completed.

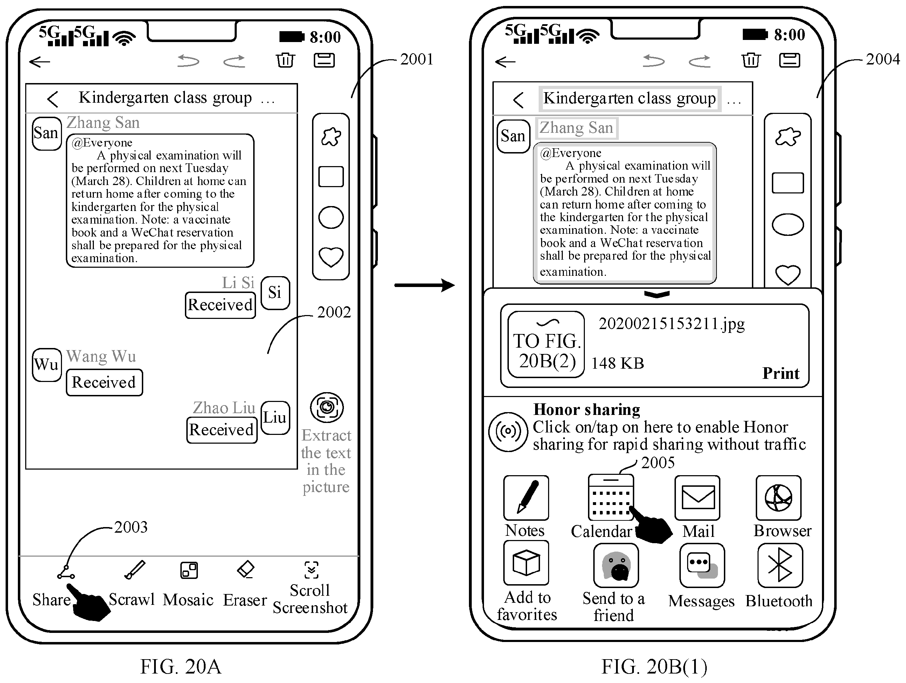

In some other embodiments, for example, the first picture is a screenshot, the schedule management application is a calendar application, and the first interface is a screenshot presentation interface of the first picture. In response to a screen capture operation by the user, the mobile phone may display a picture detail interface 2001 of the first picture shown in FIG. 20A. The picture detail interface 2001 is configured to present a first picture 2002. The screenshot presentation interface 2001 further includes a sharing control 2003.

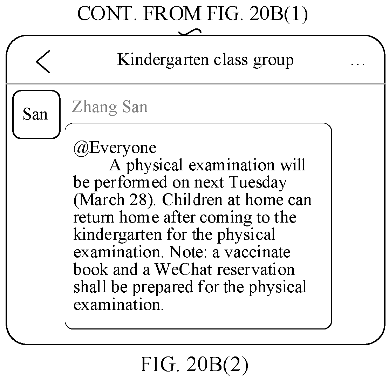

Then, the user may perform a triggering operation (such as a click-on/tap-on operation) on the sharing control 2003. In response to the triggering operation, the mobile phone may display a sharing pop-up window 2004 shown in FIG. 20B(1) and FIG. 20B(2). The sharing pop-up window 2004 includes an icon 2005 of a calendar application.

If the user is required to create a schedule based on the text in the first picture, the user may perform a triggering operation on the icon 2005 of the calendar application in the sharing pop-up window 2004. The triggering operation performed on the icon of the calendar application in the sharing pop-up window may be the input operation by the user on the first picture. At this time, the mobile phone receives the input operation by the user on the first picture, and S702 is completed.

Based on the above technical solution, a user can input, based on a sharing function of a mobile phone, a first picture to a schedule management application for parsing. Thus, a subsequent flow for creating a schedule can be successfully performed.

After the first picture is selected, in response to the input operation by the user on the first picture (a triggering operation on a schedule management application in a sharing pop-up window), the schedule management application of the mobile phone may start parsing the first picture, to obtain the first schedule information in the first picture. That is, S703 is performed.

Moreover, to prevent the situation that after the user performs the input operation on the first picture, the user is unaware of the parsing process, and user experience is reduced, when parsing the first picture, the mobile phone may display a first parsing picture.

In the third possible implementation, the mobile phone may specifically display the first parsing picture in a full-screen manner based on an interaction rule of sharing an icon of a schedule management application in a sharing pop-up window. In the third possible implementation, a particular implementation of displaying, by the mobile phone, the first parsing picture in a full-screen manner can be obtained with reference to related expressions for FIG. 17C and FIG. 18C in the above embodiments, and is not repeated herein.

After the mobile phone displays the first parsing picture in a full-screen manner and parses the first picture, that is, after the schedule application of the mobile phone displays the first parsing picture in the first floating window for first preset duration, that is, after S703 is performed, the schedule management application of the mobile phone may display the second interface after generating at least one to-be-selected schedule based on the first schedule information. The second interface may include a schedule preview window such that the user can select a to-be-selected schedule required by the user from the schedule preview window.

Other particular implementations of the schedule preview window and the schedule option in the schedule preview window can be obtained with reference to related expressions for FIG. 9D and FIG. 10 in the above embodiments, and are not repeated herein.

After the mobile phone displays the schedule preview window (that is, after S704 is performed), the user may select a schedule option according to a requirement of the user, and perform a triggering operation (that is, a creation operation) on the confirmation option Y in the schedule preview window. Thus, the mobile phone creates a corresponding schedule in response to the triggering operation. That is, S705 is performed after S704.

In the above third possible implementation, a particular implementation of the recognized content area in the second interface can be obtained with reference to related expressions for FIG. 11A(1) to FIG. 16 in the above embodiments of the first possible implementation, and is not repeated herein. A difference lies in that in the third possible implementation, the recognized content area and the schedule preview window are displayed in a full-screen manner in a second interface displayed.

(4) In a fourth possible implementation, a scanning control for selecting a picture stored in a mobile phone may exist on a schedule creation interface of the schedule management application. The scanning control is a third type of entry through which the schedule management application receives the first picture.

Specifically, the scanning control may be configured to trigger the mobile phone to display a photos presentation interface of a photos application such that a user can select a first picture from a plurality of photos in a photos. Further, the schedule management application parses the first picture, and generates and displays, based on a parsing result, at least one to-be-selected schedule for the user to select. In this case, the input operation by the user on the first picture may be a selection operation on the first picture on the photos presentation interface in a case that the user performs a triggering operation on the scanning control in the schedule creation interface.

Or, the scanning control may be configured to trigger the mobile phone to start displaying a picture taking interface such that the user can perform a picture taking operation in the picture taking interface to obtain the first picture. Further, the schedule management application parses the first picture, and generates and displays, based on a parsing result, at least one to-be-selected schedule for the user to select. In this case, the input operation by the user on the first picture may be a picture taking operation for obtaining the first picture obtained in a case that the user performs a triggering operation on the scanning control in the schedule creation interface.

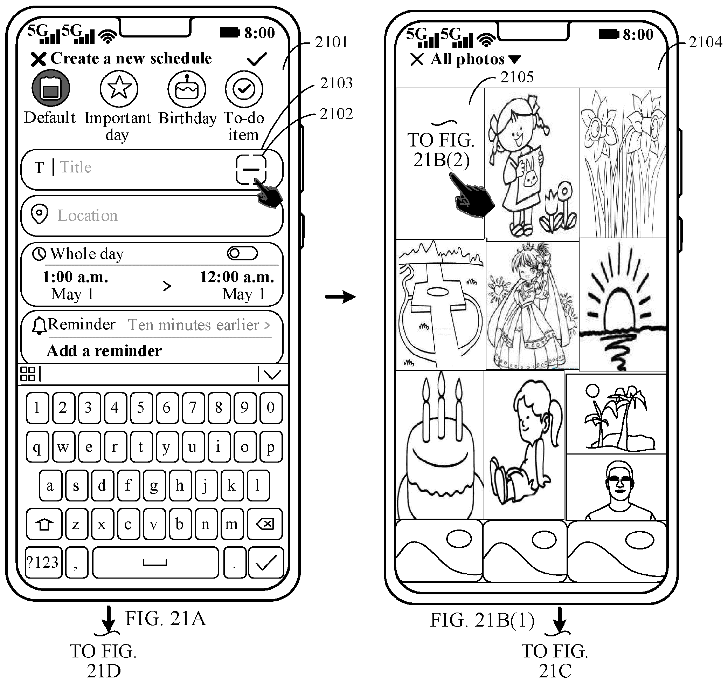

In some embodiments, for example, a scanning control in the schedule creation interface may be configured to trigger the mobile phone to display a photos presentation interface of a photos application. In response to an operation of opening, by the user, the schedule creation interface, the mobile phone may display a schedule creation interface 2101 shown in FIG. 21A. The schedule creation interface 2101 may include a scanning control 2102. With reference to FIG. 21A, the scanning control may be set in a title setting item 2103. Certainly, the figure is merely an example.

In practice, the scanning control may be arranged at any possible location on the schedule creation interface. An opening process of the schedule creation interface can be obtained with reference to the related expressions for FIG. 1A, FIG. 1B, FIG. 1C, and FIG. 1D in the above embodiments, and is not repeated herein.

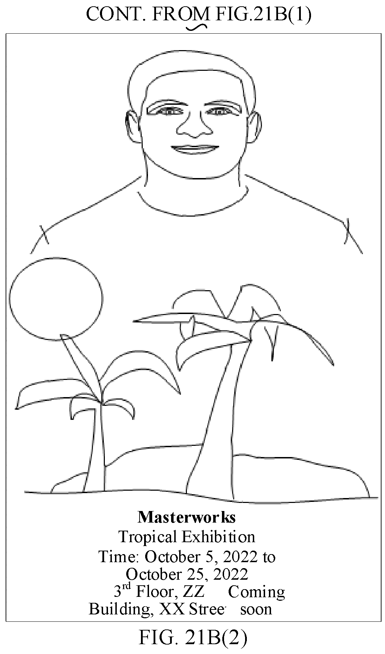

Then, the user may perform a triggering operation on the scanning control 2103. In response to the triggering operation, the mobile phone may display a photos presentation interface 2104 shown in FIG. 21B(1) and FIG. 21B(2). The photos presentation interface 2104 may include a plurality of pictures (which may be specifically thumbnails of pictures).

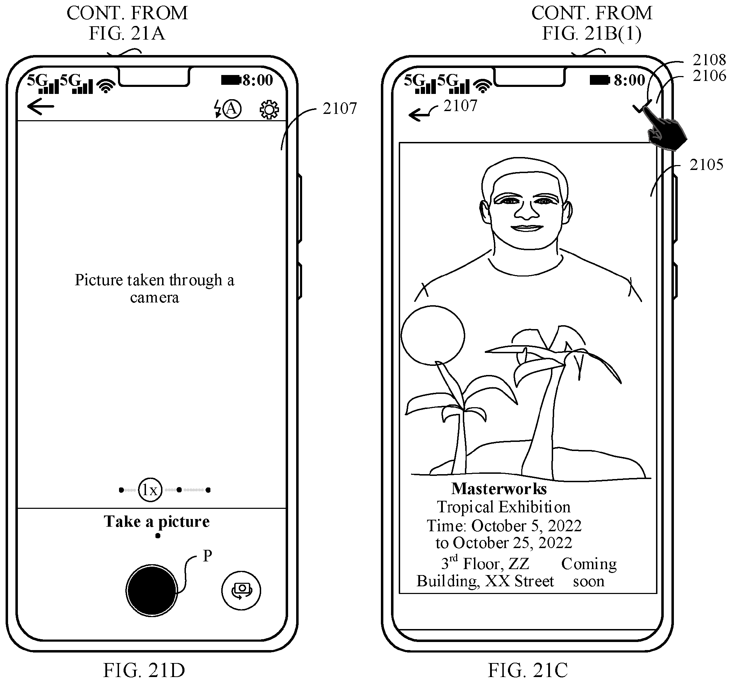

Then, the user may perform a click-on/tap-on operation on a selected first picture 2105 on the photos presentation interface 2104. The click-on/tap-on operation may be referred to as an acquisition operation on the first picture. In response to the click-on/tap-on operation by the user, the mobile phone may display the picture presentation interface 2106 shown in FIG. 21C. The picture presentation interface is used for presenting a first picture 2105. The picture presentation interface is a first interface. The picture presentation interface 2106 further includes a first return control 2107 and a first confirmation control 2108. The first return control 2107 is configured to trigger the mobile phone to display a photos presentation interface 2104 shown in FIG. 21B(1) and FIG. 21B(2). Thus, the user can reselect the first picture. The first confirmation control 2108 is configured to trigger the schedule management application to parse the first picture 2105, to perform a subsequent flow for creating a schedule. The first confirmation control may be considered as a confirmation control on the first interface.

When the user determines that a schedule is required to be created based on the first picture 2105, the user may perform a triggering operation on the first confirmation control 2108 in the picture presentation interface 2106. The triggering operation performed on the first confirmation control may be the input operation by the user on the first picture. At this time, the mobile phone receives the input operation by the user on the first picture, and S702 is completed.

Based on the above technical solution, the user can rapidly select the first picture on the schedule creation interface by triggering the scanning control. Thus, the schedule management application can parse the first picture, and perform a subsequent flow for creating a schedule, to rapidly create a schedule.

In some other embodiments, for example, a scanning control in the schedule creation interface may be configured to trigger the mobile phone to display a picture taking interface. In combination with an example shown in FIG. 21A, in response to a triggering operation (such as a click-on/tap-on operation) performed by the user on the scanning control 2103 in the schedule creation interface, the mobile phone may display a picture taking interface 2107 shown in FIG. 21D. A picture taken through a camera of a mobile phone may be displayed in the picture taking interface 2107.

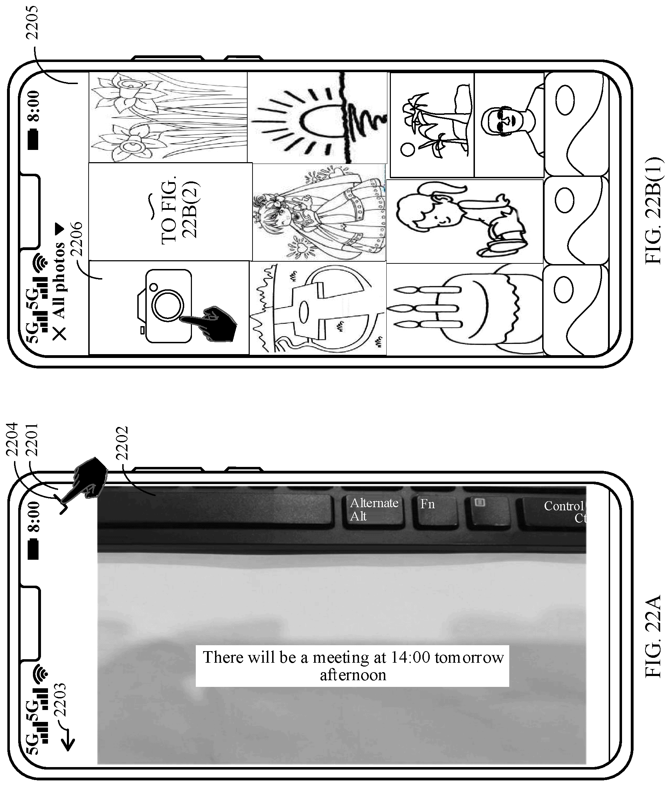

Then, in a case that the user adjusts the camera of the mobile phone such that a picture taken through the camera can include information required by the user, the user may perform a triggering operation (such as a click-on/tap-on operation) on the picture taking control P in the picture taking interface 2107. The triggering operation performed on the picture taking control P may be referred to as an acquisition operation on the first picture. In response to the triggering operation performed on the picture taking control P, the mobile phone may display a picture taking result interface 2201 shown in FIG. 22A. The picture taking result interface 2201 is configured to present a first picture 2202 taken by using a mobile phone. The picture taking result interface 2201 is a first interface. The picture taking result interface 2201 further includes a second return control 2203 and a second confirmation control 2204. The second return control 2203 is configured to trigger the mobile phone to display a picture taking interface 2107 shown in FIG. 21D such that the user can take a picture again to obtain the first picture. The second confirmation control 2204 is configured to trigger the schedule management application of the mobile phone to parse the first picture 2202, to perform a subsequent flow for creating a schedule. The first confirmation control may be considered as a confirmation control on the first interface.

When the user determines that a schedule is required to be created based on the first picture 2202, the user may perform a triggering operation on the second confirmation control 2204 in the picture taking result interface 2201. The triggering operation performed on the second confirmation control may be the input operation by the user on the first picture. At this time, the mobile phone receives the input operation by the user on the first picture, and S702 is completed.

Based on the above technical solution, the user can rapidly take a first picture on the schedule creation interface by triggering the scanning control. The user can take a first picture according to a requirement of the user, and provide the first picture to the schedule management application. The schedule management application can parse the first picture, to perform a subsequent flow for creating a schedule. Thus, a schedule can be rapidly created.

To provide more selections for the user, in some other embodiments, in response to triggering, by the user, a scanning control in the schedule creation interface, on a photos presentation interface displayed by the mobile phone, not only a picture stored in the mobile phone may be presented, but also an entry, such as a picture taking enabling control, for enabling a picture taking function may exist. In this way, the user may select the first picture from pictures stored in the mobile phone, or may obtain the first picture through picture taking.

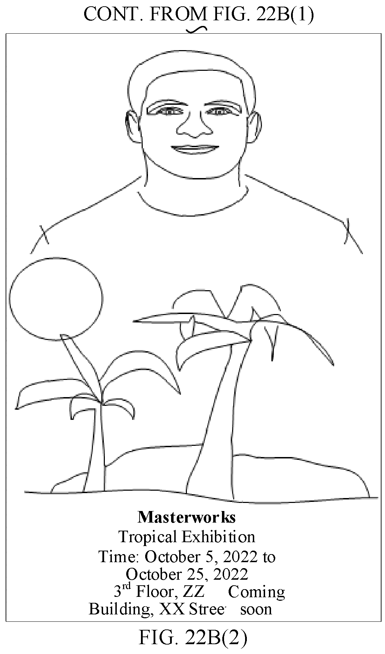

For example, in response to a triggering operation by the user on the scanning control in the schedule creation interface, the mobile phone may display a photos presentation interface 2205 shown in FIG. 22B(1) and FIG. 22B(2). The photos presentation interface 2205 may further include a picture taking start control 2206 in addition to the at least one picture.

Then, based on a requirement of the user, the user may select the first picture from a photos presentation interface, or may take a first picture after triggering the picture taking start control.

If the user performs a click-on/tap-on operation on a picture as the first picture on the photos presentation interface 2205, in response to the click-on/tap-on operation, the mobile phone may display a picture presentation interface similar to that shown in FIG. 21C. Then, the user may perform a triggering operation on the first confirmation control on the picture presentation interface. At this time, the user performs the input operation on the first picture, the mobile phone receives the input operation by the user on the first picture, and S702 is completed.

If the user performs a triggering operation on the picture taking start control 2206 on the photos presentation interface 2205, in response to the click-on/tap-on operation, the mobile phone may display a picture taking interface similar to that shown in FIG. 21D. Then, the mobile phone may display, in response to the triggering operation by the user on the picture taking control in the picture taking interface, a picture taking result interface similar to that shown in FIG. 22A. Then, the user may perform a triggering operation on the second confirmation control in the picture taking result interface. At this time, the user performs the input operation on the first picture, the mobile phone receives the input operation by the user on the first picture, and S702 is completed. Based on the above technical solution, after the user enables the mobile phone to display the photos presentation interface after triggering the scanning control on the schedule creation interface, the user can freely determine, according to a requirement of the user, to select the first picture through selection or obtain the first picture through picture taking. User experience is improved.

After the first picture is selected, that is, after S702, in response to the input operation by the user on the first picture, the schedule management application of the mobile phone may start parsing the first picture, to obtain the first schedule information in the first picture. That is, S703 is performed.

Moreover, to prevent the situation that after the user performs the input operation on the first picture, the user is unaware of the parsing process, and user experience is reduced, when parsing the first picture, the mobile phone may display a first parsing picture. In the fourth possible implementation, based on an interaction rule of the first confirmation control in the picture presentation interface or an interaction rule of the second confirmation control in the picture taking result interface, the mobile phone may specifically display the first parsing picture in a full-screen manner.

In the fourth possible implementation, a particular implementation of displaying, by the mobile phone, the first parsing picture in a full-screen manner can be obtained with reference to related expressions for FIG. 17C and FIG. 18C in the above embodiments, and is not repeated herein.

After the mobile phone displays the first parsing picture in a full-screen manner and parses the first picture, that is, after the schedule application of the mobile phone displays the first parsing picture in the first floating window for first preset duration, that is, after S703 is performed, the schedule management application of the mobile phone may display the second interface after generating at least one to-be-selected schedule based on the first schedule information. The second interface may include a schedule preview window such that the user can select a to-be-selected schedule required by the user from the schedule preview window. Other particular implementations of the schedule preview window can be obtained with reference to related expressions for FIG. 9D and FIG. 10 in the above embodiments, and are not repeated herein.

After the mobile phone displays the schedule preview window (that is, after S704 is performed), the user may select a schedule option according to a requirement of the user, and perform a triggering operation on the confirmation option Y in the schedule preview window. Thus, the mobile phone creates a corresponding schedule in response to the triggering operation. That is, S705 is performed after S704.

In the fourth possible implementation, a particular implementation and purpose of the recognized content area in the second interface can be obtained with reference to related expressions for FIG. 11A(1) to FIG. 16 in the above embodiments of the first possible implementation, and are not repeated herein. A difference lies in that in the fourth possible implementation, the recognized content area and the schedule preview window are displayed in a full-screen manner in a second interface displayed.

Certainly, the four possible implementations of S701-S704 and their particular implementations are merely examples. In practice, any other possible implementations and their particular implementations may exist. This is not specifically limited in the present disclosure.

S705: The mobile phone receives a selection operation by the user on the first schedule option in the schedule preview window, and creates, in response to the creation operation by the user in the schedule preview window, a to-be-selected schedule to which the first schedule option belongs.

Moreover, S705 may alternatively be considered as that after a first schedule option of at least one schedule option is selected, in response to a creation operation by a user in the first window, the mobile phone creates a first schedule corresponding to the first schedule option in a schedule management application. The first schedule corresponding to the first schedule option is a to-be-selected schedule to which the first schedule option belongs.

If the first picture includes only schedule information of one to-do item, the schedule management application may recognize, from the first picture, only the first schedule information corresponding to the one to-do item. In this case, the at least one to-be-selected schedule generated by the mobile phone based on the first schedule information corresponds to only a same to-do item. The selection operation by the user on the first schedule option in the schedule preview window may include a triggering operation on the first schedule option. The creation operation by the user may be a triggering operation on a confirmation option in the schedule creation window. In addition, if the first schedule option is a schedule option selected by default when the schedule preview window is displayed, the user may not perform, in the schedule preview window, the selection operation performed on the first schedule option, but performs only the triggering operation on the confirmation option in the schedule preview window.

In some embodiments, for example, an interface on which the mobile phone displays the schedule preview window after S704 is performed may be an interface shown in FIG. 17D. When the user is required to use the schedule option 1707 that is selected by default as the first schedule option, the user may directly perform a triggering operation on the confirmation option Y in the schedule preview window. The mobile phone may create, in response to the triggering operation, a to-be-selected schedule corresponding to the default schedule option in the schedule preview window. The default schedule option is a schedule option selected by default in the schedule preview window. A display manner of the schedule option selected by default may be a preset display manner, such as a highlight display manner. A display manner of a schedule option that is not selected by default is a default display manner, such as a lowlight display manner.

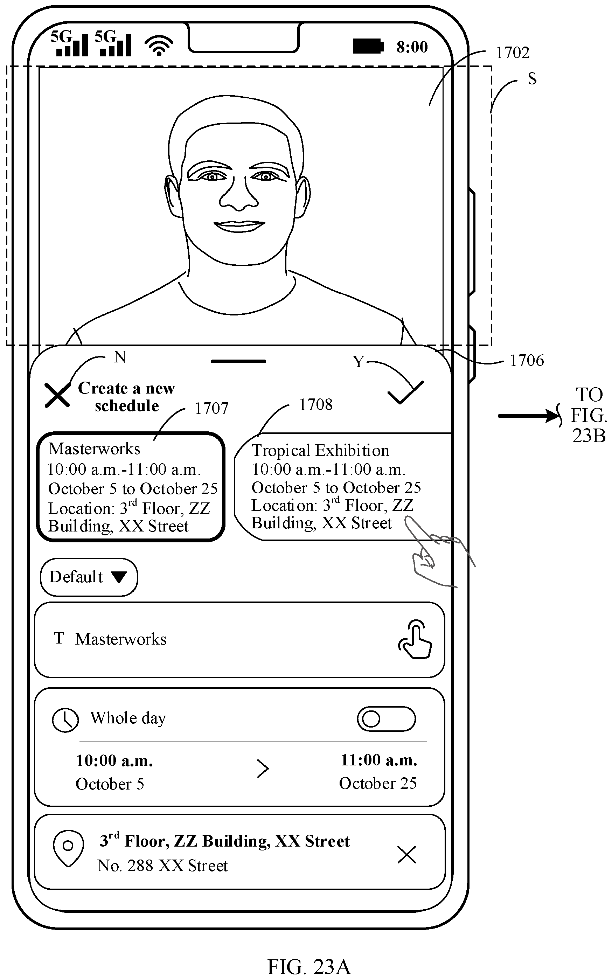

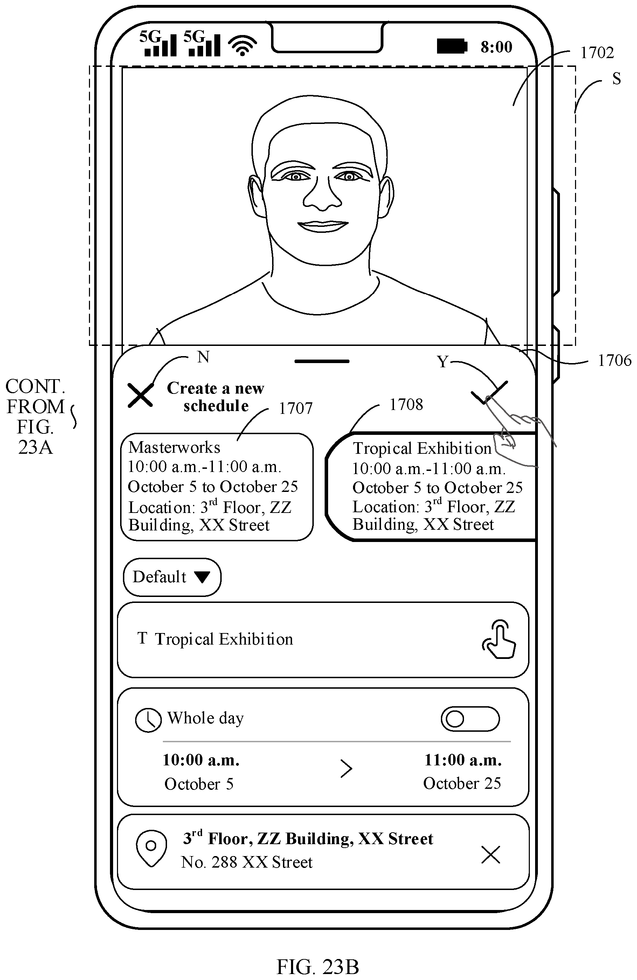

In some other embodiments, for example, an interface on which the mobile phone displays a schedule preview window after S704 is performed may be the second interface shown in FIG. 17D. With reference to FIG. 23A, when the user is required to take the schedule option 1708 that is not selected by default as the first schedule option, the user may perform a triggering operation on the schedule option 1708. In response to the triggering operation, the schedule management application of the mobile phone may determine the schedule option 1708 as the first schedule option, adjust a display manner of the schedule option 1707 to a default display manner, and adjust a display manner of the schedule option 1708 to a preset display manner, shown in FIG. 23B. Then, the user may perform a triggering operation on the confirmation option Y in the schedule preview window, to complete a creation operation. Thus, the schedule management application of the mobile phone can create a to-be-selected schedule to which the schedule option 1708 belongs.

Certainly, in practice, when the schedule preview window is displayed for the first time, no schedule option may be selected by default. That is, no default schedule option exists. In this case, if the user is required to create a schedule, not only a selection operation on the first schedule option is required to be implemented, but also a triggering operation on a confirmation option in the schedule preview window is required to be implemented.

In the present disclosure, a particular implementation of performing, by the user, the selection operation on the schedule option satisfying the requirement in the schedule preview window is related to whether the schedule information recognized by the schedule management application from the first picture includes schedule information of a plurality of different to-do items. The technical solution corresponding to S705 mentioned above is only for a case that the schedule information recognized by the schedule management application from the first picture includes only first schedule information of one to-do item. If the first picture includes schedule information of a plurality of to-do items, the schedule management application may recognize schedule information of the plurality of to-do items from the first picture. In this case, the mobile phone may generate, based on different schedule information, at least one to-be-selected schedule corresponding to the different schedule information separately. In a possible implementation, the schedule management application of the mobile phone may display, through a same schedule preview window, schedule options of all to-be-selected schedules for the user to select. In another possible implementation, the schedule management application of the mobile phone may further display, through different schedule preview windows, at least one schedule option corresponding to each of different schedule information in sequence. Thus, the user can determine to-be-selected schedules of different to-do items.

Based on this, implementation of the selection operation by the user on the schedule option in the schedule preview window and the creation operation by the user may have the following two possible scenarios.

In a first possible scenario, the selection operation by the user on the schedule option may be a determination operation by the user on different schedule options corresponding to different schedule information in a schedule preview window. The creation operation may be a triggering operation performed on a confirmation option in the schedule preview window.

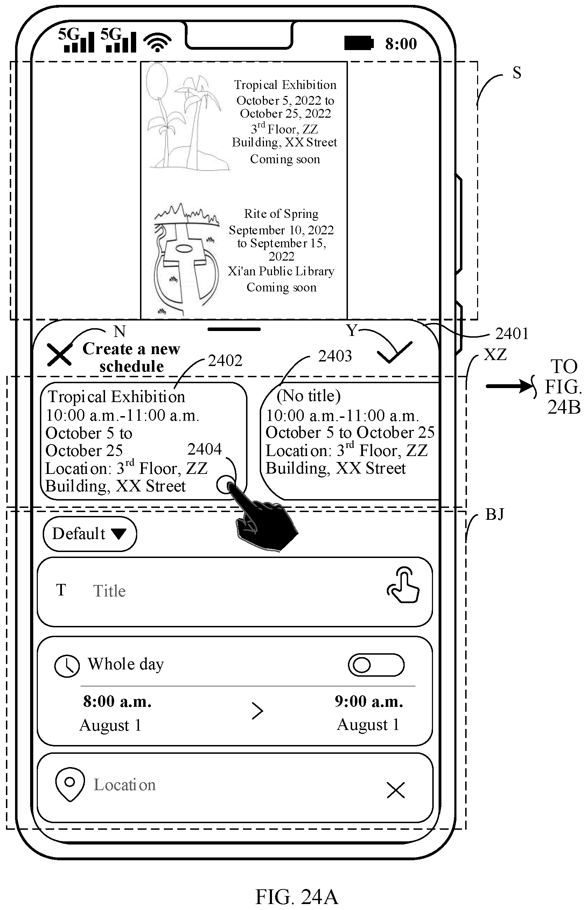

In some embodiments, each schedule option displayed in the schedule preview window may include a selection control. The determination operation by the user on the schedule option may be a triggering operation by the user on the selection control of the schedule option. For example, for example, the first picture is the first picture shown in FIG. 8(b). First schedule information and second schedule information can be obtained by parsing the first picture. Each piece of schedule information corresponds to two schedule options. For example, a schedule option to be selected by the user includes a first schedule option corresponding to the first schedule information and a third schedule option corresponding to the second schedule information. After S704 is performed, the second interface (that is, the first window mentioned in the present disclosure) of the mobile phone for carrying a schedule preview window may be shown in FIG. 24A. With reference to FIG. 24A, each schedule option included in the schedule preview window 2401 may include a selection control. As shown in FIG. 24A, the selection control in the schedule option may be a hollow circular box. Certainly, in a case that the first picture has only schedule information of one to-do item, a schedule option in a schedule preview window displayed by the mobile phone may have a selection control. The selection operation by the user on the schedule option may be a triggering operation by the user on the selection control of the schedule option.

In some embodiments, the selection control may not exist when the schedule preview window is initially displayed. After the user performs a long-press operation on an embodiment of any schedule option, the schedule management application of the mobile phone may display, in response to the long-press operation, a selection control in each schedule option. In addition, a style of the selection control of the schedule option on which the user performs the long-press operation is different from a selection control of another schedule option. For example, a style of a selection control of a schedule option on which a long-press operation is performed by the user is a second style mentioned in a subsequent embodiment. A style of a selection control of another schedule option is a first style mentioned in a subsequent embodiment.

It can be seen based on content of the first picture shown in FIG. 8(b) that the schedule option 2402 and the schedule option 2403 which are displayed in the schedule preview window 2401 shown in FIG. 24A correspond to the first schedule information obtained from text content in a first area in the first picture.

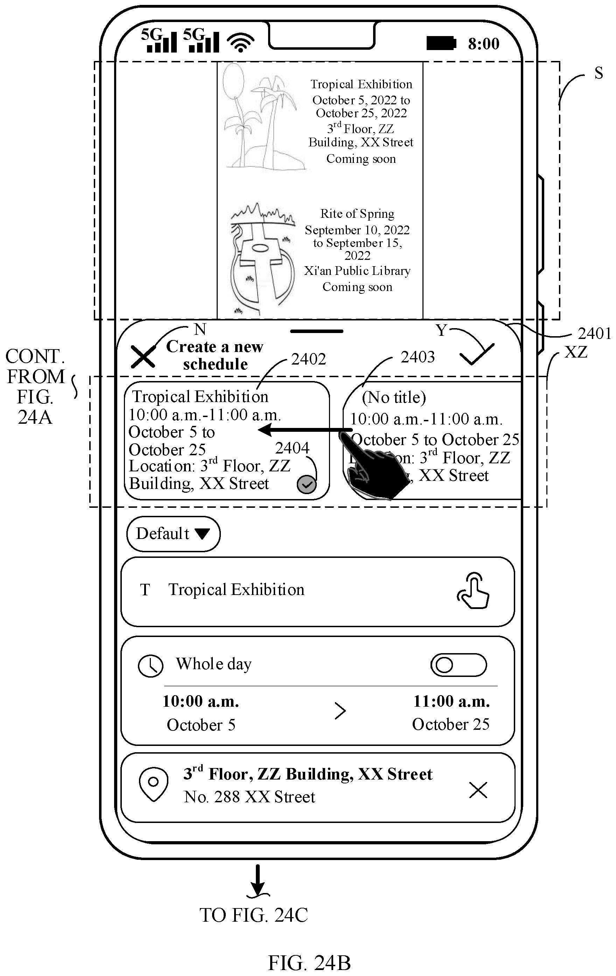

When the user is required to confirm the schedule option 2402 as the first schedule option corresponding to the first schedule information, the user may perform a triggering operation on a selection control 2404 in the schedule option 2402. In response to the triggering operation by the user on the selection control 2404, the schedule management application of the mobile phone may determine the schedule option 2402 as the first schedule option. At the same time, the schedule management application of the mobile phone may change a specific style of the selection control 2404 from a first style shown in FIG. 24A to a second style shown in FIG. 24B. The first pattern may be a circular box. The second pattern may be a highlighted circular box in which a symbol "√" exists.

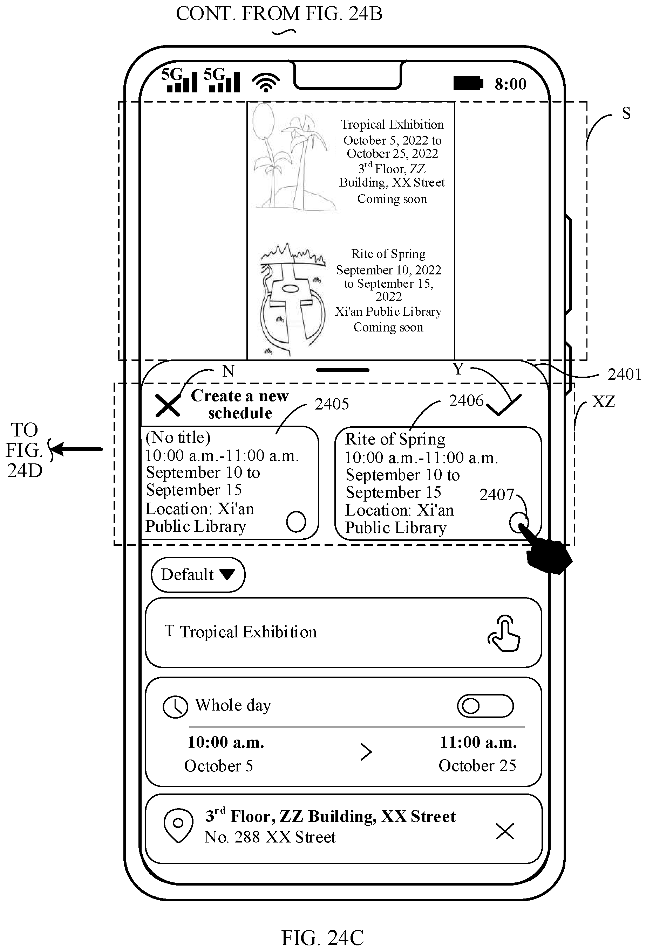

Then, if the user is required to select a third schedule option corresponding to the second schedule information from the schedule option corresponding to the second schedule information, as shown in FIG. 24B, the user may perform a leftward swiping operation in a selection area XZ in the schedule preview window 2401. In response to the leftward swiping operation, the schedule management application of the mobile phone may entirely move all the schedule options in the selection area XZ to the left. In a case that the schedule option 2402 and the schedule option 2403 are moved to the left to be hidden, as shown in FIG. 24C, the schedule management application of the mobile phone may display a schedule option 2405 and a schedule option 2406 in the selection area XZ. It can be seen with reference to content in FIG. 8(b) that the schedule option 2405 and the schedule option 2406 which are shown in FIG. 24C correspond to second schedule information obtained from text content in a second area in the first picture.

Then, if the user is required to determine the schedule option 2406 as a third schedule option corresponding to the second schedule information, the user may perform a triggering operation on a selection control 2407 in the schedule option 2406. In combination with the related expressions for FIG. 8(b) in the above embodiments, it can be seen that a value of a title included in the third schedule option is a second title, a value of a location included in the third schedule option is a second location, and a value of a time period included in the third schedule option is a second time period.

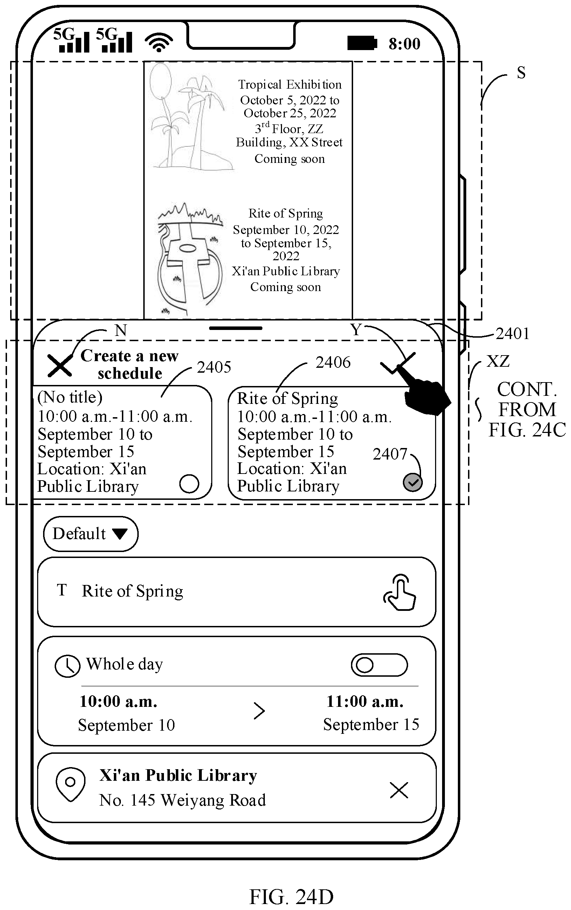

In response to the triggering operation by the user on the selection control 2407, the schedule management application of the mobile phone may determine the schedule option 2406 as the third schedule option. At the same time, the schedule management application of the mobile phone may change a specific style of the selection control 2407 from a first style shown in FIG. 24C to a second style shown in FIG. 24D.

Then, in a case that the user determines that to-be-selected schedules to which the schedule option 2402 and the schedule option 2406 belong are required to be created, the user may perform a triggering operation on the confirmation option Y in the schedule preview window 2401. The triggering operation performed on the confirmation option Y is a creation operation. That is, after S704, after a first schedule option corresponding to the first schedule information and a third schedule option corresponding to the second schedule information are selected, the mobile phone may receive a creation operation performed by the user in the schedule preview window.

In response to the triggering operation by the user on the confirmation option Y, the schedule management application of the mobile phone may create a to-be-selected schedule (that is, the first schedule in the present disclosure) to which the schedule option 2402 belongs, and a to-be-selected schedule (that is, the second schedule mentioned in the present disclosure) to which the schedule option 2406 belongs.

It should be noted that in practice, in a case that each schedule option displayed in the schedule preview window includes a selection control, when the schedule preview window is initially displayed, a selection control of one schedule option which is in a selected state may exist in at least one schedule option corresponding to each piece of schedule information. That is, the style is the second style. In this case, if the schedule option of which the selection control is in the selected state is a schedule option (such as the first schedule option or the third schedule option) which the user is required to select, when the user is required to create a schedule corresponding to the schedule option, the user is only required to perform a triggering operation (that is, a creation operation) on a confirmation option in the schedule preview window.

In addition, in the embodiment shown in FIG. 24, the first possible scenario is described only with an example in which the first picture includes the first schedule information and the second schedule information, and each piece of schedule information corresponds to two schedule options. In practice, if the first picture includes schedule information of more to-do events, and each piece of schedule information corresponds to more schedule options. A particular implementation of the first possible scenario is the same, and is not repeated in the present disclosure.

In this way, since a first picture has schedule information of a plurality of to-do items, a mobile phone can display, in a schedule preview window, at least one schedule option that can be selected by the user for each to-do item. Thus, the user can simultaneously select schedule options of a plurality of to-be-selected schedules in the schedule preview window. The mobile phone can create a plurality of schedules for a plurality of to-do items at a time. Efficiency of creating the schedule is improved, and user experience is improved.

In a second possible scenario, the selection operation implemented by the user on the schedule option may include: a triggering operation performed by the user on a corresponding schedule option in each schedule preview window. The creation operation may include a triggering operation by the user on a confirmation option in each schedule preview window.

In a second possible scenario, the schedule management application may display schedule preview windows for different schedule information. That is, each schedule preview window is used for displaying at least one schedule option corresponding to one piece of schedule information. In this case, the schedule management application of the mobile phone may display a plurality of schedule preview windows one by one in a preset sequence. Each time one schedule preview window is displayed, the user may select a corresponding schedule option (such as a first schedule option or a third schedule option) from the schedule preview window. That is, the user is required to perform a triggering operation on a corresponding schedule option in each schedule preview window. Except for a schedule preview window last displayed, each time the user performs a triggering operation on the confirmation option in the schedule preview window, the schedule management application of the mobile phone displays a next schedule preview window.

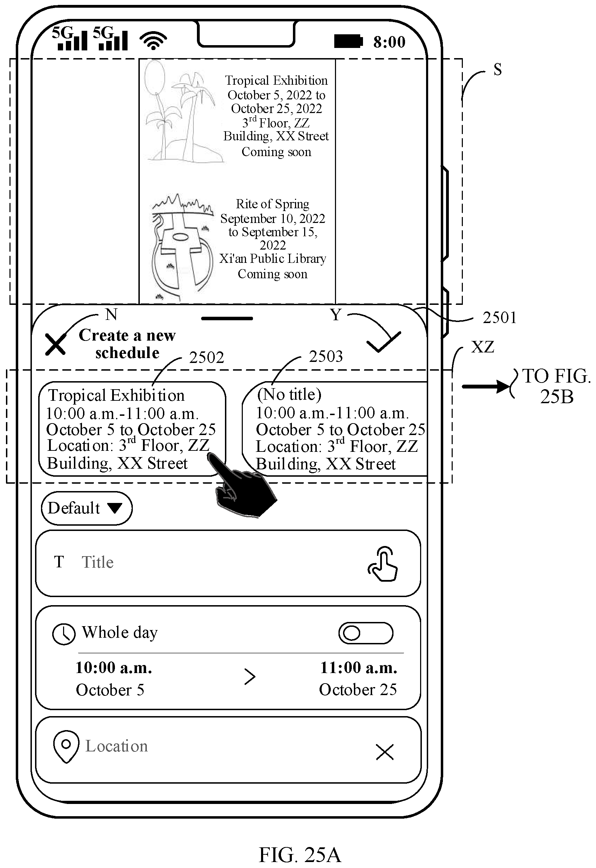

For example, for example, the first picture is the first picture shown in FIG. 8(b). The schedule management application may parse the first picture to obtain the first schedule information and the second schedule information. Each piece of schedule information corresponds to two schedule options. A schedule option required to be selected by the user includes a first schedule option corresponding to the first schedule information and a third option corresponding to the second schedule information. When S704 is executed, shown in FIG. 25A, the mobile phone may display a first schedule preview window 2501 (which may be referred to as a first window) in the second interface. The first schedule preview window 2501 includes a schedule option 2502 and a schedule option 2503 which correspond to the first schedule information.

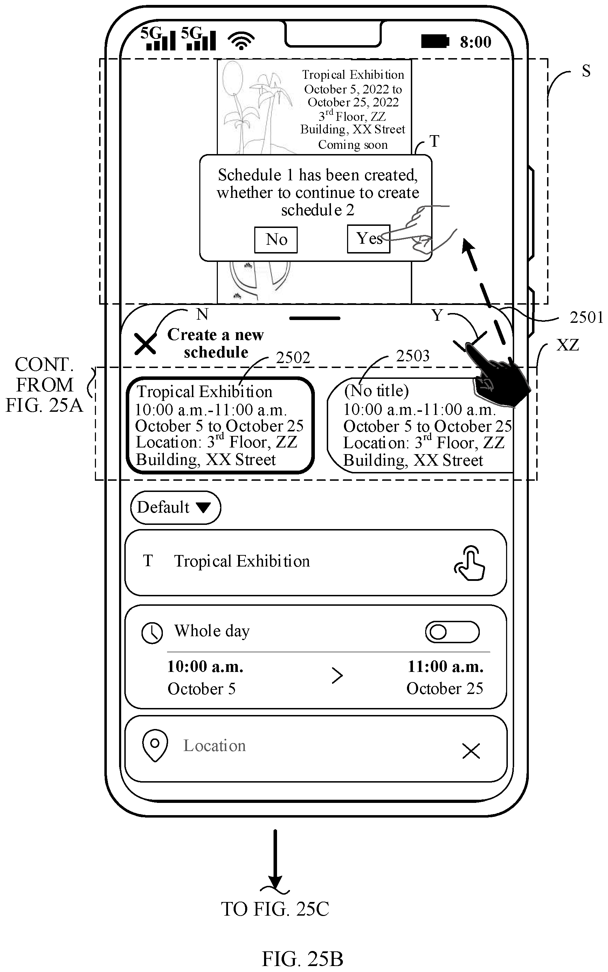

Then, if the user is required to determine the schedule option 2502 as the first schedule option corresponding to the first schedule information, as shown in FIG. 25A, the user may perform a triggering operation on the schedule option 2502. In response to the triggering operation, the schedule management application of the mobile phone may determine the schedule option 2502 as the first schedule option. Moreover, the schedule management application of the mobile phone may change display of the schedule option 2502 from a default display manner shown in FIG. 25A to a preset display manner shown in FIG. 25B. The default display manner may be a lowlight display manner. The preset display manner may be a highlight display manner. A display manner of a schedule option 2503 on which the user does not perform a triggering operation is still a default display manner.

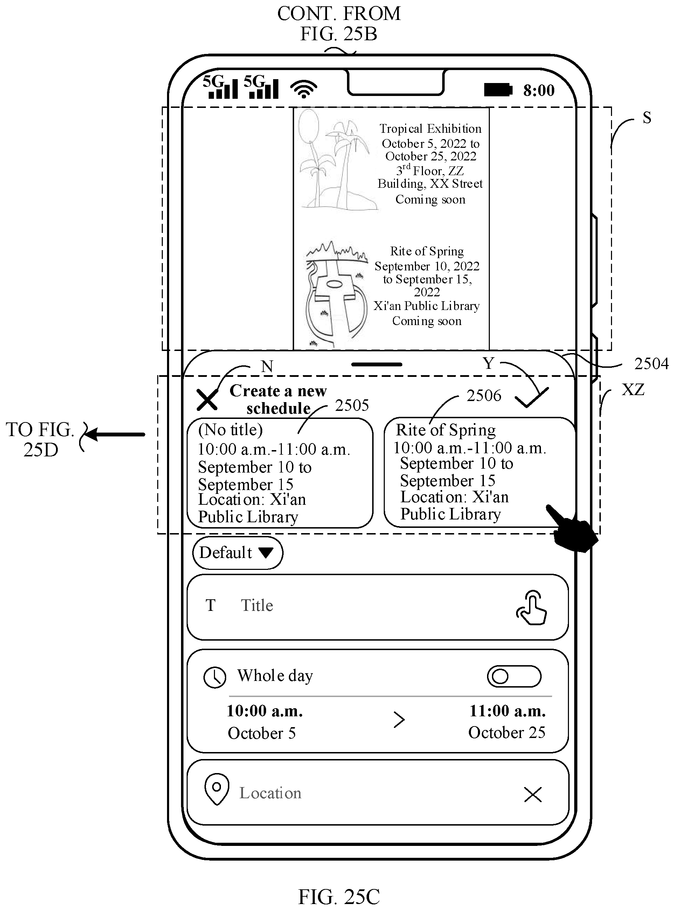

Then, the user may perform a triggering operation on a confirmation option Y in the first schedule preview window 2501. In response to the triggering operation, the mobile phone may create a to-be-selected schedule (that is, the first schedule corresponding to the first schedule option) to which the schedule option 2503 belongs. Based on this, the mobile phone may further display a second schedule preview window 2504 (which may be referred to as a second window) shown in FIG. 25C. The second schedule preview window 2501 includes a schedule option 2505 and a schedule option 2506 which correspond to the second schedule information.

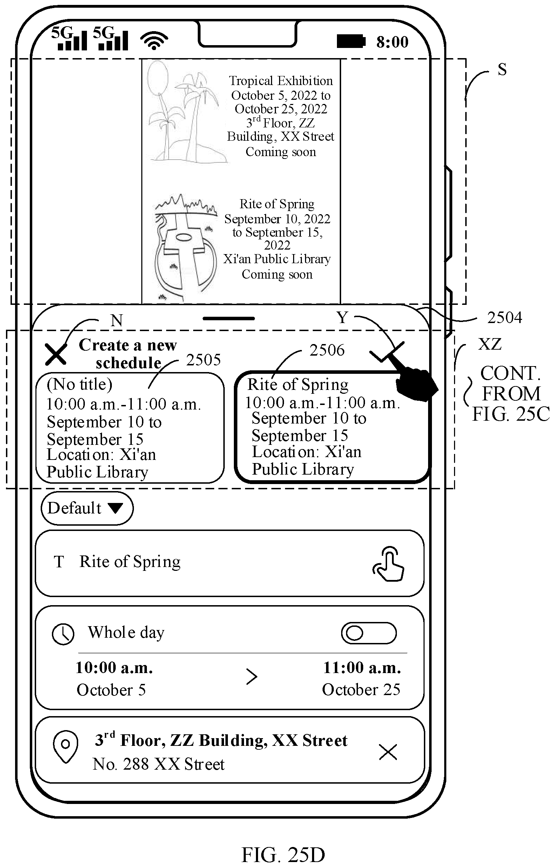

Then, if the user is required to determine the schedule option 2506 as the third schedule option corresponding to the second schedule information, as shown in FIG. 25C, the user may perform a triggering operation on the schedule option 2506. In response to the triggering operation, the schedule management application of the mobile phone may determine the schedule option 2506 as the third schedule option. Moreover, the schedule management application of the mobile phone may change a display manner of the schedule option 2506 from a default display manner shown in FIG. 25C to a preset display manner shown in FIG. 25D.

Then, the user may perform a triggering operation on a confirmation option Y in the second schedule preview window 2504. In response to the triggering operation on the confirmation option Y, the mobile phone may create a to-be-selected schedule (that is, the second schedule corresponding to the third schedule option) to which the schedule option 2506 belongs.

The triggering operation by the user on the confirmation option Y in the first schedule preview window 2501 and the triggering operation on the confirmation option Y in the second schedule preview window 2504 are creation operations.

In addition, after the schedule management application of the mobile phone creates the to-be-selected schedule to which the first schedule option belongs, to remind the user that the creation is completed, the third schedule option is required to be selected. As shown in FIG. 25B, in response to a triggering operation by the user on a confirmation option in the first sub-schedule preview window 2501, the schedule management application of the mobile phone may further display a reminder pop-up window T. As shown in FIG. 25B, the reminder pop-up window T may display words similar to "Schedule 1 has been created, whether to continue to create schedule 2?", a confirmation item similar to a word "yes", and a cancellation item similar to a word "no". In a case that the user is required to select the third schedule option, the user may perform a triggering operation (such as a click-on/tap-on operation) on the confirmation item. In response to the triggering operation on the confirmation item, the schedule management application of the mobile phone may display a second schedule preview window 2504 shown in FIG. 25C. In a case that the user determines that the third schedule option is not required to be selected, the user may perform a triggering operation (such as a click-on/tap-on operation) on the cancellation item. In response to the triggering operation on the cancellation item, the schedule management application of the mobile phone may determine that all schedules are created.

It should be noted that if the schedule option (such as the first schedule option) selected by the user in the schedule preview window (such as the first schedule preview window) is selected by default, that is, when the schedule preview window starts being displayed, a display manner of the schedule option selected by the user is the preset display manner, the user may directly perform a triggering operation on the confirmation option in the schedule preview window. Thus, the schedule management application of the mobile phone creates a corresponding schedule.

In addition, if the schedule information (such as the first schedule information) corresponds to many schedule options, not all schedule options can be displayed in a corresponding schedule preview window at a time. Thus, when required to select a schedule option selected by the user from hidden schedule options, the user may further perform a swiping operation in the selection area XZ in the schedule preview window, to switch the schedule option displayed in the selection area XZ.

Certainly, in the embodiment shown in FIG. 25A, FIG. 25B, FIG. 25C, and FIG. 25D, the second possible scenario is described only with an example in which the first picture includes the first schedule information and the second schedule information, the mobile phone displays the first schedule preview window and the second schedule preview window, and each schedule preview window includes two schedule options. In practice, if the first picture includes more schedule information, the mobile phone displays more schedule preview windows, and the schedule preview window includes more schedule options. A particular implementation of the second possible scenario is the same, and is not repeated in the present disclosure.

It should be noted that the above two possible scenarios are merely examples. In practice, any other possible scenarios may exist.

Based on the above technical solution, since a first picture has schedule information of a plurality of to-do items, a mobile phone can display, in different schedule preview windows, at least one schedule option that can be selected by the user for different to-do items. Thus, the user can select appropriate schedule options for different to-do items in different schedule preview windows. The mobile phone can create a plurality of schedules at a time. Efficiency of creating the schedule is improved, and user experience is improved.

After the schedule management application creates the schedule, to enable the user to conveniently continue, after creating the schedule, to perform any feasible operations on an interface on which the user determines that the schedule is required to be created, the mobile phone may display the interface. Moreover, to remind the user that the schedule is created, reminder information may be further displayed based on that the interface is displayed. The reminder information reminds the user that the schedule is created.

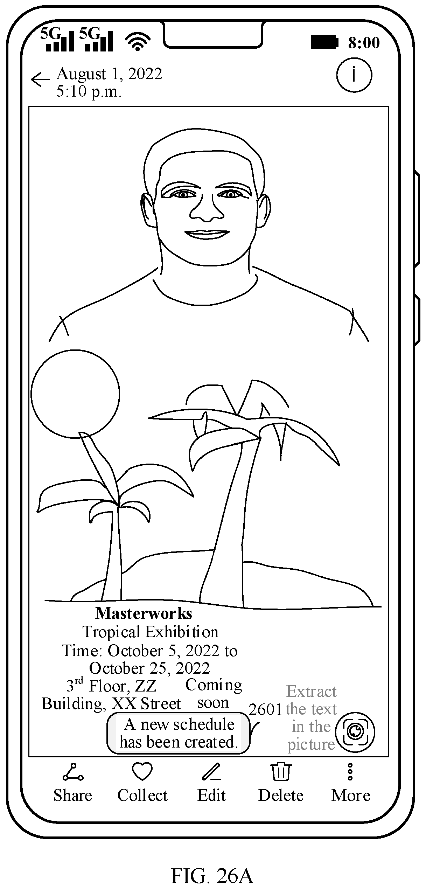

With the example shown in FIG. 17A, FIG. 17B, FIG. 17C, and FIG. 17D or FIG. 19A, FIG. 19B(1), and FIG. 19B(2), after the schedule management application creates the schedule, the mobile phone may display a picture detail interface of the first picture shown in FIG. 26A. Reminder information 2601 may be displayed on the picture detail interface. The reminder information may be specifically words similar to "A new schedule has been created".

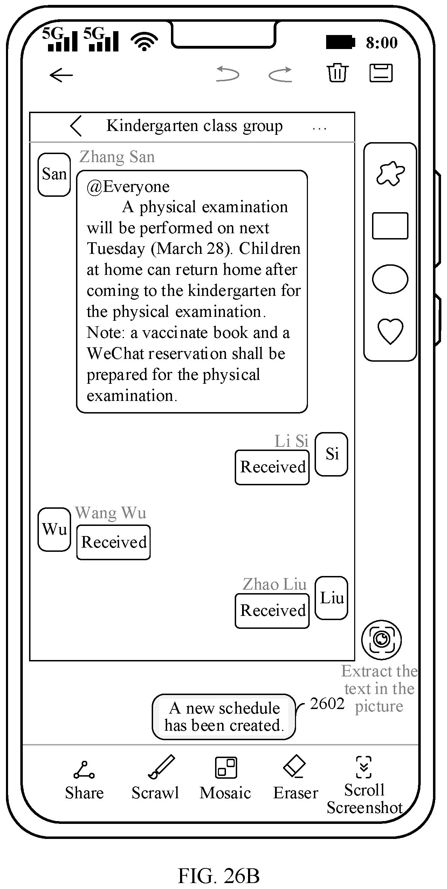

For another example, with the example shown in FIG. 18A, FIG. 18B, FIG. 18C, and FIG. 18D or FIG. 20A, FIG. 20B(1), and FIG. 20B(2), after the schedule management application creates the schedule, the mobile phone may display a screenshot presentation interface of the first picture shown in FIG. 26B. Reminder information 2602 may be displayed in the screenshot presentation interface. A presentation form of the reminder information 2602 is similar to or the same as that of the reminder information 2601.

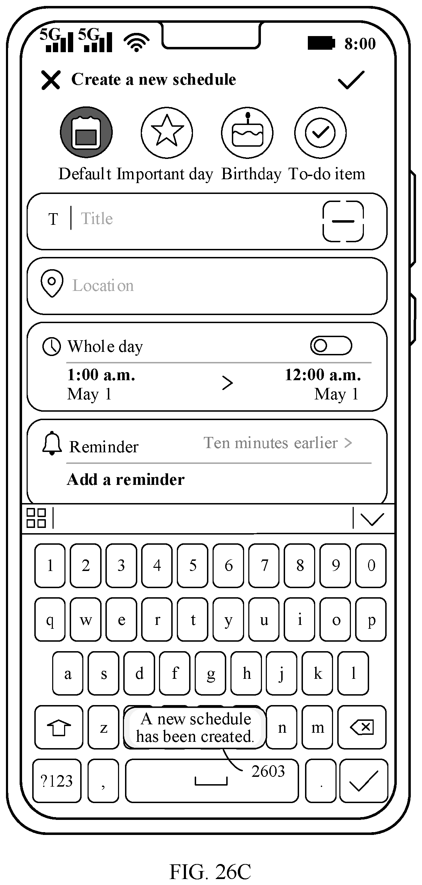

For still another example, with the example shown in FIG. 21A, FIG. 21B(1), FIG. 21B(2), FIG. 21C, and FIG. 21D or FIG. 22A, FIG. 22B(1), and FIG. 22B(2), after the schedule management application creates the schedule, the mobile phone may display a schedule creation interface shown in FIG. 26C. Reminder information 2603 may be displayed in the schedule creation interface. A presentation form of the reminder information 2603 is similar to or the same as that of the reminder information 2601.

In a first possible implementation of S701-S704, in the implementation, the user provides the first picture for the schedule management application by using the icon of the schedule management application in the sidebar. Thus, based on the interaction rule of the sidebar, after the flow for creating a schedule for the picture ends, in addition to displaying the first interface and superposing the reminder information, the mobile phone may further display the floating ball corresponding to the schedule management application on the first interface. After the floating ball is triggered by the user, a calendar floating window may be further displayed. The calendar floating window may display a calendar interface including a month to which a schedule created by the schedule management application belongs after the flow for creating a schedule for the picture ends.

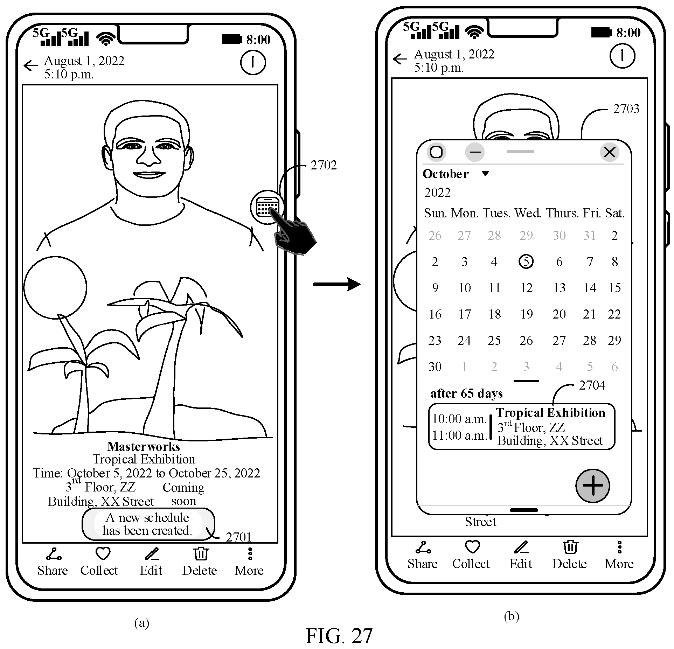

For example, with the example shown in FIG. 9A, FIG. 9B, FIG. 9C, and FIG. 9D, after the schedule management application creates the schedule, the mobile phone may display a picture detail interface of the first picture shown in FIG. 27(a). The picture detail interface includes reminder information 2701 and a floating ball 2702. A presentation form of the reminder information 2701 is similar to or the same as that of the reminder information 2601 in FIG. 26A, FIG. 26B, and FIG. 26C. An icon of a calendar application may be displayed in the floating ball 2702.

Then, when required to view a situation of creating a schedule, the user may perform a triggering operation on the floating ball 2702. In response to the triggering operation, the mobile phone may display a second floating window 2703 shown in FIG. 27(b). The second floating window 2703 may display a calendar of a month corresponding to a schedule created through the flow for creating a schedule for the picture. For example, if the newly created schedule created through the flow for creating a schedule for the picture is a schedule in October (that is, a time period in schedule information of the schedule is within October), the calendar floating window may display a calendar of October. The second floating window 2703 may further display a schedule control 2704 of the newly created schedule. The schedule control may display some or all schedule information of the newly created schedule.

Based on the technical solutions provided in the above embodiments, the mobile phone may generate at least one to-be-determined schedule based on the first picture for a user to select. In this case, the user is only required to select an appropriate to-be-determined schedule according to a requirement, and then the mobile phone can create a corresponding to-be-determined schedule. In an entire creation process, the user can enable, through only some simple operations (such as an input operation, a selection operation, and a creation operation), the mobile phone to generate a schedule required by the user. It can be seen that according to the technical solutions provided in the present disclosure, a number of operations required for creating a schedule is greatly reduced, and user experience is improved. Moreover, since a plurality of selectable to-be-determined schedules can be provided for the user, a finally created schedule can better satisfy the requirement of the user. Further, since after the schedule is created, the first interface that initially presents the first picture can be displayed for the user to perform other possible operations, which can be displayed, the user can conveniently create the schedule based on a currently viewed picture, and perform other possible operations on an initial interface after the schedule is created. Thus, user experience is improved.

In some embodiments, in addition to the schedule information of a to-do item of a corresponding schedule that the user is required to generate, text content in the first picture may have other disturbance information. For example, the first picture may have schedule information of two to-do items, but the user only wants to create a corresponding schedule for schedule information of one to-do item. Then, schedule information of the other to-do item is interference content. For another example, in addition to the schedule information of the to-do item of the schedule that the user is required to generate, the first picture may have interference content that is unrelated to the to-do item and that is of a same category as the schedule sub-information, such as a time and a location. The interference content may interfere with the first schedule information obtained by parsing, by the schedule management application, the first picture. Thus, a to-be-selected schedule that the user does not require is generated.

Based on this, to enable the user to conveniently reduce interference content in the first picture according to a requirement of the user, in some embodiments, when the mobile phone displays the schedule preview window, a recognized content area for displaying the first picture may have a clipping control. When the user is required to reduce interference content in the first picture, the user may clip the first clipped picture by using the clipping control, to obtain a clipped first picture. Thus, the schedule management application can recognize and reacquire the first schedule information from the first clipped picture.

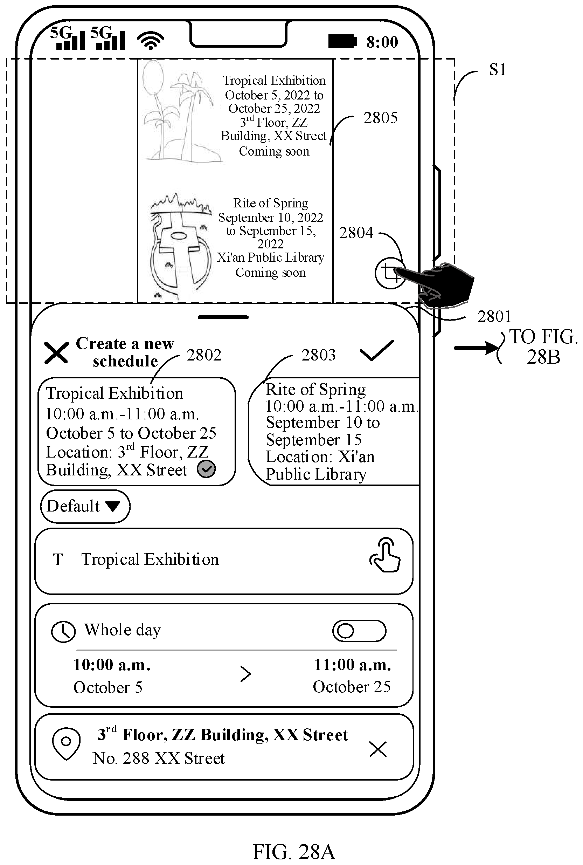

For example, the first picture is a picture shown in FIG. 8(b), and content in a second area of the first picture shown in FIG. 8(b) is interference content. After S704, the schedule preview window displayed by the mobile phone through the second interface may be shown in FIG. 28A. A schedule option 2802 and a schedule option 2803 are displayed in a schedule preview window 2801 in the second interface. It can be seen that a to-be-selected schedule to which the schedule option 2802 belongs is a to-be-selected schedule obtained based on the text content in the first area in the first picture. A to-be-selected schedule to which the schedule option 2803 belongs is a to-be-selected schedule obtained based on the text content in the second area in the first picture.

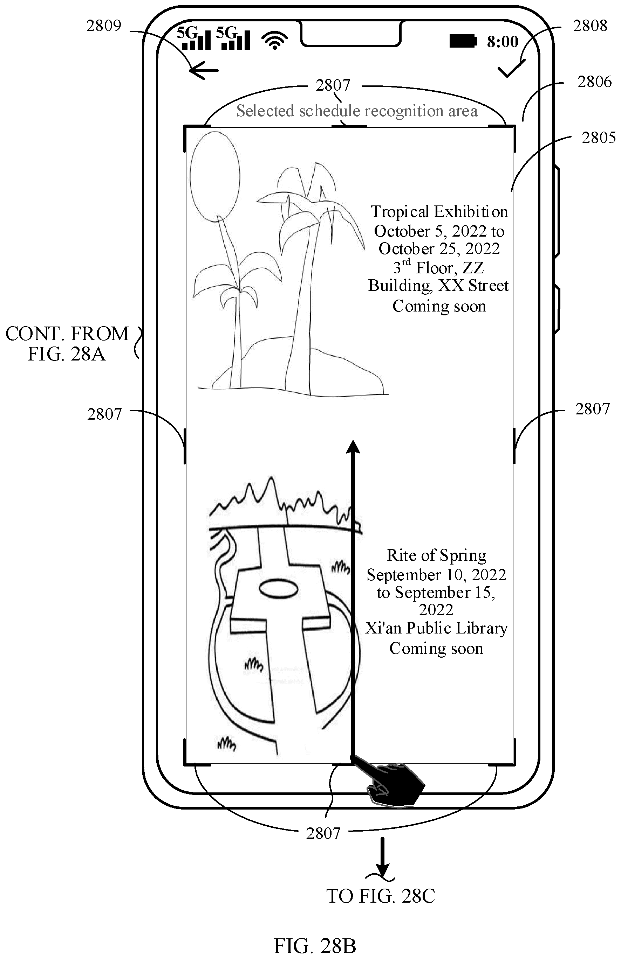

With reference to FIG. 28A, in addition to displaying the first picture 2805, the recognized content area S1 in the second interface may further include a first clipping control 2804. When the user is required to clip the interference content in the second area of the first picture, the user may perform a triggering operation on the first clipping control 2804. In response to the triggering operation, the schedule management application of the mobile phone may display a clipping interface 2806 (or may be referred to as a first clipping interface) shown in FIG. 28B. Based on displaying the first picture 2805, the clipping interface 2806 further includes a plurality of first adjustment controls 2807 surrounding the first picture 2805. The clipping interface 2806 may further include a first clipping confirmation option 2806 and a first clip return option 2807. The first clipping confirmation option 2808 is used for triggering the schedule management application of the mobile phone to update the first picture by using the first clipped picture in the current clipping interface. Then, the schedule management application of the mobile phone generates a new to-be-selected schedule based on the new first picture and displays a new schedule preview window. The first clip return option 2809 is used for triggering the schedule management application of the mobile phone to redisplay an interface, that is, a second interface shown in FIG. 28A, before the user triggers the first clipping control 2804. In some embodiments, reminder information similar to words such as "select a schedule recognition area" may be further displayed in the clipping interface 2806, to remind the user of clipping the first picture.

Then, the user may perform a clipping operation on the first picture in a clipping interface according to a requirement of the user, and adjust a reserved portion of the first picture that is surrounded by the first adjustment control, to clip the first picture. The reserved portion surrounded by the first adjustment control is a clipping result, that is, the first clipped picture.

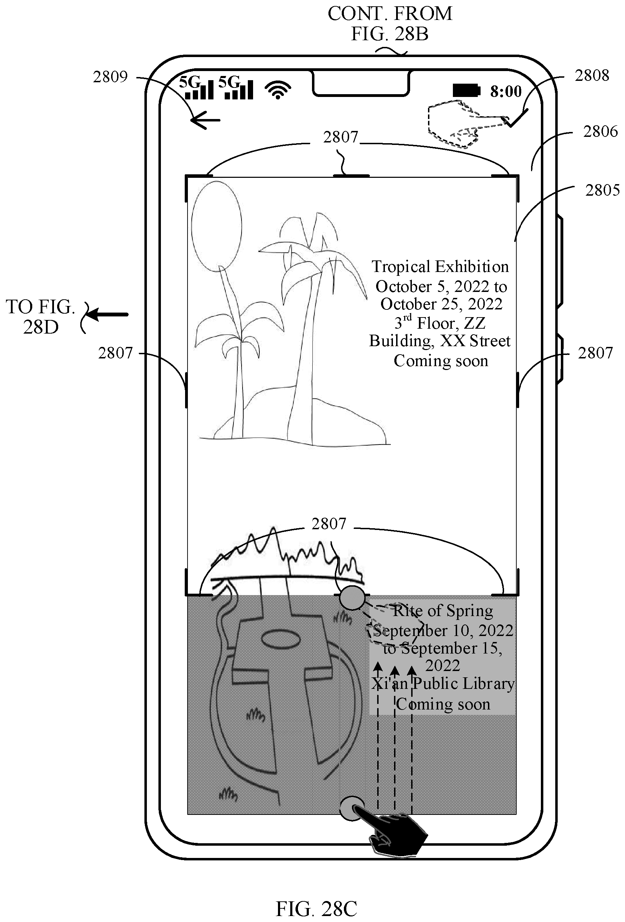

The clipping operation may include an adjustment operation performed on the first adjustment control 2807. For example, with reference to FIG. 28C, the adjustment operation may be a first upward swiping operation performed on a first adjustment control 2807 in the middle of a lower portion of the first picture 2805. With reference to FIG. 28C, in response to the first upward swiping operation performed by the user, the portion of the first adjustment control 2807 surrounding the first picture is decreased from top to bottom. Moreover, the mobile phone may gradually adjust the display manner of some of the first picture 2805 from top to bottom to a clipped display manner. The clipped display manner may be a lowlight display manner. The reserved portion surrounded by the first adjustment control 2807 is a clipping result. In this way, the user may clip the first picture by performing an adjustment operation on the first adjustment control at least once, to obtain a clipping result.

The clipping operation may further include a transformation operation by the user directly on the first picture on a clipping interface. The transformation operation may be any possible operations such as a reduction operation, an enlargement operation, or a movement operation. The reduction operation is used for reducing the display size of the first picture, to change the portion surrounded by the first adjustment control, and change the clipping result. The enlargement operation is used for enlarging the display size of the first picture, to change the portion surrounded by the first adjustment control, and change the clipping result. The movement operation is used for changing a location of the first picture in the clipping interface, to change the portion surrounded by the first adjustment control, and change the clipping result. A specific operation manner of the reduction operation, the enlargement operation, or the movement operation can be obtained with reference to related expressions in FIG. 14, FIG. 15, and FIG. 16 in the above embodiments, and is not repeated herein.

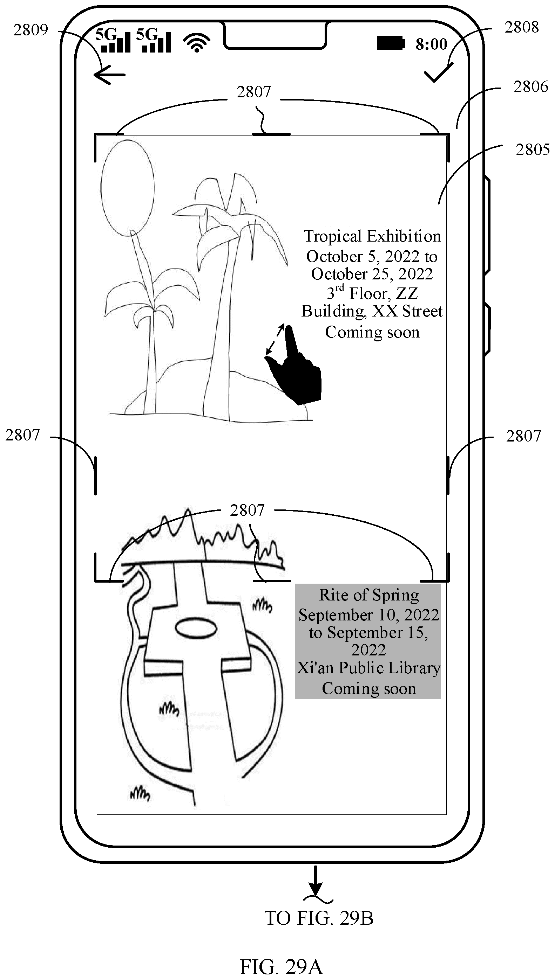

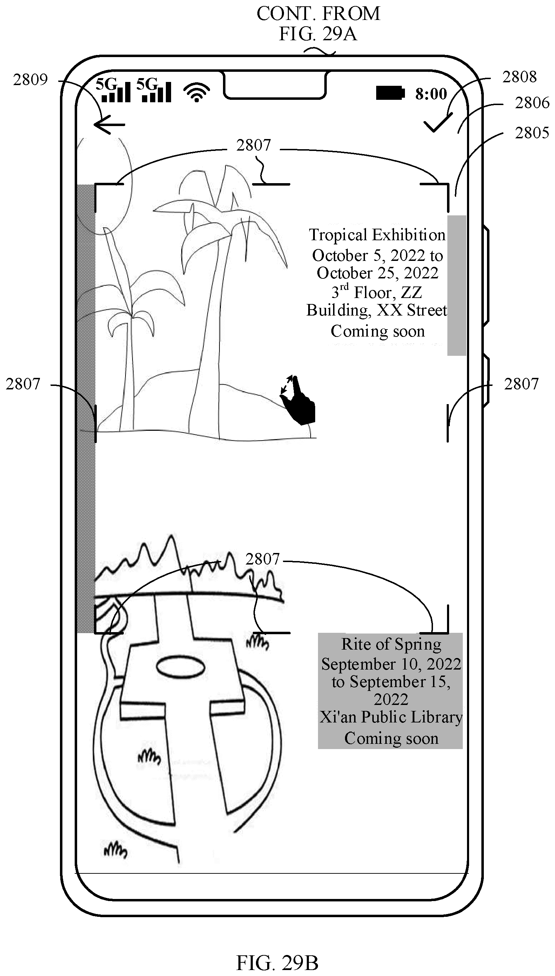

An example in which the transformation operation is an enlargement operation is used below for description. For example, the enlargement operation is a two-finger outward swiping operation. Based on a clipping interface shown in FIG. 28C, the user further is required to enlarge the first picture, to change a clipping result surrounded in the first adjustment control. With reference to FIG. 29A, the user may implement a two-finger outward swiping operation on the first picture. In response to the two-finger outward swiping operation, with reference to FIG. 29B, the schedule management application of the mobile phone may enlarge the first picture, and adjust a display manner of a part located outside the area surrounded by the first adjustment control 2807 to a clipped display manner. The portion surrounded by the first adjustment control 2807 is a new clipping result, that is, the first clipped picture.

For example, the clipping operation includes only an adjustment operation by the user on the first adjustment control, after the user determines that the clipping operation is completed, as shown in FIG. 28C, the user may perform a triggering operation on the first clipping confirmation option 2808 in the clipping interface 2806. In response to the triggering operation by the user on the first clipping confirmation option 2808, the schedule management application of the mobile phone may update (including updating the first picture in the recognized content area) the first picture by using the first clipped picture, and parse the first clipped picture (that is, a final clipping result) as a new first picture, to obtain new first schedule information. The first clipped picture may be specifically a portion of the first picture that is surrounded by the first adjustment control. For example, with reference to FIG. 28C, the first schedule information may specifically include: "Tropical Exhibition", "October 5, 2022 to October 25, 2022", and "3rd Floor, ZZ Building, XX Street". Thus, the first picture is clipped by the user.

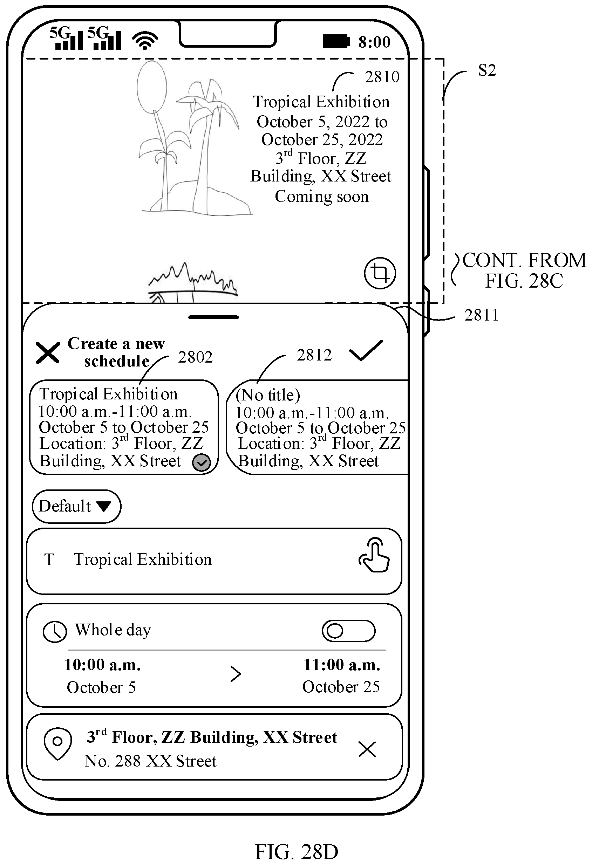

Then, after updating the first picture by using the first clipped picture, the schedule management application of the mobile phone may parse the updated first picture again to obtain new first schedule information, then generate at least one new to-be-selected schedule based on the new first schedule information, and update the schedule option in the schedule preview window based on the at least one new to-be-selected schedule. Thus, the user can select a to-be-selected schedule satisfying the requirement of the user. That is, after the first picture is updated by using the first clipped picture, S703 to S705 in the flow for creating a schedule for a picture are performed again. For example, based on the example shown in FIG. 28C, after generating at least one to-be-selected schedule based on new first schedule information, the schedule management application of the mobile phone may display a first updating interface shown in FIG. 28D. The first updating interface is a second interface obtained after the schedule management application of the mobile phone updates a schedule option in the schedule preview window 2801 based on the first schedule information obtained by using the first clipped picture. In this case, the first clipped picture 2810 may be displayed in the recognized content area S2 in the first updating interface. A schedule option 2802 and a schedule option 2812 may be displayed in a schedule preview window 2811 of the first updating interface. Content displayed in the schedule option 2802 and content displayed the schedule option 2812 both correspond to new first schedule information.

In some embodiments, after the user perform a clipping operation in the clipping interface, in response to a triggering operation by the user on a first clipping confirmation option in the clipping interface, the schedule management application of the mobile phone may further display a new first parsing picture based on the new first picture. A particular implementation of the first parsing picture can be obtained with reference to related expressions in the above embodiments, and is not repeated herein. After the parsing is completed, that is, after the first parsing picture is displayed for the first preset duration, the schedule management application of the mobile phone may display a new second interface (that is, a first updating interface) shown in FIG. 28D. In this way, after clipping the first picture, the user may sense a process of parsing the new first picture by the mobile phone. User experience is improved.

In some embodiments, after the user clips the first picture once, the first picture may be required to be clipped again (clipped for the second time) for various possible reasons. In this case, the user may complete clipping once again by using a clipping process shown in FIG. 28A, FIG. 28B, FIG. 28C, and FIG. 28D. The specific process may have the following two possible implementations. In a first possible implementation, after the user triggers the clipping control, the original first picture may be displayed on a clipping interface displayed by the schedule management application of the mobile phone. In this case, the user may perform clipping again based on the original first picture, rather than continue clipping based on a clipped first picture to make a latest first picture increasingly less. Subsequent inaccurate clipping caused by an error of previous clipping is avoided, and user experience is improved.

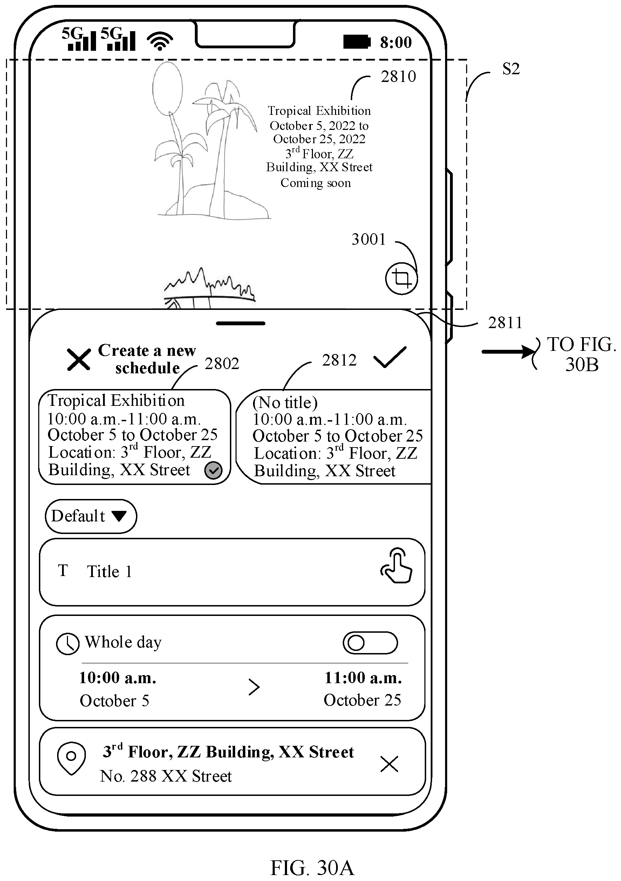

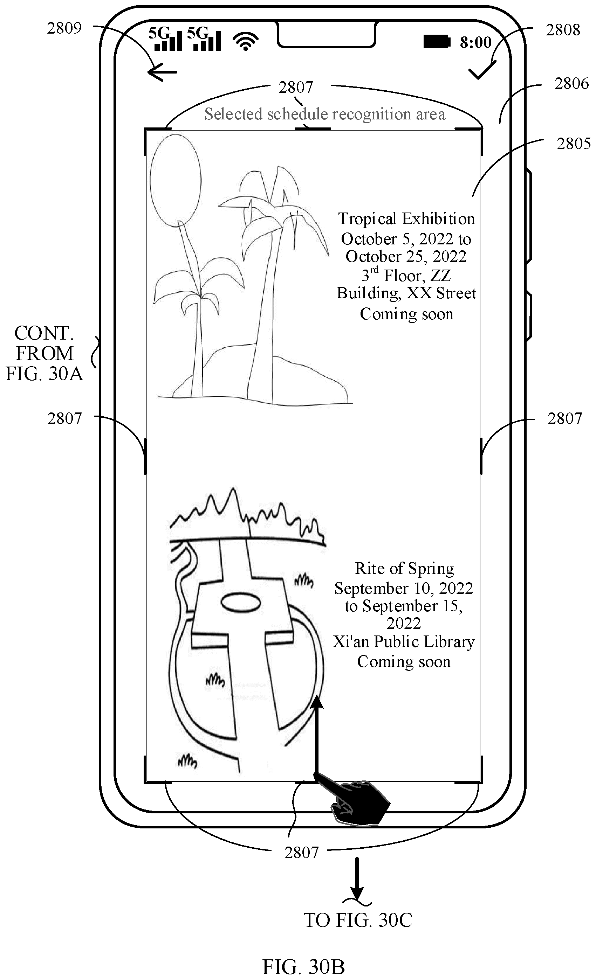

For example, in combination with the example shown in FIG. 28D, with reference to FIG. 30A, when required to perform clipping again, the user may perform a triggering operation on the second clipping control 3001 in the first updating interface. In response to the triggering operation, with reference to FIG. 30B, the schedule management application of the mobile phone may display a clipping interface 2806 (that is, a first clipping interface) shown in FIG. 28B.

Then, the user may perform a clipping operation on the first picture in the clipping interface again according to a requirement of the user, and adjust the reserved portion of the first picture that is surrounded by the first adjustment control, to clip the first picture again. The reserved portion surrounded by the first adjustment control this time is determined as a second clipping result, that is, a second clipped picture.

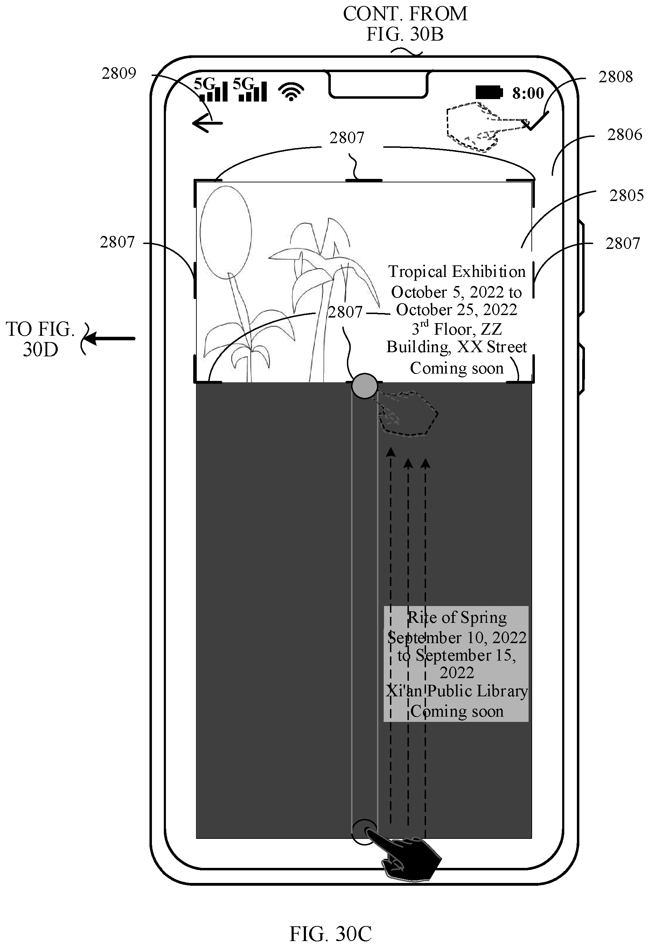

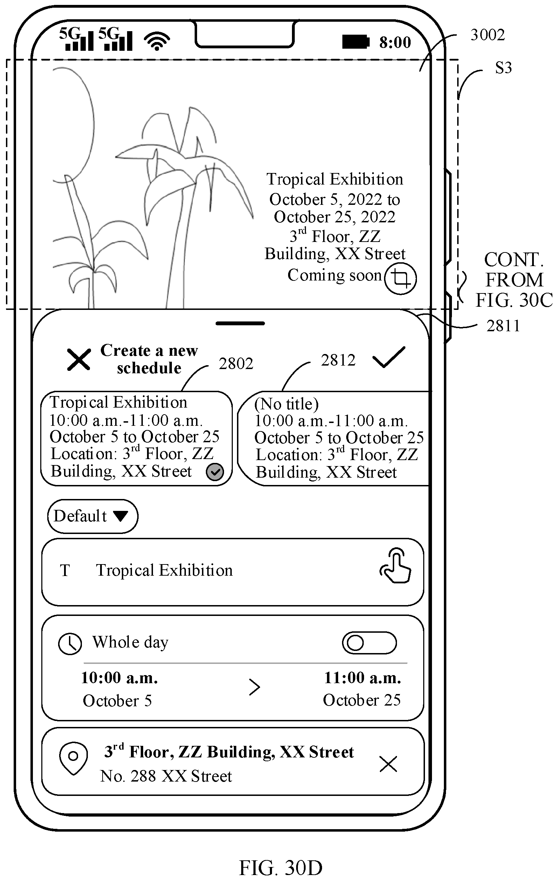

For example, the clipping operation includes only an adjustment operation on the first adjustment control. The user may perform an adjustment operation on the first adjustment control 2807 according to a new requirement. For example, with reference to FIG. 30C, the adjustment operation may be a second upward swiping operation performed on the first adjustment control in the middle of the lower portion of the first picture 2805. A swipe distance of the second upward swiping operation may be greater than that of the first upward swiping operation. With reference to FIG. 30C, in response to the second upward swiping operation performed by the user, the mobile phone may gradually adjust the display manner of some of the first picture 2805 from top to bottom to a clipped display manner. In this way, after performing the adjustment operation on the first adjustment control at least once, the user may clip the interference content in the first picture again, to obtain a second clipped picture better satisfying the requirement of the user. Then, as shown in FIG. 30C, the user may perform a triggering operation on the first clipping confirmation option 2808 in the clipping interface 2806. In response to the triggering operation, the schedule management application of the mobile phone may parse the second clipped picture as the new first picture, to obtain the new first schedule information. Thus, the first picture is clipped by the user. Then, the schedule management application of the mobile phone may generate at least one to-be-selected schedule based on the new first schedule information and update the schedule option in the schedule preview window (which may be considered as updating the schedule option in the schedule preview window in the first updating interface). Thus, the user can select a to-be-selected schedule satisfying the requirement of the user. That is, after the first picture is updated by using the second clipped picture, S703 to S705 in the flow for creating a schedule for a picture are performed again. For example, based on the example shown in FIG. 30C, after generating at least one to-be-selected schedule based on new first schedule information, the schedule management application of the mobile phone may display a second updating interface shown in FIG. 30D. In this case, the updated first picture displayed in the recognized content area S3 in the second updating interface is a second clipped picture 3002.

In a second possible implementation, after the user triggers the clipping control, a clipping interface displayed by the schedule management application of the mobile phone may be a picture after the user completed the adjustment operation for the first time. In this case, the user may continue to adjust the first adjustment control based on the picture. In this way, when the user performs clipping again, some clipping operations may be reduced.

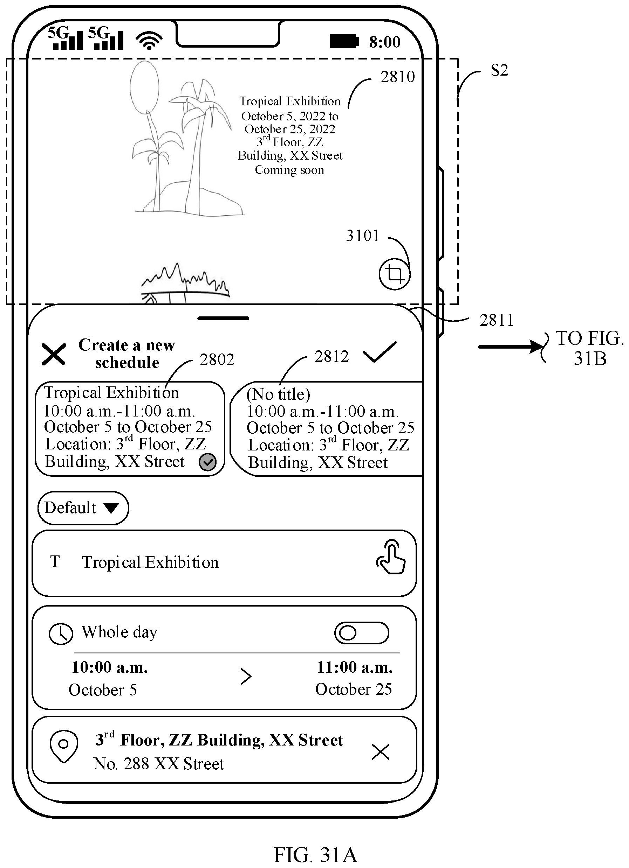

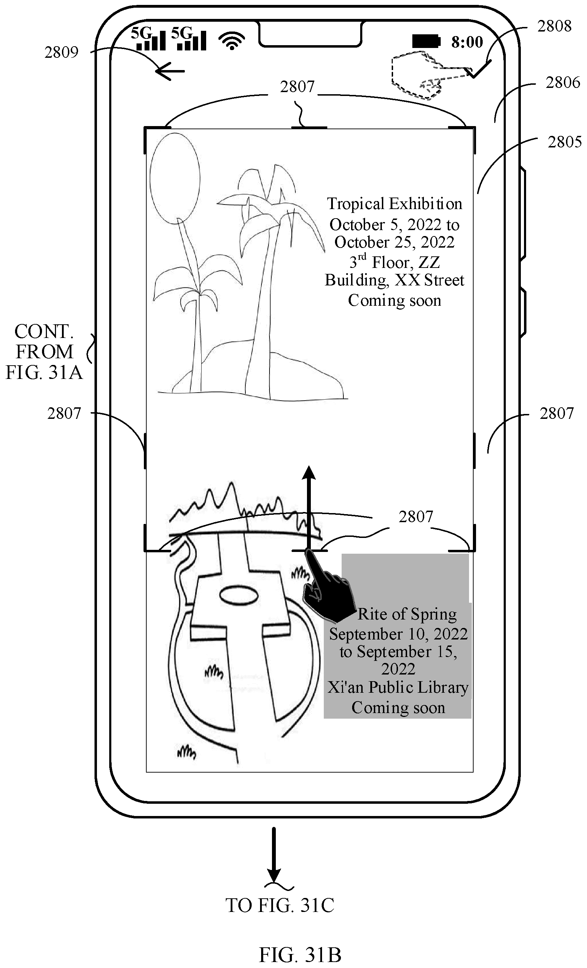

For example, in combination with the example shown in FIG. 28D, with reference to FIG. 31A, when required to perform clipping again, the user may perform a triggering operation on the second clipping control 3101 in the first updating interface. In response to the triggering operation by the user on the second clipping control 3101, with reference to FIG. 31B, the schedule management application of the mobile phone may display a clipping interface (or may be referred to as a second clipping interface) 2806 shown in FIG. 28C. The second clipping interface is a clipping interface of the first clipped picture obtained after the mobile phone adjusts, in response to the clipping operation by the user on the first picture on the first clipping interface, the reserved portion of the first picture that is surrounded by the first adjustment control.

Then, the user may perform a clipping operation on the first picture in the clipping interface 2806 again according to a requirement of the user, and adjust the reserved portion of the first picture that is surrounded by the first adjustment control, to clip the first picture again. The reserved portion surrounded by the first adjustment control this time is determined as a second clipping result, that is, a third clipped picture.

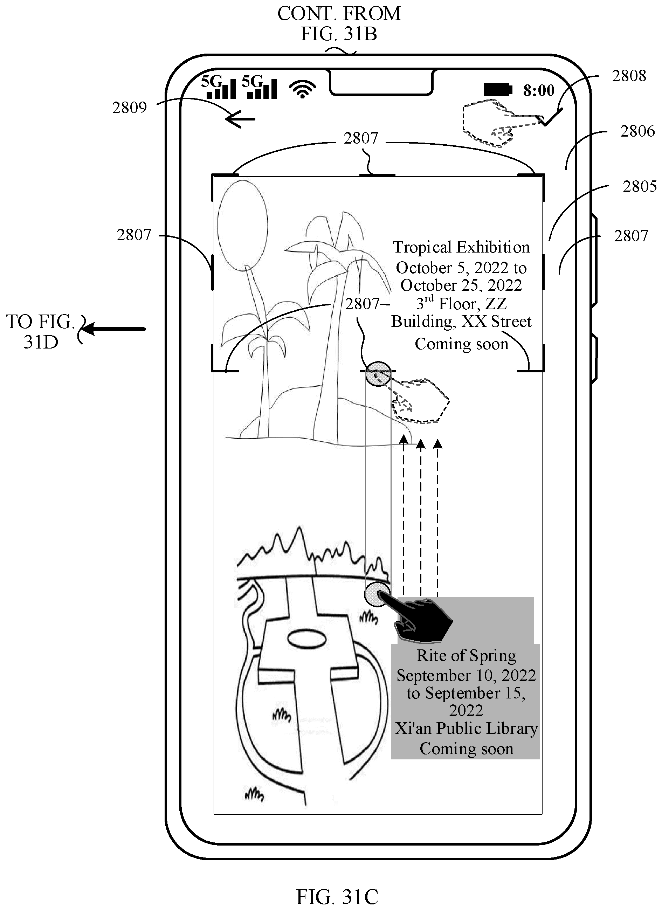

For example, the clipping operation includes only an adjustment operation on the first adjustment control. The user may then perform an adjustment operation on the first adjustment control 2807 according to a new requirement. For example, with reference to FIG. 31C, the adjustment operation may be a third upward swiping operation performed on the first adjustment control in the middle of the lower portion of the first picture 2805. With reference to FIG. 31C, in response to the third upward swiping operation performed by the user, the mobile phone may gradually adjust, based on the first picture that is subjected to partial clipping shown in FIG. 31B, the display manner of some of a clippable portion (a portion of which a display manner is not the clipped display manner) of the first picture from top to bottom to the clipped display manner. In this way, based on the first picture that is subjected to partial clipping, after the adjustment operation on the first adjustment control at least once, the user may continue to clip the interference content of the first picture, to obtain a third clipped picture better satisfying the requirement of the user.

After determining that the adjustment operation on the first adjustment control is completed, as shown in FIG. 31C, the user may perform a triggering operation on the first clipping confirmation option 2808 in the clipping interface 2806. In response to the triggering operation, the schedule management application of the mobile phone may parse the third clipped picture as the new first picture, to obtain the new first schedule information.

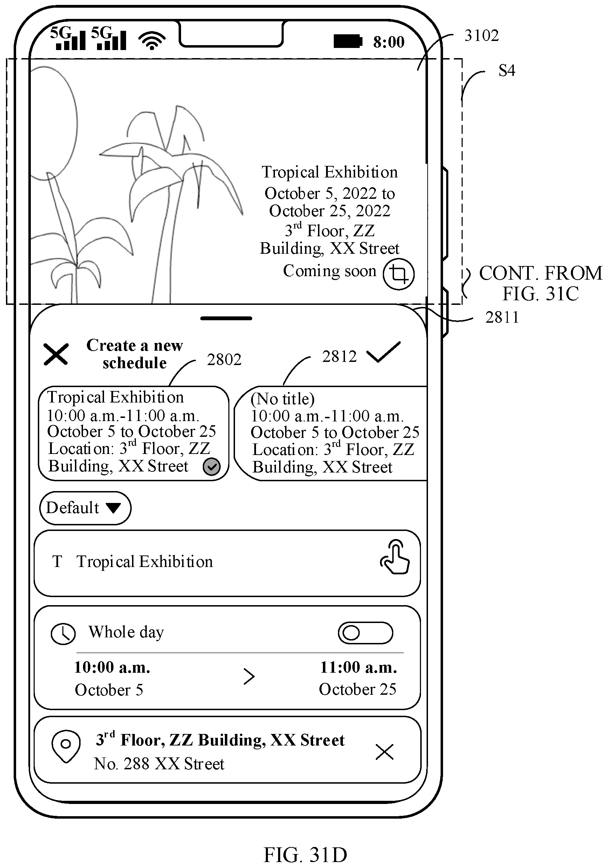

Then, the schedule management application of the mobile phone may generate at least one to-be-selected schedule based on the new first schedule information and update the schedule option in the schedule preview window (which may be considered as updating the schedule option in the schedule preview window in the first updating interface). Thus, the user can select a to-be-selected schedule satisfying the requirement of the user. That is, after the first picture is updated by using the third clipped picture, S703 to S705 in the flow for creating a schedule for a picture are performed again. For example, based on the example shown in FIG. 31C, after generating at least one to-be-selected schedule based on new first schedule information, the schedule management application of the mobile phone may display a third updating interface shown in FIG. 31D. The updated first picture displayed in the recognized content area S4 in the third updating interface is a third clipped picture 3102.

If the user further is required to perform clipping again after clipping for the second time, the implementation is the same.

Certainly, the above two implementations are merely examples. In practice, the implementation of the second clipping may alternatively be any other possible implementations.

It should be noted that in the above embodiments of FIG. 28A to FIG. 31D, the second possible implementation, the third possible implementation, and the fourth possible implementation of S701-S704 are used as an example. In the three implementations, the second interface is displayed in a full-screen manner in the display of the mobile phone. Thus, the clipping interface (the first clipping interface) is also displayed in a full-screen manner in the display of the mobile phone. However, in a first possible implementation of S701-S704, the schedule preview interface is displayed in a full-screen manner in the first floating window. Thus, the clipping interface appearing in the implementation is also displayed in a full-screen manner in the first floating window.

In addition, the above particular implementation of clipping (including first clipping and second clipping) on the first picture is merely an example. In practice, a clipping manner may alternatively be any other feasible manners. This is not specifically limited in the present disclosure.

Based on the above technical solution, the user can successfully clip the first picture. Further, based on the technical solution, the schedule management application can obtain more accurate first schedule information, to generate a to-be-selected schedule better satisfying a requirement of the user for the user to select. Thus, the schedule management application of the mobile phone can create a schedule better satisfying the requirement of the user.

The schedule information of the to-do item included in the first picture is incomplete relative to the schedule information required when the schedule management application creates a schedule. For example, the schedule information of the to-do item included in the first picture includes only a value of schedule sub-information such as a title, a time period, and a location. Schedule sub-information such as a reminder time, an account, a repetition policy, a description, and a time zone is further required for the schedule information required when the schedule management application creates a schedule. In this way, even if the schedule management application can accurately parse the first picture, the first schedule information obtained through parsing has missing information (which may be specifically some missing schedule sub-information). To resolve the problem, the schedule management application generally sets a value of the schedule sub-information that does not exist in the first picture as a default value. For example, a default value of a title may be null. A default value of a time period may be from an hour closest to a current moment of a current day to an hour after the hour (such as 8:00 a.m. to 9:00 a.m.). A default value of a location may be null. A default value of a reminder time may be "ten minutes earlier", that is, reminder information (for example, reminder information such as a text, a sound, and a light effect) is outputted ten minutes before a start moment of a time period of the schedule. A default value of an account may be "my calendar", and "my calendar" may refer to an account for logging in to a schedule management application. A default value of the repetition policy may be "do not repeat", that is, a schedule to which the repetition policy belongs only occurs within a time period of the schedule. A default value of a time zone may be China, that is, all related time of the schedule is subject to a time zone (greenwich mean time (GMT+8:00)) of China.

Parsing of the first picture by the schedule management application obtains only a value of schedule sub-information that is strongly related to the schedule, and does not include some values that are related to the schedule and that are not the schedule sub-information. Thus, to enable the user to accurately learn all related content of a schedule, in an embodiment of the present disclosure, a default value of a description may be a first picture. That is, a description setting item may include the first picture by default.

When the user creates the schedule, a value of schedule sub-information that does not exist in the first picture may be required to be set as a value other than a default value according to a requirement of the user. To say the least, even if the user is not required to set the value of the schedule sub-information that does not exist in the first picture, the user may be required to amend the value of the schedule sub-information that does not exist in the first picture according to a requirement of the user.

Thus, in an embodiment of the present disclosure, in addition to displaying at least one schedule option, a cancellation option, and a confirmation option in the schedule preview window displayed by the mobile phone, the schedule preview window may further display at least one schedule setting item of a to-be-selected schedule to which a currently selected schedule option (such as a schedule option on which the user implements the selection operation) belongs. Each schedule setting item corresponds to one piece of schedule sub-information. If no selected schedule option exists in the schedule preview window, the schedule preview window may display no schedule setting item, or may display a schedule setting item of which a specific value is a default value.

The schedule setting item displayed in the schedule preview window may include a value of the schedule sub-information corresponding to the schedule setting item. If the schedule sub-information included in the schedule setting item is schedule sub-information included in the first schedule information, a value of the schedule sub-information included in the schedule setting item is a value of the schedule sub-information corresponding to the first schedule information. If the schedule sub-information included in the schedule setting item is not the schedule sub-information included in the first schedule information, a value of the schedule sub-information included in the schedule setting item is a default value. When the user is required to adjust (add or amend) a value of schedule sub-information in a schedule setting item, the user may adjust the value of the schedule sub-information in the schedule setting item through any feasible editing operations. In an embodiment of the present disclosure, in the schedule preview window (or the sub-schedule preview window), an area displaying the schedule option may be a selection area, and an area displaying a plurality of schedule setting items of a to-be-selected schedule to which a currently selected schedule option (selected by default or selected by a user through a triggering operation) belongs may be referred to as an editing area.

In an embodiment of the present disclosure, when the schedule management application creates a schedule, a schedule setting item that is required to be set may include: a title setting item, a location setting item, a time setting item, a reminder setting item, an account setting item, a repetition setting item, a priority setting item, a description setting item, a time zone setting item, a desktop countdown day card setting item, etc. Functions of the title setting item, the location setting item, the time setting item, the reminder setting item, the account setting item, the repetition setting item, the description setting item, and the time zone setting item can be obtained with reference to related expressions for FIG. 1A, FIG. 1B, FIG. 1C, FIG. 1D, FIG. 2A, FIG. 2B, and FIG. 2C in the above embodiments.

The priority setting item is used for the user to set a reminder priority of a schedule. The mobile phone may set reminders in different forms for schedules having different priorities. For example, a mobile phone uses a particular ringtone for schedule reminding. The higher a priority of a schedule, the louder a sound when the mobile phone plays the ringtone.

The desktop countdown day card setting item is used for enabling a desktop countdown day card function or disabling a desktop countdown day card function. When the desktop countdown day card function is enabled, a countdown day card of a schedule to which the desktop countdown day card setting item belongs may be displayed on the desktop of the mobile phone, and a number of days from a current day to a day in which the schedule occurs may be displayed in the schedule countdown day card.

In practice, not all of the schedule sub-information corresponding to the schedule setting items are extremely likely to be viewed and/or adjusted by the user. Thus, in an embodiment of the present disclosure, when the schedule preview window is initially displayed, the editing area may include only a schedule setting item of all the schedule setting items that is extremely likely to be viewed/adjusted by the user, such as: a title setting item, a time setting item, a location setting item, and a reminder setting item. The remaining schedule setting items are hidden. When required to view or adjust the hidden setting items, the user may display the remaining schedule setting items in the editing area by a particular expansion control and then perform an operation.

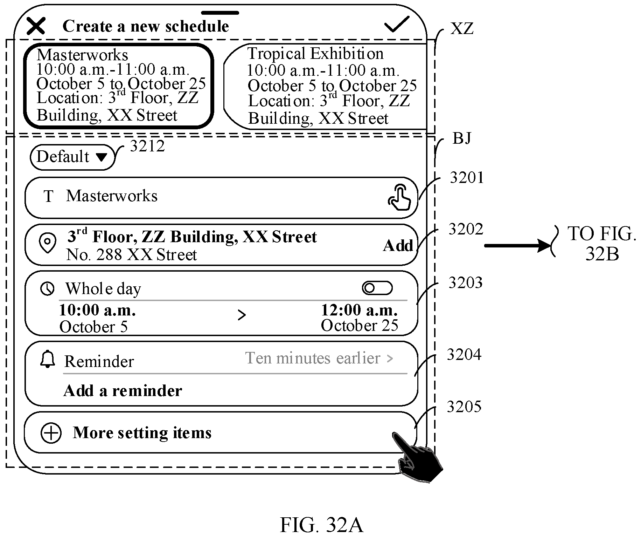

For example, in combination with the example shown in FIG. 17D, when the schedule preview window is initially displayed, if the schedule preview window is fully displayed in a display, a display effect may be shown in FIG. 32A. The selection area XZ may include two schedule options. The editing area BJ may include a title setting item 3201, a location setting item 3202, a time setting item 3203, and a reminder setting item 3204. That is, the schedule preview window displays at least one schedule setting item corresponding to the selected first schedule option. The schedule setting item includes a title setting item, a location setting item, a time setting item, and a reminder setting item. Moreover, it can be seen in combination with FIG. 32A that the title setting item includes the first title in the first schedule option, the location setting item includes the first location in the first schedule option, and the time setting item includes the first time period in the first schedule option.

In addition, the editing area BJ may further include an expansion control 3205. For example, reminder information similar to words such as "more setting items" may be displayed in the expansion control.

In a schedule preview window shown in FIG. 32A, the user may adjust the title in the title setting item 3201, the location in the location setting item 3202, the time period in the time setting item 3203, and the reminder time in the reminder setting item 3204 through a corresponding editing operation, to adjust the schedule sub-information of a corresponding schedule, such as the title, the location, the time period, and the reminder time.

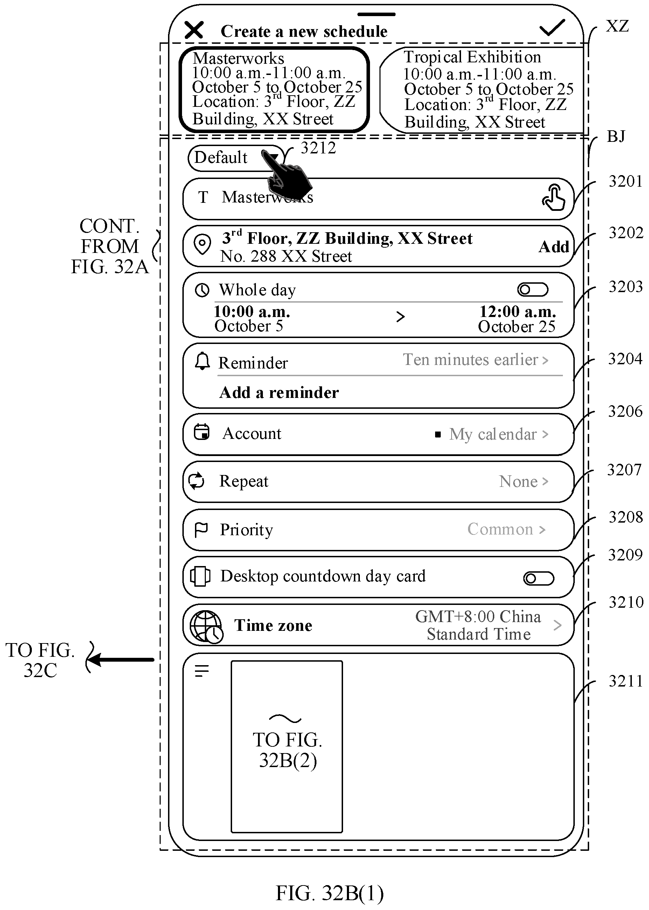

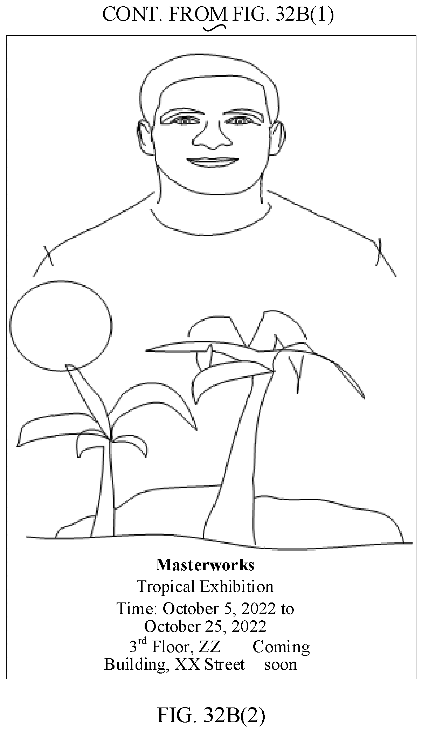

When the user is required to view or adjust other schedule sub-information, with reference to FIG. 32A, the user may perform a triggering operation (such as a click-on/tap-on operation) on an expansion control 3205. In response to the triggering operation, shown in FIG. 32B(1) and FIG. 32B(2), the schedule management unit of the mobile phone may display, in a tiling manner, the remaining hidden schedule setting items in the schedule preview window. In this case, in the editing area BJ, an account setting item 3206, a repetition setting item 3207, a priority setting item 3208, a desktop countdown day card setting item 3209, a time zone setting item 3210, and a description setting item 3211 which are hidden and not displayed previously.

In the schedule preview window shown in FIG. 32B(1) and FIG. 32B(2), the user may adjust, through a corresponding editing operation, the account in the account setting item 3206, the repetition policy in the repetition setting item 3207, the priority in the priority setting item 3208, the enable control in the desktop countdown day card setting item 3209, the time zone in the time zone setting item 3210, and the description in the description setting item 3211, to adjust the schedule sub-information of the schedule, such as the account, the repetition policy, the priority, whether the desktop countdown day card function is enabled, and the time zone.

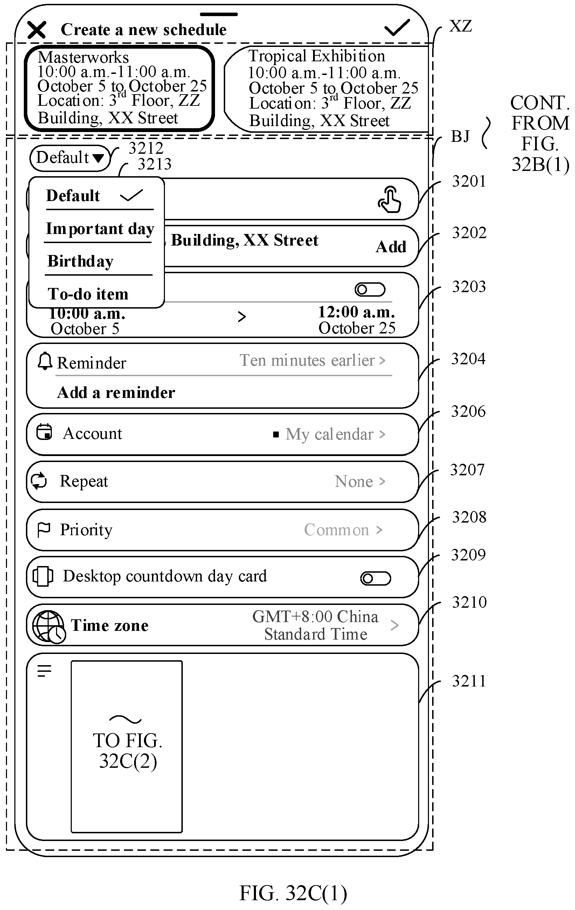

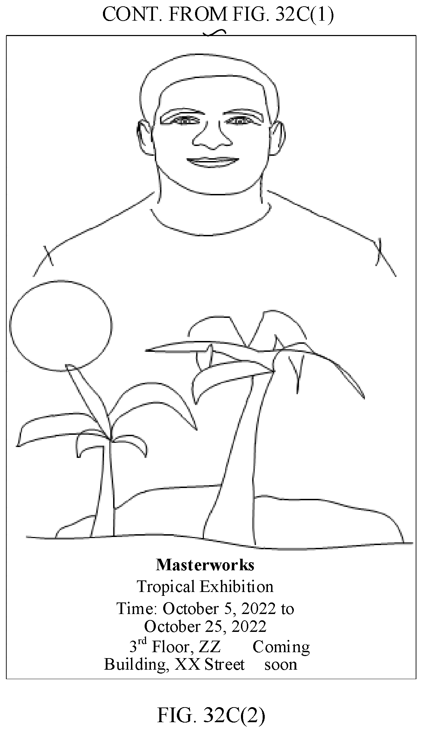

A display state of the schedule preview window shown in FIG. 32A may be referred to as a simplified state. A display state of the schedule preview window shown in FIG. 32B(1) and FIG. 32B(2) may be referred to as a full state. Presentation of the simplified state and presentation of the full state in FIG. 32A, FIG. 32B(1), FIG. 32B(2), FIG. 32C(1), and FIG. 32C(2) are merely examples. In practice, a specific representation form of the simplified state and a specific representation form of the full state may be any possible forms. This is not specifically limited in the present disclosure.

In some embodiments, there are different categories of schedules that the user is required to create, such as a birthday schedule for a birthday, an important day schedule for an important day (such as an important conference day), a to-do item schedule for a to-do event that is not urgent but is required to be processed by spending time, and other categories of default schedules. Different types of schedules may have different importance for a user. Correspondingly, schedule sub-information required when different types of schedules are created may be different. Based on this, to bring richer schedule creation experience to the user, when creating a schedule, the schedule management application may provide a category setting item such that the user can set a schedule category. For the method for creating a schedule for a picture provided in the present disclosure, shown in FIG. 32A or FIG. 32B(1) and FIG. 32B(2), the editing interface BJ in the schedule management window displayed by the schedule management application of the mobile phone may further include a category setting item 3212. A category in the category setting item 3212 may be obtained by the schedule management application based on a parsing result (which may be specifically a word segmentation result or a font recognition result) of the first picture. For example, if the parsing result has a word "birthday", the schedule category is determined as a "birthday". For another example, if the parsing result has words such as "important XX", the schedule category can be determined as an "important day". For yet another example, if the parsing result has words such as an "electricity fee", a "water fee", a "parking fee", and a "repayment", the schedule category can be determined as a "to-do item". For still another example, if the parsing result has no words corresponding to categories such as a birthday, an important day, and a to-do item, the schedule category can be determined as a "default".

If the user deems that the schedule category automatically recognized by the schedule management application is incorrect, the user may switch the schedule category through a switch operation on the category setting item.

For example, with a schedule preview window in a full state shown in FIG. 32B(1) and FIG. 32B(2), as an example, when the user is required to switch a daily category, the user may perform a triggering operation (such as a click-on/tap-on operation) on the category setting item 3212. In response to the triggering operation, the schedule management application of the mobile phone may display a category pop-up window 3213 shown in FIG. 32C(1) and FIG. 32C(2). Various categories of options may exist in the category pop-up window 3213, such as a "default", an "important day", a "birthday", and a "to-do item". A corresponding selected identifier, such as "√" next to the "default", may exist near the schedule category currently confirmed by the schedule management application.

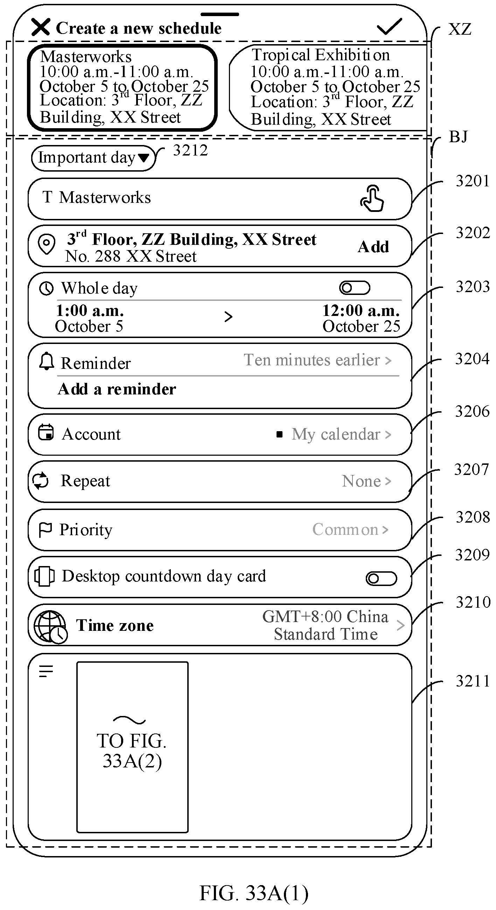

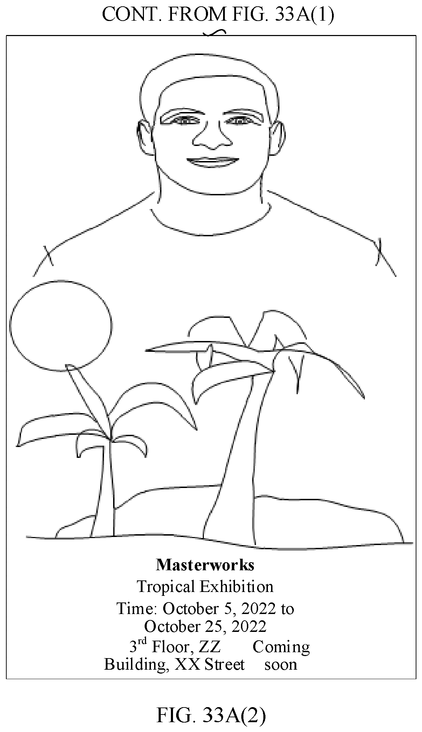

In a case that the user is required to switch the schedule category to an important day, the user may perform a triggering operation (such as a click-on/tap-on operation) on the option "important day" of the important day category in the category pop-up window 3213. In response to the triggering operation, as shown in FIG. 33A(1) and FIG. 33A(2), the schedule management application of the mobile phone may change the content included in category setting item 4 in the schedule preview window into the "important day".

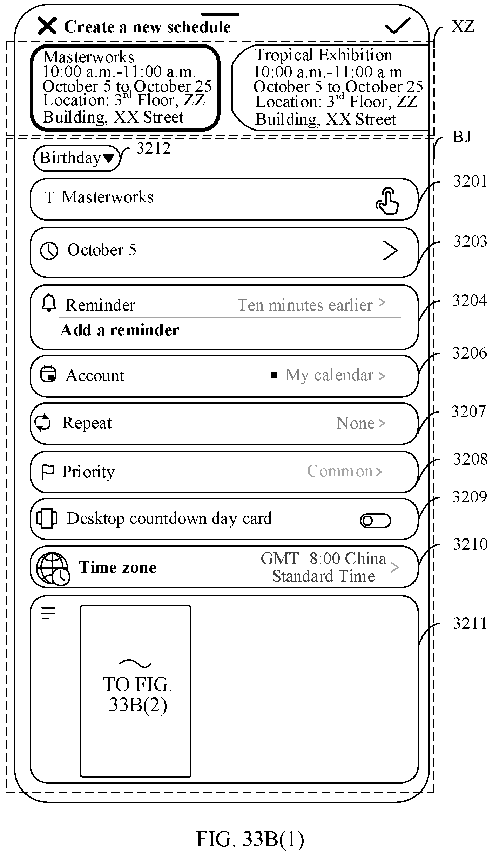

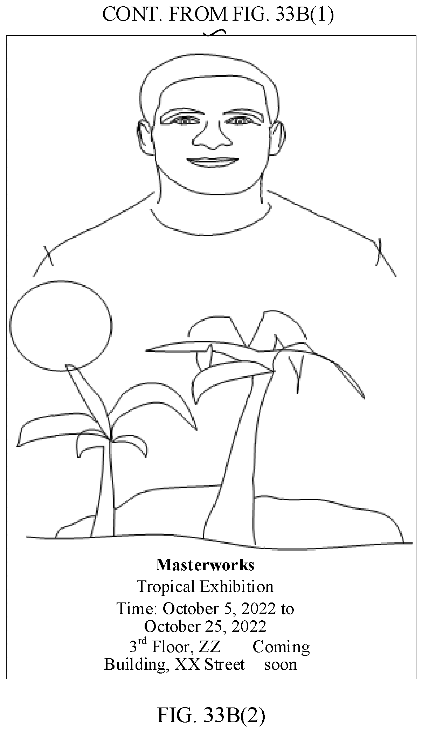

When the user is required to switch the schedule category to a birthday, the user may perform a triggering operation (such as a click-on/tap-on operation) on the option "birthday" of the birthday category in the category pop-up window 3213. In response to the triggering operation, as shown in FIG. 33B(1) and FIG. 33B(2), the schedule management application of the mobile phone may change the content included in the category setting item 4 in the schedule preview window to the "birthday". Moreover, a form of the time setting item 3203 is changed, and a time period in the time setting item 3203 is displayed as a day, such as October 5. In addition, the location setting item does not exist any more.

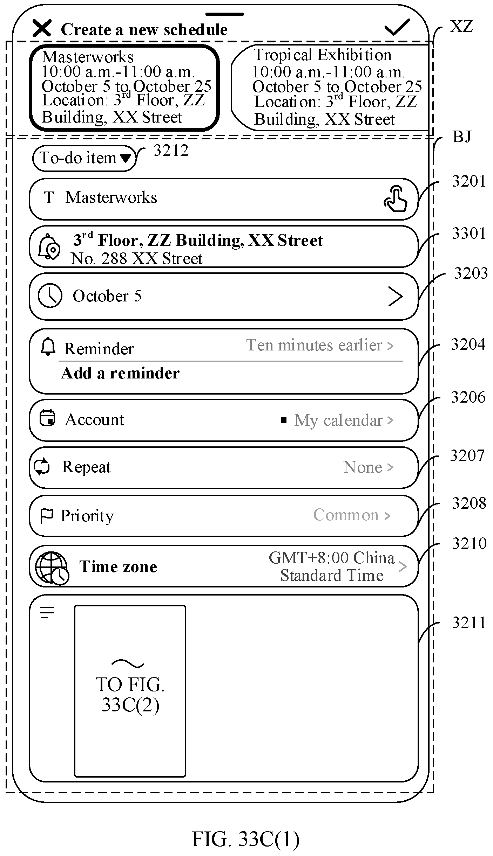

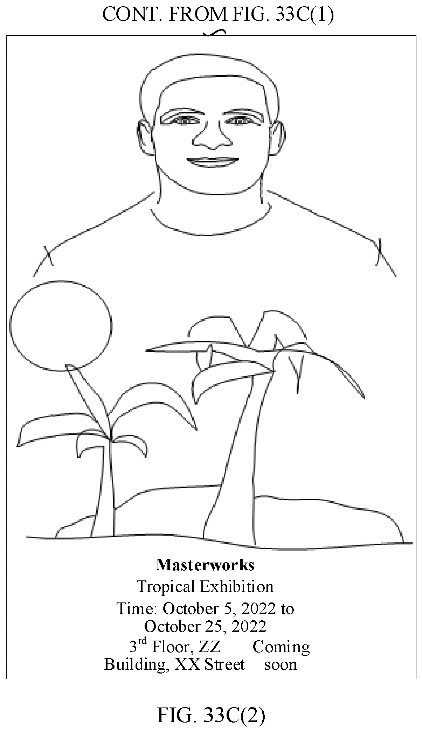

In a case that the user is required to switch the schedule category to a to-do item, the user may perform a triggering operation (such as a click-on/tap-on operation) on the option-"to-do item" of the to-do category in the category pop-up window 3213. In response to the triggering operation by the user on the "to-do item", as shown in FIG. 33C(1) and FIG. 33C(2), the schedule management application of the mobile phone may change the content included in category setting item 4 in the schedule preview window to a "to-do item". Moreover, a form of the time setting item 3203 is changed, and a time period in the time setting item 3203 is displayed as a day, such as October 5. In addition, the location setting item does not exist any more, and a new location reminder setting item 3301 is added. The location reminder setting item 3301 is used for the user to set a reminder location of the schedule, that is, set an area near which the user is reminded of the schedule. An editing manner of the location reminder setting item may be similar to or the same as the location setting item. A default value of a reminder location in the location reminder setting item may be null. When the first schedule information obtained by parsing by the schedule management application from the first picture has a location, a value of a reminder location in the location reminder setting item is a value of a location in the first schedule information, such as "3rd Floor, ZZ Building, XX Street".

In addition, in practice, default values of a same schedule setting item corresponding to different schedule categories may be the same or may be different. This is specifically determined according to an actual requirement and not specifically limited in the present disclosure.

In the above example, the triggering operation by the user on the category setting item and the triggering operation by the user on the category option in the category pop-up window are switch operations performed by the user on the category setting item in the schedule preview window. The schedule preview window shown in FIG. 32A, FIG. 32B(1), FIG. 32B(2), FIG. 32C(1), FIG. 32C(2), FIG. 33A(1), FIG. 33A(2), FIG. 33B(1), FIG. 33B(2), FIG. 33C(1), and FIG. 33C(2) is merely an example. In practice, a design manner and a presentation manner of the schedule preview window may be any other possible manners. This is not specifically limited in the present disclosure. It should be noted that the display states of the schedule preview window shown in FIG. 32A, FIG. 32B(1), FIG. 32B(2), FIG. 32C(1), FIG. 32C(2), FIG. 33A(1), FIG. 33A(2), FIG. 33B(1), FIG. 33B(2), FIG. 33C(1), and FIG. 33C(2) are theoretical examples made in a case that a size of a display area of a display of a mobile phone is not considered. In practice, since the display area of the display of the mobile phone is limited, the size of the editing area in the schedule preview window is limited. Thus, regardless of the simplified state or the full state, in practice, a number of schedule setting items that can be displayed in the editing area of the schedule preview window is determined according to an actual situation.

In a case that the editing area in the schedule preview window fails to display all the schedule setting items that can be displayed in the current display state of the schedule preview window, the user may perform the upward swiping operation in the schedule preview window. Thus, displayed content in the schedule preview window entirely moves up, and content that is not displayed in the editing area is displayed.

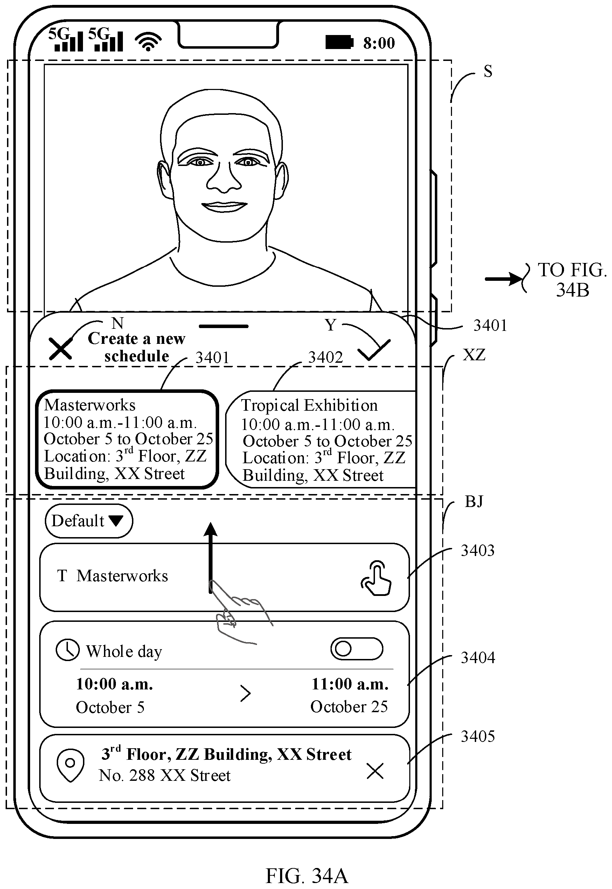

For example, in combination with the example shown in FIG. 17D, for example, the display state of the schedule preview window is the simplified state. With reference to FIG. 34A, the schedule preview window 3401 displayed on the second interface of the mobile phone may include a cancellation option N, a confirmation option Y, a selection area XZ, and an editing area BJ. The selection area XZ may include a schedule option 3402 and a schedule option 3403. The schedule option 3402 is selected by default or by the user through a selection operation. A display manner of the schedule option 3402 may be a preset display manner. A display manner of the schedule option 3403 may be a default display manner. At least one schedule setting item of a to-be-selected schedule to which the schedule option 3402 belongs is displayed in the editing area BJ, and may specifically include a title setting item 3403, a time setting item 3404, and a location setting item 3405. The reminder setting item is hidden under the location setting item 3405.

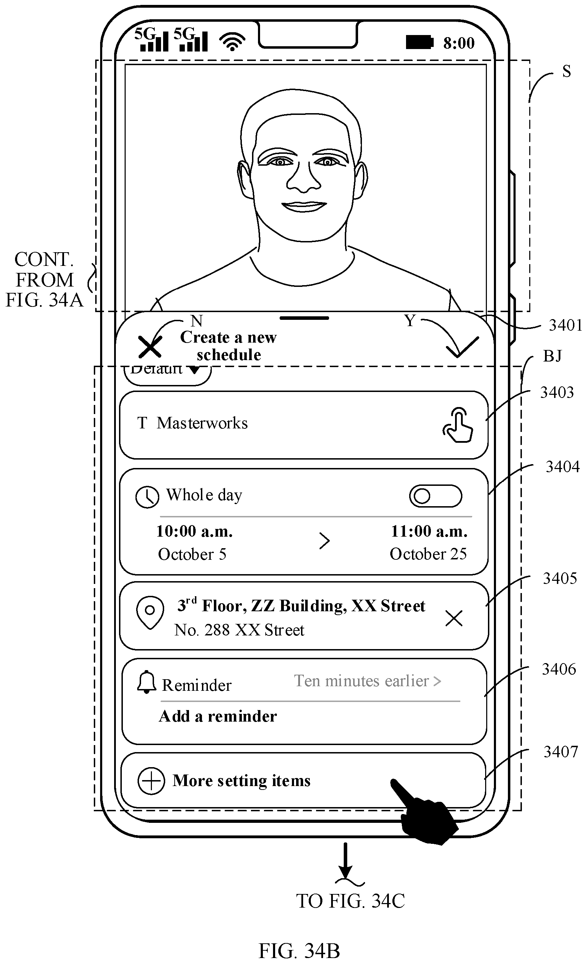

When the user is required to view the hidden content in the editing area, with reference to FIG. 34A, the user may perform an upward swiping operation in a selection area in the schedule preview window 3401. In response to the upward swiping operation, the schedule management application of the mobile phone may entirely translate all content displayed in the schedule preview window upwards. Thus, as shown in FIG. 34B, the hidden reminder setting item 3406 and expansion control 3407 (that is, the first schedule setting item) are displayed. In this case, all display areas other than the cancellation option N and the confirmation option Y in the schedule preview window are occupied by the editing area BJ.

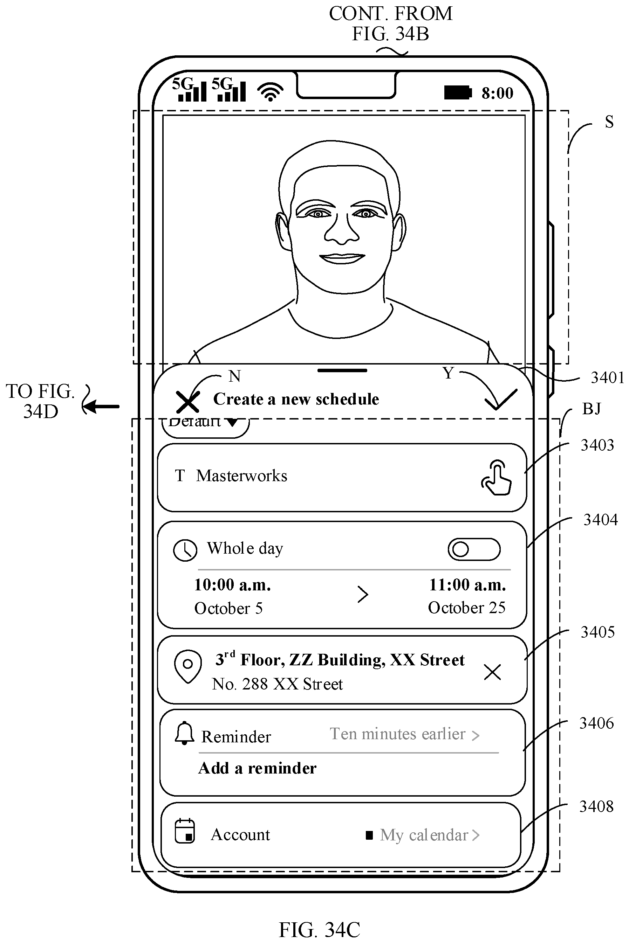

If the user is required to adjust more schedule setting items, as shown in FIG. 34B, the user may perform a triggering operation on an expansion control 3407 shown in FIG. 34B. In response to the triggering operation by the user on the expansion control 3407, the schedule management application of the mobile phone may display, in a tiling manner, the remaining schedule setting items that are not displayed under the reminder setting item 3406, and do not display the expansion control 3407 any more. However, since a display area of the schedule preview window is limited, with reference to FIG. 34C, only the account setting item 3408 of a plurality of previously hidden schedule setting items is displayed in the editing area BJ of the schedule preview window 3401, and the remaining schedule setting items are hidden.

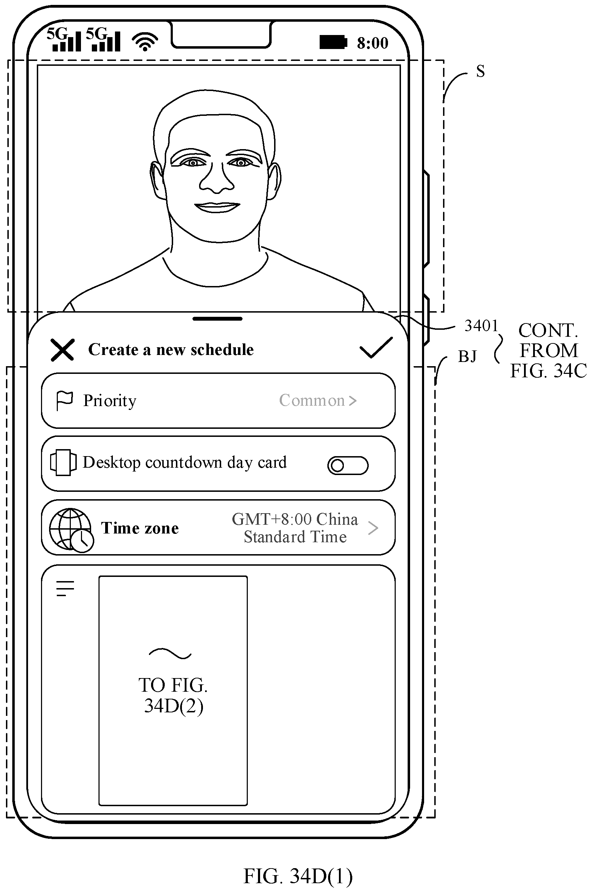

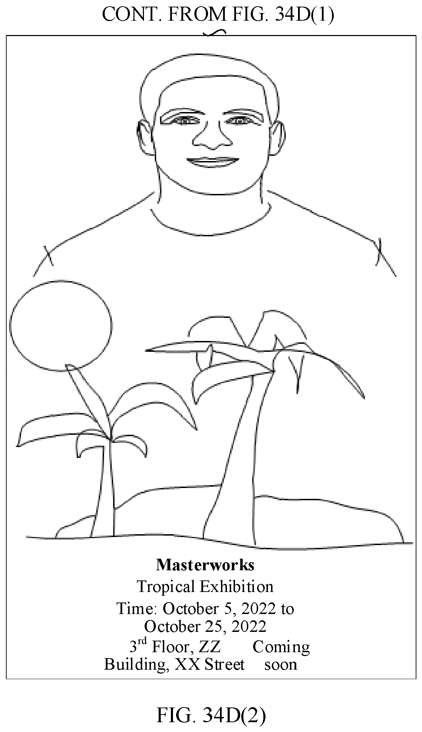

Then, when the user has a requirement, as shown in FIG. 34C, the user may continue to perform an upward swiping operation in the schedule preview window. Further, as shown in FIG. 34D(1) and FIG. 34D(2), the previously hidden schedule setting item is displayed.

In some embodiments, some schedule sub-information of the first schedule information obtained by the schedule management application through parsing may not well satisfy a requirement of the user. In this case, to conveniently edit such schedule sub-information by the user, at least one schedule option included in the schedule preview window displayed by the schedule management application has the second schedule option, and a value of the schedule sub-information in some schedule setting items of the second schedule option may be null. For example, a title included in the second schedule option is null. Or, a value of a location included in the second schedule option is null. Or, a value of a time period included in the second schedule option is null.

In this case, for example, a title included in the second schedule option is null. After the second schedule option is selected, at least one schedule setting item corresponding to the second schedule option may be included in the schedule preview window displayed by the schedule management application of the mobile phone. A value of a title in a title setting item in the at least one schedule setting item is null. In this way, the user may view and edit content of each of the at least one schedule setting item, and user experience is improved.

It should be noted that in some embodiments, if no schedule option selected by default or by the user (through the selection operation) exists in the schedule preview window, with reference to FIG. 24A, at least one schedule setting item may be displayed in an editing area BJ in the schedule preview window, and values of schedule sub-information in all of the at least one schedule setting item are default values. For example, if content in the title setting item is null, a light-colored reminder similar to a word "title" is specifically displayed. A value of the time period in the time setting item is specifically "8:00 a.m. to 9:00 a.m. on August 1". Or, the editing area in the schedule preview window may be null, that is, discloses no content. Or, as shown in FIG. 24C, a schedule editing item of a selected schedule option closest to a schedule option in a selection area may be displayed in the editing area of the schedule preview window.

Certainly, in an embodiment of the present disclosure, the user may perform a downward swiping operation in the schedule preview window to entirely move down the content in the schedule preview window except for the confirmation option and the cancellation option, so as to switch the content displayed in the schedule preview window. For example, hidden schedule setting items are displayed, or displayed schedule setting items are hidden again.

In the schedule preview interface shown in FIG. 34A to FIG. 34C, the user can adjust the value of the schedule sub-information in the displayed schedule setting item through a corresponding editing operation. The implementation of the specific editing operation is not specifically limited in the present disclosure. The schedule setting item on which the user specifically performs the editing operation may be a target schedule setting item.

It should be noted that the schedule preview window mentioned in the technical solutions corresponding to FIG. 32A to FIG. 34D(2) may be a single schedule preview window displayed by the schedule management application of the mobile phone in a case that the first picture has only schedule information of one to-do item, or a sub-schedule preview window (such as a first sub-preview window) displayed by the schedule management application of the mobile phone in a case that the first picture has only schedule information of a plurality of to-do items.

Based on the above technical solution, the user can adjust, by editing the schedule setting item displayed in the schedule preview window, the schedule information of the to-be-selected schedule to which the schedule option selected by the user belongs. Thus, a schedule finally created by a mobile phone can better satisfy a requirement of the user, and user experience is improved. It should be noted that the above technical solution can alternatively be applied to a subsequent flow for creating a schedule for a text, and is not repeated subsequently in the present disclosure.

In some embodiments, after the schedule management application of the mobile phone parses the first picture, at the initial time when the schedule preview window is displayed through the second interface or the first floating window, a height h of the schedule preview window in an up-down direction may be a preset proportion of a height H of the display area of the display of the mobile phone or the display area of the first floating window in the up-down direction, such as 70%. To enable the user to conveniently adjust, when the user views or edits a to-be-selected schedule, the size of the recognized content area and the size of the schedule preview window in the schedule preview interface according to a requirement of the user, a scale control can exist on the schedule preview window. The user can change the size of the recognized content area and the size of the schedule preview window through an adjustment operation on the scale control. In an embodiment of the present disclosure, an up-down direction refers to an up-down direction of the display of the mobile phone.

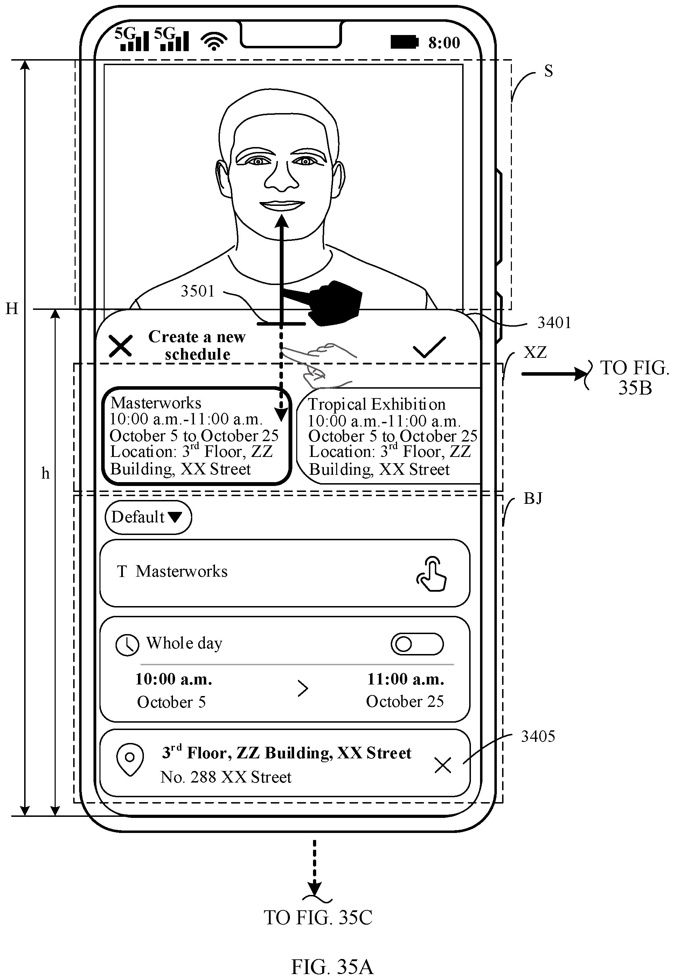

For example, a schedule preview window is displayed through the second interface, and an example of the second interface shown in FIG. 34A is combined. In some scenarios, with reference to FIG. 35A, when the user is required to enlarge the schedule preview window 3401 and reduce the recognized content area S, the user may perform an upward dragging operation on the scale control 3501. The upward dragging operation may be to perform a short-press operation or a long-press operation on the scale control 3501 and then swipe upwards such that the scale control 3501 can move with a hand.

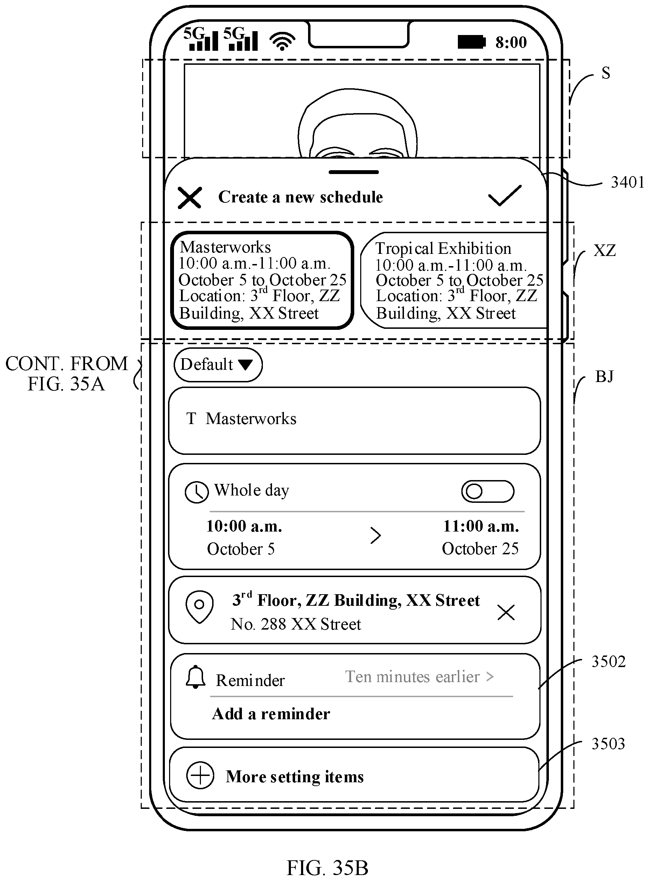

In response to the upward dragging operation, the schedule management application of the mobile phone may increase the height of the schedule preview window 3401, to increase the size of the schedule preview window 3401. When the height of the schedule preview window 3401 is increased, originally displayed content is entirely moved upwards. Thus, content hidden in the editing area of the previous schedule preview window 3401 is displayed. As shown in FIG. 35B, after the height of the schedule preview window 4201 is increased, the reminder setting item 3502 and the expansion control 3503 which are originally hidden are displayed at a lowest portion of the editing area. Moreover, some of content displayed in the recognized content area S is covered with the schedule preview window 3401 having an increased height.

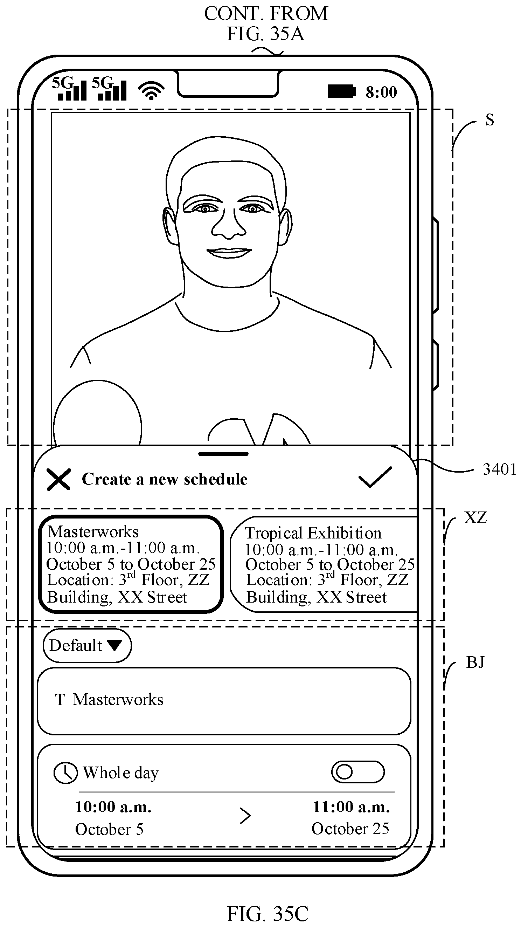

In some other scenarios, with reference to FIG. 35A, when the user is required to reduce the schedule preview window 3401 and enlarge the recognized content area S, the user may perform a downward dragging operation on the scale control 3501. The downward dragging operation may be to perform a short-press operation or a long-press operation on the scale control 3501 and then swipe downwards such that the scale control 3501 can be moved with a hand. In response to the downward dragging operation, the schedule management application of the mobile phone may reduce the height of the schedule preview window 3401, to reduce the size of the schedule preview window 3401. When the height of the schedule preview window 3401 is reduced, originally displayed content is entirely moved downwards. Thus, content at the lowest portion of the editing area of the previous schedule preview window 3401 is hidden. As shown in FIG. 35C, after the height of the schedule preview window 3401 is reduced, the originally displayed location setting item 3405 is hidden. Moreover, since the height of the schedule preview window 3401 is reduced, more content of the content displayed in the recognized content area S is exposed.

The downward dragging operation and the upward dragging operation which are performed by the user on the scale control are adjustment operations performed by the user on the scale control.

Certainly, the above example is described, in which some content is displayed in the recognized content area (that is, the second possible scenario shown in FIG. 11B) after the first picture is displayed in a full-screen manner. In a case that another display manner (such as a first possible scenario shown in FIG. 11A(1) and FIG. 11A(2)) is used for the recognized content area, a change of the first picture in the recognized content area may alternatively be performed in another manner. For example, if the recognized content area displays all content of the first picture, as the recognized content area is reduced, the size of the first picture may be reduced according to a same reduction scale. For another example, if the recognized content area entirely presents all content of the first picture, as the recognized content area is increased, the size of the first picture may be enlarged according to a same increase scale.

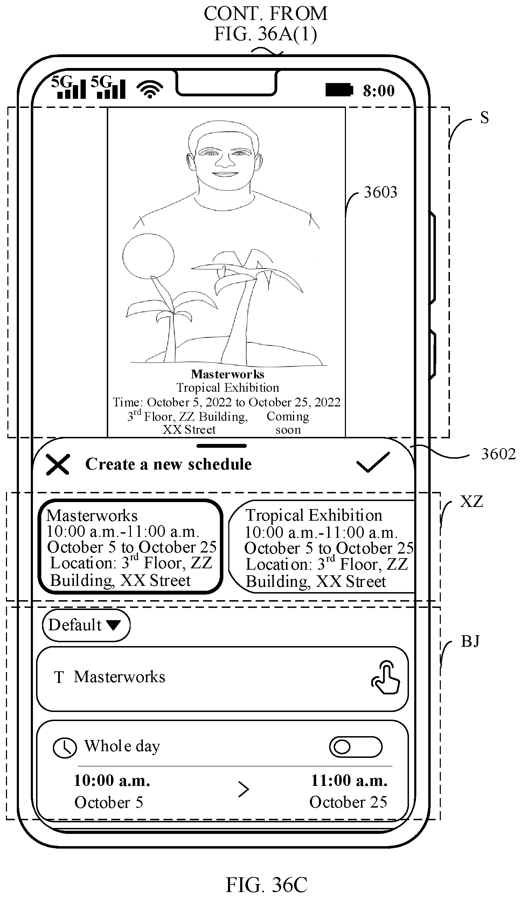

For example, with reference to FIG. 36A(1) and FIG. 36A(2), if the user is required to increase a height of the schedule preview window 3602, the user may perform an upward dragging operation on the scale control 3601. In response to the upward dragging operation, with reference to FIG. 36B(1) and FIG. 36B(2), while increasing a height of the schedule preview window 3602 and reducing a height of the recognized content area S, the schedule management application of the mobile phone may correspondingly reduce the first picture 3603 in the recognized content area S. Similarly, with reference to FIG. 36A(1) and FIG. 36A(2), if the user is required to reduce a height of the schedule preview window 3602, the user may perform a downward dragging operation on the scale control 3601. In response to the downward dragging operation, with reference to FIG. 36C, while reducing a height of the schedule preview window 3602 and increasing a height of the recognized content area S, the schedule management application of the mobile phone may correspondingly enlarge the first picture 3603 in the recognized content area S.

In some embodiments, to enable the user to conveniently adjust, based on the text content included in the first picture, the schedule sub-information included in the schedule setting item in the schedule preview window. In a case of the schedule setting item in which content can be inputted and deleted, the schedule management application of the mobile phone may provide two possible implementations of the editing operation. Thus, the user can adjust the schedule sub-information in the schedule setting item. For example, the schedule setting item in which content can be inputted and deleted may be a title setting item in at least one title setting item in the schedule preview window. These two possible implementations are illustrated below with the title setting item as an example.

In a first possible implementation, the editing operation on the title setting item may be to input or delete content in the title setting item by using an input method keyboard.

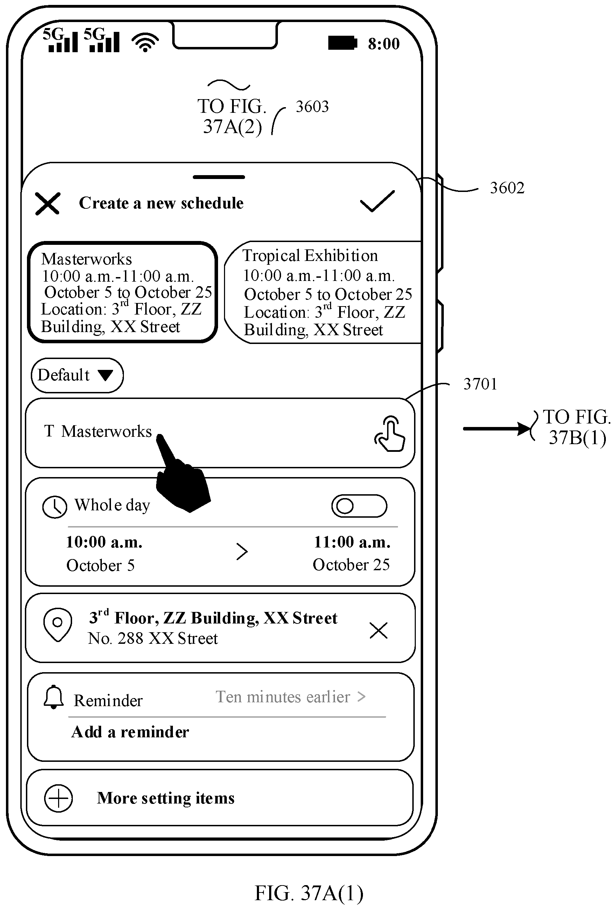

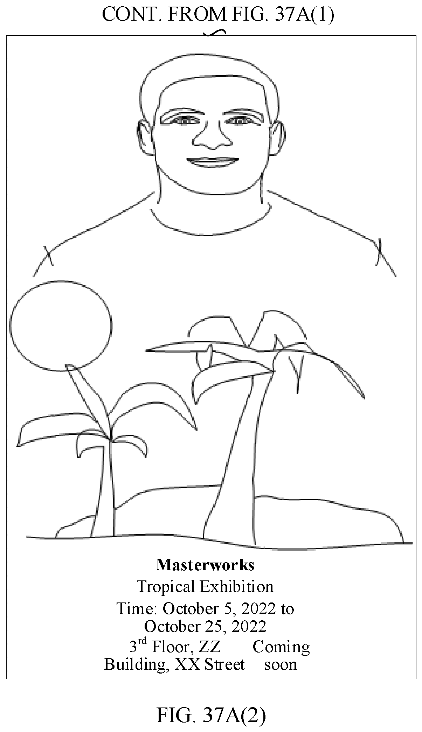

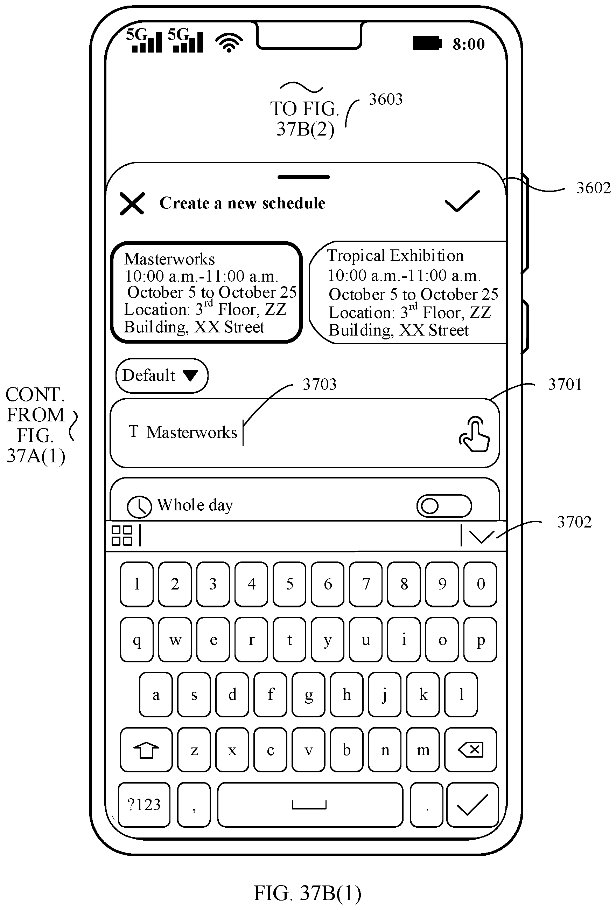

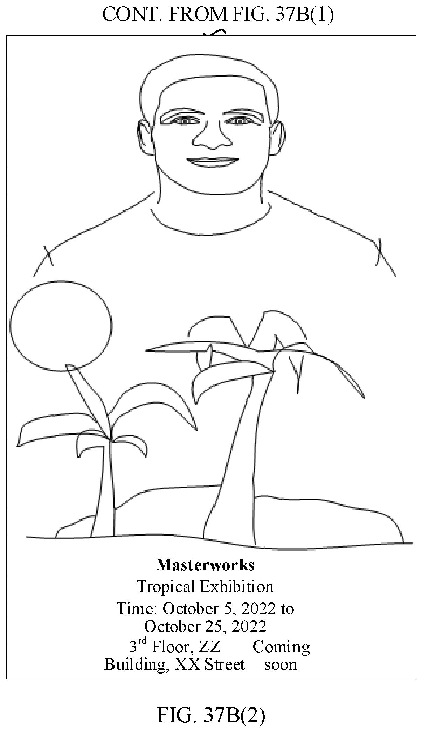

For example, with the second interface shown in FIG. 36B(1) and FIG. 36B(2) as an example, with reference to FIG. 37A(1) and FIG. 37A(2), if the user is required to adjust a title in the title setting item 3701, the user may perform a triggering operation on the title setting item 3701. In response to the triggering operation by the user on the title setting item 3701, as shown in FIG. 37B(1) and FIG. 37B(2), the schedule management application of the mobile phone may display the input method keyboard 3702 in the schedule preview window 3602. Moreover, a cursor 3703 may be displayed in the title setting item 3701. The location of the cursor is related to a touch location at which the user performs a triggering operation on the title setting item 3701. For example, as shown in FIG. 37A(1) and FIG. 37A(2), the touch location at which the user performs the triggering operation is on the right of "Masterworks", and the cursor is displayed on the right of "Masterworks". If the touch location at which the user performs the triggering operation is between "Master" and "works", the cursor is displayed between "Master" and "works".

Then, the user may start adding content at the location of the cursor 3703 by using the input method keyboard 3702. Certainly, the user may alternatively start deleting content in the title setting item 3701 from the location of the cursor 3703 by using the input method keyboard 3702.

In a second possible implementation, the title setting item has a smearing control. The smearing control may trigger the schedule management application of the mobile phone to display a word segmentation result of the text content obtained by parsing the first picture. Then, the user may select, based on the word segmentation result, corresponding content to fill the title setting item, to adjust a value of a title in the title setting item. In this case, the editing operation on the title setting item may be an operation of adjusting, based on a word segmentation result of the text content obtained by parsing the first picture, a title in the title setting item.

For example, in combination with a schedule preview interface shown in FIG. 36B(1) and FIG. 36B(2), with reference to FIG. 38A(1) and FIG. 38A(2), a title setting item 3801 in a schedule preview window 3602 may include a smearing control 3802. When the user is required to adjust the title (such as "Masterworks") displayed in the title setting, the user may perform a triggering operation on the smearing control 3802. In response to the triggering operation, the schedule management application of the mobile phone may display a title editing pop-up window 3803 shown in FIG. 38B(1) and FIG. 38B(2).

With reference toIG. 38B(1) and FIG. 38B(2)., the title editing pop-up window 3803 includes an input box 3804. The input box 3804 may include a value of a title in title setting, such as "Masterworks". The input box 3804 further includes a cursor 3805. The cursor may be located after "Masterworks". The title editing pop-up window 3803 may further include a word segmentation result of text content in the first picture obtained by parsing the first picture 3603 by a schedule management application of the mobile phone. For example, the text content obtained by parsing the first picture may be "Masterworks Tropical Exhibition Time: October 5, 2022 to October 25, 2022 3rd Floor, ZZ Building, XX Street Coming soon". With reference toIG. 38B(1) and FIG. 38B(2).a word segmentation result of the text content may include "Masterworks", "Tropical", "Exhibition", "Time", ":", "October 5, 2022", "to", "October 25, 2022", "3rd", "Floor", "ZZ", "Building", "XX", and "Street". The word segmentation result is arranged from left to right and from top to bottom in sequence in the title editing pop-up window by default. The arrangement result satisfies a word sequence of the text content recognized by the schedule management application from the first picture result.

The title editing pop-up window 3803 may further include an input control 3806. The input control 3806 is configured to trigger the schedule management application of the mobile phone to fill the input box 3804 with content selected by the user from the word segmentation result from a location of the cursor. When not triggered, the input control 3806 may be displayed in a default display manner, such as a lowlight display manner. When triggered, the input control 3804 may be displayed in a triggered display manner, such as a highlight display manner.

In an embodiment of the present disclosure, the schedule management application may perform single-character word segmentation on the text content of the first picture. A specific word segmentation manner is not specifically limited in the present disclosure.

Then, if the user is required to start adjusting the content in the input box, the user first is required to determine an initial location for adjustment according to a requirement of the user, that is, determine a location of the cursor. Specifically, the user may perform a movement operation on the cursor. In response to the movement operation by the user on the cursor, the schedule management application of the mobile phone may move the cursor. For example, as shown in FIG. 38B(1) and FIG. 38B(2), if the user is required to add content before "Masterworks", the user may click on/tap on a location before "Masterworks". In response to the click-on/tap-on operation, as shown in FIG. 38C(1) and FIG. 38C(2), the schedule management application of the mobile phone may move the cursor 3805 to a location before "Masterworks".

After the user determines the location of the cursor, the user may select word segmentation content from the word segmentation result in the title editing pop-up window according to the requirement of the user, that is, perform a selection operation on the word segmentation content. Then, the user may perform a determination operation in the title editing pop-up window. Thus, the schedule management application of the mobile phone can adjust content in the input box in the title editing pop-up window by using the word segmentation content. Specifically, a location after the cursor in the input box may be filled with the word segmentation content.

In a possible scenario, the user may click on/tap on content in the word segmentation result according to a requirement, to select required word segmentation content. In response to the click-on/tap-on operation by the user on the word segmentation content in the word segmentation result, the schedule management application of the mobile phone may change the display manner of the word segmentation content to a selected display manner. In this way, the user can learn which word segmentation content is selected by the user. For example, the selected display manner may be a highlight display manner. A display manner of content in the word segmentation result on which the user does not perform a click-on/tap-on operation is a default display manner, such as a lowlight display manner.

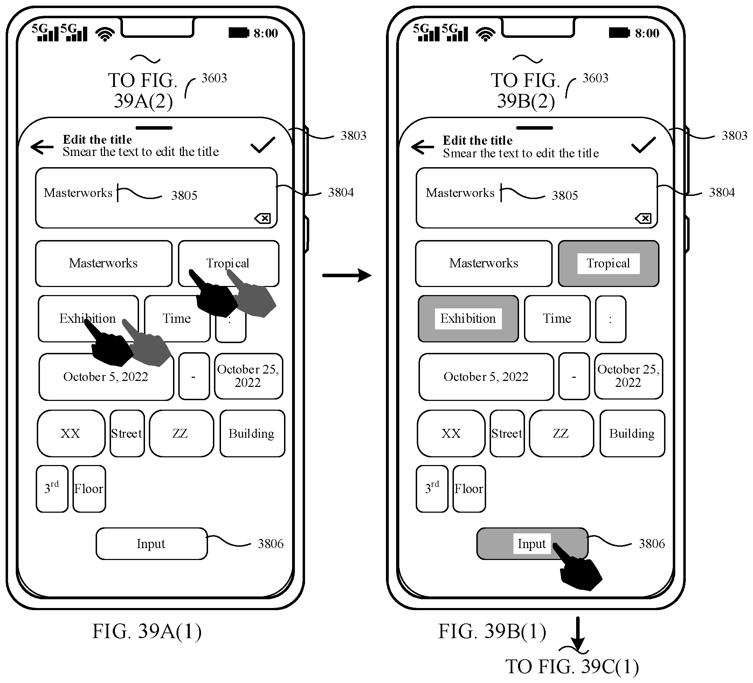

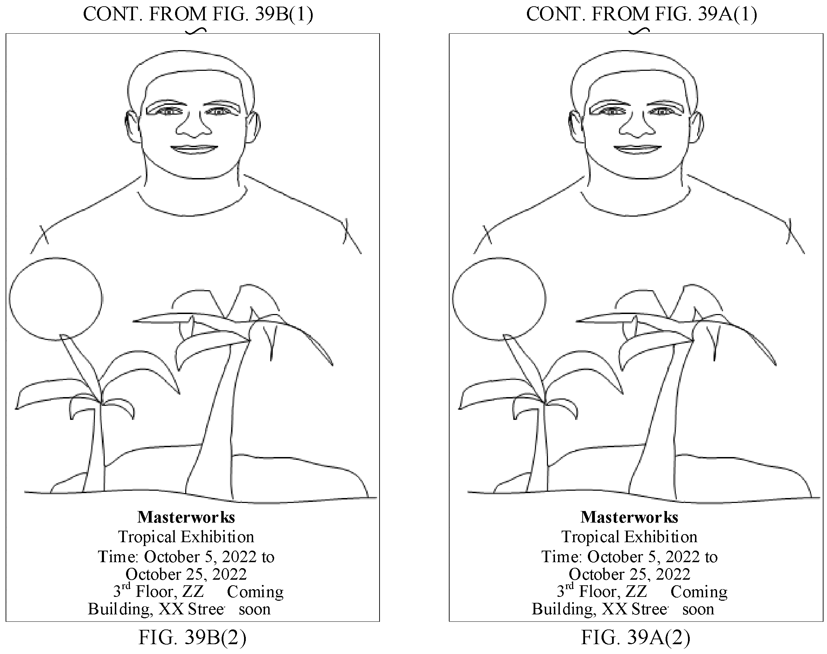

For example, the selected display manner and the triggered display manner are highlight display manners. In combination with a title editing pop-up window shown in FIG. 38B(1) and FIG. 38B(2), with reference to FIG. 39A(1) and FIG. 39A(2), if the user wants to add "Tropical Exhibition" after "Masterworks", the user may perform a click-on/tap-on operation on "Tropical" and "Exhibition" in the word segmentation result. In response to the click-on/tap-on operation by the user, with reference to FIG. 39B(1) and FIG. 39B(2), the schedule management application of the mobile phone may change the display manners of "Tropical" and "Exhibition" in the word segmentation result to highlight display manners.

Then, with reference toFIG. 39B(1) and FIG. 39B(2),, the user may perform a triggering operation on the input control 3806. In response to the triggering operation by the user on the input control 3806, the schedule management application of the mobile phone may change a display manner of the input control 3804 to a highlight display manner. Then, with reference tFIG. 39B(1) and FIG. 39B(2), the schedule management application of the mobile phone may fill a location after "Masterworks" in the input box with "Tropical Exhibition". Moreover, after the cursor is moved to a location after "Tropical Exhibition", display manners of "Tropical" and "Exhibition" and the input control 3804 are changed to default display manners. In this case, the user completes a selection operation and a confirmation operation on the word segmentation content in the word segmentation result. The selection operation may include a click-on/tap-on operation by the user on the word segmentation content. The confirmation operation includes a triggering operation by the user on the input control. Then, the user may continue to select word segmentation content or end adjusting the value of the title according to a requirement.

In another possible scenario, the user may smear content in the word segmentation result according to a requirement, to select required word segmentation content. In response to the smearing operation (or referred to as a swiping operation) by the user in the word segmentation result, the schedule management application of the mobile phone may change a display manner of word segmentation content corresponding to the smearing operation to a selected display manner. The word segmentation content corresponding to the smearing operation includes a plurality of characters corresponding to the smearing operation. The plurality of characters include: a first character corresponding to a start location of the smearing operation, a second character corresponding to an end location of the smearing operation, and a character between the first character and the second character after all characters in the word segmentation result are sequenced in a preset sequence. The preset sequence may be a sequence from a start character to an end character of the word segmentation result, for example, from left to right or from top to bottom.

For example, the selected display manner is a highlight display manner, in combination with a title editing pop-up window shown in FIG. 39B(1) and FIG. 39B(2), with reference to FIG. 40A(1) and FIG. 40A(2), in some embodiments, if the user wants to add "Tropical Exhibition" after "Masterworks", the user may perform the first smearing operation (or may be referred to as a swiping operation). A path of the first smearing operation passes through "Tropical" and "Exhibition" in the word segmentation result in sequence. In response to the first smearing operation, with reference to FIG. 40B(1) and FIG. 40B(2), the schedule management application of the mobile phone may change the display manners of "Tropical" and "Exhibition" in the word segmentation result to a highlight display manner.

In some other embodiments, with reference to FIG. 40C(1) and FIG. 40C(2), if the user wants to add the "Tropical Exhibition" after the "Masterworks", the user may perform a second smearing operation (or may be referred to as a swiping operation). A path of the second smearing operation may pass through only "Tropical" and "Exhibition" in the word segmentation result in sequence. In response to the second smearing operation, with reference toFIG. 40B(1) and FIG. 40B(2)the schedule management application of the mobile phone may change display manners of content, that is, "Tropical" and "Exhibition", in the word segmentation result in a preset sequence to highlight display manners.

Then, with reference toFIG. 40B(1) and FIG. 40B(2) the user may perform a triggering operation on the input control 3806. In response to the triggering operation, the schedule management application of the mobile phone may change the display manner of the input control 3806 to a highlight display manner. Then, with reference to FIG. 40D(1) and FIG. 40D(2), the schedule management application of the mobile phone may fill the position after "Masterworks" in the input box with "Tropical Exhibition". Moreover, after the cursor is moved to a location after "Tropical Exhibition", display manners of "Tropical" and "Exhibition" and the input control 3804 are changed to default display manners. In this case, the selection operation by the user on the word segmentation content in the word segmentation result may include a smearing operation (a first smearing operation or a second smearing operation) by the user on the word segmentation content. The determination operation is a triggering operation on the input control. Then, the user may continue to select word segmentation content or end adjusting the value of the title according to a requirement.

Certainly, in practice, the user may mix and use the above two implementations of implementing a selection operation on word segmentation content, to obtain and select word segmentation content more satisfying the requirement of the user.

It should be noted that in a case that the word segmentation content selected by the user from the word segmentation result, when filling the input box with the word segmentation content, the schedule management application may fill the input box with each character in the word segmentation content in a preset sequence from the location of the cursor. For example, with reference to FIG. 39A(1) and FIG. 39A(2), if the user first clicks on/taps on "Exhibition", and then clicks on/taps on "Tropical". Finally, content with which the input box is filled by the schedule management application should be "Tropical Exhibition" instead of "Exhibition Tropical".

In some embodiments, the user may further be required to delete some content in the input box such that the content in the input box can better satisfy a requirement of the user. Based on this, the user may further perform a deletion operation in the title editing pop-up window. In response to the deletion operation, the schedule management application of the mobile phone may delete content corresponding to the deletion operation in the input box.

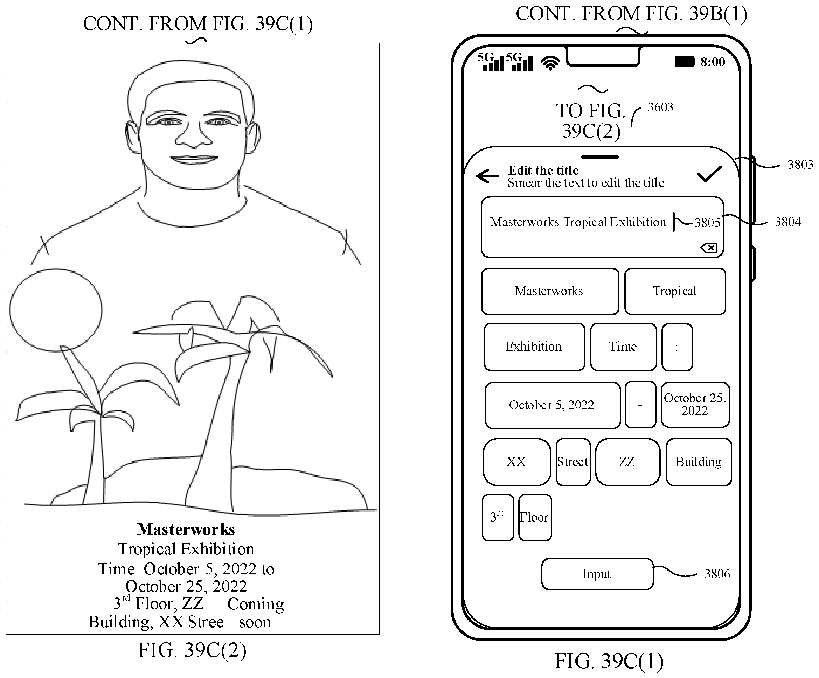

For example, in combination with the title editing pop-up window shown in FIG. 39C(1) and FIG. 39C(2), with reference to FIG. 41A(1) and FIG. 41A(2), when the user is required to delete "Tropical" from the "Masterworks Tropical Exhibition" in the input box, the user may first perform a movement operation on the cursor 4805 such that the cursor 3805 can be moved to a location between "Tropical" and "Exhibition". Specifically, the movement operation may be a click-on/tap-on operation in which a touch location is located between "Tropical" and "Exhibition". In response to the movement operation, with reference to FIG. 41B(1) and FIG. 41B(2), the schedule management application of the mobile phone may move the cursor 3805 to a location between "Tropical" and "Exhibition".

Then, the user may continuously perform two click-on/tap-on operations on the deletion control 4101 in the input box 3804. In response to two click-on/tap-on operations by the user on the deletion control 4101, as shown in FIG. 41C(1) and FIG. 41C(2), the schedule management application of the mobile phone may delete the characters "Tropical" before the cursor 3805 in the input box. In this case, the cursor may be located between "Masterworks" and "Exhibition". Herein, the location before the cursor 3805 is a location on a left side of the cursor 3805. In practice, the location between the cursor 3805 may be in any possible direction, as long as characters "Tropical" are located before the cursor 3805.

Based on the technical solution provided in the above embodiment, through a plurality of selection operations and/or a plurality of deletion operations in the title editing window, a user may adjust a title in a title setting item displayed in the title editing window.

The related operations shown in FIG. 39A(1), FIG. 39A(2), FIG. 39B(1), FIG. 39B(2), FIG. 39C(1), FIG. 39C(2), FIG. 40A(1), FIG. 40A(2), FIG. 40B(1), FIG. 40B(2), FIG. 40C(1), FIG. 40C(2), FIG. 40D(1), and FIG. 40D(2) on the title editing pop-up window are merely examples, and may alternatively be any other possible operations in practice, as long as the title in the title setting item displayed in the title editing pop-up window can be adjusted. This is not specifically limited in the present disclosure.

After the user deletion operation performs a selection operation on the word segmentation content, and/or on the content in the input box, the user may perform a confirmation operation (that is, end adjusting the value of the title) in the title editing pop-up window. Thus, the schedule management application of the mobile phone takes the content of the input box as a new value of the title, and updates the value of the title in the original title setting item in the schedule preview window. The confirmation operation may be specifically a triggering operation on a confirmation option in the title editing pop-up window.

For example, in combination with the title editing pop-up window shown in FIG. 41C(1) and FIG. 41C(2), with reference to FIG. 42A(1) and FIG. 42A(2), after the user determines that the selection operation on the word segmentation content and the deletion operation on the content in the input box are performed, the user may perform a triggering operation on the confirmation option 4201 in the title editing pop-up window 4803. In response to the triggering operation by the user on the confirmation option 4201, shown in FIG. 42B(1) and FIG. 42B(2), the schedule management application of the mobile phone may do not display the title editing pop-up window 3803 any more, but displays the schedule preview window 4202. Compared with the schedule preview window 3602 in which the user performs a triggering operation on the smearing control in the schedule preview window 4202, the title content in the title setting item 4203 is changed to "Masterworks Exhibition". Since then, the user completes the editing operation on the title setting item. The editing operation specifically includes: a triggering operation on the smearing control, a selection operation on the word segmentation content in the title editing pop-up window, and a confirmation operation performed in the title editing pop-up window.

The second possible implementation of the editing operation on the title setting item is only an example. In practice, content input and deletion may also be performed on another schedule setting item, a corresponding smearing control may also exist, to complete corresponding editing. This is not specifically limited in the present disclosure.

In practice, content related to a location of text content (that is, a to-be-determined text that can be recognized by the schedule management application) in the first picture may include a standard address and a non-standard address. The standard address may be correctly recognized by a map application or a navigation application, to guide the user. The non-standard address is an address that cannot be correctly recognized by the map application or the navigation application. The non-standard address is an address of which a format is incorrect or of which content has an error.

The standardized address may include a structured address and a non-structured address. The structured address is, for example, XX Hospital, Beijing. The non-structured address is, for example, Arrhythmia Inpatient Area 2, XX Hospital. The non-standard session address may include a pseudonym address, an alternative name, and an oral address (or an address that cannot be recognized). The pseudonym address is, for example, a 4S shop. The alternative name is, for example, an old location, a home, and a company. The oral address is, for example, a square on the ground/a middle active area.

Based on this, in an embodiment of the present disclosure, to enable the user to view a more accurate standardized address in the schedule preview window, in a case that the first location in the first schedule information obtained by parsing, by the schedule management application, the first picture is a non-standardized address, when the schedule management application displays the location setting item in the editing area of the schedule preview window, besides displaying the first location in the first schedule information, the location setting item further displays a suggested location obtained based on the first location. Based on this, the user may select, according to a requirement, the first location and the suggested location that are displayed in the location setting item, to complete the location setting item. In this way, when the mobile phone subsequently reminds or notifies the user of the schedule, the user can obtain a more accurate address, and further can perform corresponding navigation by using the map application or the navigation application. Thus, user experience is improved.

For example, the first location in the first schedule information obtained by parsing, by the schedule management application, the first picture of the mobile phone is "XX Square near school". A schedule preview window displayed by the schedule management application of the mobile phone through the second interface may be shown in FIG. 43A(1) and FIG. 43A(2).With reference to FIG. 43A(1) and FIG. 43A(2), in addition to the first location option-"XX Square near school", the location setting item 4302 in the schedule preview window 4301 further includes a suggested location option-"Suggested location: XX Square (Lijiacun store)". In an embodiment of the present disclosure, the suggested location (such as XX Square (Lijiacun store)) in the suggested location item may be obtained by the schedule management application according to a preset rule and the first location. The preset rule may be as follows: a suggested location is selected from a map provided by a map application in combination with user information (such as a name of a school to which a user belongs) stored in a mobile phone by a user in advance, and/or location information (that is, historical location information that can be obtained from a map application or a positioning service on a mobile phone) of locations that the user frequently goes within a recent period of time (that is, within preset duration) (such as within a month including the current day), and semantic information of the first location. For example, if the school to which the user belongs is XX University near Lijingcun, and/or the user stays at XX University for more than half of a last month, the nearest XX Square at XX University can be selected from the map as the suggested location. Then, if the user is required to use the suggested location as a final location in the location setting item, with reference to FIG. 43A(1) and FIG. 43A(2), the user may perform a triggering operation on the suggested location option. In response to the triggering operation, with reference to FIG. 43B, the schedule management application of the mobile phone may display a location setting interface 4303. The location setting interface 4303 may include at least one to-be-selected suggested location 4304 (including 4304-1 and 4304-2). The at least one to-be-selected suggested location 4304 includes a suggested location included in the suggested location item in the location setting item 4302.

Then, if the user wants to determine the to-be-selected suggested location 4304-1 (that is, the first to-be-selected suggested location) as a location in the final location setting item, with reference to FIG. 43B, the user may perform a triggering operation (such as a click-on/tap-on operation) on the suggested location 4304-1 (which may be referred to as a target suggested location). In response to the triggering operation, with reference to FIG. 43C(1) and FIG. 43C(2), the schedule management application of the mobile phone may display a schedule preview window 4301 on the second interface, replace a value of a location in a location setting item 4302 in the schedule preview window 430 with a suggested location 4304-1, and any more display the suggested location option. So far, the editing operation by the user on the location setting item based on the suggested location is completed. The editing operation may include: a triggering operation on the suggested location option, and a triggering operation on the target suggested location in the location setting interface.

Certainly, the user may alternatively perform a triggering operation on the first location option in the location setting item. Thus, the schedule management application of the mobile phone can display a location setting page 26 shown in FIG. 2B. Further, a location in the location setting item can be adjusted with reference to the related expressions for FIG. 2A, FIG. 2B, FIG. 2C, and FIG. 3 in the above embodiments.

Based on the above technical solution, when creating a schedule based on a first picture, a mobile phone can provide a more accurate suggested location for a user. Thus, a location of a finally created schedule is more accurate. Subsequent usage is facilitated. User experience is improved.

In some embodiments, if the user deems that the first location in the location setting item is incorrect, the user deletes the location setting item. Then, if the user performs a triggering operation on a confirmation option in the schedule preview window, the schedule management application of the mobile phone can be promoted to create a corresponding schedule. Thus, to ensure a finally created schedule to have a location, the schedule management application of the mobile phone may set the suggested location in the suggested location item in the location setting item as the location of the finally created schedule.

For example, if the schedule preview window is shown in FIG. 43A(1) and FIG. 43A(2), deletion by the user on the first location may be a triggering operation performed by the user on a deletion control 4305 corresponding to the first location option in the location setting item.

In some embodiments, to enable the user to conveniently more fully learn content in the first picture, to prevent a finally created schedule from missing some content unrelated to the creation schedule, the description setting item may have the first picture itself. Thus, the user can conveniently view a schedule in a schedule management application at any time after the user creates the schedule. In addition, since the first picture has a large amount of content that is not required to be viewed, the description setting item may be further used for the user to clip the first picture therein. The clipping manner may be any feasible manners, such as the clipping manner for the first picture in the recognized content area in the above embodiment. This is not specifically limited in the present disclosure. In addition, the user may further add text descriptions to the description setting item by using an input method keyboard. A particular implementation is not limited and is not specifically limited in the present disclosure.

In addition to the flow for creating a schedule for a picture provided in the above embodiment, the method for creating a schedule provided in an embodiment of the present disclosure further includes a flow for creating a schedule for a text. A flow for creating a schedule for a text provided in the present disclosure is introduced below in combination with FIG. 44. FIG. 44 is a schematic diagram of a flow for creating a schedule for a text according to an embodiment of the present disclosure. With reference to FIG. 44, for example, the electronic device is a mobile phone. The flow for creating a schedule for a text may include S4401-S4405.

S4401: The mobile phone displays a first interface.

Specifically, a first text may be displayed on the first interface. The first text may be any text including the schedule information (that is, subsequent first schedule information) in the mobile phone, such as a short message or an instant communication message. For example, the first interface may be any possible display interfaces for presenting the first text, such as a chat interface on which the first text is located, a short message viewing interface on which the first text is located, or another viewing interface of the first text.

S4402: The mobile phone receives an input operation by a user on the first text.

In a case that a user is required to a schedule management application to rapidly create a schedule by using a first text of schedule information on a mobile phone, the user is required to first perform, according to a requirement of the user, a particular input operation on the first text on the mobile phone. Thus, the schedule management application of the mobile phone can parse the first text, and create a schedule based on a parsing result.

In an embodiment of the present disclosure, the input operation on the first picture may be specifically an operation that the user provides the first picture for a schedule management application to parse and create a schedule.

S4403: The mobile phone parses the first text in response to the input operation by the user on the first text, to obtain first schedule information in the first text.

A particular implementation of the first schedule information may be obtained with reference to the related expressions after S703 in the above embodiment, and is not repeated herein.

In an embodiment of the present disclosure, a method of parsing, by the schedule management application of the mobile phone, the first text to obtain the first schedule information in the first picture may be any feasible methods. The description of the particular implementation can be obtained with reference to the related description of the particular implementation of parsing the first picture after S703 in the above embodiment. A difference between the two implementations is that when parsing the first text, the mobile phone is not required to first obtain a text (such as a to-be-determined text) through an OCR technology, but directly recognizes all to-be-determined keywords or all to-be-determined entities in the first text through a technology such as NER, to obtain the first schedule information.

For example, the first text may be shown in FIG. 45(a), the first text may be "@Everyone A physical examination will be performed on next Tuesday (March 28), and parents shall send children to the kindergarten. Children at home can return home after coming to the kindergarten for the physical examination. Note: a vaccinate book and a WeChat reservation shall be prepared for the physical examination". Then, all target keywords related to a schedule that are obtained after the schedule management application recognizes the to-be-determined text may include: "physical examination", "next Tuesday", "March 28", and "kindergarten". Specifically, "physical examination" may be a title in the first schedule information, "next Tuesday" and "March 28" may be a time period in the first schedule information, and "kindergarten" may be used as a location in the first schedule information.

In addition, the first text may have schedule information of a plurality of different to-do items. For example, the first text includes a piece of schedule information for to-do item A, and further includes schedule information for to-do item B. Then, the schedule management application may parse the first text to obtain two pieces of schedule information. If the first text has schedule information corresponding to different to-do items, a paragraph in the first text to which schedule information of the different to-do items belongs is extremely likely to be different. Based on this, when parsing the to-be-recognized text, the schedule management application first divides the text content into a plurality of pieces of text content according to different paragraphs to which the text content in the first text belongs. Then, the schedule management application may parse the plurality of pieces of text content separately, to obtain different schedule information included in different text content.

For example, as shown in FIG. 45(b), the first text has a first paragraph 4501 and a second paragraph 4502. To-do item events corresponding to schedule information in the first paragraph 4501 and the second paragraph 4502 are different. The schedule management application may perform, for the first paragraph 4501 and the second paragraph 4502 separately, the above flow of performing parsing and recognition to obtain the first schedule information. A particular implementation can be obtained with reference to the above related expressions for FIG. 8(a). Finally, the first schedule information obtained by the schedule management application from the first text may include first schedule information corresponding to the first paragraph 4501 and second schedule information corresponding to the second paragraph 4502.

The first schedule information may include: "physical examination", "next Tuesday", "March 28", and "kindergarten". Specifically, "physical examination" may be a first title in the first schedule information, "next Tuesday" and "March 28" may be a first time period in the first schedule information, and "kindergarten" may be a first location in the first schedule information.

The second schedule information may include: "next Thursday", "March 30", "7:00 p.m.-8:00 p.m.", and "online parents' meeting". Specifically, "online parents' meeting" may be a second title in the second schedule information, and "next Thursday", "March 30", and "7:00 p.m.-8:00 p.m." may be a second time period in the second schedule information.

The purpose or effect of performing S4404 and S4405 after S4403 can be obtained with reference to related expressions after S703 in the above embodiment, and is not repeated herein.

S4404: The mobile phone generates at least one to-be-selected schedule based on the first schedule information, and displays a schedule preview window.

A definition of the schedule preview window can be obtained with reference to related expressions after S704 in the above embodiment, and is not repeated herein.

In an embodiment of the present disclosure, an entry through which the schedule management application receives a text may have a plurality of specific forms. Thus, an input operation by the user on the first text may have a plurality of implementations. Based on this, S4401-S4404 may have a plurality of implementations.

Specifically, S4401-S4404 may have a first possible implementation and a second possible implementation.
(1) A particular implementation of the first possible implementation of S4401-S4404 can be obtained with reference to the related expressions of the first possible implementation of S701-S704 in the above embodiment. A difference lies in that in the first possible implementation of S4401-S4403, a first interface for which the user performs an input operation on the first text is a viewing interface of a first text, such as a chat interface. In the first possible implementation of S4401-S4404, a resource identifier that is generated after the user performs a long-press operation on the first text is not a first thumbnail, but is a perspective text.

In addition, it should be noted that the first text targeted in S4401-S4404 may be one of all texts obtained after a picture on the mobile phone is recognized by using a smart vision function of the mobile phone. This situation is described below.

For example, a picture detail interface of a picture on the mobile phone is FIG. 46A. In a case that the user is required to recognize the picture 4602 by using the smart vision function, the user may perform a triggering operation on a smart visual control 4603 in the picture detail interface 4601. In response to the triggering operation, the mobile phone may display a smart visual recognition interface 4604 shown in FIG. 46B. On the smart visual recognition interface 4604, all words in the first picture 4602 may be highlighted. At this time, S4401 is completed. As shown in FIG. 46B, on the smart visual recognition interface 4604, in a case that the text in the first picture is highlighted, the text in the first picture may be randomly selected and copied by the user. The smart visual recognition interface 4604 may be the first interface mentioned in S4401.

Then, with reference to FIG. 46B, the user may perform a long-press operation (that is, an identifier triggering operation) on the first text 4605. In response to the long-press operation by the user, the mobile phone may display a perspective text 4606 shown in FIG. 46B (equivalent to the first thumbnail shown in FIG. 9A in the above embodiment) on the smart visual recognition interface 4604. The perspective text 4606 is obtained after transparency of the first text 4605 is added. Moreover, the perspective text 4606 may be moved with a touch point that is performed by the user on the smart visual recognition interface 4604. That is, the perspective text 4606 may be dragged and dropped by the user and moved with a hand.

Then, the user may move the perspective text 4606 to a frame (such as a right frame) of the picture smart visual recognition interface 4604 through a first drag-and-drop operation. When the perspective text is moved to be near the frame of the smart visual recognition interface 4604, with reference to FIG. 46C, the mobile phone may display a sidebar 4607. An icon 4608 of the schedule management application (or an icon of a schedule creation function of the schedule management application) exists in the sidebar 4607.

Then, the user may continue to perform the first drag-and-drop operation without loosening a hand, and then ends the first drag-and-drop operation (that is, do not touch any more by raising a hand) after moving the perspective text 4606 to the icon 4608 of the calendar application. The first drag-and-drop operation is an input operation by the user on the first picture. At this time, the mobile phone receives the input operation by the user on the first picture, and S4402 is completed.

After the first text is inputted into the schedule management application, in response to an input operation (that is, a first drag-and-drop operation) by the user on the first text, the schedule management application of the mobile phone may start parsing the first text 4605 corresponding to the perspective text 4606, to obtain the first schedule information in the first text. A subsequent implementation of displaying, by the schedule management application, the first resolution interface and the schedule preview window in the floating window can be obtained with reference to related expressions for FIG. 9C and FIG. 9D in the above embodiments, and is not repeated herein.

Based on the above technical solution, the mobile phone can display the schedule preview window by using the floating window. Thus, the user can intuitively see, from the schedule preview window by using at least one schedule option, information of at least one to-be-selected schedule generated from the schedule information in the first text. Further, the user can select a schedule option according to a requirement of the user. The mobile phone can rapidly create a schedule satisfying the requirement of the user. In addition, since the floating window does not affect the blocked viewing surface of the first text that is currently displayed by the mobile phone, the user can further perform an operation satisfying a requirement of the user on the viewing surface of the first text at any time when viewing the schedule preview window in the first floating window. Thus, user experience is improved. For example, the viewing interface of the first text is a chat interface. The user may chat on the chat interface at any time.

In some embodiments, to conveniently compare, when a user selects a schedule option, the schedule option with content in a first text such that the user can more accurately select a schedule option satisfying a requirement of the user, when the schedule management application of the mobile phone displays the schedule preview window in the floating window, the floating window may further have a recognized content area for displaying the first text. In the above first possible implementation, as shown in FIG. 17D or FIG. 18D, the recognized content area S may be a display area other than the schedule preview window in the floating window.

The first text may be displayed in the recognized content area S by using a slidable text box. In a case that a relatively large quantity of first texts exist, the text box cannot display all the first texts at once. In this case, the user may switch content displayed in the text box through a swiping operation in the text box. Certainly, in practice, the implementation of displaying the first text in the recognized content area S may alternatively be any other possible implementations. For example, an original display bubble of the first text is used for display in the recognized content area S. This is not specifically limited in the present disclosure.

In addition, when the first text is displayed in the recognized content area S, in response to a swiping operation by the user, the schedule management application of the mobile phone may switch displayed content in the recognized content area S. In this way, when a user selects a schedule option, the schedule option can be conveniently compared with content in the first text.

(2) A particular implementation of the second possible implementation of S4401-S4404 can be obtained with reference to the related expressions of the third possible implementation of S701-S704 in the above embodiment. A particular example and description can be obtained with reference to the related description of the third possible implementation of S701-S704 in the above embodiment. A difference lies in that in the second possible implementation of S4401-S4404, the background of the second interface is the first text, and the sharing operation on the first text is different from the sharing operation on the first picture.

For example, the first interface is a short message viewing interface. With reference to FIG. 47A, if the user is required to share a first text 4701 (specifically, a short message) in the short message viewing interface, the user may first perform a long-press operation on the first text 4701. In response to the long-press operation by the user on the first text 4701, the mobile phone may display a function pop-up window 4702 shown in FIG. 47B. The function pop-up window 4702 includes a sharing option 4703.

Then, with reference to FIG. 47B, the user may perform a triggering operation on the sharing option 4703. In response to the triggering operation, the mobile phone may display a sharing pop-up window 4704 shown in FIG. 47C(1) and FIG. 47C(2). The sharing pop-up window 4704 includes an icon 4705 of a schedule management application.

Then, in a case that the user is required to create a schedule based on the text in the first text 4704, the user may perform a triggering operation on the icon 4705 of the schedule management application in the sharing pop-up window. The triggering operation performed on the icon of the calendar application in the sharing pop-up window may be the input operation by the user on the first picture. At this time, the mobile phone receives the input operation by the user on the first text, and S4402 is completed. Subsequent particular implementations of S4403 and S4404 can be obtained with reference to related expressions in the third possible implementation of S701-S704 in the above embodiment, and are not repeated herein.

S4405: The mobile phone receives a selection operation by the user on the first schedule option in the schedule preview window, and creates, in response to the creation operation by the user in the schedule preview window, a to-be-selected schedule to which the first schedule option belongs. A particular implementation of S4404 and a related implementation of selecting, by the user, a plurality of schedule options can be obtained with reference to related descriptions after S705 in the above embodiment, and are not repeated herein.

After the flow for creating a schedule for the text ends, the mobile phone may display an interface on which the user decides that a schedule is required to be created, and display reminder information on the interface. A particular implementation can be obtained with reference to related expressions for FIG. 26A, FIG. 26B, FIG. 26C, and FIG. 27 in the above embodiments, and is not repeated herein.

Based on the above technical solutions corresponding to S4401-S4405, the mobile phone may generate at least one to-be-determined schedule based on the first text for the user to select. In this case, the user is only required to select an appropriate to-be-determined schedule according to a requirement, and then the mobile phone can create a corresponding to-be-determined schedule. In an entire creation process, the user is only required to perform an input operation on a picture having schedule information and perform a selection operation on a determined to-be-determined schedule (that is, a to-be-determined schedule corresponding to a schedule option selected by the user) such that the mobile phone can generate a schedule required by the user. It can be seen that according to the technical solutions provided in the present disclosure, a number of operations required for creating a schedule is greatly reduced, and user experience is improved. Moreover, since a plurality of selectable to-be-determined schedules can be provided for the user, a finally created schedule can better satisfy the requirement of the user.

In some embodiments, in addition to the schedule information of a to-do item of a corresponding schedule that the user is required to generate, text content in the first text may have other disturbance information. For example, the first text may have schedule information of two to-do items, but the user only wants to create a corresponding schedule for schedule information of one to-do item. Then, schedule information of the other to-do item is interference content. For another example, in addition to the schedule information of the to-do item of the schedule that the user is required to generate, the first text may have interference content that is unrelated to the to-do item and that is of a same category as the schedule sub-information, such as a time, a location, etc. For another example, some text content in the first text is incomplete, which may cause an incorrect recognition result of the schedule management application.

Based on this, to enable the user to conveniently reduce interference content in the first text or increase content of the first text according to a requirement of the user, in some embodiments, when the mobile phone displays the schedule preview window, an editing control may exist in a recognized content area for displaying the first text. If the user is required to reduce interference content in the first text, the user may complete an editing operation on the first text by using the editing control, to obtain the edited first edited text.

In a possible implementation, for example, the first text is a message of Zhang San on the chat interface shown in FIG. 45(b), and content in a second paragraph including words of "parents' meeting" in the first text shown in FIG. 45(b) is interference content. After S4404, the second interface, on which the mobile phone displays the schedule preview window, may be shown in FIG. 48A. A schedule option 4802 and a schedule option 4803 are displayed in a schedule preview window 4801 in the second interface. It can be seen that a to-be-selected schedule to which the schedule option 4802 belongs is a to-be-selected schedule obtained based on the text content in the first paragraph in the first text. A to-be-selected schedule to which the schedule option 4803 belongs is a to-be-selected schedule obtained based on the text content in the second paragraph in the first text.

With reference to FIG. 48A, in addition to displaying the first text 4804, the recognized content area S1 in the schedule preview interface may further include an editing control 4805. The editing control 4805 is equivalent to the first clipping control in FIG. 28A, FIG. 28B, FIG. 28C, and FIG. 28D in the above embodiment, but styles of the two controls may have a difference.

When the user is required to clip the interference content in the second paragraph in the first text, the user may perform a triggering operation on the editing control 4805. In response to the triggering operation by the user, with reference to FIG. 48B, the schedule management application of the mobile phone may display the cursor 4806 after a last character of the first text 4805 in the text box. Moreover, the editing control 4805 is not displayed any more, and an input method keyboard 4807 is displayed instead.

Then, the user may move the location of the cursor 4807 in the first text 4807 through a movement operation on the cursor 4807, and further determine a start location at which content deletion or content addition may start. For example, if the user wants to delete the content between "preset." and "!", with reference to FIG. 48B, the user may perform a click-on/tap-on operation on a location between "in" and "!". In response to the click-on/tap-on operation, with reference to FIG. 48C, the schedule management application of the mobile phone moves the cursor to the location between "in" and "!".

Then, the user may perform continuous 44 click-on/tap-on operations or long-press operations on the deletion control 4808 in the input keyboard for a period of time. Thus, the schedule management application of the mobile phone deletes, in response to the deletion operation (continuous click-on/tap-on operations or long-press operations), ". An online parents' meeting will be held at 7:00 pm.-8:00 pm. on next Thursday (March 30), parents shall arrange their time appropriately, and remember to sign in" in the first text, shown in FIG. 48D. In this way, the first edited text-"@Everyone A physical examination will be performed on next Tuesday (March 28), and parents shall send children to the kindergarten on time. Children at home can return home after coming to the kindergarten for the physical examination. Note: a vaccinate book and a WeChat reservation shall be prepared for the physical examination!" after the interference content in the first text is edited is obtained. In this way, the user may edit the first text through a deletion operation on the deletion control 4808 in the input method keyboard 4807, to obtain an editing result.

Certainly, the user may alternatively add content to the first text from the location of the cursor in the first text through an input operation by using the input method keyboard 4807, to obtain the first edited text of the first text to which the content is newly added.

After the user determines that an editing operation (including a triggering operation on the editing control and an operation (a deletion operation and/or an input operation) on the input method keyboard) is completed, as shown in FIG. 48D, the user may perform a triggering operation on a confirmation option 4809 in the input method keyboard 4807. In response to the triggering operation by the user on the confirmation option 4809, the schedule management application of the mobile phone may parse the first editing result (that is, a final editing result) used as the new first text, to obtain the new first schedule information.

Then, the schedule management application of the mobile phone may generate at least one to-be-selected schedule based on the new first schedule information and display a schedule preview window. Thus, the user can select a to-be-selected schedule satisfying the requirement of the user. That is, after the first text is updated by using the first editing result, S4403-S4405 in the flow for creating a schedule for the text are performed again. For example, based on the example shown in FIG. 48D, after the schedule management application of the mobile phone generates the at least one to-be-selected schedule based on the new first schedule information, as shown in FIG. 48E, the editing control 4805 is displayed in the recognized content area S again, and content in the text box in the recognized content area S is changed to the first edited text. A schedule option 4802 and a schedule option 4810 may be displayed in the schedule preview window 4801. Content displayed in the schedule option 4802 and the schedule option 4810 both correspond to new first schedule information, that is, "@Everyone A physical examination will be performed on next Tuesday (March 28), and parents shall send children to the kindergarten on time. Children at home can return home after coming to the kindergarten for the physical examination. Note: a vaccinate book and a WeChat reservation shall be prepared for the physical examination!" after the interference content in the first text is edited is obtained.

In addition, in some embodiments, to enable the user to learn content of the original first text, with reference to FIG. 48D and FIG. 48E, deleted content may be displayed in a display manner different from that of non-deleted content. For example, transparency in a scale of the deleted content may be increased. In this way, the user may subsequently clip the first text again according to the original content of the first text.

In some embodiments, after the user performs the editing operation, in response to a triggering operation by the user on a confirmation option in the input method keyboard, the schedule management application of the mobile phone may further display a new second parsing picture based on the new first text. A particular implementation of the second parsing picture can be obtained with reference to related expressions in the above embodiment, and is not repeated herein.

After the parsing is completed, the schedule management application of the mobile phone may display a schedule preview interface shown in FIG. 48E. In this way, after clipping the first text, the user may sense a process of parsing the new first text by the mobile phone. User experience is improved.

In some embodiments, after the user edits the first text once, the first text may be required to be edited again (edited for the second time) for various possible reasons. In this case, the user may complete editing once again by using a clipping process shown in FIG. 48A, FIG. 48B, FIG. 48C, FIG. 48D, and FIG. 48E. This is not repeated herein.

In the flow for creating a schedule of the text, a particular implementation and effect (or objective) of the editing area in the schedule preview window, and a particular implementation and effect of editing the schedule setting item included in the editing area in the schedule preview window (or referred to as adjusting the schedule sub-information in the schedule setting item) can be obtained with reference to related expressions for FIG. 32A to FIG. 43C(2) in the above embodiment, and are not repeated herein.

Certainly, the above editing of the first text by the user by using the editing control is merely an example, and may be any other feasible editing process in practice. This is not specifically limited in the present disclosure.

In addition, in the method for creating a schedule (including a flow for creating a schedule for a picture and a flow for creating a schedule for a text) provided in the present disclosure, display styles may be further switched according to time. For example, between 7:00 and 18:00, display styles of all display interfaces may be a daylight mode, where a font is black, and the rest is white. Between 18:00 and 7:00, the display styles of all the display interfaces may be a night mode, where the font is white, and the rest is black. For example, with the schedule preview interface shown in FIG. 18A, FIG. 18B, FIG. 18C, and FIG. 18D as an example, with reference to FIG. 49(a), between 7:00 and 18:00, a display style of the schedule preview interface is the daylight mode. Between 18:00 and 7:00, a display style of the schedule preview interface may be shown in FIG. 49(b) and is a night mode. In this way, user experience can be improved.

An embodiment of the present disclosure further provides an electronic device. The electronic device includes a display, a memory, and one or more processors. The display and the memory are coupled to the processor. The memory stores computer program code. The computer program code includes computer instructions. The computer instructions, when executed by the processor, cause the electronic device to perform the method for creating a schedule provided in the above embodiment. A particular structure of the electronic device can be obtained with reference to the structure of the electronic device shown in FIG. 5.

An embodiment of the present disclosure further provides a computer-readable storage medium. The computer-readable storage medium includes computer instructions. The computer instructions, when run on an electronic device, cause the electronic device to perform the method for creating a schedule provided in the above embodiment.

An embodiment of the present disclosure further provides a computer program product. The computer program product includes executable instructions. The executable instructions, when run on an electronic device, cause the electronic device to perform the method for creating a schedule provided in the above embodiment.

Through the above description of the implementations, a person skilled in the art can clearly learn that for a purpose of convenient and brief description, division of the above functional modules is merely used as an example for description. During actual application, the above functions can be allocated to different functional modules for implementation according to a requirement. That is, an inner structure of an apparatus is divided into different functional modules, to implement all or some of the functions described above.

In the some embodiments provided in the present disclosure, it should be understood that the disclosed apparatus/device and method may be implemented in other manners. For example, the above described device/apparatus embodiments are merely illustrative. For example, the division into modules or units is merely a logical function division and may be another division in actual implementations. For example, a plurality of units or components may be combined or integrated into another apparatus, or some features may be ignored or not performed. In addition, the displayed or discussed mutual couplings, direct couplings, or communication connections may be indirect couplings or communication connections by using some interfaces, apparatuses, or unites, and may be in electrical, mechanical, and other forms.

The units described as separate parts may be physically separated or not. Parts displayed as a unit may be one physical unit or a plurality of physical units, located at the one position, or may be distributed to different positions. Some or all of the units may be selected according to an actual requirement to achieve the objectives of the solutions of the embodiments.

In addition, each functional unit in each embodiment of the present disclosure may be integrated in one processing unit, or each unit may exist separately and physically, or two or more units may be integrated in one unit. The above integrated unit may be implemented in the form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of the present disclosure essentially, or the part contributing to the prior art, or all or some of the technical solutions may be implemented in the form of a software product. The software product is stored in a storage medium and includes several instructions for instructing a device (which may be a single-chip microcomputer, a chip, etc.) or a processor (processor) to perform all or some of the steps of the methods described in embodiments of the present disclosure. The above storage medium includes: any medium that can store program code, such as a USB flash drive, a removable hard disk, a read-only memory (read only memory, ROM), a random access memory (random access memory, RAM), a magnetic disk, or an optical disc.

The above implementations are merely particular implementations of the present disclosure, but are not intended to limit the scope of protection of the present disclosure. Any variation or substitution within the technical scope disclosed in the present disclosure shall fall within the scope of protection of the present disclosure. Thus, the scope of protection of the present disclosure shall be subject to the scope of protection of the claims.

## Claims

1. A method for creating a schedule, applied to an electronic device, comprising:
displaying, by the electronic device, a first interface, wherein the first interface comprises a first multimedia resource, the first multimedia resource comprises a first picture or a first text, the first multimedia resource comprises first schedule information, and the first schedule information comprises one or more of the following: a first title, a first time period, and a first location;
displaying, by the electronic device, a first window in response to an input operation by a user on the first multimedia resource, wherein the first window comprises at least one schedule option, the schedule option comprises at least one of a title, a location, and a time period, and the at least one schedule option comprises a first schedule option; in a case that the first schedule option comprises a title, a value of the title of the first schedule option is the first title; in a case that the first schedule option comprises a location, a value of the location of the first schedule option is the first location; and in a case that the first schedule option comprises a time period, a value of the time period of the first schedule option is the first time period;
creating, after the first schedule option of the at least one schedule option is selected and by the electronic device in response to a creation operation by the user in the first window, a first schedule corresponding to the first schedule option in a schedule management application; and
displaying, by the electronic device, the first interface, and displaying reminder information on the first interface, wherein the reminder information is used for indicating that the schedule is created.

2. The method according to claim 1, wherein before the displaying, by the electronic device, a first window in response to an input operation by a user on the first multimedia resource, the method further comprises:
displaying, by the electronic device in response to an identifier triggering operation by the user on the first multimedia resource on the first interface, a resource identifier of the first multimedia resource in a touch area in which the user performs the identifier triggering operation; and
the displaying, by the electronic device, a first window in response to an input operation by a user on the first multimedia resource comprises:
displaying, by the electronic device in response to a first drag-and-drop operation by the user on the resource identifier, a first floating window on the first interface, and displaying the first window in the first floating window, wherein the first drag-and-drop operation is used for triggering the electronic device to display a sidebar, and moving the resource identifier to an icon of the schedule management application in the sidebar, and
the first drag-and-drop operation is the input operation.

3. The method according to claim 1, wherein the first interface includes a sharing control; before the displaying, by the electronic device, a first window in response to an input operation by a user on the first multimedia resource, the method further comprises:
displaying, by the electronic device, a sharing pop-up window in response to a triggering operation by the user on the sharing control on the first interface, wherein the sharing pop-up window comprises an icon of the schedule management application; and
the displaying, by the electronic device, a first window in response to an input operation by a user on the first multimedia resource comprises:
displaying, by the electronic device, a second interface in response to a triggering operation by the user on the icon of the schedule management application in the sharing pop-up window, and displaying the first window on the second interface, wherein
the triggering operation on the icon of the schedule management application in the sharing pop-up window is the input operation.

4. The method according to claim 1, wherein in cases that the first interface comprises a smart visual control and the first multimedia resource is the first picture, before the displaying, by the electronic device, a first window in response to an input operation by a user on the first multimedia resource, the method further comprises:
displaying, by the electronic device, a smart visual recognition interface in response to a triggering operation by the user on the smart visual control on the first interface; and
the displaying, by the electronic device, a first window in response to an input operation by a user on the first multimedia resource comprises: displaying, by the electronic device, a second interface in response to a triggering operation by the user on a schedule creation control on the smart visual recognition interface, and displaying the first window on the second interface, wherein
the triggering operation on the schedule creation control on the smart visual recognition interface is the input operation.

5. The method according to claim 1, wherein in a case that the first multimedia resource is the first picture, the displaying, by the electronic device, a first interface comprises:
displaying, by the electronic device, a photos presentation interface or a picture taking interface in response to a triggering operation by the user on a scanning control on a schedule creation interface; and
displaying, by the electronic device, the first interface in response to an acquisition operation by the user on the first picture on the photos presentation interface;
the displaying, by the electronic device, a first window in response to an input operation by a user on the first multimedia resource comprises: displaying, by the electronic device, a second interface in response to a triggering operation by the user on a confirmation control on the first interface, and displaying the first window on the second interface, wherein the triggering operation on a first confirmation control in a picture presentation interface is the input operation; and
after the creating, by the electronic device in response to a creation operation by the user in the first window, a first schedule corresponding to the first schedule option in a schedule management application, the method further comprises:
displaying, by the electronic device, the schedule creation interface, and displaying the reminder information on the schedule creation interface.

6. The method according to any one of claims 1 to 5, wherein in a case of displaying the first window, the electronic device further displays the first multimedia resource in a recognized content area; in a case that the electronic device displays the first window in the first floating window, the recognized content area is located in the first floating window; and in a case that the electronic device displays the first window on the second interface, the recognized content area is located in the second interface.

7. The method according to claim 6, wherein in a case that the first multimedia resource is the first picture, the method further comprises:
performing, by the electronic device in response to an adjustment operation by the user on the first picture in the recognized content area, an adjustment on the first picture, wherein the adjustment includes any one or more of the following: minimization, maximization, a reduction, enlargement, and a movement.

8. The method according to claim 6, wherein in cases that the electronic device displays the first window on the second interface and the first multimedia resource is the first picture, the recognized content area further comprises a first clipping control; and the method further comprises:
displaying, by the electronic device, a first clipping interface in response to a triggering operation by the user on the first clipping control, wherein the first clipping interface comprises the first picture and a first adjustment control surrounding the first picture;
adjusting, by the electronic device in response to a clipping operation by the user on the first picture on the first clipping interface, a reserved portion of the first picture that is surrounded by the first adjustment control, and determining the reserved portion as a first clipped picture, wherein the clipping operation comprises an adjustment operation on the adjustment control, and/or a transformation operation on the first picture; and the transformation operation is used for performing any one of the following transformations on the first picture: enlargement, a reduction, and a movement;
updating, by the electronic device in response to a triggering operation by the user on a first clipping confirmation option in the first clipping interface, the first picture by using the first clipped picture; and
updating, by the electronic device based on the updated first picture, the schedule option in the first window.

9. The method according to claim 8, wherein after the updating, by the electronic device based on the updated first picture, the schedule option in the first window, the method further comprises:
displaying, by the electronic device, a first updating interface, wherein the first updating interface is a second interface obtained after the electronic device updates, based on the updated first picture, the schedule option in the first window, and the first clipped picture and a second clipping control are displayed in the recognized content area in the first updating interface;
displaying, by the electronic device, the first clipping interface in response to a triggering operation by the user on the second clipping control;
adjusting, by the electronic device in response to the clipping operation by the user on the first picture on the first clipping interface, a reserved portion of the first picture that is surrounded by the first adjustment control, and determining the reserved portion as a second clipped picture;
updating, by the electronic device in response to a triggering operation by the user on the first clipping confirmation option in the first clipping interface, the first picture by using the second clipped picture; and
updating, by the electronic device based on the updated first picture, the schedule option in the first window.

10. The method according to claim 8, wherein after the updating, by the electronic device based on the updated first picture, the schedule option in the first window, the method further comprises:
displaying, by the electronic device, a first updating interface, wherein the first updating interface is a second interface obtained after the electronic device updates, based on the updated first picture, the schedule option in the first window, and the first clipped picture and a second clipping control are displayed in the recognized content area in the first updating interface;
displaying, by the electronic device, a second clipping interface in response to a triggering operation by the user on the second clipping control, wherein the second clipping interface is a clipping interface when the first clipped picture is obtained after the electronic device adjusts, in response to the clipping operation by the user on the first picture on the first clipping interface, the reserved portion of the first picture that is surrounded by the first adjustment control;
adjusting, by the electronic device in response to the clipping operation by the user on the first picture on the second clipping interface, the reserved portion of the first picture that is surrounded by the first adjustment control, and determining the reserved portion as a third clipped picture;
updating, by the electronic device in response to a triggering operation by the user on a first clipping confirmation option in the second clipping interface, the first picture by using the third clipped picture; and
updating, by the electronic device based on the updated first picture, the schedule option in the first window.

11. The method according to any one of claims 1 to 10, further comprising:
comprising, by the first window after the first schedule option of the at least one schedule option is selected, at least one schedule setting item corresponding to the first schedule option, wherein the at least one schedule setting item comprises a title setting item and a time setting item, and the title setting item comprises the first title in the first schedule option;
displaying, by the electronic device, a title editing pop-up window in response to a triggering operation by the user on a smearing control in the title setting item, wherein the title editing pop-up window comprises an input box and a word segmentation result of text content in the first multimedia resource, the input box comprises a value of a title in the title setting item, and the word segmentation result is obtained by parsing, by the electronic device, the first multimedia resource;
receiving, by the electronic device, a selection operation by the user on word segmentation content in the word segmentation result;
adjusting, by the electronic device in response to a determination operation by the user in the title editing pop-up window, content in the input box by using the word segmentation content; and
displaying, by the electronic device, the first window in response to a triggering operation by the user on a confirmation option in the title editing pop-up window, and updating the first title in the title setting item in the first window by using content in the input box.

12. The method according to claim 11, wherein the input box further comprises a cursor; the receiving, by the electronic device, a selection operation by the user on word segmentation content in the word segmentation result comprises:
receiving, by the electronic device, a swiping operation by the user in the word segmentation result, and determining, in response to the swiping operation, a character corresponding to the swiping operation as the word segmentation content, wherein the character corresponding to the swiping operation comprises a first character corresponding to a start location of the swiping operation, a second character corresponding to an end location of the swiping operation, and a character that is located between the first character and the second character after all characters in the word segmentation result are sequenced in a preset sequence; and
the adjusting, by the electronic device in response to a determination operation by the user in the title editing pop-up window, content in the input box by using the word segmentation content comprises: filling, by the electronic device in response to a triggering operation by the user on an input control in the title editing pop-up window, a location of the cursor in the input box with the word segmentation content, wherein
the selection operation comprises the swiping operation by the user in the word segmentation result, and the determination operation comprises the triggering operation by the user on the input control.

13. The method according to claim 11, wherein the at least one schedule setting item further comprises a location setting item, and the location setting item comprises the first location; in a case that the first location is a non-standard address, the location setting item further comprises a suggested location option, and the suggested location option comprises a suggested location; the non-standard address is an address of which a format is incorrect or of which content has an error; the suggested location is obtained by the electronic device based on user information prestored in the electronic device and/or historical location data within preset duration; and in a case that the electronic device displays the first window on the second interface, the method further comprises:
displaying, by the electronic device, a location setting interface in response to a triggering operation by the user on the suggested location option in the location setting item, wherein at least one to-be-selected suggested location is displayed on the location setting interface, and the at least one to-be-selected suggested location comprises the suggested location in the suggested location option; and
displaying, by the electronic device in response to a triggering operation by the user on a first to-be-selected suggested location on the location setting interface, the first window on the second interface, updating the first location in the location setting item by using the first to-be-selected suggested location, and not displaying the suggested location option any more, wherein the first to-be-selected suggested location is one of the at least one to-be-selected suggested location.

14. The method according to claim 11, wherein an area of the first window that displays at least one schedule setting item is an editing area; and the method further comprises:
moving, by the electronic device in response to a swiping operation by the user in the editing area, the at least one schedule setting item displayed in the editing area, and displaying a first schedule setting item, wherein the first schedule setting item does not belong to the at least one schedule setting item.

15. The method according to claim 11, wherein the at least one schedule option further comprises a second schedule option; a title comprised in the second schedule option is null; or a value of a location comprised in the second schedule option is null; or a value of a time period comprised in the second schedule option is null; and
in a case that the title comprised in the second schedule option is null, the method further comprises:
comprising, by the first window after the second schedule option of the at least one schedule option is selected, a title setting item corresponding to the second schedule option, wherein a value of a title in the title setting item corresponding to the second schedule option is null.

16. The method according to any one of claims 1 to 15, wherein the first multimedia resource further comprises second schedule information; the first schedule information comprises one or more of the following: a second title, a second time period, and a second location; the at least one schedule option comprised in the first window further comprises a third schedule option corresponding to the second schedule information; in a case that the third schedule option comprises a title, a value of the title of the third schedule option is the second title; in a case that the third schedule option comprises a location, a value of the location in the third schedule option is the second location; in a case that the third schedule option comprises a time period, a value of the time period in the third schedule option is the second time period; and after the displaying, by the electronic device, a first window in response to an input operation by a user on the first multimedia resource, the method further comprises:
creating, after the first schedule option and the third schedule option are selected and by the electronic device in response to a creation operation by the user in the first window, a first schedule corresponding to the first schedule option and a second schedule corresponding to the third schedule option.

17. The method according to any one of claims 1 to 15, wherein the first multimedia resource further comprises second schedule information; the first schedule information comprises one or more of the following: a second title, a second time period, and a second location; and
after the creating, by the electronic device in response to a creation operation by the user in the first window, a first schedule corresponding to the first schedule option in a schedule management application, the method further comprises:
displaying, by the electronic device, a second window before displaying the first interface and displaying the reminder information on the first interface, wherein the second window comprises a third schedule option corresponding to the second schedule information; in a case that the third schedule option comprises a title, a value of the title of the third schedule option is the second title; in a case that the third schedule option comprises a location, a value of the location in the third schedule option is the second location; and in a case that the third schedule option comprises a time period, a value of the time period in the third schedule option is the second time period; and
creating, after the third schedule option is selected and by the electronic device in response to the creation operation by the user in the second window, the second schedule corresponding to the third schedule option in the schedule management application.

18. An electronic device, comprising a display, a memory, and one or more processors, wherein the display and the memory are coupled to the processor, the memory stores computer program code, the computer program code comprises computer instructions, and the computer instructions, when executed by the processor, cause the electronic device to perform the method for creating a schedule according to any one of claims 1 to 17.

19. A computer-readable storage medium, comprising computer instructions, wherein the computer instructions, when run on an electronic device, cause the electronic device to perform the method for creating a schedule according to any one of claims 1 to 17.
